# EUROPEAN PATENT APPLICATION

(11) **EP 2 448 155 A2**
(43) Date of publication of application: **02.05.2012**
(21) Application number: 11190849.7
(22) Date of filing: 09.11.2000
(51) Int. Cl.: H04H 60/66, H04N 7/173, H04N 5/445, G06F 3/00, G06F 13/00

(54) **Internet radio and broadcast method**

(30) Priority: 10.11.1999 US 164846 P
(62) Divisional of application: 00978496.8
(71) Applicant: Yahoo! Inc., Sunnyvale, CA 94089 (US)
(72) Inventor: Beaupre, Todd, Sunnyvale, CA 94087 (US); Boulter, Jeffrey, Lexington MA 02421 (US)
(74) Representative: Pelly, Jason Charles

(57) **Abstract**

Using a large database (160), users may indicate their general or specific preferences with regards to song, artist, or albums. A playlist is created that combines all of the user's preferences as well as any applicable statuatory regulations. The user is then able to enjoy music generally of his or her choosing, while additionally being exposed to new music. Every individual then is like the manager of his or her own radio station.

## Description

### TECHNICAL FIELD

This invention relates to Internet media data streams and the like, and more particularly to a copyright-compliant audio/video/radio broadcast system over the Internet where each individual user is able to set his or her preferences regarding works played so as to influence the frequency such works are broadcast to the user.

### BACKGROUND ART

The rise of the Internet has provided many different channels through which media can be presented to users. RealNetworks' RealMedia, Apple QuickTime, and Windows Media all provide players through which live or previously-recorded data streams can be displayed, played back, or broadcast to the individual user. Both audio and video are generally available through these programs and provide a higher and more attractive degree of interactivity with the Internet.

Regular radio broadcasts are based upon a central individual or station broadcasting songs, or other audio information, electromagnetically. Different radio stations are separated by their different carrier frequencies. Amplitude modulation (AM) and frequency modulation (FM) provide two means by which radio broadcast can be effected by a transmitter to a receiver. If an individual wants to affect the songs that are played by the radio station, he or she may write, call, fax, e-mail, or otherwise transmit their preferences to the radio station.

However, one person's preferred music may not be as appreciated by another individual. Music can be very personal, often affecting a person at an emotional level. When the radio station broadcasts a song or other audio signal, all receivers tuned to the carrier frequency pick up the broadcast and either enjoy or suffer the broadcast equally.

It would be much more advantageous to allow each individual to influence, their own set of song playlists. Currently, this is not achievable by wireless broadcast means. However, unique data stream addressing available through Internet data processing might provide means by which an Internet radio could be advantageously affected. Other Internet broadcasting processes are known, but generally follow the known radio station format of broadcasting a single song, or data stream, to all users tuned to the station or channel. In compliance with the Digital Millennium Copyright Act (DMCA), such a radio would have to comply with statutory regulations regarding the broadcast of songs and would generally have to avoid the role of an "on-demand" system, as this might be in violation of statutory regulation.

The following patents may have some bearing on the art relevant to the present invention:

| U.S. PATENT NUMBER | INVENTOR | DATE OF ISSUE |
|---|---|---|
| 6,052,717 | Reynolds et al. | April 18, 2000 |
| 6,038,591 | Wolfe et al. | March 14, 2000 |
| 6,031,797 | Van Ryzin et al. | February 29, 2000 |
| 6,026,439 | Chowdhury et al. | February 15, 2000 |
| 5,987,525 | Roberts et al. | November 16, 1999 |
| 5,945,988 | Williams et al. | August 31, 1999 |
| 5,930,768 | Hooban | July 27, 1999 |
| 5,864,868 | Contois | January 26, 1999 |
| 5,819,160 | Foladare et al. | October 6, 1998 |
| 5,809,246 | Goldman | September 15, 1998 |
| 5,790,423 | Lau et al. | August 4, 1998 |
| 5,758,257 | Herz et al. | May 26, 1998 |
| 5,740,134 | Peterson | April 14, 1998 |
| 5,726,909 | Krikorian | March 10, 1998 |
| 5,721,827 | Logan et al. | February 24, 1998 |
| 5,661,787 | Pocock | August 26, 1997 |
| 5,616,876 | Cluts | April 1, 1997 |
| 5,592,511 | Schoen et al. | January 7, 1997 |
| 5,539,635 | Larson, Jr. | July 23, 1996 |

### DISCLOSURE OF INVENTION

The present invention provides a copyright-compliant, broad-based, individually-tailored Internet media broadcast system and method. The present invention provides means by which users may individually rate or indicate music, music videos, or other recorded media that they enjoy hearing from a vast musical or other database. Additionally, such users may also indicate the exclusion of music/media that is to their distaste. In so doing, the user interaction is limited to that decision-making role that is necessary for the user to establish his or her preferences. The Internet radio of the present invention and its method take care of the rest, providing the end user a media or radio channel tailored to his or her own musical tastes. In this way, the present invention can be said to "microcast," or "narrowcast" the content of personalized songlists to individual listening stations or users. As the broadcast uses Internet protocol, each data packet of each data stream has its own individual address, namely, the end-user's data stream player. As the present invention is scalable, thousands, even tens or hundreds of thousands of listeners can be handled by the present invention. With the advance of data-transmission technology, tens or hundreds of millions of users may be served by, or given access to, a system incorporating the present invention, including the delivery of user-preferred data streams by wireless communication links.

Mention is made herein of the present invention with respect to music broadcast to provide a personalized Internet, or data stream, radio. Note should be taken that use of the term "radio," "music," and the like includes any recorded datastream content, including music videos and the like.

At the core of the present invention is the playlist generator. It is the generated songlist that is associated with the user's account and indicates to the system which song is to be played next. Once a song has been selected, it is then streamed as data out to the individual's computer (uniquely identified by Internet protocol). As the central server of the system can handle a large number of users at any one time, it becomes possible to serve each user with his or her own individual data stream. In this case, the data stream comprises audio and/or video information and serves to establish a situation similar to each user having his or her own individual radio station that he or she programs. The list can be created in advance and stored, or generated, in real time when needed. Collaborative filtering techniques may be used in constructing the playlist.

Other applications for the present method may also exist when similar circumstances are present where a large database of information is available that is subject to individual preferences. In a broad sense, the present invention provides means by which individual subsets of an all-encompassing data space may be defined, modified, and preserved, subject to a variety of influences and allowing some serendipitous, or random, events to occur.

### BRIEF DESCRIPTION OF DRAWINGS

Figure 1 is a schematic view of the system architecture used to achieve one embodiment of the present invention.
Figure 2 is a screen shot showing a computer desktop with the audio player and user homepage for the present invention.
Figure 3 is a screen shot showing a computer desktop with the video player and user homepage for the present invention.

### BRIEF DESCRIPTION OF APPENDICES

The following appendices are incorporated herein by this reference thereto.
Appendix 1 is an excerpted text listing of a playlist generated in conformance with the present invention.
Appendix 2 is a source code listing for one embodiment of the present invention.

### MODE(S) FOR CARRYING OUT THE INVENTION

The detailed description set forth below in connection with the appended drawings is intended as a description of presently-preferred embodiments of the invention and is not intended to represent the only forms in which the present invention may be constructed and/or utilized. The description sets forth the functions and the sequence of steps for constructing and operating the invention in connection with the illustrated embodiments. However, it is to be understood that the same or equivalent functions and sequences may be accomplished by different embodiments that are also intended to be encompassed within the spirit and scope of the invention.

This patent application is related to United States Provisional Patent Application Serial Number 60/164,846 filed November 10, 1999 for Internet Radio and Broadcast Method, which application is incorporated herein by this reference thereto.

As mentioned above, use of the term "radio," "music," and the like includes any recorded datastream content, including music, videos, recorded sports events and concerts, and the like.

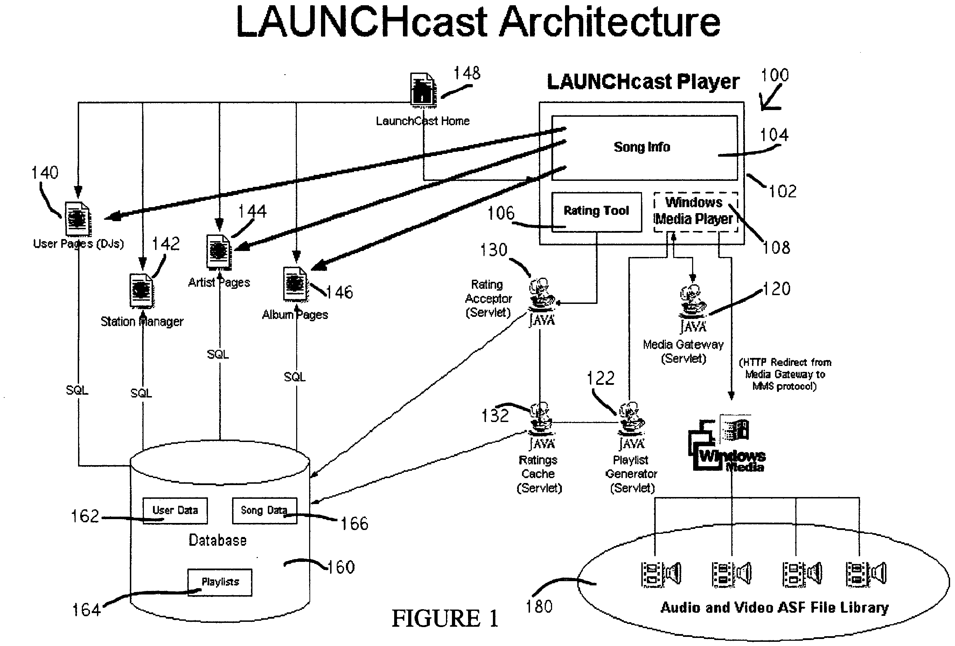

In Figure 1, the general structure of the present system is shown where the LAUNCHcast Player provides user feedback and indication of song preference through Java Servlets and JavaScript code. In one embodiment, a Windows Media Player may provide the interface allowing the audio and/or video broadcast to take place at the user's computer. Other media players now known or developed in the future may also suffice and operate to good advantage. Mentioned use of the Windows Media Player system is to be considered as indicating any appropriately functioning media player. Song or video information is available through both the player and the accompanying data window.

Referring now to Figure 1, the architecture and system structure of the Internet radio and broadcast method of the present invention is shown in schematic form. The system **100** is generally focused upon the player **102.** The player **102** is the component that the user sees and is ultimately the arbiter of the media datastream service provided by the present invention. As shown in Figure 1, the player **102** has a song information section **104,** a rating tool **106,** and a player **108.** For this last component, the player **108** is indicated as being a Windows Media player. However, other media players can also be used to good advantage in order to achieve the present invention.

Through its components, the player **102** is linked or associated to a number of other sources of information and programs, including Java or other servlets. The present invention, when implemented in software, may be so implemented using Java-family of computer program languages. A servlet is Java programming that runs as a part of a network service, such as an HTTP server, in response to requests from clients. In this case, the client can be considered to be the player **102** while the HTTP server can be the servers for the database **160** and the media content library **180.**

At a center of the present invention is the player **108.** The player **108** allows the content to be broadcast to the individual user and serves as means by which the user can enjoy such content. In addition to being linked to the media database **180,** the player **108** is also in communication with a media gateway servlet **120** and a playlist generator servlet **122.** As discussed in more detail below, these two servlets provide the player the ability to play streaming media in conformance with the present invention.

The rating tool **106** is coupled to the database **160** via a rating acceptor servlet **130** and a ratings cache servlet **132.** As indicated in Figure 1, the rating acceptor servlet **130** and ratings cache servlet **132** are also in communication with one another, as set forth in more detail below.

The song information component **104** of the player **102** may provide links to other information available through the database **160** or otherwise. For example, the song information tool **104** may provide links to other user pages **140,** a station manager **142,** provided home pages of various artists **144,** as well as links to album pages **146** of such artists or otherwise. Additionally, a central homepage **148** may be present that allows travel or linking to any or all of available pages or services.

Note should be taken that the database **160** is not necessarily the home for the media library **180.** In fact, according to present technology, it may be more advantageous to provide some means by which high-speed access can be provided to the media library **180.** By separating the database **160** from the media library **180** faster and better service may be provided to users so they may enjoy the content of datastream better. Certain infrastructures may allow for offsite residence of the media contained in the media library **180.** Pointers or other indicators to such information in an indexed or other form can thereby provide the link necessary to deliver the preferred or indicated content by the user from the media library **180** to that same user.

As shown in Figure 1, the database **160** may hold a variety of types of information, including: user data **162,** playlists **164,** and song data **166.** Such information is stored by the database **160** and updated by the servlets as set forth in the present invention, including the user code set forth in Appendix 2.

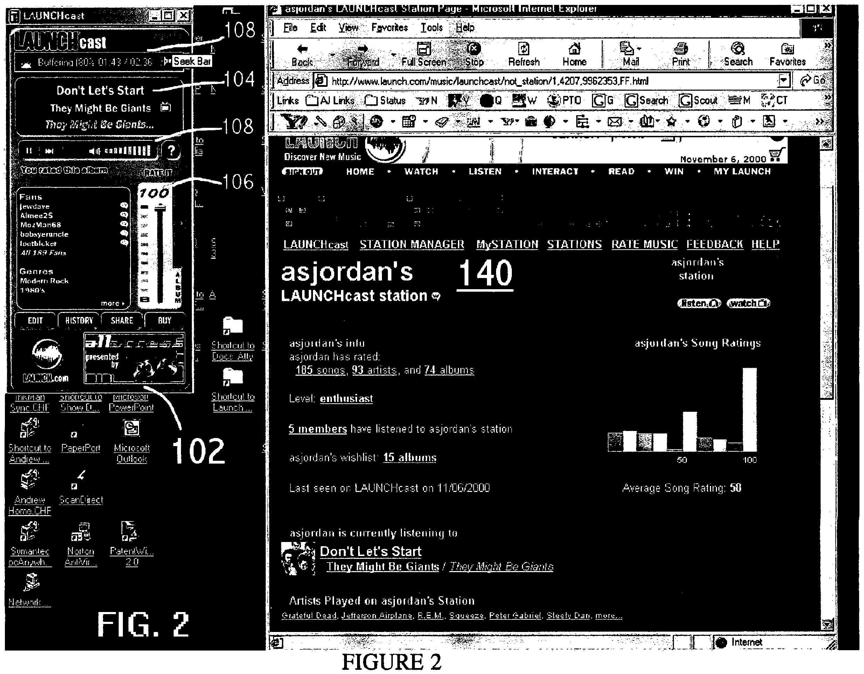

In Figure 2, the player, or playback, window **102** is shown and is highly interactive with several embedded hyperlinks. In the upper right-hand corner of the playback window **102,** the indication of "asjordan" is made. By clicking on this link, more information about the current station may be given and/or the ability to change such station. The user's page **140** may be activated and shown upon clicking the username link. In the right center of the playback window, a "RATE IT" window indicator that is the rating tool **106** is given, allowing the individual to rate the current "SONG", the "ARTIST" performing the current song, and/or an "ALBUM" containing the song. Below the "RATE IT" indicator, hyperlinks to "RECENT SONGS", "BUY", and "STATION MANAGER" are present allowing the user to travel to those destinations and either learn more information, purchase or review purchasing information about the current album being played, as well as access the station manager for the present invention.

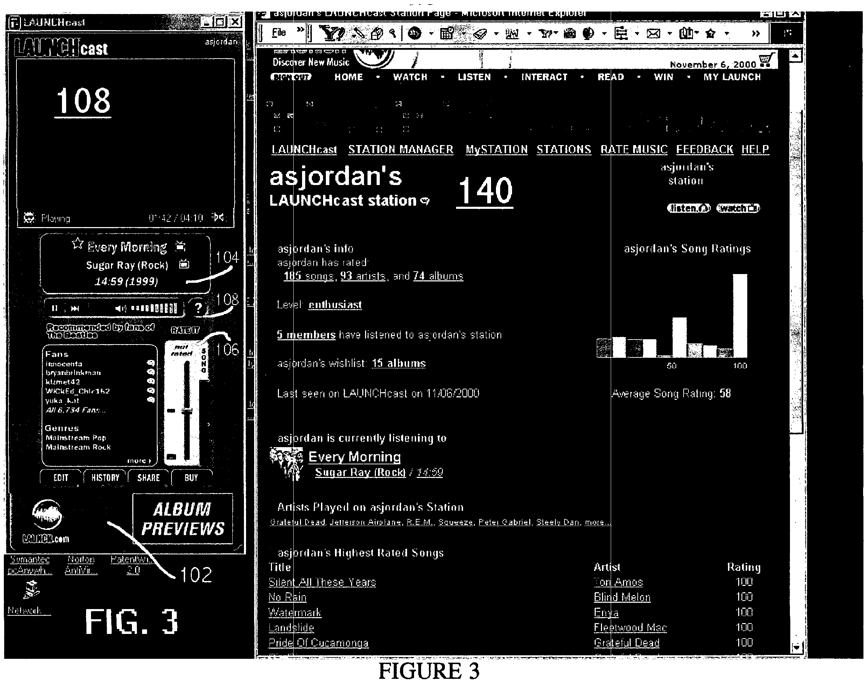

Below the song information window **104,** icons are given for Play/Pause, Skip This Song, Skip This Song and Never Play It Again ("Delete"), and a Volume control. The question mark ("?") shown below the "Song Information area" window is a hyperlink to a Help file for the playback window **102** and the Internet Radio system of the present invention. These icons are also shown in the other playback window Figures, such as that for the video playback user interface/client **102** shown in Figure 3.

Figures 2 and 3 show a desktop display of the system **100** in action from the user's point of view. A tool tip may be given when the cursor hovers over the song title. The same may be similarly true for the artist and the album currently playing. Note should be taken that just as the song rating indicator is highlighted and active in the middle right section of the playback window, the song title is highlighted in the upper portion of the playback window.

Additionally, the left and center middle portion of the playback window provides information regarding fans who have strong positive feelings about the present song, artist, and/or album, as well as an average rating for all users or some subset of users on the system.

Figures 2 and 3 show small balloons on the right-hand side of the central dark area across from the "Fans." These balloons may have a letter "W" inside of them to indicate another listener is currently online and can be engaged via the instant messaging ("whisper") function. Figures 2 and 3 also show graphic information that may be used for advertising or other hyperlinks. In generating the playlist ofthe present invention, the user can be informed as to why a particular song was picked.

For other links and presentation of information in the player **102,** a tool tip may be presented when the cursor hovers over an area. A tool tip is a small window providing succinct information about the item under the cursor when the cursor hovers over that item.

When the system **100** is updating and obtaining a new data stream from the system for the user, a display may be given to the user to indicate ongoing activity of the playback system. Such visual activity in the form of animation assures the listener/viewer that the short span of silence, or "dead air," following a song is only temporary and that a new song will soon play. Generally, in order to promote interactivity and to take advantage ofthe new media that the Internet provides, the windows shown in the Figures 2 and 3 contain ample internal hyperlinks that lead to web pages providing information regarding music, artists **144,** and/or their works **146,** web pages regarding other users ofthe system (as DJs or otherwise) **140,** and/or web pages regarding the user's control of the system (preferences, etc.) **142.**

The default paradigm for the user interface/player **102** is to allow the user the greatest degree of freedom in expressing preferences and in obtaining that preference information regarding music artists, and their publications/albums. In this way, the user's experience is enhanced as he or she hears more of the music he or she likes. Access to purchasing web sites is also made available where users may purchase artists' works.

In implementing the present invention in software, the accompanying source code (Appendix 2) may be used to achieve the present invention. Such code is subject to copyright protection and is owned by LAUNCH Media, Inc. of Santa Monica, California.

The generation of a proper playlist combining available user ratings and a media database forms an important part of the present invention. One such playlist as generated by the present invention is shown in Appendix 1 and is an excerpted form for purposes of explanation. Entries in the playlist have been removed so that the playlist may better serve the explanatory purposes herein without undue length or the sacrifice of sufficient detail.

Playlist generation occurs when a user launches his client player **102.** A Windows Media or other player **108** is embedded in the user's client player **102.** The player **108** opens a call to the playlist generator servlet **122** as executed by the PlaylistGeneratorServlet routine (Appendix 2, page 158). The expected output from this HTTP call is an ASX playlist file, which in the present invention is list of pointers to a script that reads the actual playlist data object from the database **160.**

The playlist generator servlet **122** parses the particular parameters for this ASX playlist as follows:
Object: GeneratorParameters;
userID: (required) the user for whom the playlist is generated;
djID: (default is userID) the user whose profile will be used to generate the playlist;
moodID: (default is none) a mood which is a subset of a profile may be indicated and used to alter the preferences
in the playlist and under which to listen (optional); and

bandwidth: (default is 28.8k, if not read from the user's preferences in the database) the bit rate at which the user wishes to listen.

The database **160** with the playlist database **164** is checked for an existing playlist by PlaylistStatus (Appendix 2, page 192). If a playlist already exists, it can be used it if all the following are met (and PlaylistStatus.isStale() returns false):
all of the parameters (userID, djID, etc) match;
there are more than 8 songs left;
the newRatingsCount (counter of new personalization data since last refresh) is less than 15; and
the playlist is less than a week old.

If all these conditions are met, the dates for the last time the user listened to an ad, news bit, and tip may be reset and the playlist may be resaved. The ASX file is written out and media player begins to execute by making requests to the media gateway **120** to play music.

If the old playlist cannot be used, a new one is created with the playlist generator via PlaylistGenerator.create().

The first step is to retrieve the user's preferences via PlaylistGenerator.getOptions(). In response the following options are returned:
unratedQuota: how much new (not rated) music they want hear in their playlist. The options here are 90, 80, 70, 50, 40, 30, and 20 percent. The default is 50 percent.
explicit lyrics: Does this user want us to play music with explicit lyrics? True or false.
bandwidth: if the bandwidth is not already specified in the generator parameters, it is read from stored data. Currently, bandwidth options include 28.8, 56, and T1/LAN. The default is 28.8 if a valid setting of "none" is found in the database.

A list of all the possible songs available for play (via PlaylistGenerator.gatherMedia()) as well as some other data about those songs is obtained. This is generally done using multiple threads running at the same time for better performance. The list of songs is held in hashtable (as via the Population subroutine (Appendix 2, page 198)).

The database **160** is first called to load a history of all the songs played for the user in the last 30 days. This is stored in the database as a long string, formatted as: "<Date>=<songID>,<Date>=<songID>, ... "For performance reasons, reading one string from the database is faster than reading potentially several thousand rows individually from the database. Dates older than 30 days are ignored and the last time a song was played overwrites previous plays of a song. Each time a song is played via the media gateway **120,** this string is appended.

After the history loading is complete, a random integer is picked from 1 to 10. If the value is I, the date and songID string is recreated and rewritten to the database. This cleans up the string by removal of songs that were played more than 30 days ago as well as duplicate entries for the same songID.

The history loads as a thread, and another database call is made to get the user's, or DJ's, list of subscribed DJs, genres, and radio stations (via PlaylistGenerator.getSubscriptions()) for the specific mood requested. The result of this call is three lists called DJs, genres, and stations.

Once the subscriptions are available, the ratings are obtained via GetRatings. This is also done in a thread. The song hashtable, another hashtable that contains Artist and Album ratings (ItemsProfile), the DJ, and the list ofsubscribed DJs are all passed to the GetRatings method routine.

A retrieval list of users whose ratings are to be retrieved is compiled using the subscribed DJs and the DJ requesting the playlist. A request is made to the ratings cache to retrieve all these ratings via RatingsCache.getRatings().

When the playlist generator has all the ratings, it is ready to assemble them into categorized data structures, based on the properties of each rating. It iterates through all the ratings and stores them in the following manner. If the ID of the user is the DJ and the rating is 0 (an 'X' in the end-user interface), the song is added to song hashtable (via Population) as an "Excluded" type, meaning that song should never be played. The rating is also added to the average rating for songs by that artist. If the rating is not 0, the song information cache is immediately checked via SongInfoCache.get() for data about this song. If the data does not exist in the cache, it is a song that was rated, but is not available for play (as possibly not encoded), and the song is immediately marked as an "Excluded" song.

If all of the above tests pass, the song is added to the song hashtable with a type of "Explicit". The rating for the song is included in the calculation of this DJ's average rating of songs by the artist.

Each song that is rated by subscribed DJs is added to the song hashtable. The subscribed DJ's rating for the song is included in the calculation of the subscribed DJs' average rating for this song.

For albums, the ratings profile is obtained from the item rating profiles. If a ratings profile for an album does not yet exist, then the data regarding the album is retrieved and a ratings profile is created.

If the rater is the user requesting the playlist, the rating for this item is set to the user's rating. However, if the rater is a subscribed DJ, the rating is added to the DJ's average for this album.

For artists, the rating procedure is the same as for albums, except any ratings made for the artists listed as "Various Artists", "Soundtrack", or "Original Soundtrack" are discarded or ignored in the relevant calculations.

The top 1000 most popular songs (via PlaylistGenerator.getPopular()) in the bandwidth type specified may be added to the song candidate hashtable. This popular list is maintained in the song information cache. Before each song is added to the song hashtable, inspection is made to see if the song is already in the candidate hashtable (perhaps put there by another query). If so, inspection is made to make sure that the song is not of type "Excluded", or the song is discarded. If the song is added to the song hashtable, it is added under the type "Unrated".

A maximum of 5000 songs are picked randomly (via PlaylistGenerator.getRandom()). Initially, a count is made of the number of songs contained in each and all ofthe genres a user has selected (via SongInfoCache.countInGenres()). Songs may be in multiple genres. The number of songs is then divided by the total number of songs in the song information cache. If the result is less than 5%, songs are picked directly from a list of songs only in those genres.

Otherwise, songs can be picked randomly from all available songs. This calculation may be performed to avoid the situation where a user has selected a small number of genres and picking songs randomly will return only a few songs that are available or allowable for play when considering their genres.

In order to select songs only from selected genres, a determination is made of the total number of songs to pick (via totalToPick) from the lesser of 5000 and the total number of songs in the selected genres. For each genre, a copy of the list of songs in that genre is obtained from the song information cache (via SongInfoCache.getInGenre()). The number of songs to pick from each genre is determined from the following formula: songs to pick = totalToPick * (number of songs in this genre / total number of songs in the selected genres).

The determined number of songs is picked and attempts are made to add the songs to the song hashtable with a type of "Unrated". A song is not added if it is already in the hashtable.

In order to select from all songs, a song is randomly selected 5000 times. Each time, attempts are made to add the song if it is not already there as picked, as described above. Once the process finishes adding random songs, all the ratings for the songs are retrieved as are all the dates of when the songs were played for the user. The explicit, implicit, and unrated lists built in the last step are taken and ordered in descending order by score, or rating, using a quicksort or other algorithm.

The number of songs to pick from each list is determined. For example, if the size of a playlist is 50 songs, the following may occur. If the user is listening to his own station, the following formula may be used: if the user's list of explicit and implicit songs is smaller than 100 songs, 90% of the songs must be picked from the unrated list to avoid playing the user's rated songs too much. The user's unrated quota may, then, be set to 90. Otherwise, an unrated quota may be used from the user's stored options.

Under some circumstances the maximum number of songs available from the explicit and implicit song lists is calculated as follows:
maximumRated = playlistSize * (100 - unratedQuota) * 0.01.

The maximum number of songs available from the explicit list may be calculated as:
MaximumExplicit = number of songs in the explicit list * .20.

A number of songs to pick from the explicitly-rated list may then be:
explicitToPick = playlistSize * (100 - unrated quota) * 0.01 * (number of songs in the explicit list / sum of explicit and implicit songs) * 3);

From this the number of implicit songs is simply:
implicitToPick = maxiumumRated - explicitToPick.

Confirmation can be made to ensure that more explicit songs have not been picked than indicated by maximumExplicit and that no more implicit songs have been picked than those that are in the implicit list. The number of unrated songs is then: playlistSize - (explicitToPick - implicitToPick)

If the user is listening to a station other than his own and the number of songs in the explicit and implicit list total greater than 200, then the following calculations are made:
explicitToPick = Minimum(playlistSize * 50, 20% of explicit songs); and
implicitToPick = Minimum(playlistSize, # of implicit songs) - explicitToPick

If, for some reason, a sufficient and/orplaylistSize number of songs is not obtained from this calculation, a third of the songs is picked from each of explicit, implicit and unrated songs with a check to ensure that not more than 20% of the songs on the rated and unrated lists are picked. As a fallback measure if none of the methods above used to calculate the number of songs to pick worked, the songs are selected as a third of the playlistSize from each list, making sure not to pick more than 20% of the rated and unrated lists.

A list of albums and artists from and by which songs have been played for this user in the last 3 hours is copied or otherwise made available to the process set forth herein and the songs for this playlist are picked via PlaylistGenerator.pickSongs(). A list of all the picks needed is made (via PickList). For example, if there is a playlist of 50 songs, the list may contain 10 entries for explicit songs, 20 for implicit songs, and 20 for unrated songs.

While there are still songs to pick, iteration is made through the following cycle:
a. randomly pick a song list type (explicit, implicit, unrated) with a probability based on the proportion of songs to come from each list;
b. pick a random song index from that list (which has already been sorted in descending order of score), based on the following formula (via SongGroup.pickRandom()):
   sizeOfList = the number of songs in this list;
   random = a randomly-chosen number between 0 and (sizeOfList - 1) + 0.01; and
   index of song to pick = ((rand ^ 7) / sizeOfList - I ^ 7) * (sizeOfList - 1)).

This formula allows songs to be picked somewhat randomly, while guaranteeing a high probability that the song picked will come from highest scored. The higher the ranking of the song in the score matrix, the higher the probability it will be picked. This algorithm scales well for any size of list because it is rank-based, not just score based.

The song at that index is removed from the list. If for some reason a valid song is not obtained (possibly the song list already exhausted), another song is added to the list of types to pick of this type.

Once a song is picked, its album and artist information are obtained.

If the artist is not a "Various Artist" and the sum of the number of songs played by this artist and already picked for this playlist by this artist is greater than or equal to 3, this song cannot be played under the RIAA (Recording Industry Associates of America) and/or DMCA (Digital Millennium Copyright Act) rules. Other rules may also be implemented in the present invention to accommodate statutory and other rights and/or restrictions.

The song is marked as "rejected" and another song is added to the list of songs to pick from the same list the rejected song was picked from. The same test is performed for albums, with the maximum played, for example, being2.

If the song was picked successfully and was within legal or other boundaries, the number of songs picked from this album and by this artist is incremented. The song is added to the final list of songs for the playlist and the order in which the song was picked for the playlist is marked, or noted.

If, for some reason, a playlistSize number of songs is not obtained, the existing playlist is deleted and popular songs are added to the song hashtable, and the song lists are re-sorted and re-picked ignoring the user's genres selections.

The picking of news clips is done simply by picking a specific number of unique news items that are in the specified bandwidth format. A list of available news clips is stored in the song information cache. Ads may be picked in the same way as news clips are picked. However, a difference may be present in the different number of ads to pick. Tips may also be picked in the same manner as news clips, with a different number of tips to pick.

The order of the songs may be randomly shuffled in the playlist and the playlist may be serialized and saved to the database. Finally, the ASX file may be returned to the player **108.**

Every 5 minutes, the player **102/108** "pings" the Playlist Generator **122.** If the playlist is stale or has 8 songs or less left in it, the playlist generator regenerates the playlist and replaces the one previously saved in the database.

As an additional enhancement to the present invention, playlists from commercial and other radio stations throughout the United States, and elsewhere, are made available so that playlists may be affected by such radio stations and by popularity of particular musical works.

In achieving the Internet radio of the present invention, a rating acceptor **130** in the form of the RatingWidgetServlet routine (Appendix 2, page 222) takes HTTP requests to rate and gets ratings for songs, albums, and artists. When a rating is saved, it written to the ratings database and if the user who rated the item is designated as being in the ratings cache, the rating change is added to the queue of ratings updates.

Once every minute, the ratings updates are sent to all the ratings caches that have registered their IP address in the database. Every hour, the list of ratings caches are retrieved from the database. Every ten minutes, the list of users in the cache are retrieved from the database.

The song information cache is implemented through the SongInfoCache routine (Appendix 2, page 265) and may be a large in-memory cache of relatively static data that is used in playlist generation. It may include a list and hashtable of all songs which includes identifying numbers, media formats available, average rating, artist and album information, explicit lyrics mark, genres the song is in, and radio stations that play the song. Also, other information may be included in the song information cache, including: a hashtable of artist information;, a hashtable of album information; a list and hashtable of all ads including identifying numbers and media formats available; a list and hashtable of all news clips including identifying numbers and media formats available; a list and hashtable of all audio tips including identifying numbers and media formats available; a lists of the 1000 most popular songs in each media format; lists of all songs in each genre; and a cache of frequently-accessed ratings profiles. This last cache is seen in the RatingsCache 132 routine (Appendix 2, page 211). The song information cache is completely rebuilt once a day from the database.

The ratings cache caches the entire ratings profile for the top 100 users who are known to be accessed frequently. The ratings cache is implemented through the RatingsCache routine (Appendix 2, page 211). On startup, the ratings cache registers its IP address in the database to subscribe to ratings updates. These users are typically DJs (users with broadcasted or subscribed ratings) that have many subscribers, or users who simply use LAUNCHcast frequently. Each ratings cache recalculates the most frequently-accessed users and writes it to the database every 8 hours. At that time, the entire cache is discarded and reread from the database to erase any lingering corruption. Each ratings cache checks the database every 10 minutes for changes in the list of users to be cached and updates the ratings cache as appropriate.

Note should be taken that many ofthe parameters set forth herein are discretionary and advisory. Consequently, those properly and legitimately implementing the present invention may alter such parameters, such as when events occur and event timing as above, according to system operation preferences.

For each user who is not in the ratings cache, their ID is appended to a list of users whose profiles need to be retrieved from the database **160.** Users who have been added to the cache recently have their profiles added to the list of ratings to be returned to the PlaylistGenerator **122** routine (Appendix 2, page 158). All non-cached users' ratings are retrieved from the database **160,** are appended to the list of ratings, and are returned to the PlaylistGenerator 122. The album and artist ratings are retrieved in a separate query from the song ratings. Each runs in its own thread in parallel for optimal performance.

The media gateway **120** is a Java servlet that brokers the relationship between the end user's (Windows Media) Player **108,** the database **106,** and media library, or Windows Media Server, **180** and logs all media access. The MediaGatewayServlet routine (Appendix 2, page 112) performs this function. Because the client's Windows Media Player playlist (.sax file) does not contain any information about the actual songs or ads in the user's playlist, the media gateway **120** contains the logic described below to redirect the user's player to the correct media address on the media library **180.**

For security reasons, the media gateway **120** may check to see that the client **102** is accessing it from the Windows Media Player client **108** (and not a web browser or other application). If not, it may redirect the user to an error media file. The media gateway **120** then pulls the user's ID off the query string and retrieves that user's playlist object from the database **160.** The gateway **120** inspects timestamps in the user's playlist object that indicate when the user last heard an ad, tip, song or other media item and determines if it is time to insert an ad, tip, or news item in the datastream, or just play the next song.

If the user has not heard an ad, for example, for a pre-defined period of time, the media gateway **120** resets an ad timestamp and retrieves an ad path from the user's ad playlist and passes that MMS (Microsoft Media Server) redirect instruction/address to the end user's Windows Media client **108.** If no ad is available, the process continues and plays the next song in the user's playlist. If it is not time to play an ad, the timestamp is checked to see if it is time to play a tip. The process then follows the same logic, above, for ads to retrieve and play a tip, instead of an ad. If it is not time to play an ad or tip, the timestamp is checked to see if it is time to play a news item. The process then follows the same logic as for ads to retrieve and play a news item.

If it is not time to play an ad, tip, news item, or other stream (the usual case), the media gateway **120** retrieves the path of the next song in the playlist and returns that address via an MMS redirect to the client's Windows Media Player **108.** In all cases, the mediaID of the ad, tip, or song played is logged in the database **160** under that user's ID. This logging information is used to display what the user is listening to on the user's station page and under the "Who's Listening" page. These pages may be associated with the central home page **148** in a manner similar to that of the user pages **140** as history data in the playlist generator, and in calculating a Top 100 chart for the most popular songs and/or streams.

While there may be some preference for an "on-demand" service such that individuals may pick their own radio playlists, the element of randomness and pleasant surprise is inherent in the present invention. Additionally, statutory requirements prevent users from turning the Internet into their own home stereo system. "On-demand" service is generally prevented by statute and may be a violation of copyright. Consequently, any statutory regulations, such as the Digital Millennium Copyright Act (DMCA), and other limitations can be programmed automatically into the present invention. In so doing, the present invention complies with all applicable law and delivers to the user a musical experience generally aligned with his or her preferences.

Many users often listen to music while doing programming or the like. Such music can now be delivered over the Internet via the user's very own radio station through the present invention. Additionally, users may select other individuals or DJs, to influence their musical playlist just as the user does. The DJ, online or otherwise, becomes an additional factor in influencing the user's preferences and playlist. Some individuals may act as real DJs, serving to provide content to an audience of subscribers through the Internet. Programs of special interest may also be developed and subscribed to by listeners using the present invention. Through the heavily hyperlinked (but easily understandable) interface set forth in the Figures and described above, a user may establ ish musical (or other data stream) preferences. In establishing such preferences, the music played to the listener is tailored to that listener and provides an enhanced musical experience on an individual basis.

While the present invention has been described with reference to a preferred embodiment or to particular embodiments, it will be understood that various changes and additional variations may be made and equivalents may be substituted for elements thereof without departing from the scope of the invention or the inventive concept thereof. In addition, many modifications may be made to adapt a particular situation or material to the teachings of the invention without departing from the essential scope thereof. Therefore, it is intended that the invention not be limited to particular embodiments disclosed herein for carrying it out, but that the invention includes all embodiments falling within the scope of the appended claims.

### INDUSTRIAL APPLICABILITY

It is an object of the present invention to provide individualized data stream programming according to an individual's preference.

It is yet another object ofthe present invention to provide an Internet-based radio or music playing system that is biased according to each user's preferences.

It is yet another object of the present invention to provide a means by which song playlists may be generated for such an Internet radio.

It is an object of the present invention to provide copyright-compliant media streams for Internet and other networked systems broadcast.

These and other objects, advantages, and the industrial utility of the present invention will be apparent from a review of the accompanying specification and drawings.

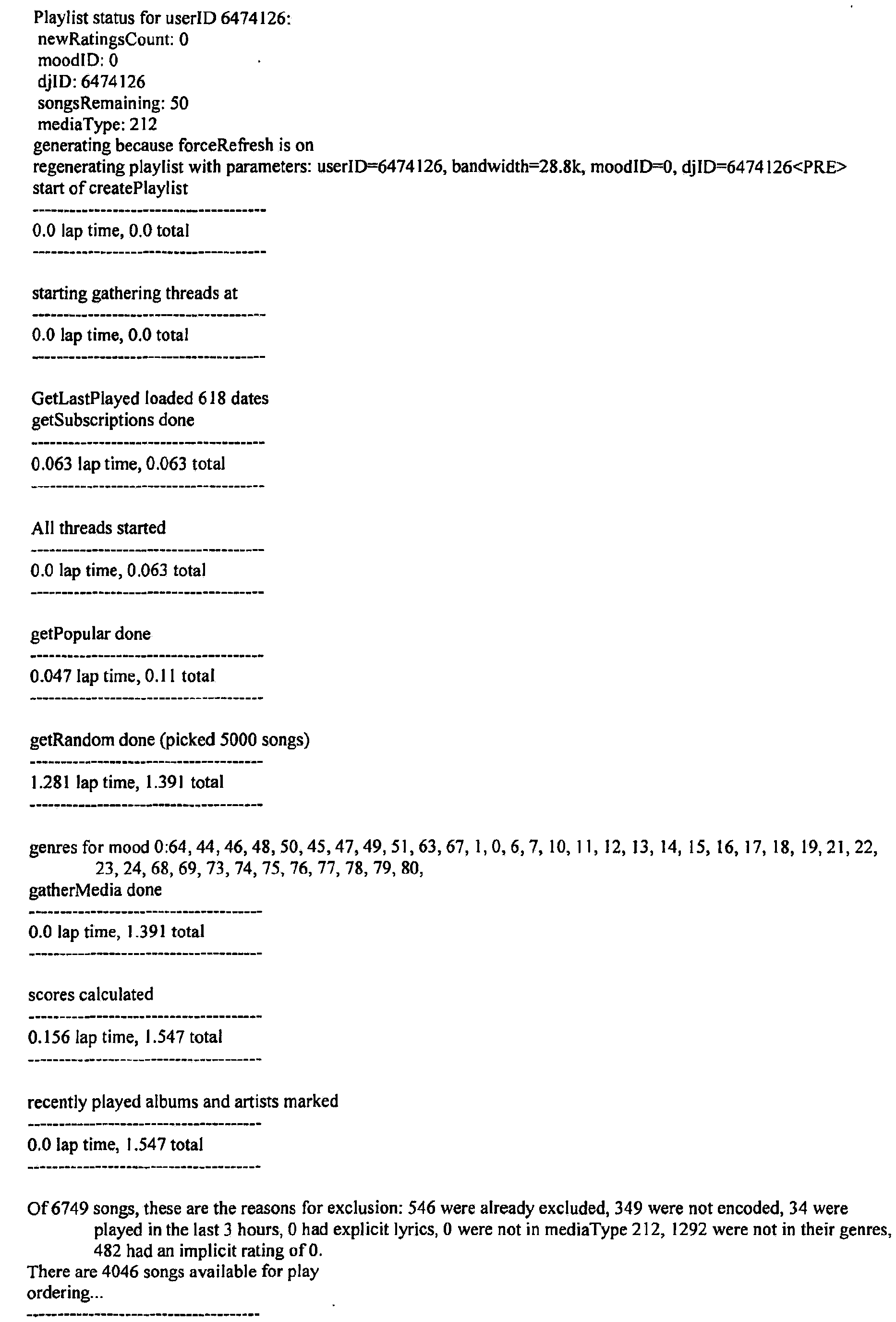

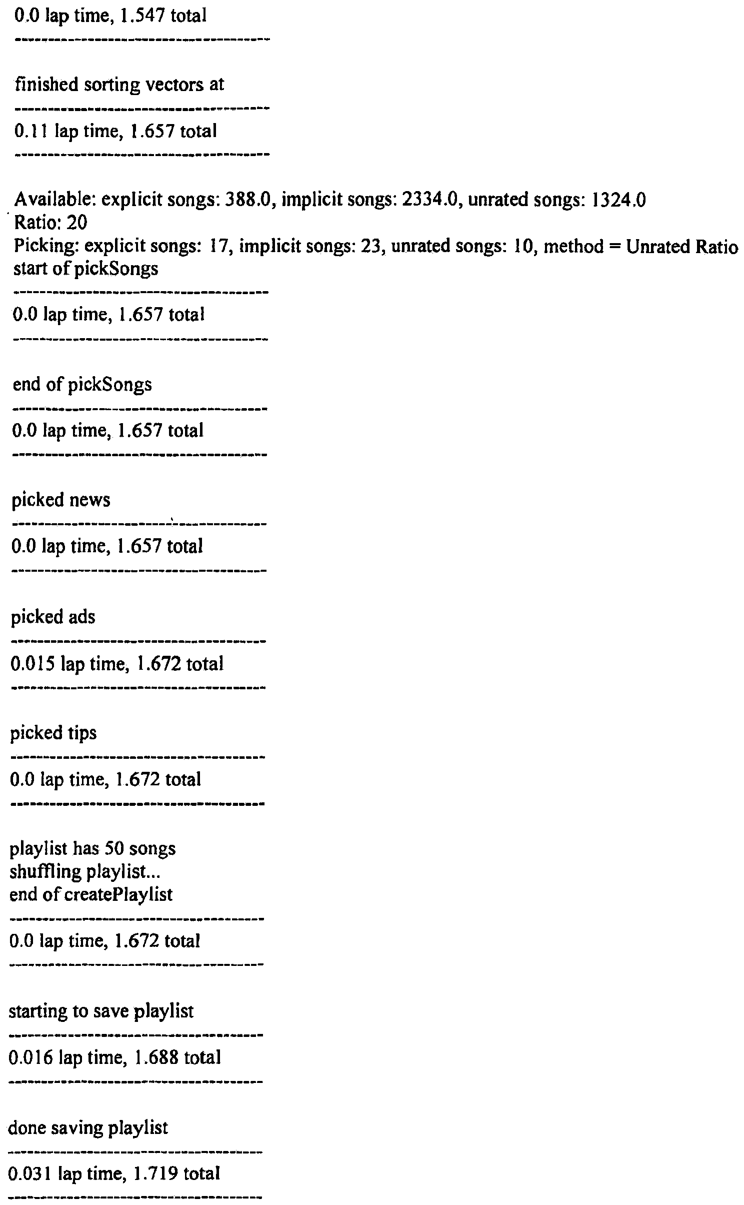

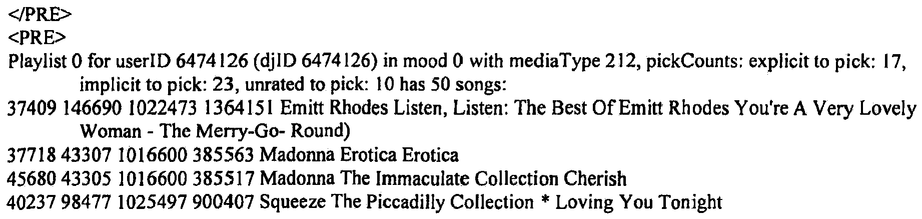

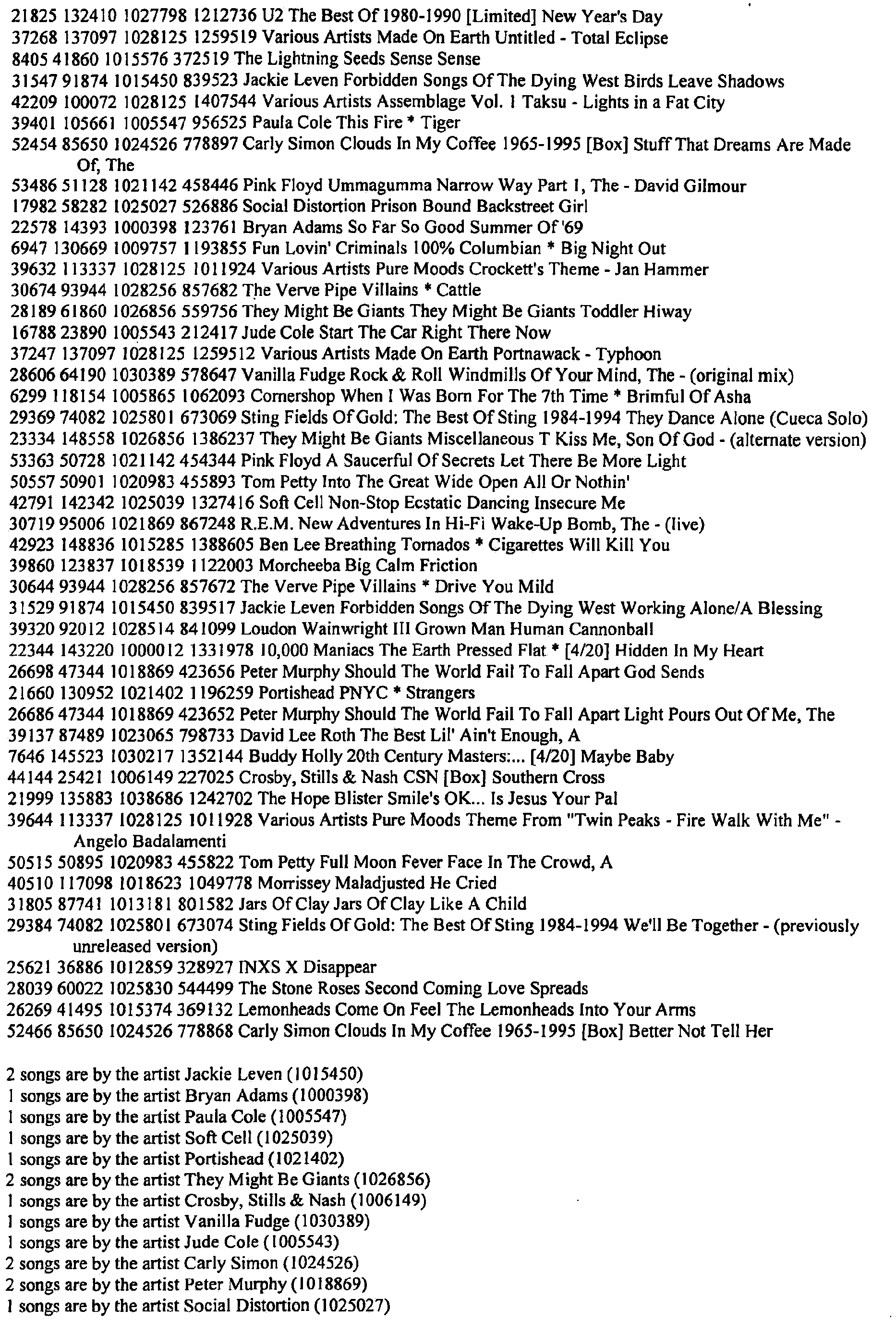

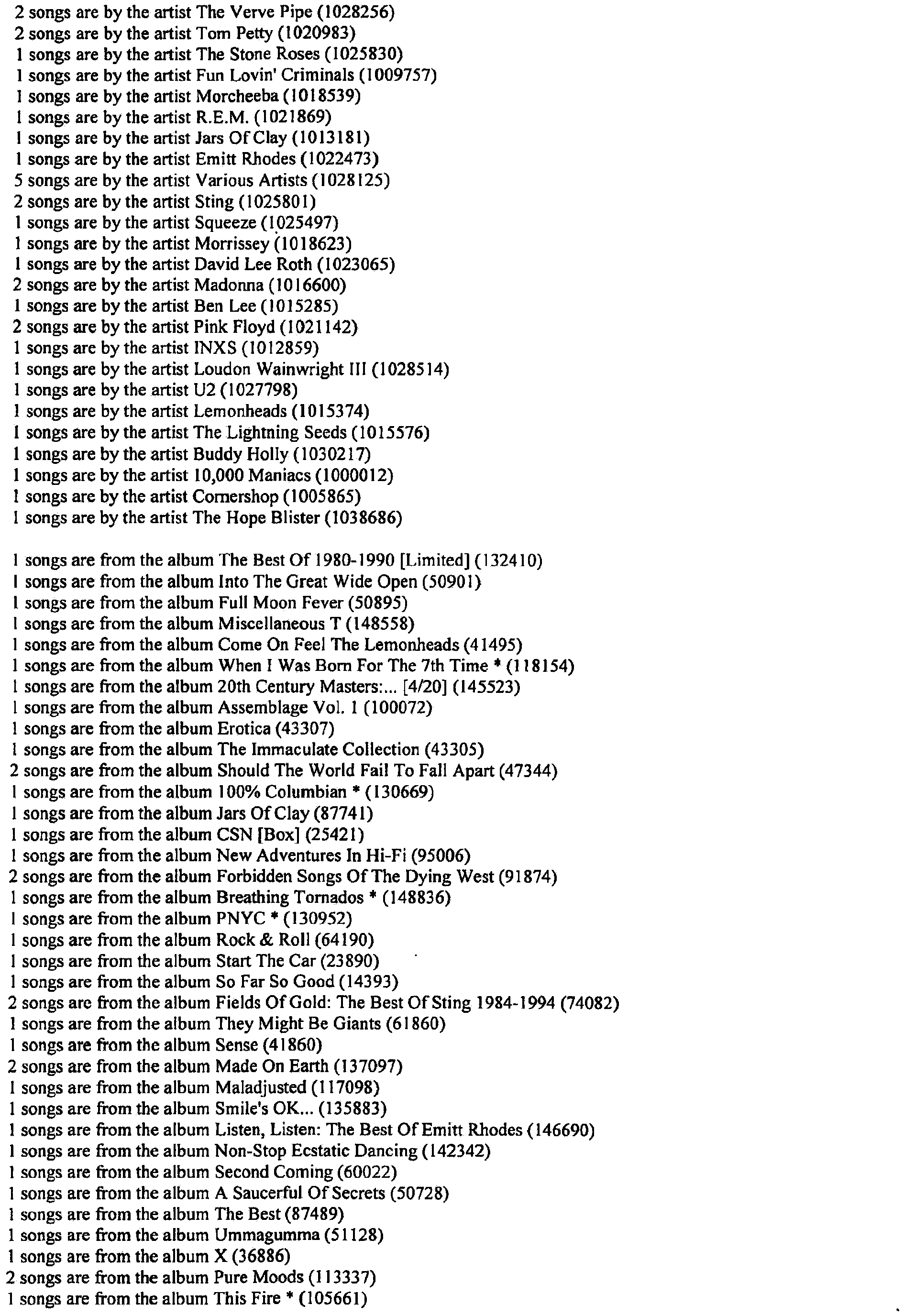

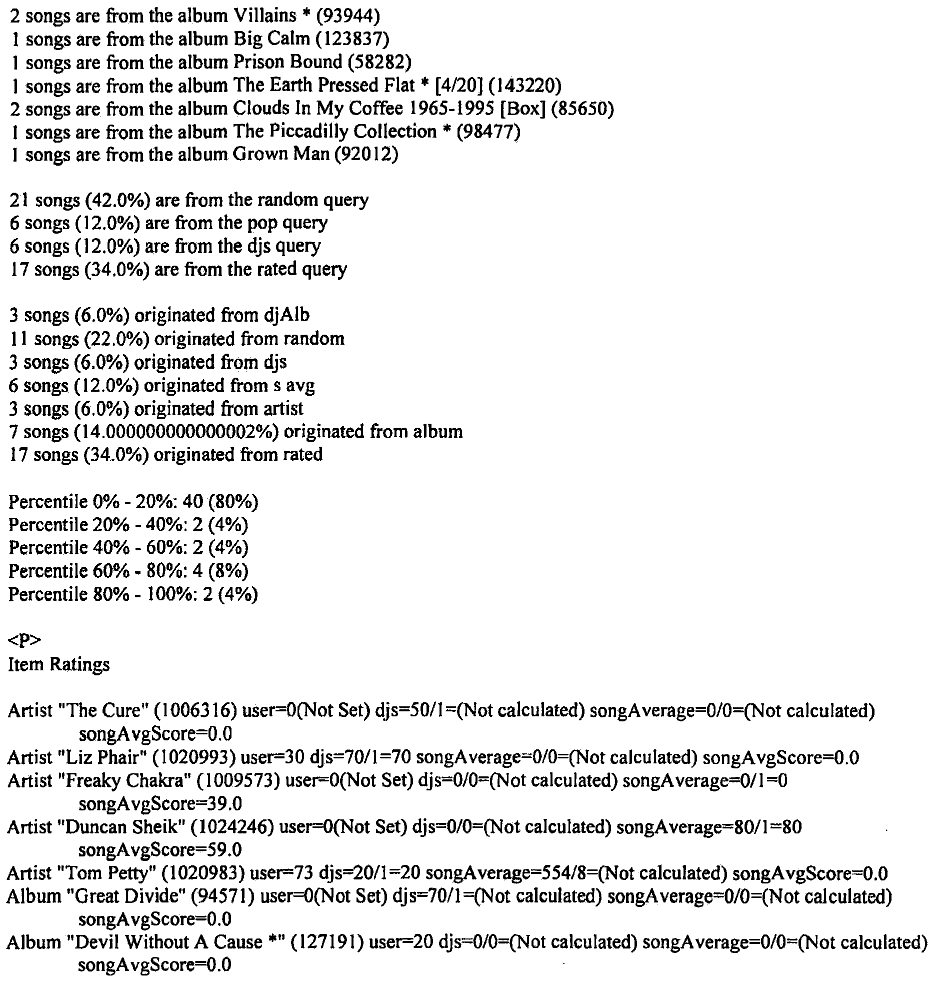

### «entries omitted».

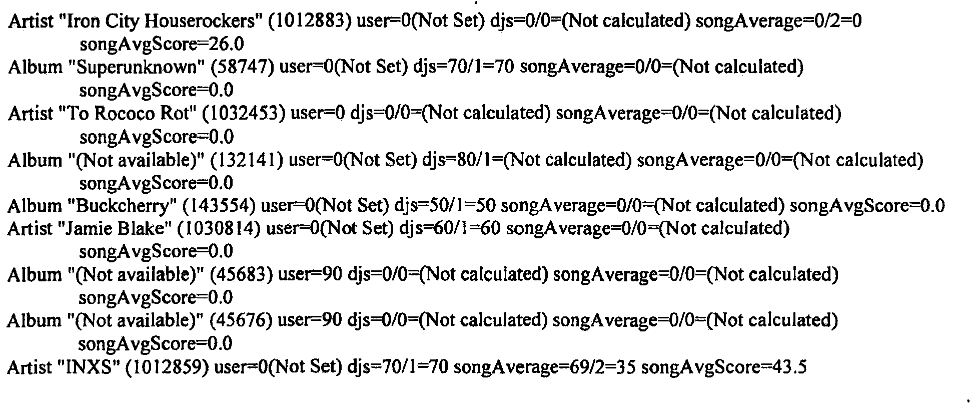

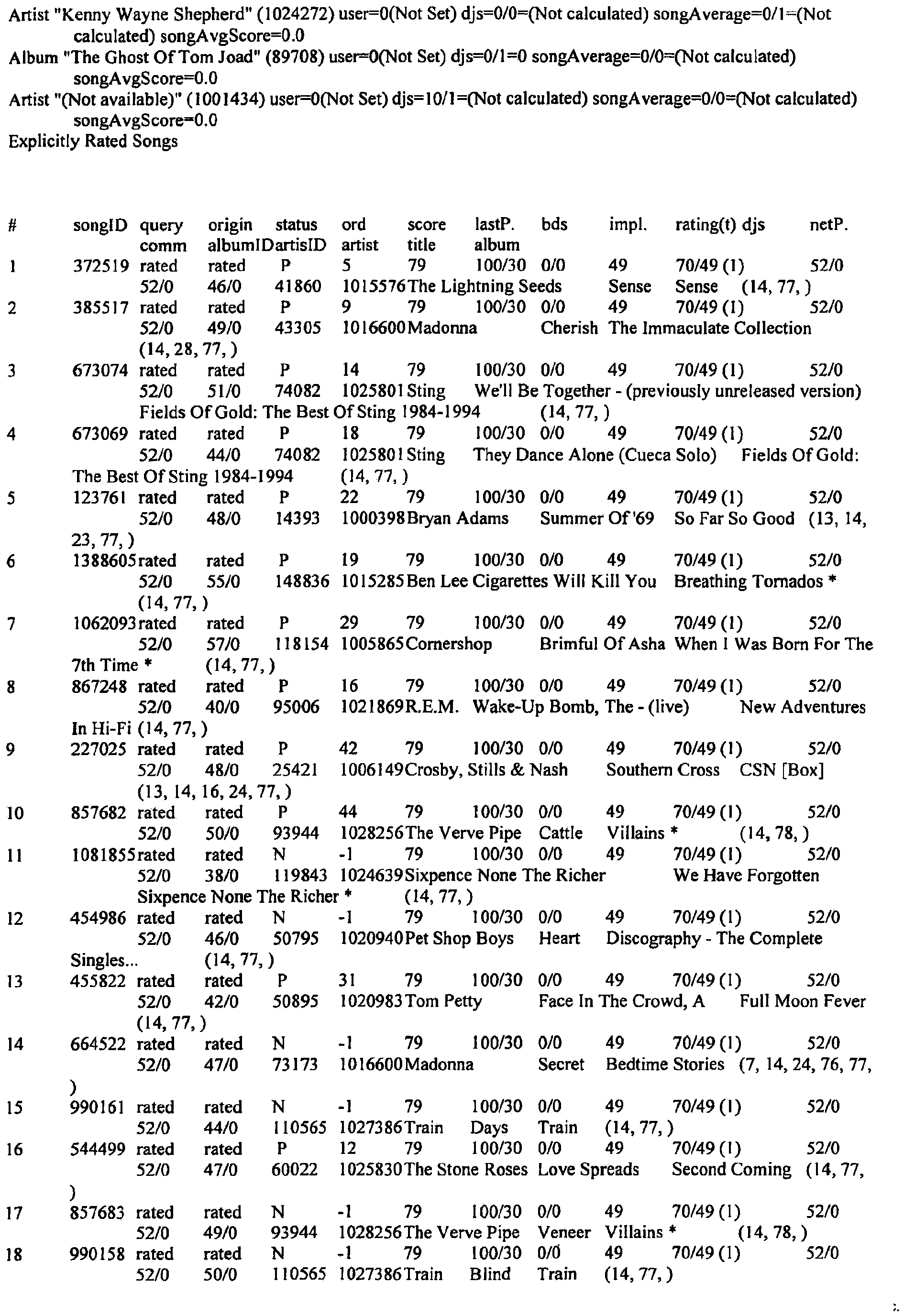

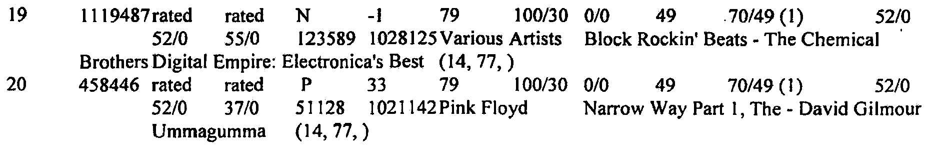

### «entries omitted».

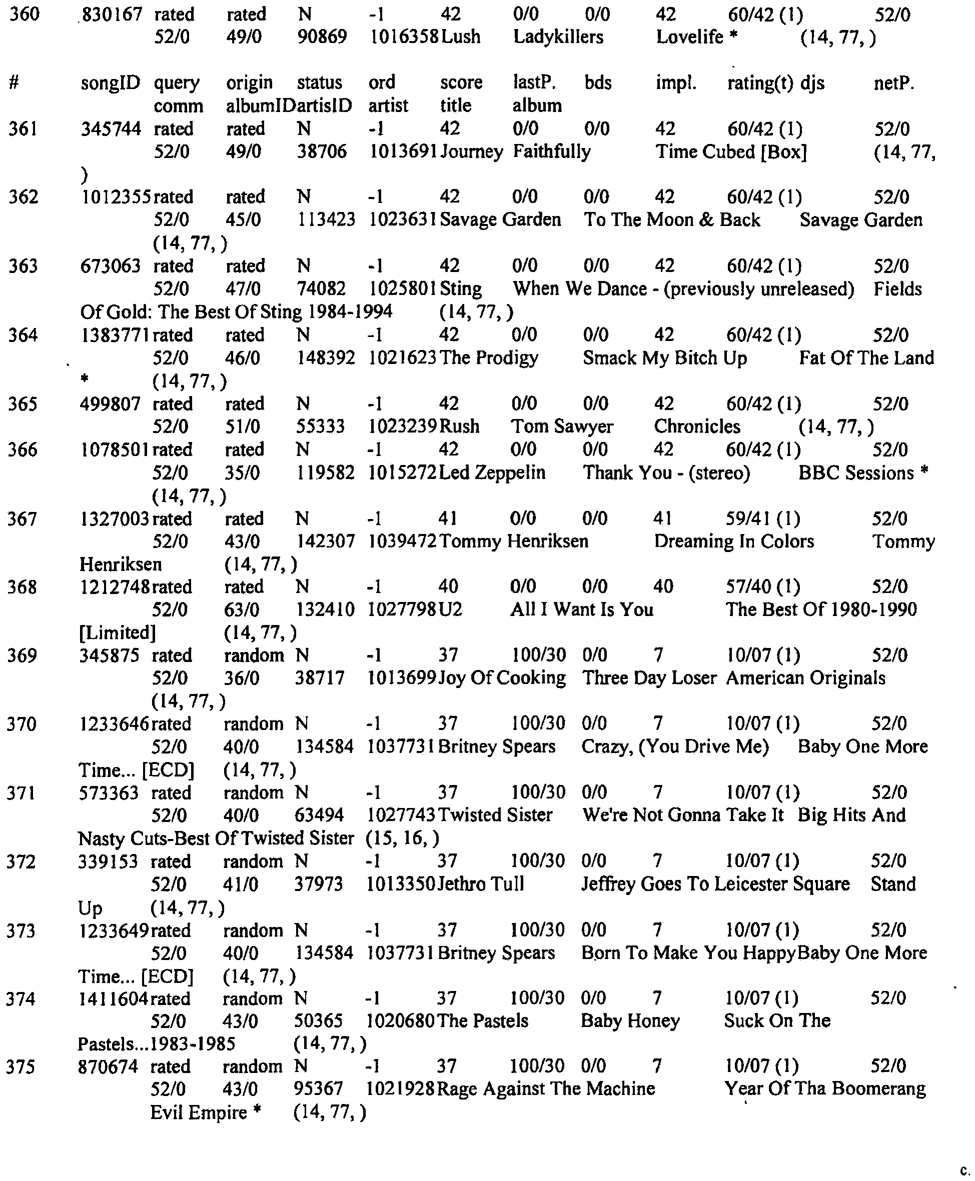

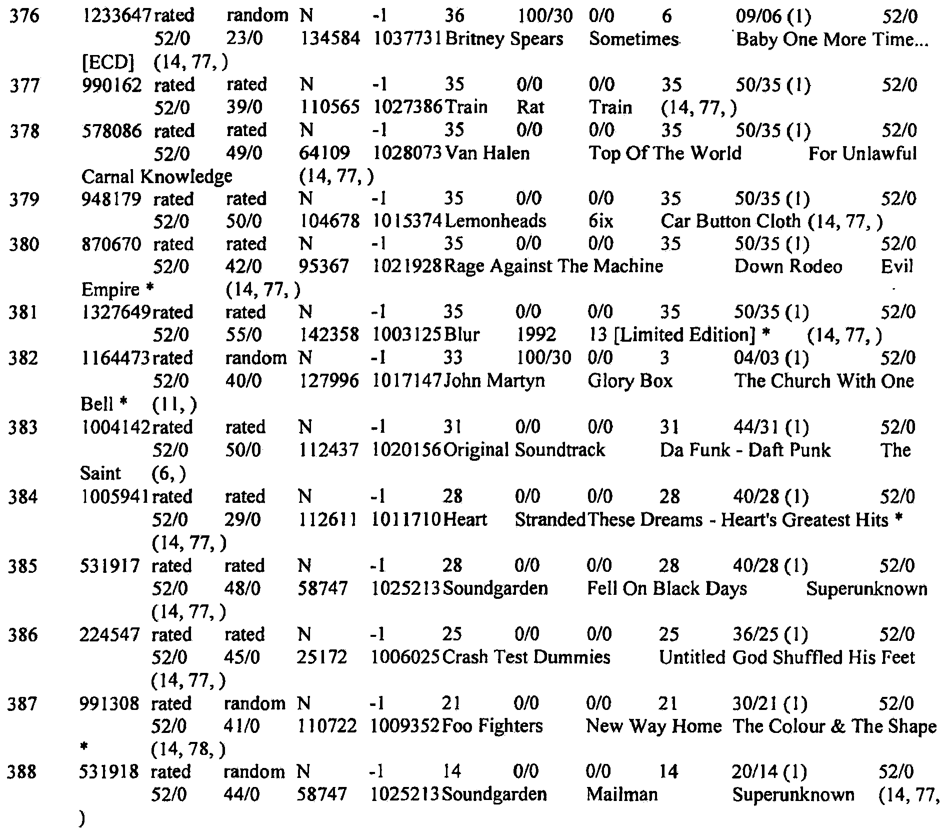

### Implicitly Rated Songs

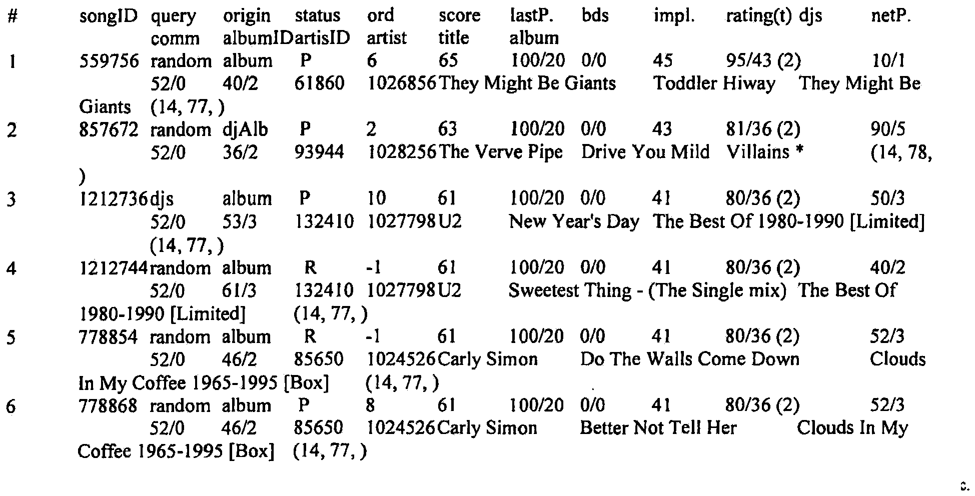

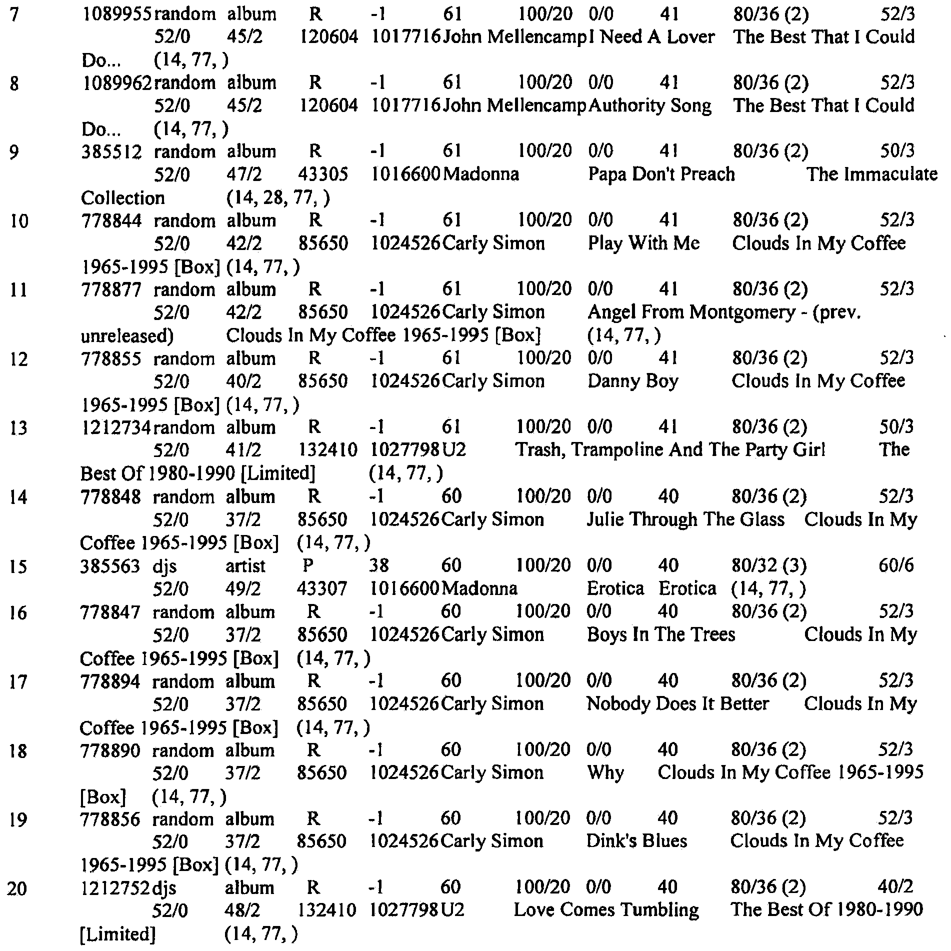

### «entries omitted».

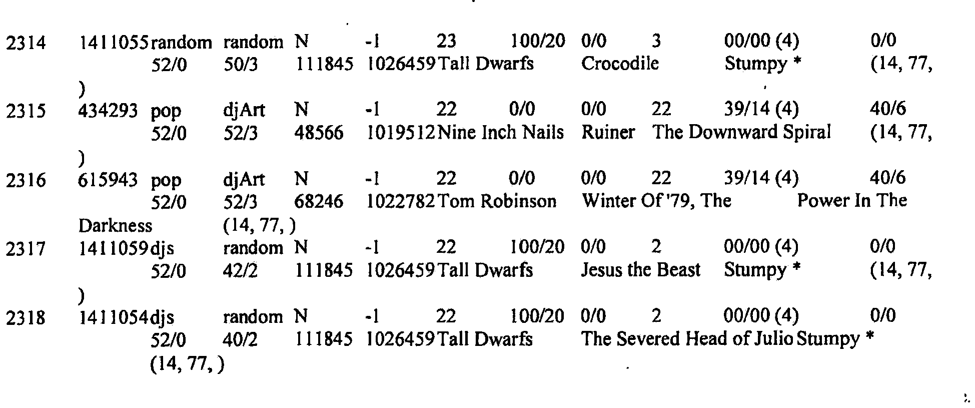

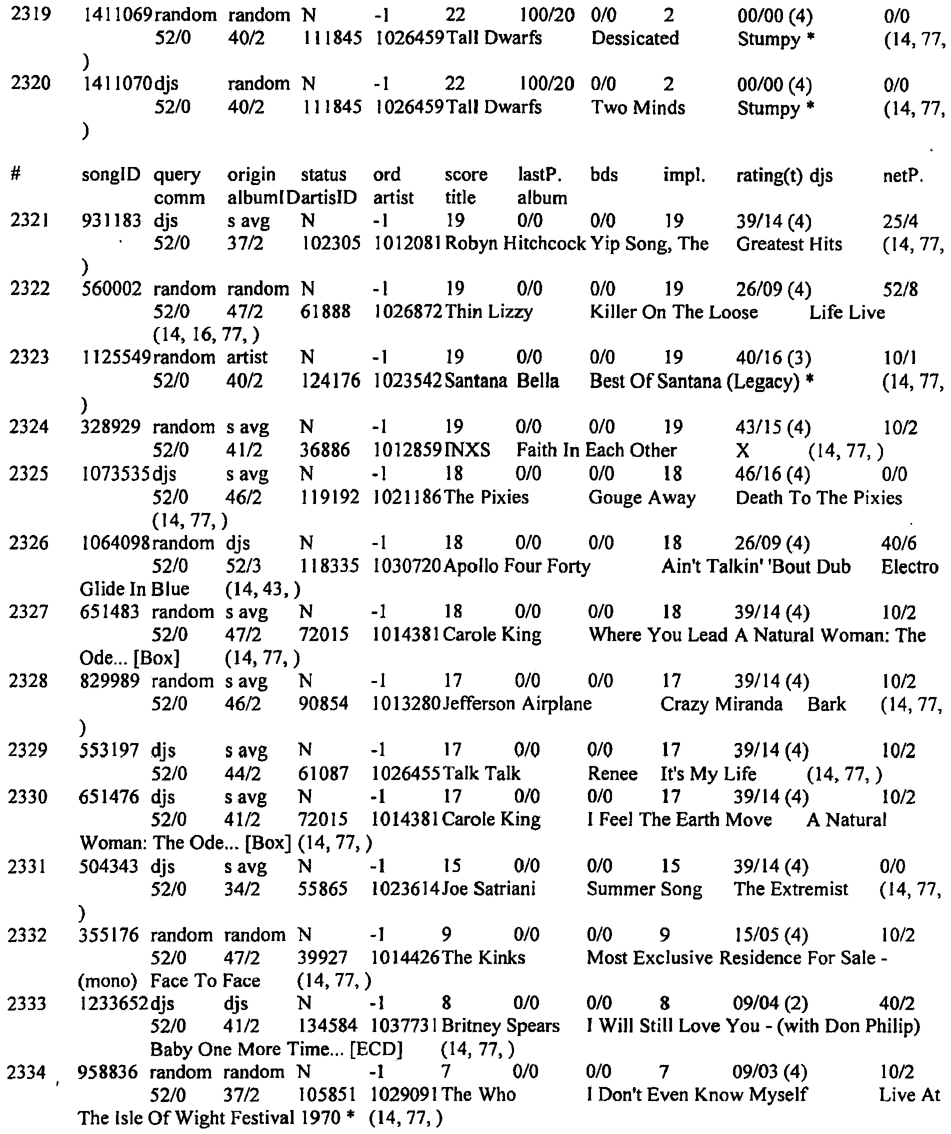

### Unrated Songs

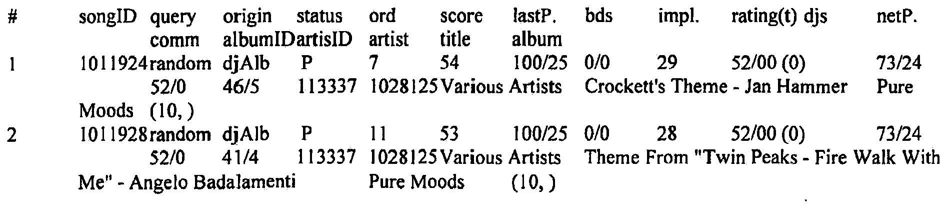

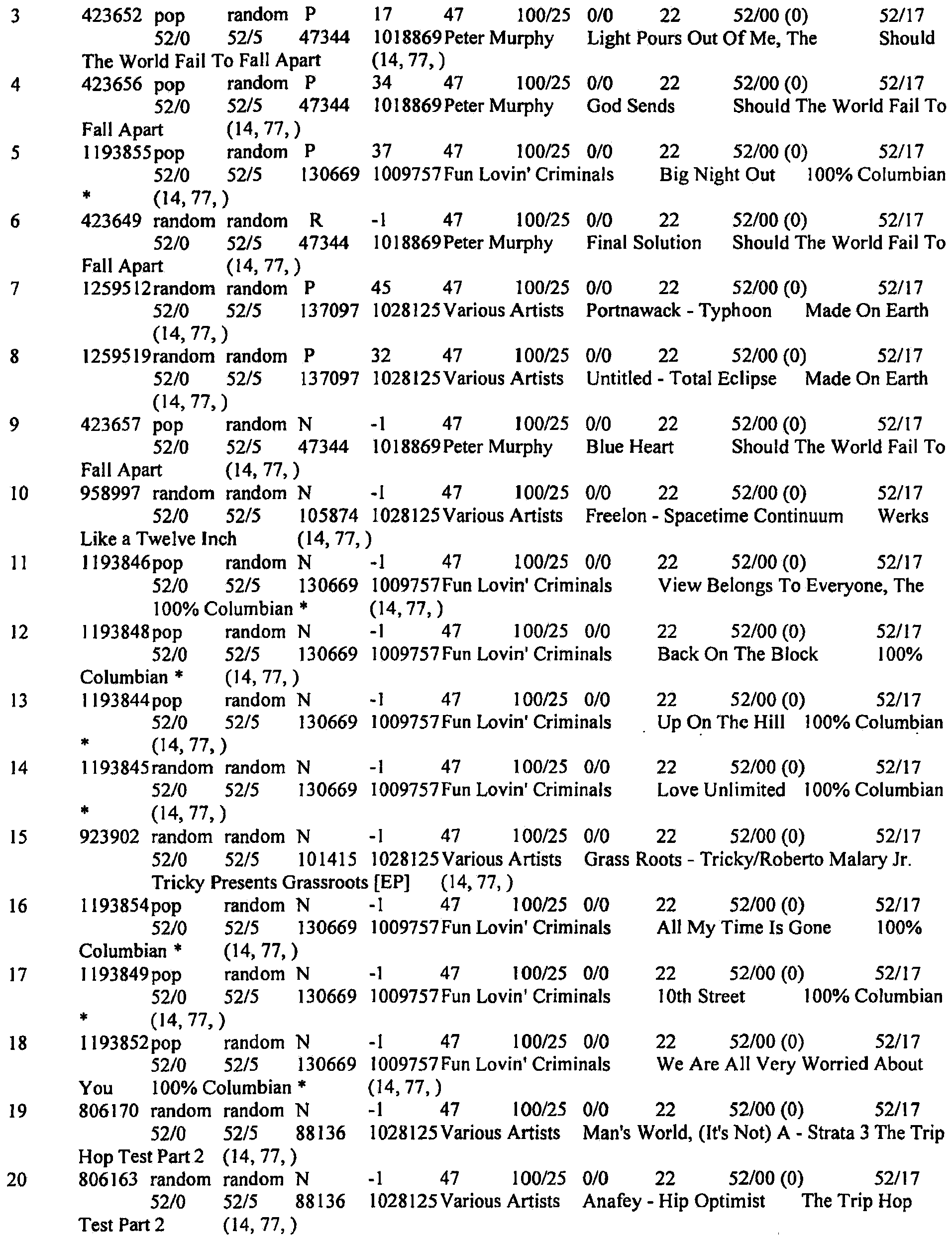

### «entries omitted».

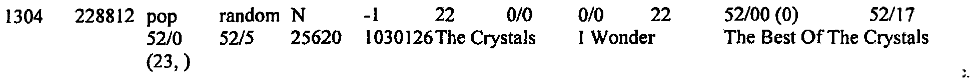

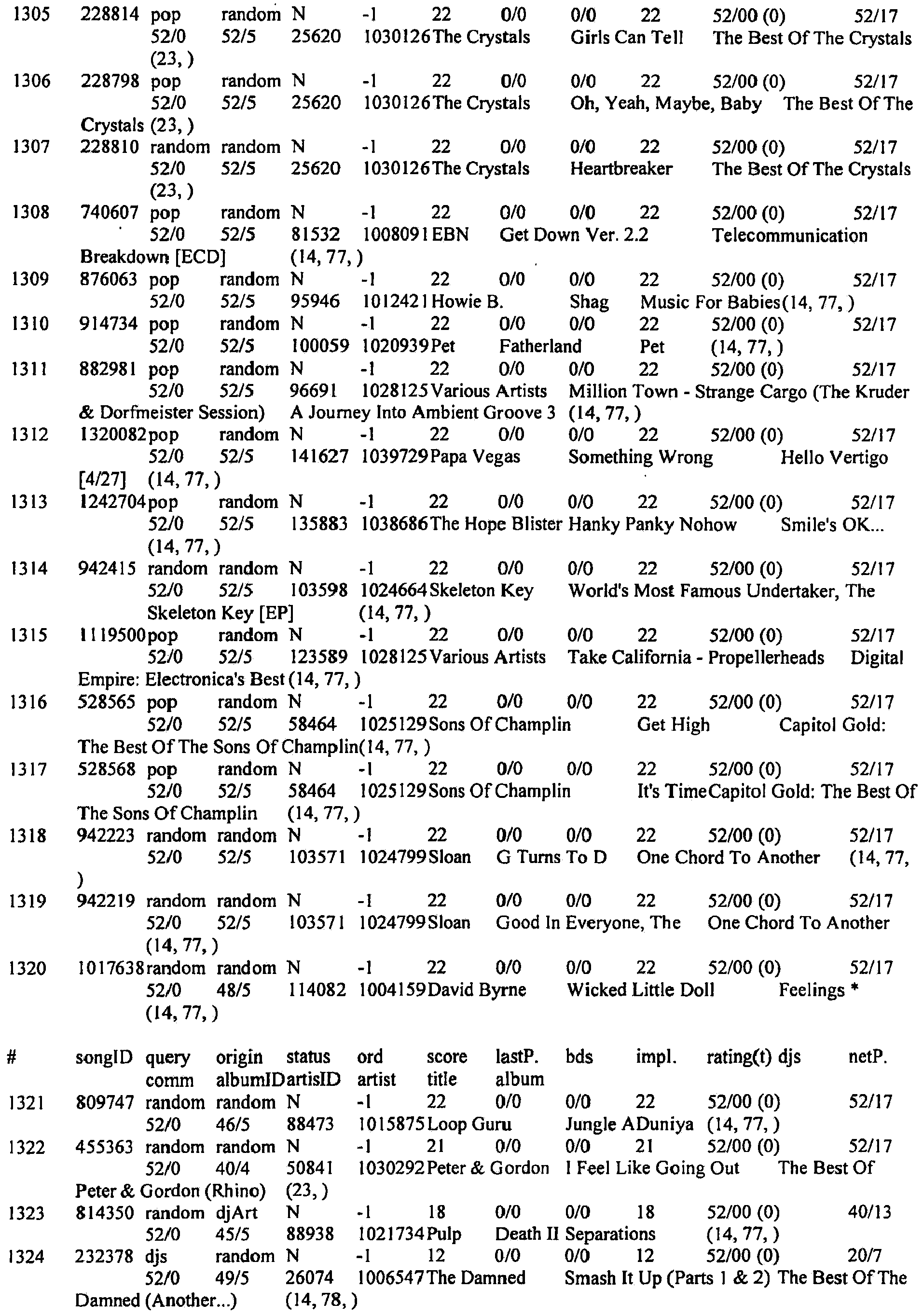

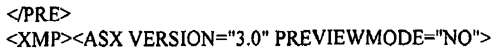

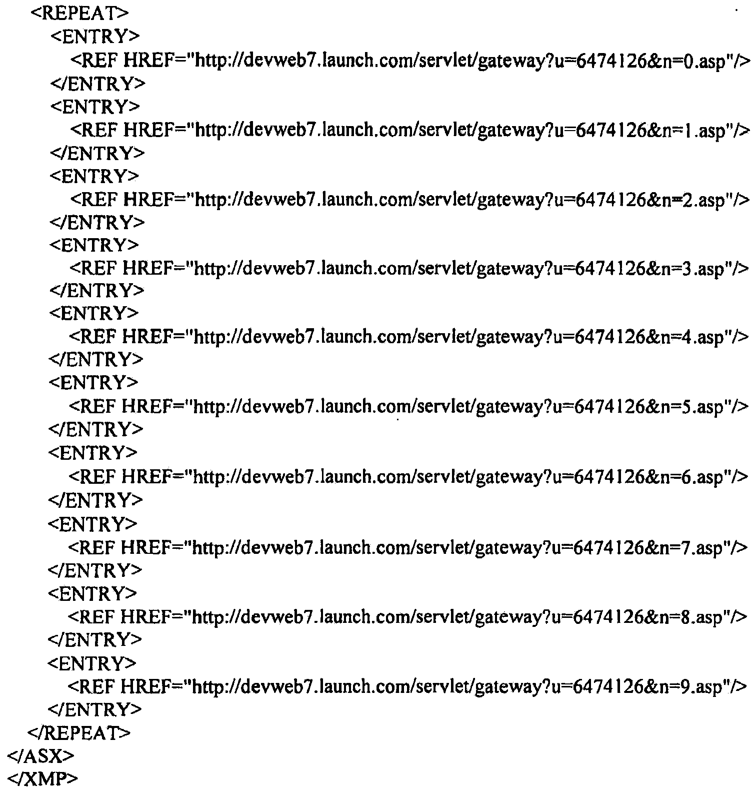

### SOURCE CODE

### Internet Radio and Broadcast Method Copyright © 1999,2000 LAUNCH Media, Inc. www.LAUNCH.com

| | |
|---|---|
| **ALBUMARTISTDATA** | **4** |
| **ALBUMINFO** | **5** |
| **ARTISTINFO** | **7** |
| **AVERAGERATING** | **8** |
| **BANDWIDTH** | **9** |
| **BDSRANK** | **11** |
| **CACHEDRATING** | **12** |
| **CLIP** | **13** |
| **CLIPCOLLECTION** | **17** |
| **CLIPSCHEDULE** | **18** |
| **CONSTANTS** | **21** |
| **DBCONNECTION** | **23** |
| **DBEXCEPTION** | **26** |
| **DBPREPAREDSTATEMENT** | **27** |
| **DBRESULTSET** | **28** |
| **DJ** | **31** |
| **DJLIST** | **32** |
| **FREQUENCYCOUNTER** | **34** |
| **GENERATORPARAMETERS** | **37** |
| **GENREINDEX** | **39** |
| **GENRELIST** | **41** |
| **GETADS** | **43** |
| **GETBDSSTATIONS** | **45** |
| **GETGENRES** | **46** |
| **GETITEMRATINGSFROMDB** | **47** |
| **GETLASTPLAYED** | **48** |
| **GETNEWS** | **49** |
| **GETPLAYLIST** | **51** |
| **GETPLAYLISTSERVERS** | **52** |
| **GETPLAYLISTSERVERSINTERFACE** | **53** |
| **GETPOPULAR** | **54** |
| **GETRATINGS** | **55** |
| **GETRATINGSCACHEUSERS** | **59** |
| **GETRATINGSCACHEUSERSINTERFACE** | **61** |
| **GETRECENTLYPLAYED** | **62** |
| **GETSONGINFOSERVLET** | **64** |
| **GETSONGRATINGSFROMDB** | **70** |
| **INTHASH** | **71** |
| **ITEM** | **72** |
| **ITEMSPROFILE** | **74** |
| **MEDIA** | **76** |
| **MEDIAFORMAT** | **77** |
| **MEDIAGATEWAYSERVLET** | **78** |
| **MEDIALIST** | **83** |
| **PICKCOUNT** | **85** |
| **PICKLIST** | **87** |
| **PICKSTATUS** | **88** |
| **PLAYDATAHASH** | **89** |
| **PLAYDATES** | **90** |
| **PLAYLIST** | **98** |
| **PLAYLIST2** | **105** |
| **PLAYLISTCREATORTEST** | **106** |
| **PLAYLISTENTRY** | **107** |
| **PLAYLISTGENERATOR** | **108** |
| **PLAYLISTGENERATORSERVLET** | **120** |
| **PLAYLISTMAKER** | **125** |
| **PLAYLISTPARAMETERS** | **126** |
| **PLAYLISTSTATUS** | **127** |
| **POPULARSONGS** | **130** |
| **POPULATION** | **131** |
| **RATING** | **139** |
| **RATINGSCACHE** | **140** |
| **RATINGSPROFILE** | **146** |
| **RATINGWIDGETSERVLET** | **147** |
| **RECLIST** | **153** |
| **SAVECLIPS** | **156** |
| **SAVEPLAYLIST** | **158** |
| **SIMPLECLIP** | **160** |
| **SIMPLECLIPLIST** | **161** |
| **SIMPLEPLAYLIST** | **162** |
| **SONG** | **165** |
| **SONGDATA** | **167** |
| **SONGGROUP** | **174** |
| **SONGINFO** | **175** |
| **SONGINFOCACHE** | **178** |
| **SONGINFOCACHEUPDATER** | **185** |
| **SONGLIST** | **186** |
| **SONGRATING** | **189** |
| **STATION** | **190** |
| **STATIONLIST** | **191** |
| **UTIL** | **192** |
| **WEIGHTMATRIX** | **194** |

### AlbumArtistData

```
 package com.launch.PlaylistGenerator;
 public class AlbumArtistData
 {
 Item album = null;
 Item artist = null;
 boolean alreadyTriedAlbum = false;
 boolean alreadyTriedArtist = false;
 public void reset()
 {
 album = null;
 artist = null;
 alreadyTriedAlbum = false;
 alreadyTriedArtist = false;
 }
 public Item getAlbum(ItemsProfile items, SongData data)
 {
 if (alreadyTriedAlbum)
         return album;
 alreadyTriedAlbum = true;
 album = items.get(data.getAlbumID());
 return album;
 }
 public Item getArtist(ItemsProfile items, SongData data)
 {
 if (alreadyTriedArtist)
         return artist;
 alreadyTriedArtist = true;
 artist = items.get(data.getArtistID());
 return artist;
 }
 }
```

### AlbumInfo

```
 package com.launch.PlaylistGenerator;
 import java.util.Vector;
 public class AlbumInfo
 {
 int ID;
 String title;
 ArtistInfo artist;
 Vector genres;
 public AlbumInfo(int ID)
 {
  this.ID = ID;
 }
 public String toString()
 {
 return "[albumID=" + ID + ", title=" + title
         + ", genres=" + genresString() + ", artist=" + artist.toString() + "]";
 }
 public String genresString()
 {
  if (genres == null)
         return "(NONE)";
 String result = "";
 for (int i = 0; i < genres.size(); i++)
  {
         result = result.concat(genres.elementAt(i) + ", ");
 }
 return "(" + result + ")";
 }
 public int getArtistID() throws Exception
 {
 if (artist = null)
         throw new Exception("artist is not set for album " + ID + " (" + title + ") ");
 return artist.ID;
 }
 public boolean inGenres(short genreID)
 {
 if (genres == null)
         return false;
 return genres.contains(new Short(genreID));
 }
 public boolean inGenres(GenreList userGenres)
 {
 if (userGenres.allGenres == true)
         return true;
 if (genres == null)
         return false;
```

### ArtistInfo

```
 package com.launch.PlaylistGenerator;
 import java.util.Hashtable;
 public class ArtistInfo
 {
 int ID;
 String title;
 Hashtable songs;
 public ArtistInfo(int ID)
 {
 this.ID = ID;
  songs = new Hashtable();
 }
 public String toString()
 {
 return "[artistID=" + ID + ", title=" + title + "]";
 }
 public final static boolean isVariousArtists(int itemID)
 {
 return (itemID == Constants.ARTIST_VARIOUS_ARTISTS
         || itemID == Constants.ARTIST_ORIGINAL_SOUNDTRACK
         || itemID = Constants.ARTIST_SOUNDTRACK);
 }
 }
  // do it the other way, check each of the genres the song is
  // in and if it's in the user's genres
  for (int i = 0; i < genres,size(); i++)
  {
         Short genreID = (Short) genres.elementAt(i);
         if (userGenres.exists(genreID))
                 return true;
  }
 return false;
 }
 public void addGenre(short genreID)
 {
  if (genres = null)
         genres = new Vector(1,1);
 // be careful not to add duplicates
 Short genre = new Short(genreID);
 if (!genres.contains(genre))
         genres.addElement(new Short(genreID));
 }
 }
```

### AverageRating

```
 package com.launch.PlaytistGenerator;
 public class AverageRating extends Rating
 {
 private short count = 0;
 private int sum;
 private boolean calculated = false;
 public AverageRating()
 {
  super();
 }
 public AverageRating(short defaultRating)
 {
  super(defaultRating);
 }
 public void add(int value)
 {
  sum += value;
  count++;
  calculated = false;
 }
 public short get()
 {
  calculate();
  return super.get();
 }
 public short count()
 {
  return count;
 }
 private void calculate()
 {
  if (!calculated)
  {
          if (count > 0)
          {
                 set(Util.average(count, sum));
                 set = true;
          }
          calculated = true;
  }
 }
 public String toString()
 {
  String ratingStr = "(Not calculated)";
  if (set) ratingStr = "" + rating;
  return sum + "/" + count + "=" + ratingStr;
 }
 }
```

### Bandwidth

```
 package com.launch.PlaylistGenerator;
 public class Bandwidth
 {
 public final static short SPEED_28 = 28;
 public final static short SPEED_56 = 56;
 public final static short SPEED_100 = 100;
 public final static short SPEED_128 = 128;
 public final static short SPEED_300 = 300;
 public final static short SPEED_500 = 500;
 private boolean beenset = false;
 private short value = SPEED_28;
 public Bandwidth()
 {
 }
 public Bandwidth(short speed)
 {
 value = speed;
 beenset = true;
 }
 public Bandwidth(String speed)
 {
 if (speed == null)
 {
        beenset = false;
 }
 else
 {
        if (speed.equals("28"))
                set(SPEED_28);
        else if (speed.equals("56"))
                set(SPEED_56);
        else if(speed.equals("100"))
                set(SPEED_100);
        else if (speed.equals("128"))
                set(SPEED_128);
        else if (speed.equals("300"))
                set(SPEED_300);
        else if (speed_equals("500"))
                set(SPEED_500);
        else
        {
                beenset = false;
        }
 }
 }
 public String toString()
 {
 if (value = SPEED_28)
        return "28.8k";
 else if (value = SPEED_56)
        return "56k";
 else if (value = SPEED_100)
          return "100k";
  else if (value == SPEED_128)
          return "128k";
  else if (value == SPEED_300)
         return "300k";
  else if (value = SPEED_500)
          return "56k";
  return "UNKNOWN (" + value + ")";
 }
 public short get()
 {
  return value;
 }
 public void set(short speed)
 {
  if (speed = SPEED_28
         || speed == SPEED_56
         || speed == SPEED_100
         || speed == SPEED_128
         || speed == SPEED_300
         || speed == SPEED_500)
  {
         value = speed;
         beenset = true;
  }
  else
         beenset = false;
 }
 public boolean load(DBConnection conn, int userlD)
 {
 try
  {
         DBResultSet rs = conn.executeSQL("exec sp_a150UserPreference_GetValue_xsxx " +
 userID);
         if (!rs.getBOF() && !rs.getEOF())
         {
                set(rs.getShort("iDefaultBandwidth"));
         }
 }
 catch (DBException oops)
 {
         Util.debug("DB Exception in Bandwidth::load: " + oops.getMessage());
 }
 return isSet();
 }
 public boolean isSet()
 {
 return beenset;
 }
 }
```

### BDSRank

```
 package com.launch.PlaylistGenerator;
 public class BDSRank
 {
 short stationID;
 byte rank;
 public BDSRank(short stationID, byte rank)
 {
 this.stationID = stationID;
 this.rank = rank;
 }
 public String toString()
 {
 return stationID + ":" + rank;
 }
 }
```

### CachedRating

```
package com.launch.PlaylistGenerator;
 import java.io.*;
 import java.util.Date;
 /**
 * This class is used to model a single rating in the cache.
 **/
 public final class CachedRating implements Serializable
 {
  public int userID;
  public int itemID;
 public byte rating;
 public byte type;
 private Date created = new Date();
 //------------------------------------------------------
 public CachedRating(int userID, int itemID, byte rating, byte type)
  {
         this.userID = userID;
         this.itemID = itemID;
         this.rating = rating;
         this.type = type;
  }
 public final String toString()
  {
         return("user:" + userlD + ", itemID:" + itemID + ", rating:" + rating + ", type:" +
 typeString(type) + ", date:" + created.toString() + Util.newLine);
 }
 public final static String typeString(byte type)
 {
         if (type == Constants.ITEM_TYPE_SONG)
                return "song";
         else if (type = Constants.ITEM_TYPE_ALBUM)
                return "album";
         else if (type == consmnts.ITEM_TYPE_ARTIST)
                return "artist";
         return "unknown";
 }
 public String hashKey()
 { return itemID + ":" + type;
         return itemID + ":" + type;
 }
 }
```

### Clip

```
 package com.launch.PlaylistGenerator;
 import java.util.Date;
 public class Clip
 {
 public final static byte TYPE_NONE = 0;
 public final static byte TYPE_NEWS = 1;
 public final static byte TYPE_AD = 2;
 public final static byte TYPE_INTERSTITIAL = 3;
 public final static byte TYPE_TIP = 4;
 public final static byte TYPE_SONG = 5;
 public final static byte TYPE_BROADCAST = 6;
 public int ID;
 public byte type;
 public int mediaID;
 public Date lastPlayed;
 public String name, directory, server, filepath;
 public MediaList media;
 byte origin;
 private boolean set = false;
 public Clip(byte type)
 {
  this.type = type;
  media = new MediaList();
 }
 public Clip(int ID, byte type)
 {
  this(type);
  this.ID = ID;
 }
 public Clip(int ID, byte type, int mediaID, String name, Date lastPlayed)
 {
  this(ID, type);
  this.ID = ID;
  this.mediaID = mediaID;
  this.name = name;
  this.lastPlayed = lastPlayed;
 }
 public byte type() { return type;}
 public boolean isset() { return set; }
 private void setDirectory(String newDir)
 {
  if (!newDir.equals(" "))
  {
          directory = newDir;
  }
 }
 public void logPlay(DBConnection conn, int userID)
 {
  String sql = "";
  if (type == TYPE_SONG)
         sql = "exec sp_lcLogPlaysong_isud " + userID + ", " + mediaID + ", " + ID + ", " +
 origin;
 else if (type = TYPE_AD)
         sql = "exec sp_lcLogPlayAd_isud " + userlD + ", " + mediaID + ", " + ID;
 else if (type = TYPE_NEWS)
         sql= "exec sp_lcLogPlayNews_isud " + userID + ", " + mediaID + ", " + ID;
 else if (type == TYPE_TIP)
         sql = "exec sp_lcLogPlayTip_isud " + userID + ", " + mediaID + ", " + ID;
 // else if (type == TYPE_BROADCAST)
 // sql = "exec sp_lcLogPlayBroadcast_isux " + userID + ", " + mediaType;
 try
 {
         conn.executeUpdate(sql, true);
 }
 catch (DBException e)
 {
         System.err.println("DBException in Clip:logPlay:" + e.toString());
 }
 }
 public boolean getPath(DBConnection conn, ClipSchedule schedule)
 {
 if (type = TYPE_NONE)
        return false;
 SimpleClipList list = null;
 if (type = TYPE_SONG)
        list = schedule.playlist.songs;
 else if (type == TYPE_AD)
        list = schedule.playlist.ads;
 else if (type = TYPE_TIP)
        list = schedule.playlist.tips;
 else if (type = TYPE_NEWS)
        list = schedule.playlist.news;
 if (list = null)
        return false;
 SimpleClip yip = list.pop();
 if (yip == null)
        return false;
 mediaID = yip.mediaID;
 ID = yip.ID;
 origin = yip.origin;
 try
 {
        DBResultSet rs = conn.executeSQL("exec sp_lcGetMediaPath_xsxx " + mediaID);
        if (!rs.getBOF() && !rs.getEOF())
        {
                setDirectory(rs.getString("directory"));
                server = rs.getString("server");
                filepath = rs.getString("filepath");
                set = true;
        }
 }
 catch (DBException e)
 {
         System.err.println("DBException in Clip::getPath: " + e.toString());
 }
 return set;
 }
 /*
 public boolean pop(DBConnection conn, int userID, int context)
 {
 set = false;
 try
 {
         DBResultSet rs;
         String the_command;
         int contextNum = 0;
         if (context > 1) contextNum = 1;
         if (type==TYPE_BROADCAST)
         {
                the_command="exec " + BROADCAST_SP + " " + userID + ", " + type + ", " +
 context;
         }
        else
         {
                String stored_proc = null;
                if (type = TYPE_AD) stored_proc = ADS_SP;
                else if (type = TYPE_TIP) stored_proc = TIPS_SP;
                else if (type = TYPE_NEWS) stored_proc = NEWS_SP;
                else stored_proc = SONG_SP;
                the_command= "exec " + stored_proc + " " + userID + ", " + contextNum;
        }
        rs = conn.executeSQL(the_command);
        if (!rs.getBOF() && !rs.getEOF())
        {
                setDirectory(rs.getString("directory"));
                server = rs.getString("server");
                filepath = rs.getString("filepath");
                set = true;
        }
 }
 catch (DBException e)
 {
        System.err.println("DBException in Clip::pop: " + e.toString());
 }
 return isSet();
 }
 */
 public String path()
 {
 return server
         + directory
         + "/"
         + filepath;
 }
 public String toString()
 {
 return "Clip type (" + typeName() + "), id = " + mediaID
          + ", lastPlayed = " + lastPlayed
          + ", media = " + media.toString()
          + ", path = " + path();
 }
 public PlaylistEntry toPlaylistEntry(short mediaType)
 {
 PlaylistEntry entry = new PlaylistEntry();
 entry.mediaID = media.getID(mediaType);
 entry.title = name;
 entry.filepath = media.getFilepath(mediaType);
 return entry;
 }
 public SimpleClip toSimpleClip(short mediaType)
 {
 return new SimpleClip(ID, media.getID(mediaType));
 }
 public String typeName()
 {
 switch(type)
 {
 case TYPE_AD:
         return "Ad";
 case TYPE_BROADCAST:
         return "Broadcast";
 case TYPE_INTERSTITIAL:
         return "Interstitial";
 case TYPE_NEWS:
         return "News";
 case TYPE_TIP:
         return "Tip";
 case TYPE_SONG:
         return "Song";
 }
 return "?";
 }
 public String URL()
 {
 return server
          + directory
          + "/"
          + filepath;
 }
```

### Clipcollection

```
 package com.launch.PlaylistGenerator;
 import java.util.Hashtable;
 public class ClipCollection extends Hashtable
 {
 public Clip put(int clipID, Clip aClip)
 {
 return (Clip) put(new Integer(clipID), aClip);
 }
 public Clip get (int clipID)
 {
 return (Clip) get(new Integer(clipID));
 }
 }
```

### ClipSchedule

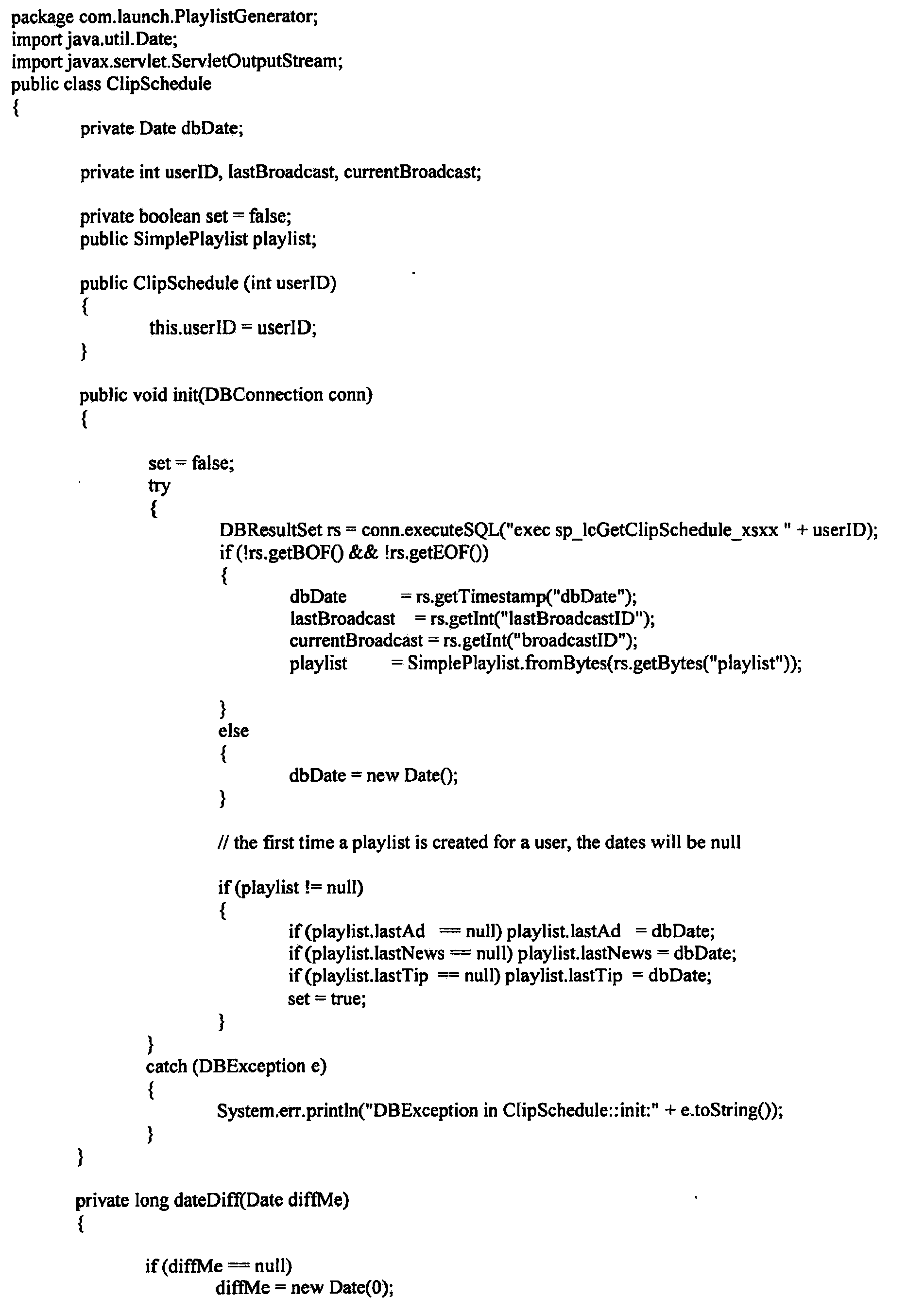

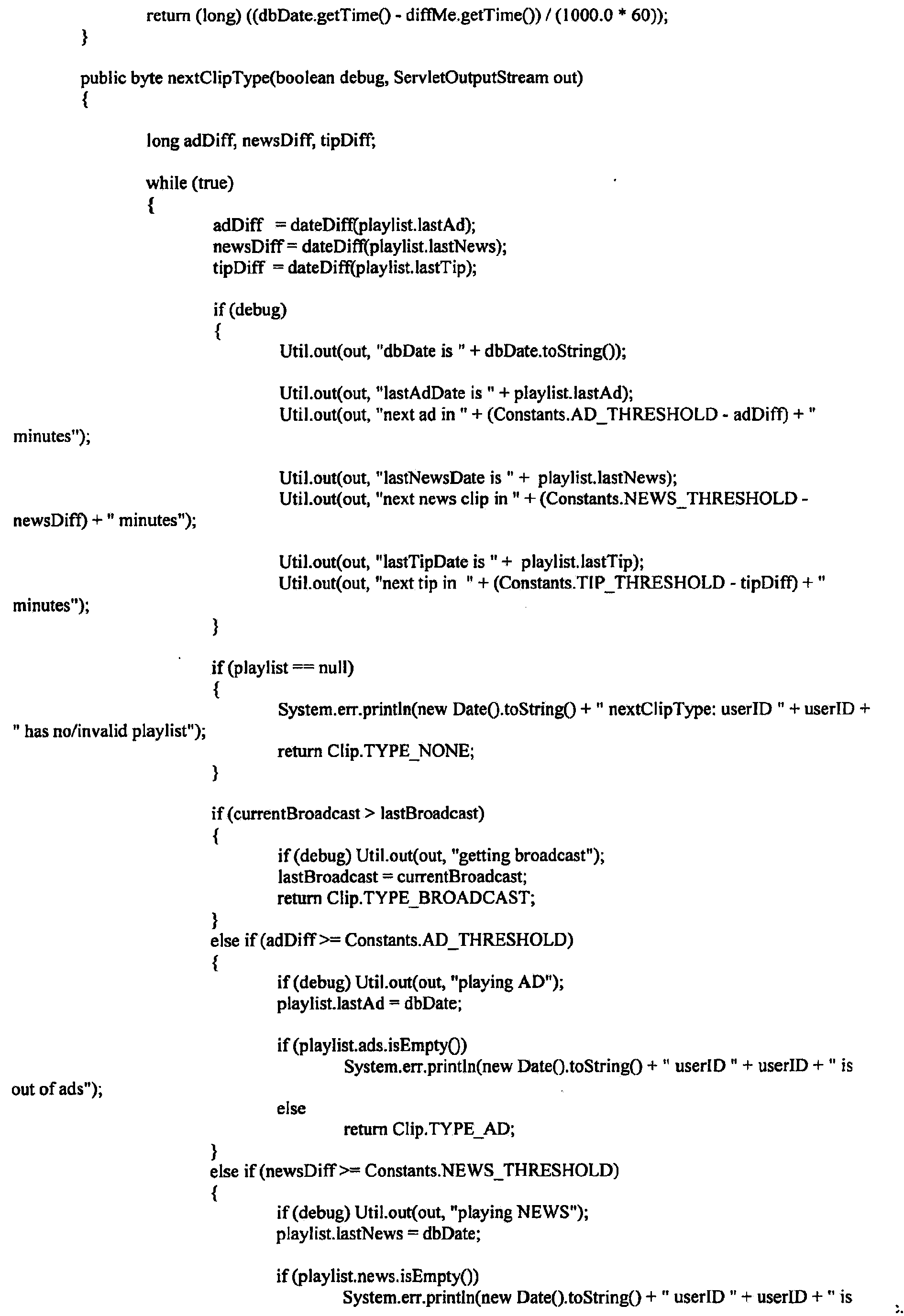

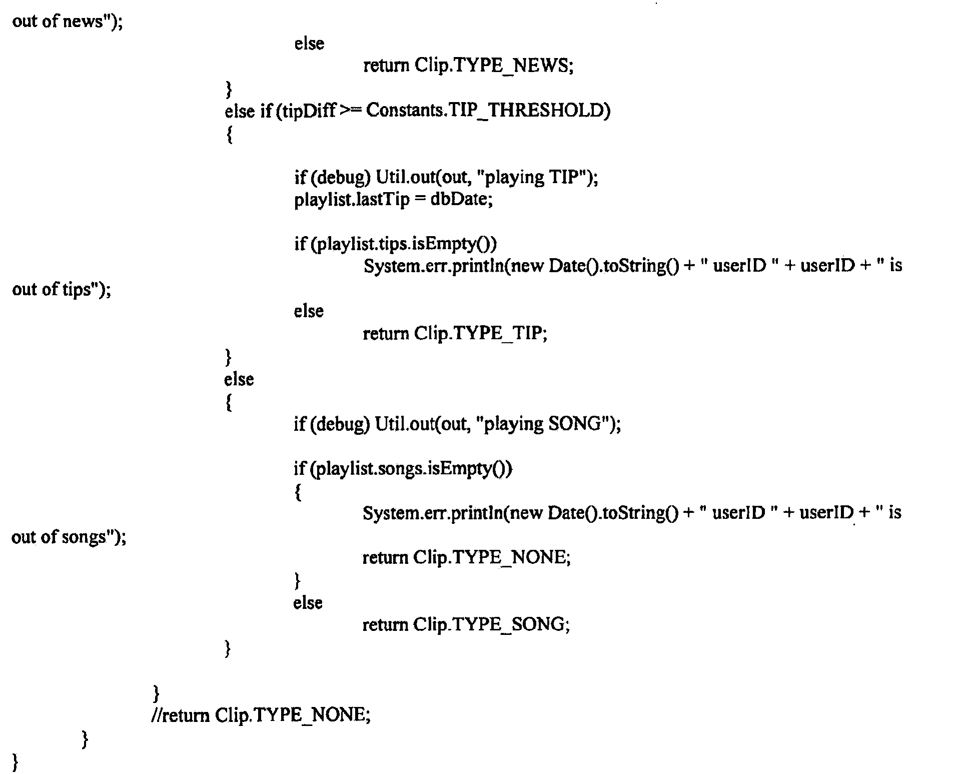

### Constants

```
 package com.launch.PlaylistGenerator;
 public interface Constants
 {
 // live
 /*
 public final static String DB_SOURCE = "LAUNCHcast";
 public final static String DB_USERNAME = "dbClient";
 public final static String DB_PASSWORD = "83kareem23";
 public final static String DB_DBNAME = "dbLaunchProd";
 public final static String DB_SERVER = "209.67.158.19"; // DB3
 public final static short DB_PORT = 1433;
 public final static String STREAM_URL = "http://lcplaylist.launch.com/servlet/gateway";
 public final static String STREAM_SERVER = "http://lcstream.launch.com";
 */
 // development
 public final static String DB_SOURCE = "LAUNCHcast";
 public final static String DB_USERNAME = "dbClient";
 public final static String DB_PASSWORD = "29Idiocy99";
 public final static String DB_DBNAME = "dbLaunchProd";
 public final static String DB_SERVER = "zeus";
 public final static short DB_PORT = 1433;
 public final static String STREAM_URL = "http://devweb7.launch.com/servlet/gateway";
 public final static String STREAM_SERVER = "http://devweb7.launch.com/F";
 public final static int RIAA_MAX_SONGS_FROM_ALBUM = 2;
 public final static int RIAA MAX_SONGS_BY_ART!ST = 3;
 public final static int BDS_SCORE_MAX_POINTS =41;
 public final static int BDS_SCORE_POINTBAR =20;
 public final static int DEFAULT_LASTPLAYED SCORE = 100;
 public final static int DEFAULT_MEDIATYPE = 211; //16 Mono
 public final static int DEFAULT_UNRATED_RATIO = 50;
 public final static int DEFAULT_PICK_FACTOR = 7;
 public final static int DEFAULT_BDS_SCORE = 0;
 public final static int MAX_PERCENT_RATED_SONGS_TO_PICK = 20;
 public final static int NEW_USER_UNRATED_RATIO =90;
 public final static int MIN_RATINGS_TO_HONOR_RATIO = 100;
 public final static int MIN_SIZE_FOR_NO_UNRATED = 200;
 public final static int MAX_ORDINAL = 1000;
 // for calculating implicit based on other song ratings
 public final static int MAX_SONGS_BY_ARTIST = 4;
 // random picking
 public final static int RANDOM_SONGS_COUNT = 5000;
 // this is a percent of the total number of songs in the database
 public final static int MIN_SONGS_IN_GENRES_TO_GET_RANDOM= 5;
 public final static int MIN_RATING_FOR_ RATED_SOURCE =35;
 // songs with average rating above this are considered popular
 // also change this at the top of LAUNCHCast/player/getsonginfo
 public final static int POPULAR THRESHOLD = 58;
 public final static int DEFAULT_RATING = 52; // global average for
 all songs
 public final static int DEFAULT_DJS_SCORE = DEFAULT_RATING;
 public final static int DEFAULT_NETP_SCORE = DEFAULT_RATING;
 public final static byte DEFAULT_COMMRATING = DEFAULT_RATING;
 public final static int MAX_RATINGS_TO_GET = 500;
 public final static int MAX_DJ_RATINGS_TO_GET = 500;
 public final static int ARTIST_VARIOUS_ARTISTS =1028125;
 public final static int ARTIST_ORIGINAL_SOUNDTRACK = 1020156;
 public final static int ARTIST_SOUNDTRACK = 1036715;
 public final static int DEFAULT PLAYLIST_SIZE =50;
 public final static int MAX_NEWS_ITEMS = 0;
 public final static int MAX_ADS =20;
 public final static int MAX_TIPS_ITEMS =0;
 public final static int REFRESH_AT_SONGS_LEFT =8;
 public final static int REFRESH_AT_NEW_RATINGS_COUNT =15;
 public final static int AD_THRESHOLD = 30;
 public final static int NEWS_THRESHOLD = 99999999;
 public final static int TIP_THRESHOLD = 99999999;
 public final static byte ITEM_TYPE_SONG =1;
 public final static byte ITEM_TYPE_ALBUM = 2;
 public final static byte ITEM_TYPE_ARTIST =3;
 // the size of the ratings cache FOR EACH user
 public final static int RATINGS_CACHE_INITIAL_SIZE = 2000;
 public final static int RATING_UPDATE_LIST_INITIAL_SIZE = 100;
 // for updating the ratings caches
 public static final int PROPAGATE_DIRTY_RATING_SLEEP_TIME = 60 * 1000; // every 60 seconds
 public static final String POST_HEADER = "POST /servlet/playlist HTTP/1.0";
 public static final int PORT_NUMBER = 80;
 }
```

### DBConnection

```
 package com.launch.PlaylistGenerator;
 import java.util.Properties;
 import com.inet.tds.TdsDriver;
 import java,sql.SQLException;
 import java.sql.Statement;
 import java.sql.Connection;
 import java.sql.Driver;
 import java.sql.DriverManager;
 import java.util.Date;
 public class DBConnection
 {
 private Connection conn;
 public static Driver DB Driver;
 public DBConnection() throws DBException
 {
 if (DBConnection.DBDriver == null)
        DBConnection.initializeDriver();
 if(DBConnection.DBDriver == null)
        return;
 String url = "jdbc:inetdae:"
        + Constants.DB_SERVER
        +":"
        + Constants.DB_PORT
        + "?sql7=true&database="
        + Constants.DB_DBNAME
        + "&user="
        + Constants.DB_USERNAME
        + "&password="
        + Constants.DB_PASSWORD
        +"";
 try
 {
        conn = DBConnection.DBDriver.connect(url, null);
 }
 catch (SQLException oops)
 {
        throw new DBException(oops);
 }
 catch (Exception err)
 {
       Util.debug("Exception: " + err.toString());
 }
 }
 private static void initializeDriver()
 {
 DBDriver = new com.inet.tds.TdsDriver();
 }
 private DBResultSet execute(String sql, boolean printSQL) throws DBException
 {
 if (printSQL)
        Util.debug(Util.newLine + Thread.currentThread().getName() + " Running SQL: "+ sql);
 DBResultSet myRs = new DBResultSet();
 try
 {
        // if we don't have a query, don't run it. It'll hang
        if(sql.length() <= 0)
                return myRs;
        Statement query = conn.createStatement();
        if (query.execute(sql))
        {
                myRs.setResultSet(query.getResultSet());
        }
 }
 catch (SQLException oops)
 {
        System.err.println(Util.newLine + (new Date()).toString() + " DBException: " +
 Thread.currentThread().getName() +" Running SQL: " + sql + ", exception: " + oops.toString());
        oops.printStackTrace();
        throw new DBException(oops);
 }
 return myRs;
 }
 public void executeUpdate(String sql, boolean printSQL) throws DBException
 {
 if (printSQL)
        Util.debug(Util.newLine + Thread.currentThread().getName() + " Running SQL: " + sql);
 try
 {
        // if we don't have a query, don't run it. It'll hang
        if (sql.length()<=0)
               return;
        Statement query = conn.createStatement();
        query.executeUpdate(sql);
 }
 catch (SQLException oops)
 {
        // when we call a stored proc that gets a text pointer this happens,
        // so ignore it
        if (oops.getMessage().indexOf("Unknown datatype") > -1)
 // { System.err.println("ignoring unknown datatype exception");
 // System.err.println("ignoring unknown datatype exception");
               return;
        }
        System.err.println(Util.newLine + (new Date()).toString() + " DBException: " +
 Thread.currentThread().getName() + " Running SQL: " + sql + ", exception: " + oops.toString());
        oops.printStackTrace();
        throw new DBException(oops);
 }
 }
 public DBResultSet executeSQL(String sql) throws DBException
 {
 return execute(sql, true);
 }
 public DBResultSet executeSQL(String sql, boolean printSQL) throws DBException
 {
 return execute(sql, printSQL);
 }
 public DBPreparedStatement prepareStatement(String sql) throws DBException
 {
 try
 {
        return new DBPreparedStatement(conn.prepareStatement(sql));
 }
 catch (SQLException oops)
 {
        System.err.println(Util.newLine + (new Date()).toString() + " DBException in
 prepareStatement: "+ Thread.currentThread().getName() + ", exception: " + oops.toString());
        oops.printStackTrace();
        throw new DBException(oops);
 }
 }
 public boolean close() throws DBException
 {
 if (conn = null)
        return false;
 try
 {
        conn.close();
        conn = null;
        return true;
 }
 catch (SQLException oops)
 {
        throw new DBException(oops);
 }
 public void finalize() throws DBException
 {
 // in case someone forgets
 close();
 }
 }
```

### DBException

```
 package com.launch.PlaylistGenerator;
 import java.sql.SQLException;
 public class DBException extends Exception
 {
 SQLException oops;
 public DBException(SQLException oops)
 {
 this.oops = oops;
 }
 public String getMessage()
 {
 return oops.toString();
 }
 }
```

### DBPreparedStatement

```
 package com.launch.PlaylistGenerator;
 import java.sql.PreparedStatement;
 import java.sql.SQLException;
 import java.util.Date;
 public class DBPreparedStatement
 {
 Prepared Statement statement;
 public DBPreparedStatement(PreparedStatement statement)
 {
 this.statement = statement;
 }
 public void setBytes(int parameterIndex, byte x[]) throws DBException
 {
 try
 {
        if (statement != null)
        {
               statement.setBytes(parameterIndex, x);
 }
 }
 catch (SQLException e)
 {
        throw new DBException(e);
 }
 }
 public void executeUpdate() throws DBException
 {
 Util.debug(Util.newLine + Thread.currentThread().getName() + " Running prepared statement");
 if (statement = null)
        return;
 try
 {
        statement.executeUpdate();
 }
 catch (SQLException oops)
 {
        System.err.println(Util.newLine + (new Date()).toString() + " DBException: " +
 Thread.currentThread().getName() + " Running Statement, exception: " + oops.toString());
        oops.printStackTrace();
        throw new DBException(oops);
 }
 }
 }
```

### DBResultSet

```
 package com.launch.PlaylistGenerator;
 import java.util.Date;
 import java,sql.Resultset;
 import java.sql.SQLException;
 import java.sql.Timestamp;
 import java.io.InputStream;
 public class DBResultSet
 {
 private ResultSet rs;
 private boolean atEOF = false;
 private boolean atBOF = true;
 public void setResultset(Resultset aRS) throws DBException
 {
 try
 {
        rs = aRS;
        if (rs != null)
               atBOF = !rs.next();
 }
 catch (SQLException oops)
 {
        throw new DBException(oops);
 }
 }
 public int getInt(String columnName) throws DBException
 {
 try
 {
        return rs.getInt(columnName);
 }
 catch (SQLException oops)
 {
        throw new DBException(oops);
 }
 }
 public int getInt(int position) throws DBException
 {
 try
 {
        return rs.getInt(position);
 }
 catch (SQLException oops)
 {
        throw new DBException(oops);
 }
 }
 public InputStream getAsciiStream(String columnName) throws DBException
 {
 try
 {
        return rs.getAsciiStream(columnName);
 }
 catch (SQLException oops)
 {
        throw new DBException(oops);
 }
 }
 public short getShort(String columnName) throws DBException
 {
 try
 {
        return rs.getShort(columnName);
 }
 catch (SQLException oops)
 {
        throw new DBException(oops);
 }
 }
 public boolean getBoolean(String columnName) throws DBException
 {
 try
 {
        return rs.getBoolean(columnName);
 }
 catch (SQLException oops)
 {
        throw new DBException(oops);
 }
 }
 public byte[] getBytes(String columnName) throws DBException
 {
 try
 {
        return rs.getBytes(columnName);
 }
 catch (SQLException oops)
 {
        throw new DBException(oops);
 }
 }
 public float getFloat(String columnName) throws DBException
 {
 try
 {
        return rs.getFloat(columnName);
 }
 catch (SQLException oops)
 {
        throw new DBException(oops);
 }
 }
 public float getFloat(int position) throws DBException
 {
 try
 {
        return rs.getFloat(position);
 }
 catch (SQLException oops)
 {
        throw new DBException(oops);
 }
 }
 public String getString(String columnName) throws DBException
 {
 try
 {
        return rs.getString(columnName);
 }
 catch (SQLException oops)
 {
        throw new DBException(oops);
 }
 }
 public Date getDate(String columnName) throws DBException
 {
 try
 {
        return rs.getDate(columnName);
 }
 catch (SQLException oops)
 {
        throw new DBException(oops);
 }
 }
 public Timestamp getTimestamp(String columnName) throws DBException
 {
 try
 {
        return rs.getTimestamp(columnName);
 }
 catch (SQLException oops)
 {
        throw new DBException(oops);
 }
 }
 public boolean getBOF() throws DBException
 {
 return atBOF;
 }
 public boolean getEOF() throws DBException
 {
 return atEOF;
 }
 public void next() throws DBException
 {
 try
 {
       atEOF = !rs.next();
 }
 catch (SQLException oops)
 {
       throw new DBException(oops);
 }
 }
 public boolean wasNull() throws DBException
 {
 try
 {
       return rs.wasNull();
 }
 catch (SQLException oops)
 {
       throw new DBException(oops);
 }
 }
 }
```

### DJ

```
 package com.launch.PlaylistGenerator;
 public class DJ
 {
 public int userID;
 public String alias;
 public DJ (int id, String name)
 {
 this(id);
 alias = name;
 }
 public DJ (int id)
 {
 userID = id;
 }
 }
```

### DJList

```
 package com.launch.PlaylistGenerator;
 import java.util.Vector;
 public class DJList extends Vector
 {
 public DJ djAt(int i)
 {
 return (DJ) elementAt(i);
 }
 public String inList()
 {
 Integer list[] = new Integer[size()];
 int last = 0;
 for (int i = 0; i < this.size(); i++)
 {
        list[i] = new Integer(djAt(i).userID);
 }
 return Util.join(", ", list);
 }
 public boolean load(DBConnection conn, int userID, int moodID)
 {
 short djCount = 0;
 try
 {
        DBResultSet rs = conn.executeSQL("exec sp_lcoGetDJs_xsxx "
                                              + userID + ", "
                                                                     + moodlD);
        while (!rs.getBOF() && !rs.getEOF())
        {
                addElement(new DJ(rs.getInt("djID")));
                rs.next();
               djCount++;
        }
        Util.debug(Thread.currentThread().getName() + " added " + djCount + " DJs");
 }
 catch (DBException oops)
 { Util.debug("DB Exception in DJList::load: "+ oops.getMessage());
 }
 return (djCount > 0);
 }
 public Vector asIDVector()
 {
 Vector users = new Vector(10);
 for (int i = 0; i < this.size(); i++)
 {
         users.addElement(new Integer(((DJ) elementAt(i)).userID));
 }
 return users;
 }
 }
```

### FrequencyCounter

```
 package com.launch.PlaylistGenerator;
 import java.util.*;
 /**
 *FrequencyCounter is a Hashtable of the form (Object, Integer)
 *<br><br>
 * okay I realize the getLargest and getSmallestValue
 * methods are very inefficient (CPU wise) but these methods
 * aren't called often, if they are then some one should
 * do an nlog(n) sort on them then just pick out the largest
 * after that
 **/
 public class FrequencyCounter extends Hashtable
 {
 public FrequencyCounter()
 {
 }
 public FrequencyCounter(int i)
 {
 super(i);
 }
 public void incrementValue(Object o)
 {
 Integer i=(Integer)get(o);
 if (i==null)
 {
       put(o, new Integer(1));
 }
 else
 {
       put(o, new Integer((i.intVahje())+1));
 }
 }
 public FrequencyCounter getLargest(int n)
 {
 FrequencyCounter fc=new FrequencyCounter(n+10);
 Integer temp_int;
 Object temp_object;
 Object smallest_value_key=null;
 int smallest_value;
 Enumeration e=keys();
 while (e.hasMoreElements())
 {
       temp_object=e.nextElement();
       temp_int=(Integer)get(temp_object);
       if(fc.size0>=n)
       {
               smallest_value_key=fc.getSmallestValue();
               smallest_value=((integer)fc.get(smallest_value_key)).intValue();
               if (temp_int.intValue()>smallest_value)
               {
                      fc.remove(smallest_value_key);
                       fc.put(temp_object, temp_int);
               }
        }
        else
        {
               fc.put(temp_object, temp_int);
        }
 }
 retum(fc);
 }
 /** @return null if list is empty */
 public Object getSmallestValue()
 {
 int smallest_value=Integer.MAX_VALUE;
 Object smallest_value_key=null;
 int temp_int;
 Object temp_object;
 Enumeration e=keys();
 while(e.hasMoreElements())
 {
        temp_object=e.nextElement();
        temp_int=((Integer)get(temp_object)).intValue();
        if (temp_int<smallest_value)
        {
               smallest_value=temp_int;
               smallest_value_key=temp_object;
        }
 }
 return(smallest_value_key);
 }
 //**********************************
 // The following is a test function
 public static void main(String argv[])
 {
 FrequencyCounter fc=new FrequencyCounter();
 fc.incrementValue("one");
 fc.incrementValue("two");
 fc.incrementValue("two");
 fc.incrementValue("three"),
 fc.incrementValue("three");
 fc.incrementValue("three");
 fc.incrementValue("four");
 fc.incrementValue("four");
 fc.incrementValue("four");
 fc.incrementValue("four");
 System.out.println(fc);
 System.out.println("smallest "+ fc.getSmallestValue());
 System.out.println("largest 2" + fc.getLargest(2));
 }
 }
```

### GeneratorParameters

```
 package com.launch.PlaylistGenerator;
 import javax.servlet.http.HttpServtetRequest;
 public class GeneratorParameters
 {
 private int userID, moodID, djID;
 private Bandwidth speed;
 private boolean debug, matrix, forceRefresh, dontsave;
 private MediaFormat format;
 private boolean moodIDSet = false;
 private boolean djIDSet = false;
 private int debugFormat = Util.DlSPLAY_TEXT;
 public Bandwidth speed()
 {
 return speed;
 }
 public MediaFormat format()
 {
 return format;
 }
 public int debugFormat()
 {
 return debugFormat;
 }
 public int userID()
 {
 return userID;
 }
 public int moodID()
 {
 return moodID;
 }
 public int djID()
 {
 if (djIDSet)
       return djID;
 return userID;
 }
 public boolean debug()
 {
 return debug;
 }
 public boolean matrix()
 {
 return matrix;
 }
 public boolean forceRefresh()
 {
 return forceRefresh;
 }
 public boolean dontsave()
 {
 return dontsave;
 }
 public GeneratorParameters(HttpServletRequest request)
 {
 debug = (request.getParameter("ralph") != null);
 matrix = (request.getParameter("matrix") != null);
 forceRefresh = (request.getParameter("forceRefresh") != null);
 dontsave = (request.getParameter("dontsave") != null);
 String debugFormatString = request.getParameter("format");
 if (debugFormatString != null && debugFormatString.equals("html"))
        debugFormat = Util.DISPLAY_HTML;
 try { userID = Integer.parseInt(request.getParameter("u")); }
 catch (NumberFormatException e) { userID = 0;}
 try { moodID = Integer.parseInt(request.getParameter("m")); }
 catch (NumberFormatException e) { moodID = 0; moodIDSet = false;}
 moodIDSet = true;
 try { djID = Integer.parseInt(request.getParameter("d")); }
 catch (NumberFormatException e) { djID = userID; djIDSet = false;}
 djIDSet = true;
 if(djID <= 0)
 {
        djID = userID;
        djIDSet = false;
 }
 speed = new Bandwidth(request.getParameter("b"));
 format = new MediaFormat();
 }
 }
```

### GenreIndex

```
 package com.launch.PlaylistGenerator;
 import java.util.Hashtable;
 import java.util.Vector;
 public class GenreIndex extends Hashtable
 {
 public GenreIndex(int x, int y)
 {
 super(x, y);
 }
 public void add(short index, SongInfo info)
 {
 SongList list = get(index);
 if (list = null)
 {
        list = new SongList();
        put(new Short(index), list);
 }
 list.addElement(info);
 }
 public SongList get(int index)
 {
 return (SongList) get(new Short((short) index));
 }
 public int countInGenreList(GenreList myGenres)
 {
 int result = 0;
 SongList list;
 for (int i = 0; i < myGenres.size(); i++)
 {
        list = get(myGenres.genreAt(i));
       if (list != null)
        {
               result += list.size();
 }
 }
 return result;
 }
 /**
 * returns a COPY of the list of songs in genres
 */
 public SongList getInGenreList(GenreList myGenres)
 {
 SongList result = new SongList();
 for (int i = 0; i < myGenres.size(); i++)
 {
       result.addElements(get(myGenres.genreAt(i)));
 }
 return result;
 }
 /**
 * returns a COPY of the list of songs in a genre
 */
 public SongList getlnGenre(int genreID)
 {
 SongList list = get(genreID);
 SongList result;
 if (list == null)
       list = new SongList();
 result = (SongList) list.clone();
 return result;
 }
 }
```

### GenreList

```
 package com.launch.PlaylistGenerator;
 import java.util.Hashtable;
 public class GenreList
 {
 private int genres[];
 private Hashtable hash;
 private byte next;
 public boolean allGenres = true;
 public GenreList()
 {
 hash = new Hashtable(1,1);
 genres = new int[100];
 }
 public int add(short genreID)
 {
 allGenres = false;
 hash.put(new Short(genreID), new Boolean(true));
 genres[next] = genreID;
 next++;
 return genres[next - 1];
 }
 public int size()
 {
 return next;
 }
 public int genreAt(int pos)
 {
 return genres[pos];
 }
 public boolean exists(Short genreID)
 {
 if (next = 0)
       return true;
 else
       return hash.containsKey(genreID);
 }
 public String toString() {
 String result = "";
 for (int i = 0; i < size(); i++)
 {
       result = result.concat(genreAt(i) + ", ");
 }
 return result;
 }
 }
```

### GetAds

```
 package com.launch.PlaylistGenerator;
 import java.util.Date;
 import java.util.Vector;
 public class GetAds extends Thread
 {
 Vector ads;
 int userID;
 short mediaType;
 public GetAds(Vector ads, int userID, short mediaType)
 {
 this.ads = ads;
 this.userID = userID;
 this.mediaType = mediaType;
 }
 public void run()
 {
 Date startDate = new Date();
 Thread.currentThread().setName("GetAds");
 int rowCount = 0;
 int count = 0;
 Clip aClip;
 int clipID, mediaID;
 Date lastPlayed;
 String clipName;
 String sql = new String("exec sp_lcGetAds_xsxx"
                                                                    + userID
                                                               +","
                                                                    + mediaType
                                                                    );
 try
 {
        DBConnection conn = new DBConnection();
        DBResultSet rs = conn.executeSQL(sql);
        while (!rs.getBOF() && !rs.getEOF() && count < Constants.MAX_ADS)
        {
               ads.addElement(new Clip(rs.getInt("clipID"),
                                              Clip.TYPE_AD,
                                              rs.getInt("mediaID"),
                                              rs.getString("clipName"),
                                              rs.getDate("IastPlayed")));
               count++;
               rs.next();
               rowCount++;
        }
       conn.close();
 }
 catch (DBException oops)
 {
       Util.debug("DB Exception: " + oops.getMessage());
 }
 Util.debug(Thread.currentThread().getName() + " added " + count + " ads");
 Util.printElapsedTime(Thread.currentThread().getName(), startDate);
 }
 }
```

### GetBDSStations

```
 package com.launch.PlaylistGenerator;
 import java.util.Date;
 public class GetBDSStations extends Thread
 {
 int userID;
 int moodID;
 StationList stations;
 public GetBDSStations(int userID, int moodID, StationList stations)
 {
 this.userID = userlD;
 this.moodID = moodID;
 this-stations = stations;
 }
 public void run()
 {
 Date startDate = new Date();
 Thread.currentThread().setName("GetBDSStations");
 int rowCount = 0;
 String sql = "sp_lcGetBDSNames_xsxx " + userID + "," + moodID;
 try
 {
        DBConnection conn = new DBConnection();
        DBResultSet rs = conn.executeSQL(sql);
        while (!rs.getBOF() && !rs.getEOF())
        {
                int bdsID = rs.getInt("bdsID");
               stations,addElement(new Station(bdsID));
               rowCount++;
               rs.next();
        }
        conn.close();
 }
 catch (DBException oops)
 { Util.debug("DB Exception in GetBDSStations: " + oops.getMessage());
 }
 Util.debug(Thread.currentThread().getName() + " got " + rowCount + " BDS station
 subscriptions");
 Util.printElapsedTime(Thread.currentThread().getName(), startDate);
 }
 }
```

### GetGenres

```
 package com.launch.PlaylistGenerator;
 import java.util.Date;
 public class GetGenres extends Thread
 {
 GenreList genres;
 int djID;
 int moodID;
 public GetGenres(GenreList genres, int djID, int moodID)
 {
 this.genres = genres;
 this.moodID = moodID;
 this.djID = djID;
 }
 public void run()
 {
 Date startDate = new Date();
 Thread.currentThread().setName("GetGenres");
 int rowCount = 0;
 try
 {
        DBConnection conn = new DBConnection();
        DBResultset rs = conn.executeSQL("exec sp_IcGetGenreNamesforUser_xsxx "
                                             + djID + ", "
                                                             + moodID);
        while (!rs.getBOF() && !rs.getEOF())
        {
               genres.add((short) rs.getInt("genreID"));
               rowCount++;
               rs.next();
        }
       conn.close();
 }
 catch (DBException oops)
 {
       Util.debug("DB Exception: " + oops.getMessagen());
 }
 Util.debug(Thread.currentThread().getName() + " added " + rowCount + " genres");
 Util.printElapsedTime(Thread.currentThread().getName(), startDate);
 }
 }
```

### GetItemRatingsFromDB

```
 package com.launch.PlaylistGenerator;
 import java.util.*;
 public final class GetItemRatingsFromDB extends Thread
 {
 private Vector userIDs;
 private Vector results;
 //----------------------------------------------------------
 public GetItemRatingsFromDB(Vector userIDs, Vector results)
 {
         this.userIDs = userIDs;
         this.results = results;
 }
 public void run()
 {
         Thread.currentThread().setName("GetItemRatingsFromDB");
         Util.debug(Thread.currentThread().getName() + " thread started");
         Date startDate = new Date();
         try
         {
                String sql = "SELECT iUserID_FK userID, iSourceTableID_L type,
 iItemlD_FK itemID, tiRating rating FROM a125ItemRating WHERE iUserID_FK IN (" +
 RatingsCache.GetVectorAsCommaDelimitedList(userIDs) + ')';
                DBConnection conn = new DBConnection();
                DBResultSet rs = conn.executeSQL(sql);
                CachedRating cr;
                byte type;
                while (!rs.getBOF() && !rs.getEOF())
                {
                        cr = new CachedRating(rs.getInt("userID"), rs.getInt("itemID"), (byte)
 rs.getInt("rating"), sourceTableIDToType(rs.getInt("type")));
                        results.addElement(cr);
                        rs.next();
                }
                conn.close();
         }
         catch (DBException oops)
         {
                System.err.println("DBException in GetItemRatingsFromDB: " +
 oops.getMessage());
         }
         Util.printElapsedTime(Thread.currentThread().getName(), startDate);
 }
 public final static byte sourceTableIDToType (int type)
 {
        if (type ==260)
                return Constants.ITEM_TYPE_ARTIST;
        // assume album (243)
        return Constants.ITEM_TYPE_ALBUM;
 }
 }
```

### GetLastPlayed

```
 package com.launch.PlaylistGenerator;
 import java.util.Date;
 import java.text.DateFormat;
 import javax.servlet.ServletOutputStream;
 public class GetLastPlayed extends Thread
 {
 PlayDates lastPtayed;
 int userID;
 ServletOutputStream out;
 public GetLastPlayed(PlayDates lastPlayed, int userID, ServtetOutputStream out)
 {
 this.lastPlayed = lastPlayed;
 this.userID = userID;
 this.out = out;
 }
 public void run()
 {
 Date startDate = new Date();
 Thread.currentThread().setName("GetLastPlayed");
 // returns: songID, lastPlayed
 try
 {
        DBConnection conn = new DBConnection();
        Util.printElapsedTime(Thread.currentThread().getName() + " got a dbConnection",
 startDate);
        lastPlayed.load(conn, userID);
        Util.printElapsedTime(Thread.currentThread().getName() + " loaded dates", startDate);
        // this is somewhat expensive, so only do it every so often
        if (Util.random(10) == 1)
        {
                Util.debug("resaving lastPlayed for user " + userID);
                lastPlayed.save(conn);
        }
        conn.close();
 }
 catch (DBException oops)
 {
        Util.debug("DB Exception: " + oops.getMessage());
 }
 Util.out(out, Thread.currentThread().getName() + loaded" " + lastPlayed.size() + dates");
 Util.printElapsedTime(Thread.currentThread().getName() + "done GetLastPlayed", startDate);
 }
 }
```

### GetNews

```
 package com.launch.PlaylistGenerator;
 import java.util.Date;
 import java.util.Vector;
 public class GetNews extends Thread
 {
 Vector news;
 int userID;
 short mediaType;
 int moodID;
 public GetNews(Vector news, int userID, short mediaType, int moodID)
 {
 this.news = news;
 this.userID = userID;
 this.mediaType = mediaType;
 this.moodID = moodID;
 }
 public void run()
 {
 Date startDate = new Date();
 Thread.currentThread().setName("GetNews");
 int rowCount = 0;
 int count = 0;
 Clip aClip;
 int clipID, mediaID;
 Date lastPlayed;
 String clipName;
 /*
 sp_lcGetNews_xsxx @userID int, @moodID int, @mediaType int
 returns clipID, clipName, mediaID, lastPlayed
 */
 String sql = new String("exec sp_lcGetNews_xsxx "
                           + userID
                                                               + ", "
                                                               + moodID
                                                                    + ", "
                                                                    + mediaType
                                                                    );
 try
 {
        DBConnection conn = new DBConnection();
        DBResultSet rs = conn.executeSQL(sql);
        while(!rs.getBOF() && !rs.getEOF() && count < Constants.MAX_NEWS_ITEMS)
        {
               news.addElement(new Clip(rs.getInt("clipID"),
                                              Clip.TYPE_NEWS,
                                              rs.getInt("mediaID"),
                                              rs.getString("clipName"),
                                              rs.getDate("lastPlayed")));
               count++;
               rs.next();
               rowCount++;
        }                  conn.close();
        }
        catch (DBException oops)
       {
              Util.debug("DB Exception: "+oops.getMessage());
       }
       Util.debug(Thread.currentThread().getName() + " added " + count + " news items");
       Util.printElapsedTime(Thread.currentThread().getName(), startDate);
  }
}
```

### GetPlaylist

```
 package com.launch.PlaylistGenerator;
 import java.util.Date;
 public class GetPlaylist extends Thread
 {
 Population songs;
 int userID;
 SongInfoCache cache;
 public GetPlaylist(Population songs, int userID, SongInfoCache cache)
 {
 this.songs = songs;
 this.userID = userID;
 this.cache = cache;
 }
 public void run()
 {
 Date startDate = new Date();
 Thread.currentThread().setName("GetPlaytist");
 SongInfo info = null;
 SimpleClip clip;
 int songID;
 int rowCount = 0;
 try
 {
        DBConnection conn = new DBConnection();
        Util.printElapsedTime(Thread.currentThread().getName() + " got a dbConnection",
 startDate);
        SimplePlaylist play list = SimplePlaylist.load(conn, userID);
        if (playlist != null)
        {
               for (int i = 0; i < playlist.songs.size(); i++)
                {
                       clip = (SimpleClip) playlist.songs.elementAt(i);
                       songID = clip.ID;
                       songs.initSong(songID, Song.EXCLUDED);
                       info = (SongInfo) cache.get(songID, SongInfoCache.TYPE_SONG);
                       songs.artistCounts.increment(info.album.artist.ID);
                       songs.albumCounts.increment(info.album.ID);
                       rowCount++;
               }
        }
        conn.close();
 }
 catch (DBException oops)
 {
        Util.debug("DB Exception: " + oops.getMessage());
 }
 Util.debug(Thread.currentThread().getName() + " excluded " + rowCount + " songs");
 Util.printElapsedTime(Thread.currentThread().getName(), startDate);
 }
 }
```

### GetPlaylistServers

```
 package com.launch.PlaylistGenerator;
 import java.util.*;
 /**
 **/
 public final class GetPlaylistServers extends Thread
 {
 public static int SLEEP_TIME = (3600*1000); // every hour
 public static int EXPECTED_SERVER_COUNT = 10;
 private GetPlaylistServersInterface personToNotify;
 //----------------------------------------------------------
 /**
  * @param personToNotify must not be null.
  **/
 public GetPlaylistServers(GetPlaylistServersInterface personToNotify)
 {
         this.personToNotify=personToNotify;
 }
 public void run()
 {
         Thread.currentThread().setName("getPlaylistServers");
         Util.debug(Thread.currentThread().getName() + " thread started");
         DBConnection conn;
         DBResultSet rs;
         Vector v;
         Date benchmark_date;
         try
         {
                while (personToNotify!=null)
                {
                        benchmark_date=new Date();
                        v=new Vector(EXPECTED_SERVER_COUNT);
                        conn = new DBConnection();
                        rs = conn.executeSQL("exec sp_lcGetRatingsCacheServers_xsxd");
                        while (!rs.getBOF() &.& !rs.getEOF())
                        {
                               v.addElement(rs.getString("server"));
                               rs.next();
                        }
                        conn.close();
                        personToNotify.updatePlaylistServers(v);
                        Util.printElapsedTime(Thread.currentThread().getName() + ", get " +
 v.size() + " rows", benchmark_date);
                        Thread.sleep(SLEEP_TIME);
                }
         }
         catch (Exception e)
         {
                System.err.println(new Date().toString() + " Fatal Exception in
 GetPlaylistServers:" + e.toString());
         }
         Util.debug(Thread.currentThread().getName() + " thread done");
 }
```

### GetPlaylistServersInterface

```
 package com.launch.PlaylistGenerator;
 import java.util.*;
 public interface GetPlaylistserverslnterface
 {
 /**
 * @param playlistServers will be a vector of strings, each string is an ip address of the form
 xxx.xxx.xxx.xxx
 **/
 public void updatePlaylistServers(Vector playlistServers);
 }
```

### GetPopular

```
 package com.launch.PlaylistGenerator;
 import java.util.Date;
 public class GetPopular extends Thread
 {
 Population songs;
 SongList list;
 public GetPopular(Population songs, SongList list)
 {
 this.songs = songs;
 this.list = list;
 }
 public void run()
 {
 Date startDate = new Date();
 Thread.currentThread().setName("GetPopular");
 Song ditty;
 SongData data;
 SongInfo info;
 int rowCount = 0;
 if (list != null)
 {
        for (int i = 0; i < list.size(); i++)
        {
                info = list.elementAt(i);
               data = songs.getSongData(info.songID);
               if (data != null)
                {
                       // we can't add it, but let's append the info while we're here
                       data.setInfo(info);
               }
               else
               {
                       data = songs.initSongGetData(info.songID, Song.UNRATED);
                       if (data != null)
                       {
                              data.querySource = data.SOURCE_POPULAR;
                              data.setInfo(info);
                       }
                       rowCount++;
        }
        }
 Util.debug(Thread.currentThread().getName() + " added " + rowCount + " songs");
 Util.printElapsedTime(Thread.currentThread().getName(), startDate);
 }
 }
```

### GetRatings

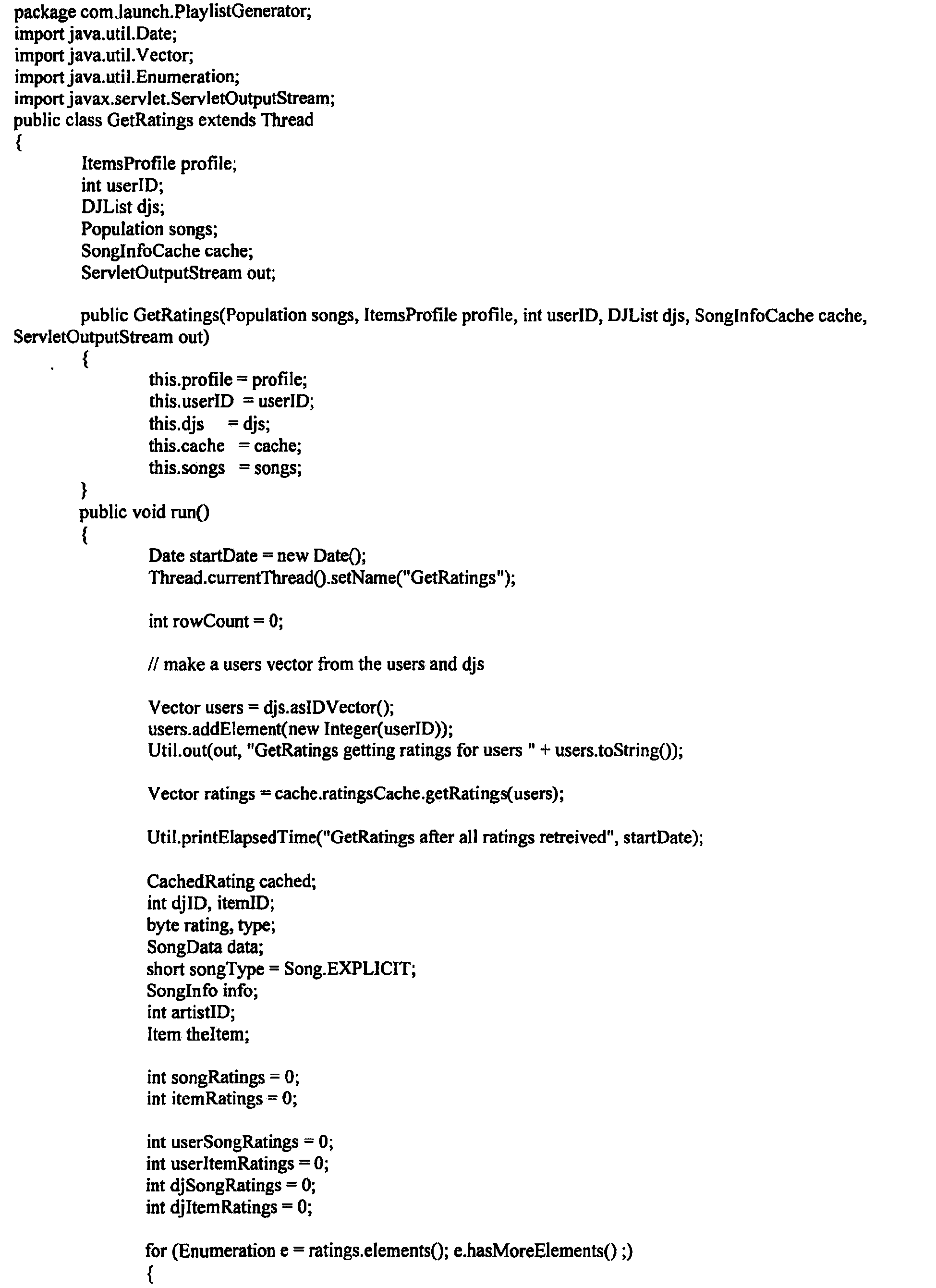

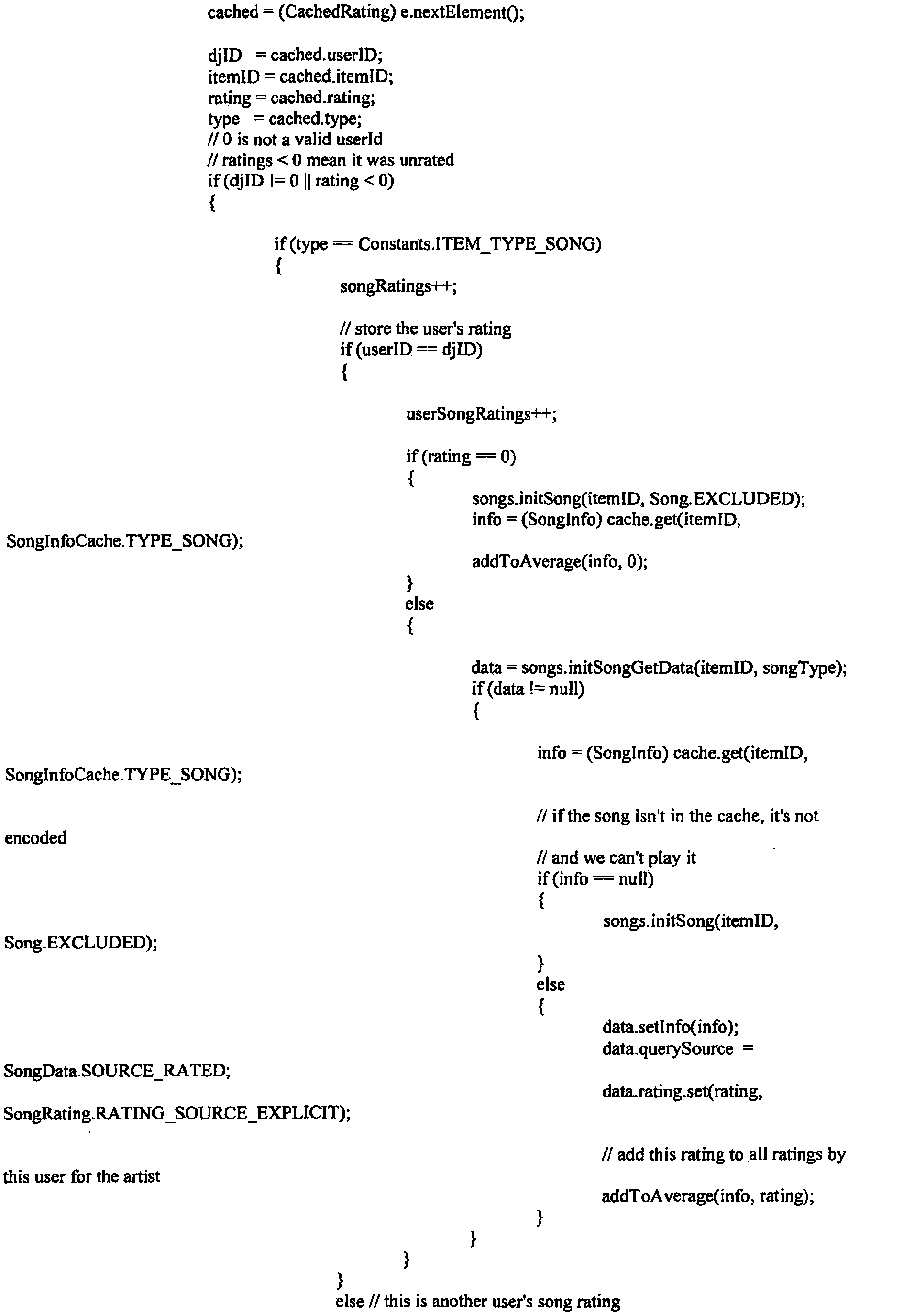

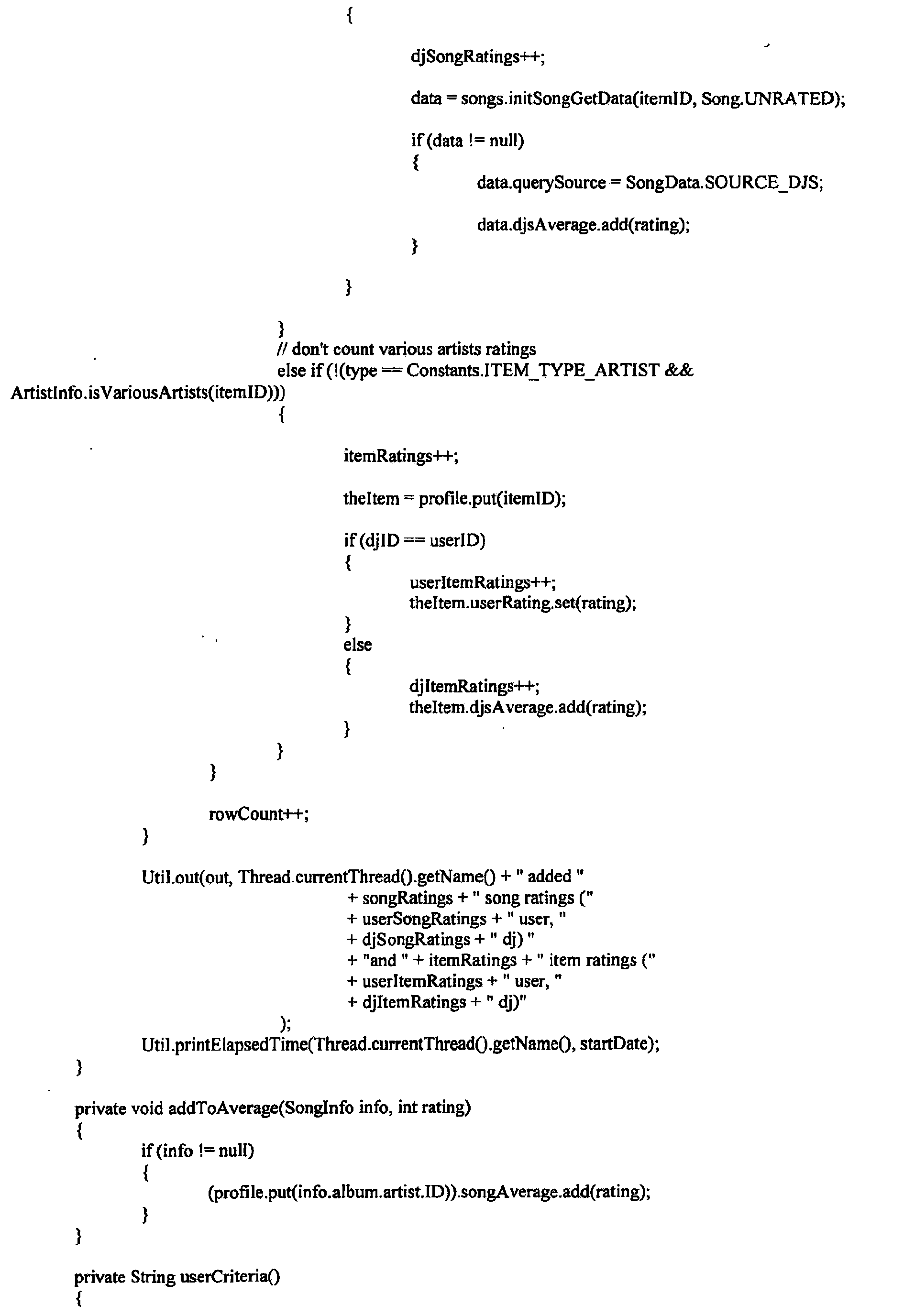

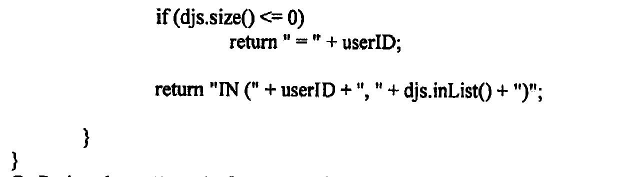

### GetRatingsCacheUsers

```
 package com.launch.PlaylistGenerator;
 import java.util.*;
 import java.net.*;
 /*
 **/
 public final class GetRatingsCacheUsers extends Thread
 {
 private static int SLEEP_TIME = (10 * 60 * 1000); // update every 10 minutes
 private static int EXPECTED_TOP_USER_SIZE = 100;
 private GetRatingsCacheUsersInterface personToNotify;
 private static final int UPDATE_DB_CACHED_USERS_SLEEP_COUNT = 6 * 8; // three times
 every day (6*8*SLEEP_TIME)
 //-----------------------------------------------------
 /**
 * @param personToNotify must not be null.
 **/
 public GetRatingsCacheUsers(GetRatingsCacheUsersInterface personToNotify)
 {
        this.personToNotify = personToNotify;
 }
 public void run()
 {
        Thread.currentThread()setName("GetRatingsCacheUsers");
        Util.debug(Thread.currentThread().getName() +" thread started");
        DBConnection conn;
        String myIP;
        DBResultSet rs;
        Vector v;
        Date benchmark_date;
        try
        {
               myIP = InetAddress.getLocalHost().getHostAddress();
               int update_db_users_Ust =
 UPDATE_DB_CACHED_USERS_SLEEP_COUNT;
               while (personToNotify != null)
               {
                       benchmark_date = new Date();
                       v = new Vector(EXPECTED_TOP_USER_SIZE);
                       conn = new DBConnection();
                       rs = conn.executeSQL("exec sp_IcGetUsersToCache_isxd "' + myIP +
 '\"; while (!rs.getBOF() && !rs.getEOF())
                       {
                              v.addElement(new Integer(rs.getInt("userID")));
                              rs.next();
                       }
                       personToNotify.updateCachedUsers(v);
                       Util.printElapsedTime(Thread.currentThread().getName() + ", get " +
 v.size() + " rows", benchmark_date);
                       Thread.sleep(SLEEP_TIME);
                      //---
                       if (update_db_users list <= 0)
                       {
                              // do the update
                              Util.debug(new Date().toString() + " Updating
 RatingsCacheUserList");
                              try
                                {
                                       Hashtable h =
 personToNotify.getMostFrequentlyUsedUsers(EXPECTED_TOP_USER_SIZE);
                                       if(h!=null && h.size()>0)
                                       {
                                              String the_command = "exec
 sp_lcDeleteRatingsCacheUsers_xxxd";
                                              conn.executeSQL(the_command);
                                              Enumeration e = h.keys();
                                              while (e.hasMoreElements())
                                               {
                                                      the_command = "exec
 sp_lcAddRatingsCacheUser_ixxx" " + e.nextElement();
                                                      conn.executeSQL(the_command);
                                              }
                                       }
                                       conn.close();
                               }
                               catch (DBException dbe)
                               {
                                       System.err.println(new Date().toString() + "
 DBException in GetRatingsCacheUsers: " + dbe.toString());
                                       dbe.printStackTrace();
                               }
                               update_db_users_list =
 UPDATE_DB_CACHED_USERS_SLEEP_COUNT;
               }
                       else
                        { Util.debug("update_db_users_list is " + update_db_users_list);
                               update_db_users_list--;
                        }
                       //---
                       conn.close();
                }
         }
        catch (Exception e)
         {
                System.err.println(new Date().toString() + " Fatal Exception in
 GetRatingsCacheUsers: " + e.getMessage());
                e.printStackTrace();
        Util.debug(Thread.currentThread().getName() + " thread done");
 }
 }
```

### GetRatingsCacheUsersInterface

```
 package com.launch.PlaylistGenerator;
 import java.util.*;
 public interface GetRatingsCacheUsersInterface
 {
 /**
 * @param topUsers will be a vector of Integers, where each integer is a userID
 **/
 public void updateCachedUsers(Vector topUsers);
 /**
 * This method will return a hash of (Integer USERID, Intger Requests)
 * @param i is the number of users to get
 * @return null if no statistics
 **/
 public Hashtable getMostFrequentlyUsedUsers(int i);
 }
```

### GetRecentlyPlayed

```
 package com.launch.PlaylistGenerator;
 import java.util.Date;
 public class GetRecentlyPlayed extends Thread
 {
 Population songs;
 int userID;
 public GetRecentlyPlayed(Population songs, int userID)
 {
 this.songs = songs;
 this.userID = userID;
 }
 public void run()
 {
 Date startDate = new Date();
 Thread.currentThread().setName("GetRecentlyPlayed");
 int rowCount = 0;
 String sql= new String("exec sp_lcGetRecentlyPlayedSongs_xsxx "
                                                                    + userID);
 int songID, albumID, artistID;
 try
 {
        DBConnection conn = new DBConnection();
        DBResultSet rs = conn.executeSQL(sql);
        while(!rs.getBOF() && !rs.getEOF())
        {
               // returns songID, albumID, artistID, lastPlayed
               albumID = rs.getInt("albumID");
               songID = rs.getInt("songID");
               artistID = rs.getInt("artistID");
               // don't play these songs so soon again
               songs.initSong(songID, Song.EXCLUDED);
               songs.artistCounts.increment(artistID);
               songs.albumCounts.increment(albumID);
               rs.next();
               rowCount++;
        }
        conn.close();
 }
 catch (DBException oops)
 {
        Util.debug("DBException: " + oops.getMessage());
 }
 Util.debug(Thread.currentThread().getName() + " added " + rowCount + " songs");
 Util.printElapsedTime(Thread.currentThread().getName(), startDate);
 }
 }
```

### GetSongInfoServlet

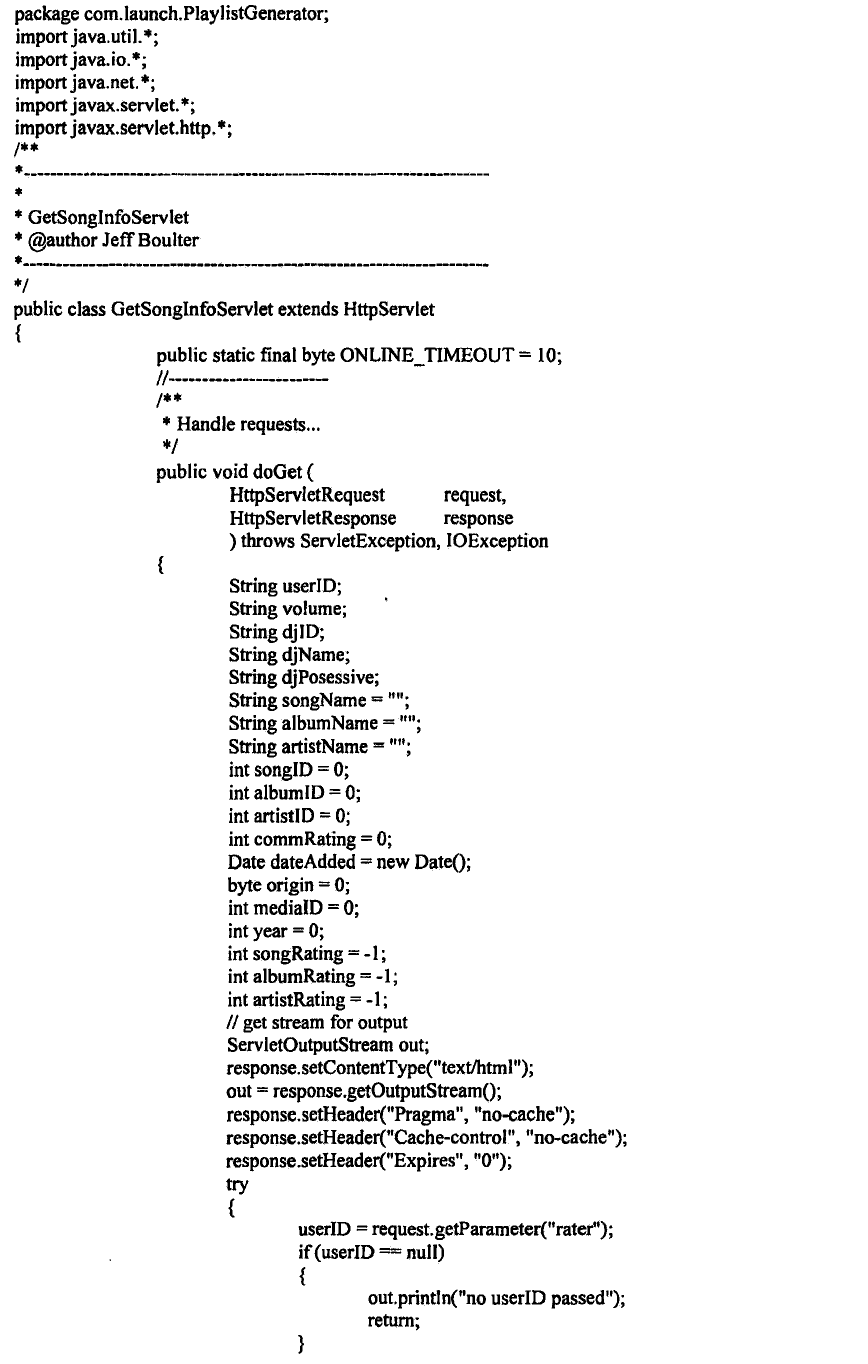

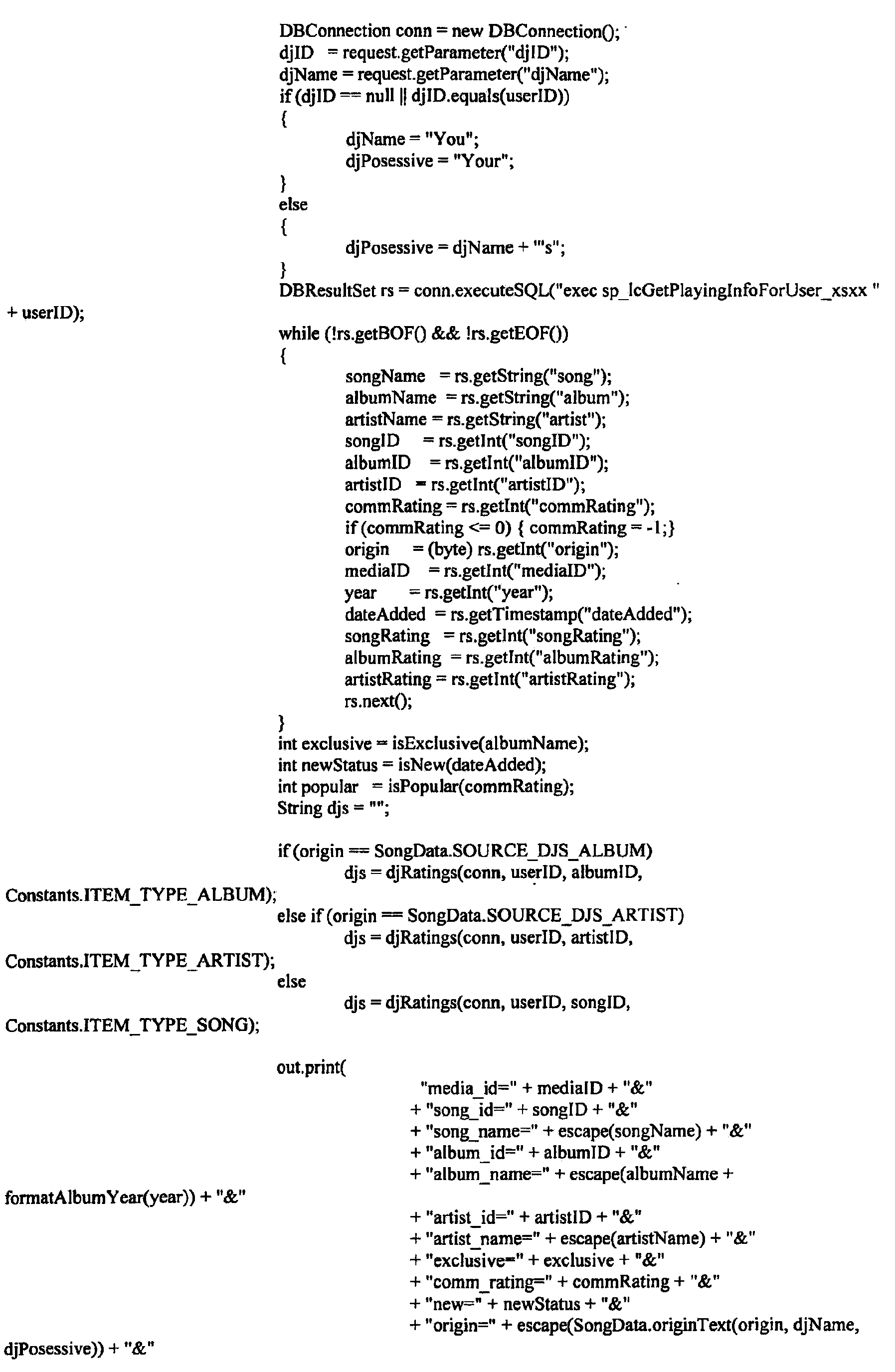

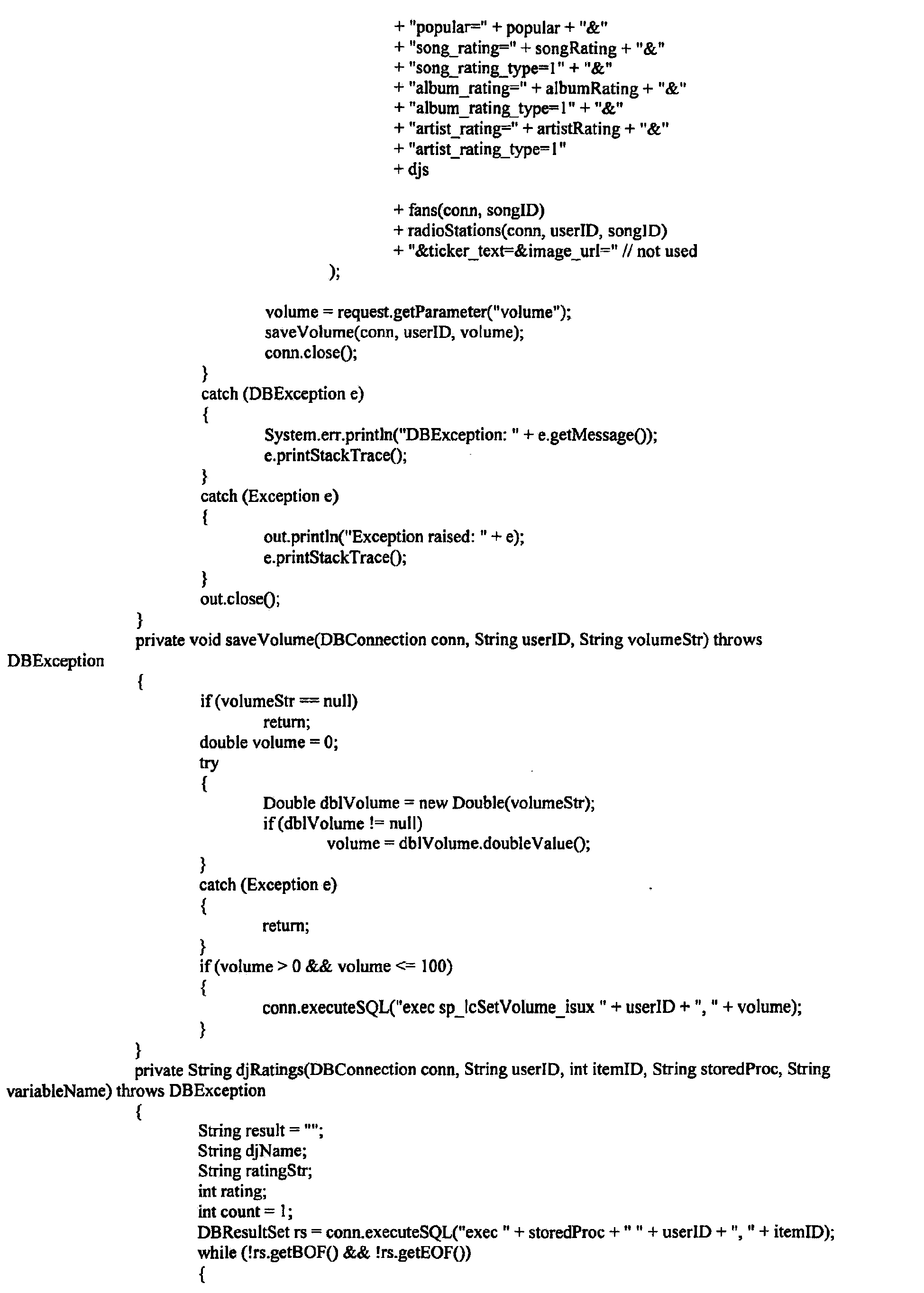

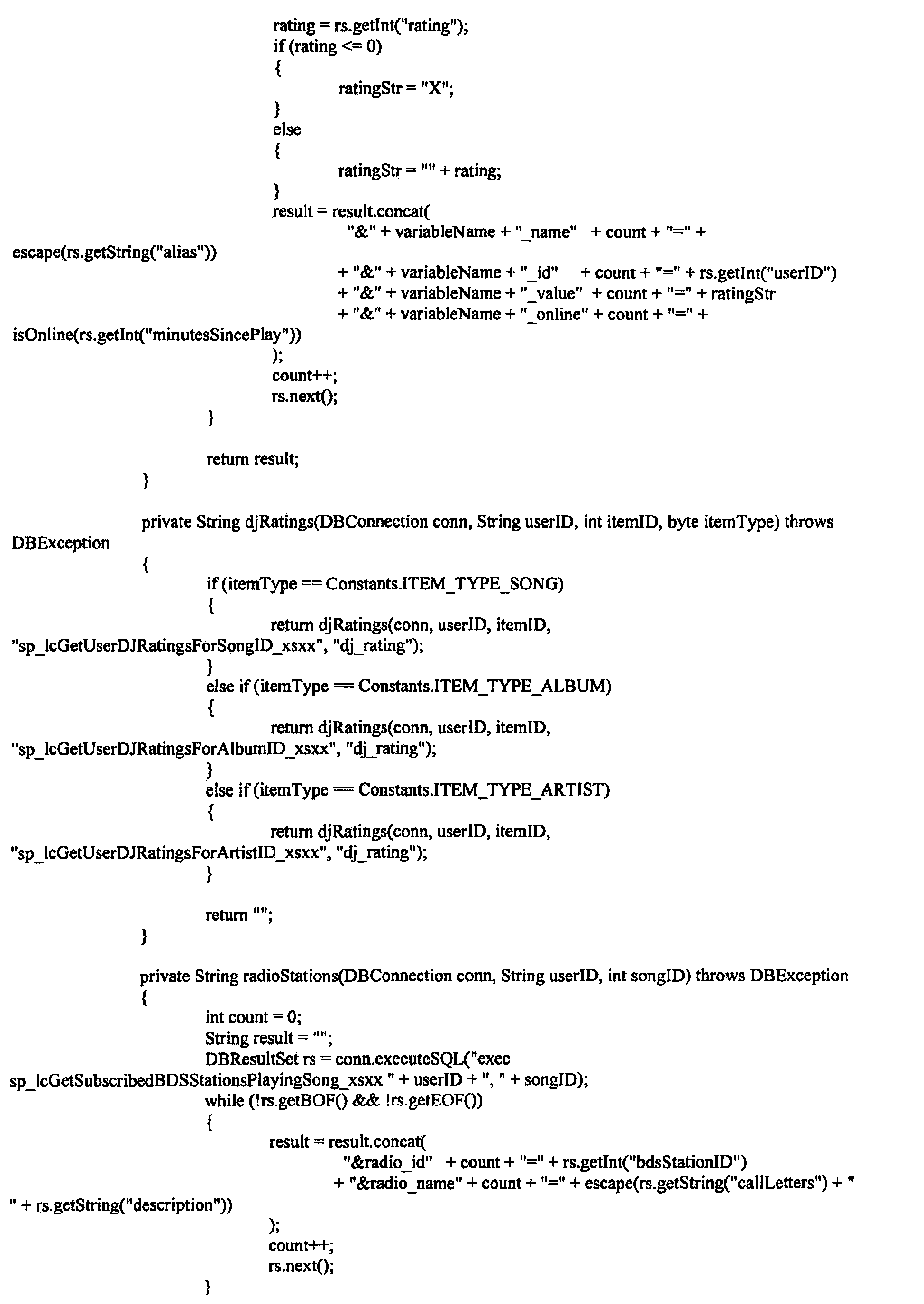

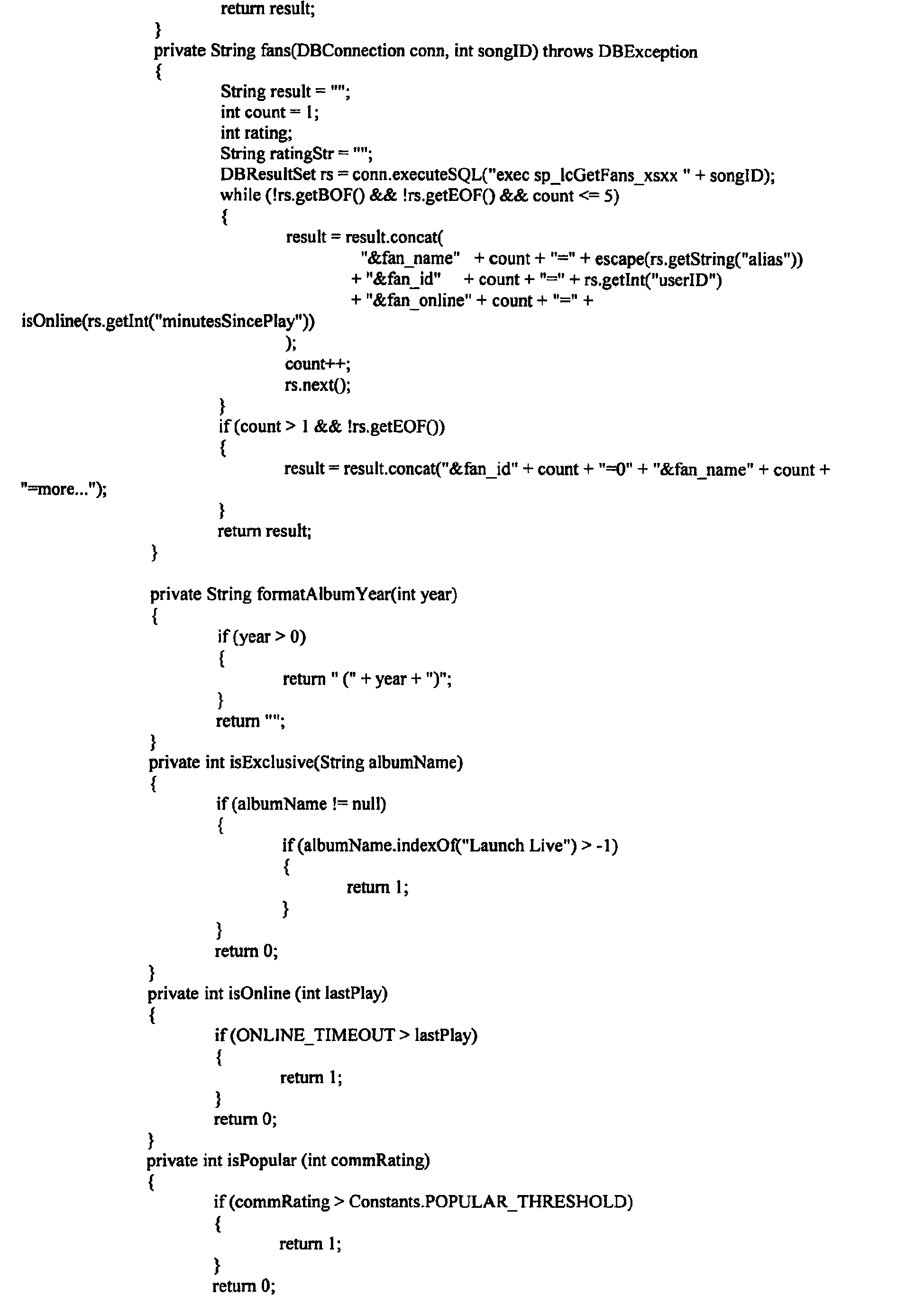

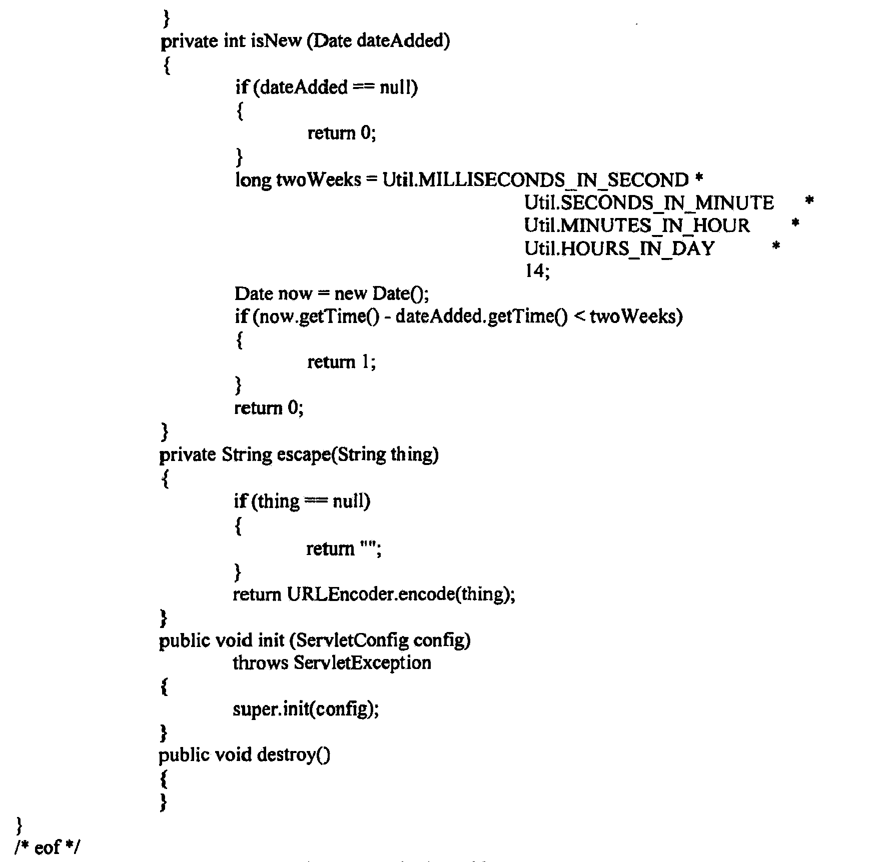

### GetSongRatingsFromDB

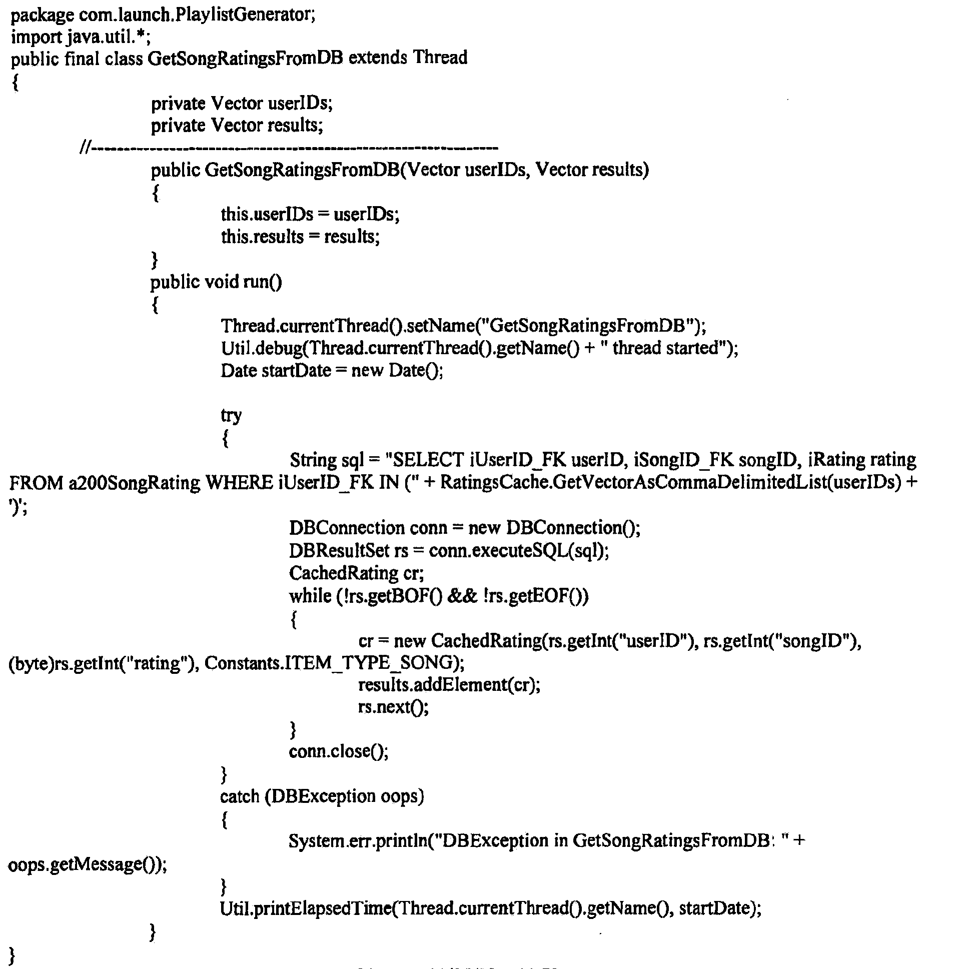

### IntHash

```
 package com.launch.PlaylistGenerator;
 import java.util.Hashtable;
 /**
 * A hashtable that uses ints as keys and values.
 */
 public class IntHash extends Hashtable
 {
 public synchronized int get(int key)
 {
 Object thing = get(new Integer(key));
 if (thing == null)
       return 0;
 else
       return ((Integer) thing).intValue();
 }
 public synchronized int put(int key, int value)
 {
 put(new Integer(key), new Integer(value));
 return value;
 }
 private synchronized int change(int key, int valueChange)
 {
 return put(key, get(key) + valueChange);
 }
 public synchronized int increment(int key)
 {
 return change(key, 1);
 }
 public synchronized int decrement(int key)
 {
 return change(key, -1);
 }
 public synchronized int increment(int key, int howMuch)
 {
 return change(key, howMuch);
 }
 public synchronized int decrement(int key, int howMuch)
 {
 return change(key, -howMuch);
 }
 }
```

### Item

```
 package com.launch.PlaylistGenerator;
 public class Item
 {
 public final static byte TYPE_ANY = 0;
 public final static byte TYPE_ALBUM = 1;
 public final static byte TYPE_ARTIST = 2;
 public final static byte TYPE_UNKNOWN = 10;
 public int itemID;
 public Rating userRating;
 private boolean songAvgScoreCalculated = false;
 private double songAvgScore;
 // the average rating from all djs for this tiem
 public AverageRating djsAverage;
 // average rating of all songs by an artist
 public AverageRating songAverage;
 public double songAverageScore(ArtistInfo info)
 {
 if (!songAvgScoreCalculated)
 {
         songAvgScoreCalculated = true;
         double songsByArtist = Math.min(info.songs.size(),
 Constants.MAX_SONGS_BY_ARTIST);
         double songsRated = Math.min(songAverage.count(),
 Constants.MAX_SONGS_BY_ARTIST);
         // deviation from the average
         songAvgScore = ((songAverage.get() - Constants.DEFAULT_RATING)
                * (songsRated / songsByArtist)) + Constants.DEFAULT_RATING;
 }
 return songAvgScore;
 }
 public boolean inGenres = false;
 public byte getType()
 {
 if (itemID == 0)
        return TYPE_UNKNOWN;
 else if (itemID < 1000000)
        return TYPE_ALBUM;
 else
        return TYPE_ARTIST;
 }
 public String typeName()
 {
 byte type = getType();
 if (type = TYPE_ALBUM)
        return "Album";
 else if (type = TYPE_ARTIST)
         return "Artist";
 else
         return "Unknown";
 }
 public Item()
 {
 userRating = new Rating();
 djsAverage = new AverageRating();
 songAverage = new AverageRating();
 }
 public Item(int itemID)
 {
 this();
 this.itemID = itemID;
 }
 public String toString(SongInfoCache cache)
 {
 String title = "(Not available)";
 byte type = getType();
 if (type == TYPE_ARTIST)
 {
         ArtistInfo artist = (ArtistInfo) cache.get(itemID, SongInfoCache.TYPE_ARTIST);
         if (artist != null)
                title = artist.title;
 }
 else if (type = TYPE_ALBUM)
 {
         AlbumInfo album = (AlbumInfo) cache.get(itemID, SongInfoCache.TYPE_ALBUM);
         if (album != null)
                title = album.title;
 }
 return typeName() + " \"" + title + "\" (" + itemID + ") "
         + "user=" + userRating.toString()
         + " djs=" + djsAverage.toString()
   + " songAverage=" + songAverage.toString()
        + " songAvgScore=" + songAvgScore;
 }
 }
```

### ItemsProfile

```
 package com.launch.PlaylistGenerator;
 import java.util.Hashtable;
 import java.util.Enumeration;
 import javax.servlet.ServletOutputStream;
 public class ItemsProfile
 {
 private Hashtable hash;
 public ItemsProfile()
 {
 hash = new Hashtable();
 }
 public synchronized Item get(int itemID)
 {
 return get(new Integer(itemID));
 }
 public synchronized Item get(Integer itemID)
 {
 return (Item) hash.get(itemlD);
 }
 /**
 * puts a new item in the hash and returns it.
 * If it's already there, just return it
 */
 public synchronized Item put(int itemID)
 {
 Integer ID = new Integer(itemID);
 Item it = get(ID);
 if (it == null)
 {
        it = new Item(itemID);
        hash.put(ID, it);
        return it;
 }
 else
        return it;
 }
 public void print(ServletOutputStream out, SongInfoCache cache)
 {
 for (Enumeration e = hash.keys(); e.hasMoreElements();) {
        Item anItem = get((Integer) e.nextElement());
        Util.out(out,anItem.toString(cache));
 }
 }
 public String inList(byte type)
 {
 String list = "";
 for (Enumeration e = hash.keys(); e.hasMoreElements() ;) {
        Item anItem = get((Integer) e.nextElement());
        if (type = Item.TYPE_ANY || anItem.getType() == type)
         {
                list= list.concat(anltem.itemID + ",");
        }
 }
 // remove that extra comma
 if (list.length() > 0)
        list = list.substring(0, list.length() - -1);
 return list;
 }
 }
 ItemsProfile.java Page 2 of 2 11/05/99 1:32 PM
```

### Media

```
 package com.launch.PlaylistGenerator;
 public class Media
 {
 int mediaID;
 short mediaType;
 String filepath;
 public Media(int mediaID, short mediaType, String filepath)
 {
 this.mediaID = mediaID;
 this.mediaType = mediaType;
 this.filepath = filepath;
 }
 public String toString()
 {
 return mediaType + ": " + mediaID;
 }
 public static short getMediaType(Bandwidth speed, MediaFormat format)
 {
 if (format.get() == MediaFormat.WINDOWSMEDIA)
 {
        if (speed.get() = Bandwidth.SPEED_28)
               return 211;
        else if (speed.get() = Bandwidth.SPEED_56)
               return 147;
        else if (speed.get() >= Bandwidth.SPEED_100)
               return 212;
        else
               return 0;
 }
 return 0;
 }
 public static Bandwidth typeToBandwidth(short mediaType)
 {
 if (mediaType == 211)
        return new Bandwidth(Bandwidth.SPEED_28);
 else if (mediaType = 147)
        return new Bandwidth(Bandwidth.SPEED_56);
 else if (mediaType == 212)
        return new Bandwidth(Bandwidth.SPEED_100);
 return new Bandwidth();
 }
 }
```

### MediaFormat

```
 package com.launch.PlaylistGenerator;
 public class MediaFormat
 {
 public final static byte WINDOWSMEDIA = 1;
 public final static byte REALMEDIA = 2;
 public final static byte QUICKTIME = 3;
 private boolean beenset = false;
 private byte value;
 // when we start supporting more than one format, just take this out
 public MediaFormat()
 {
 value = WINDOWSMEDIA;
 beenset = true;
 )
 public MediaFormat(byte format)
 {
 value = format;
 beenset = true;
 }
 public byte get()
 {
 return value;
 }
 public void set(byte format)
 {
 value = format;
 beenset = true;
 }
 public boolean isSet()
 {
 return beenset;
 }
 public String toString()
 {
 if(value == WINDOWSMEDIA)
      return "WindowsMedia";
 else if (value = REALMEDIA)
      return "RealMedia";
 else if (value == QUICKTIME)
      return "QuickTime";
 return "UNKNOWN";
 }
 }
```

### MediaGatewayServlet

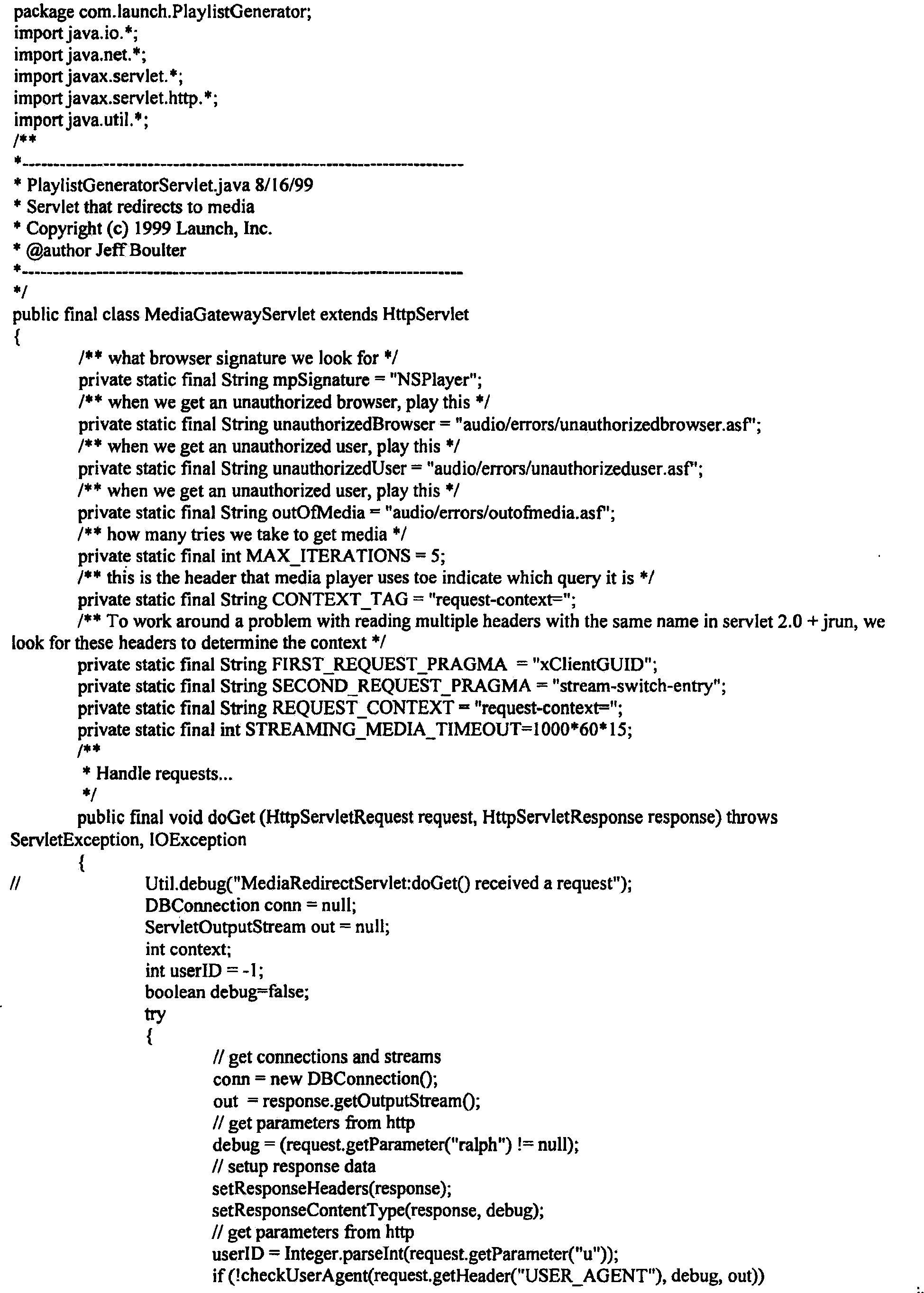

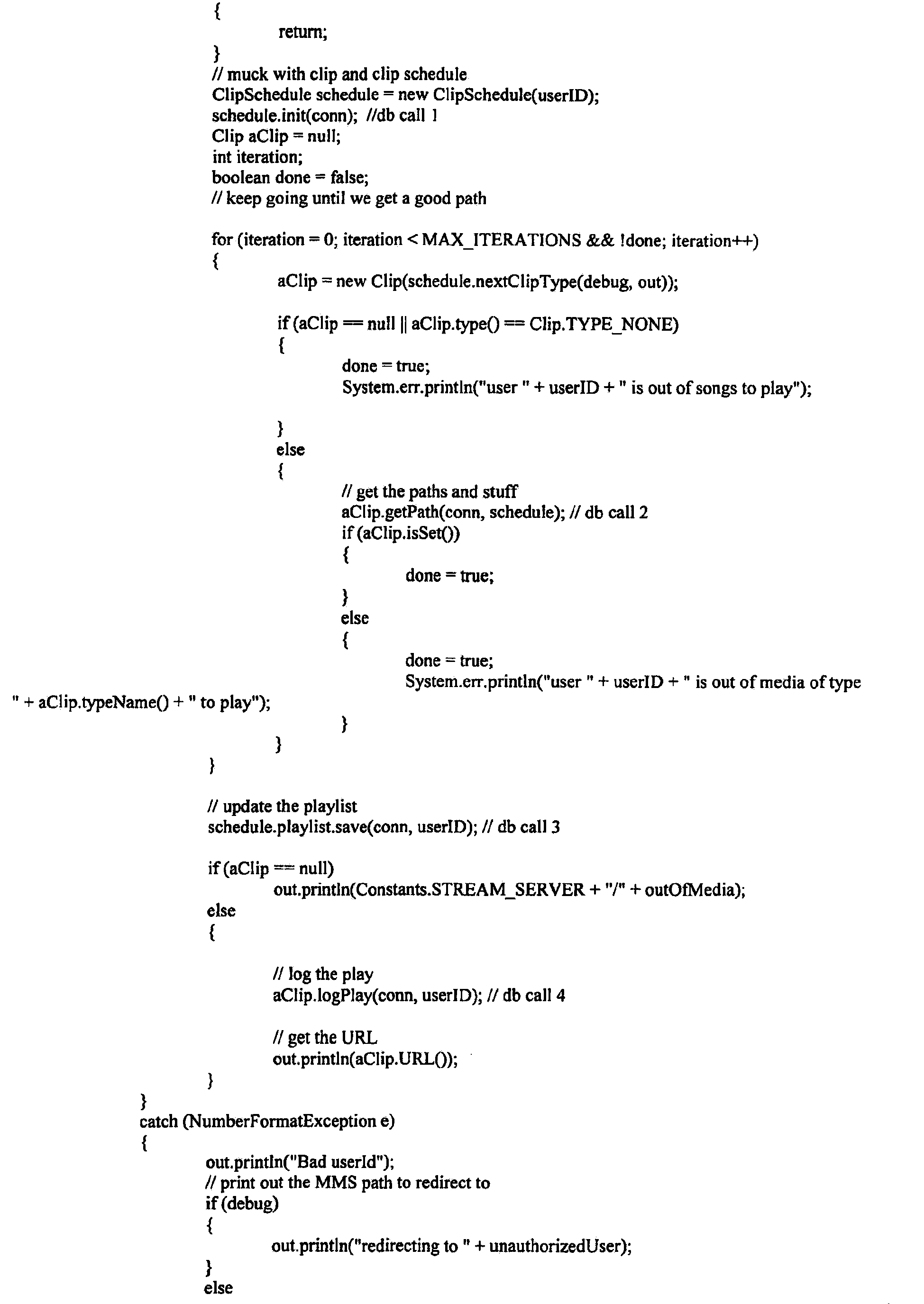

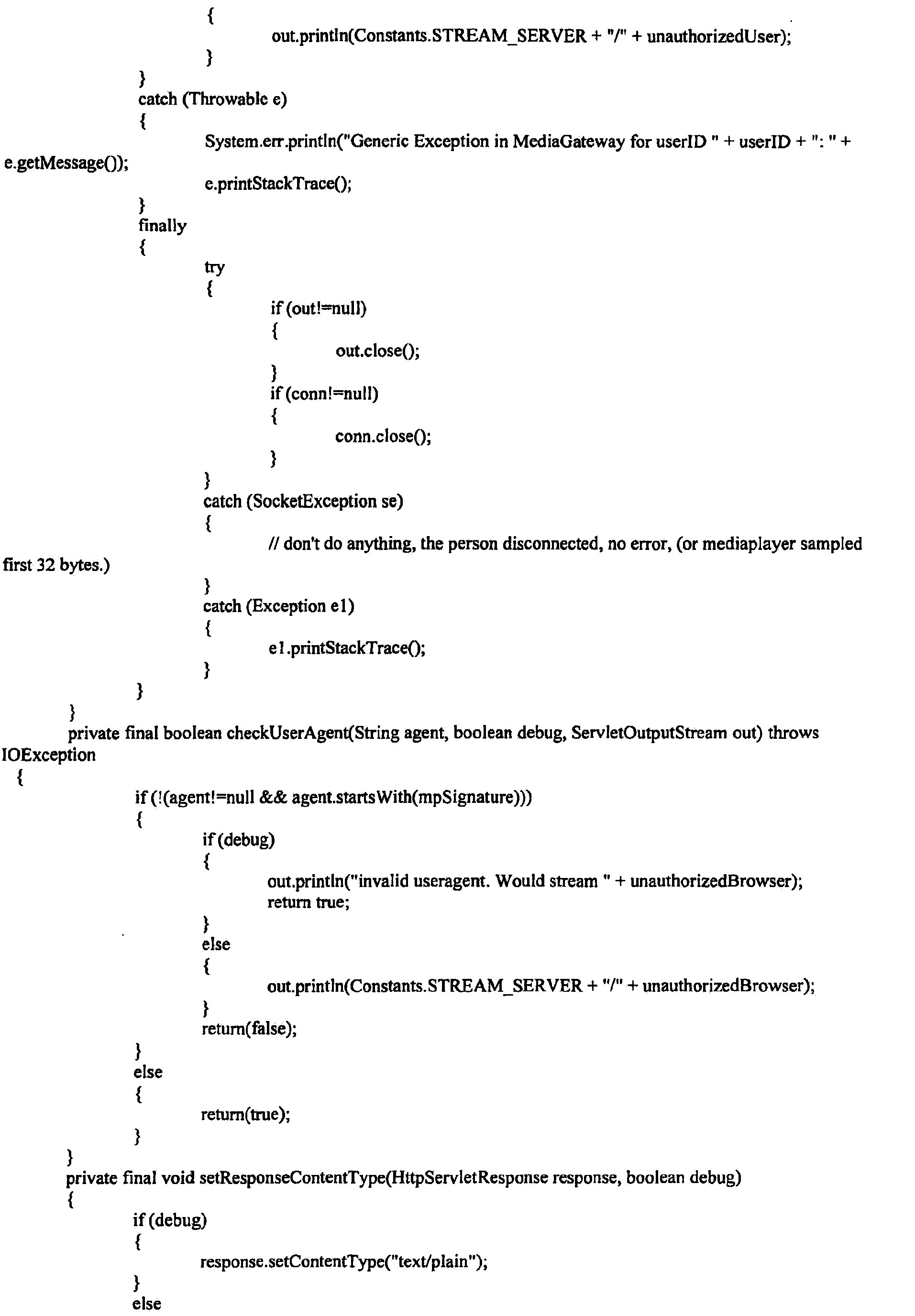

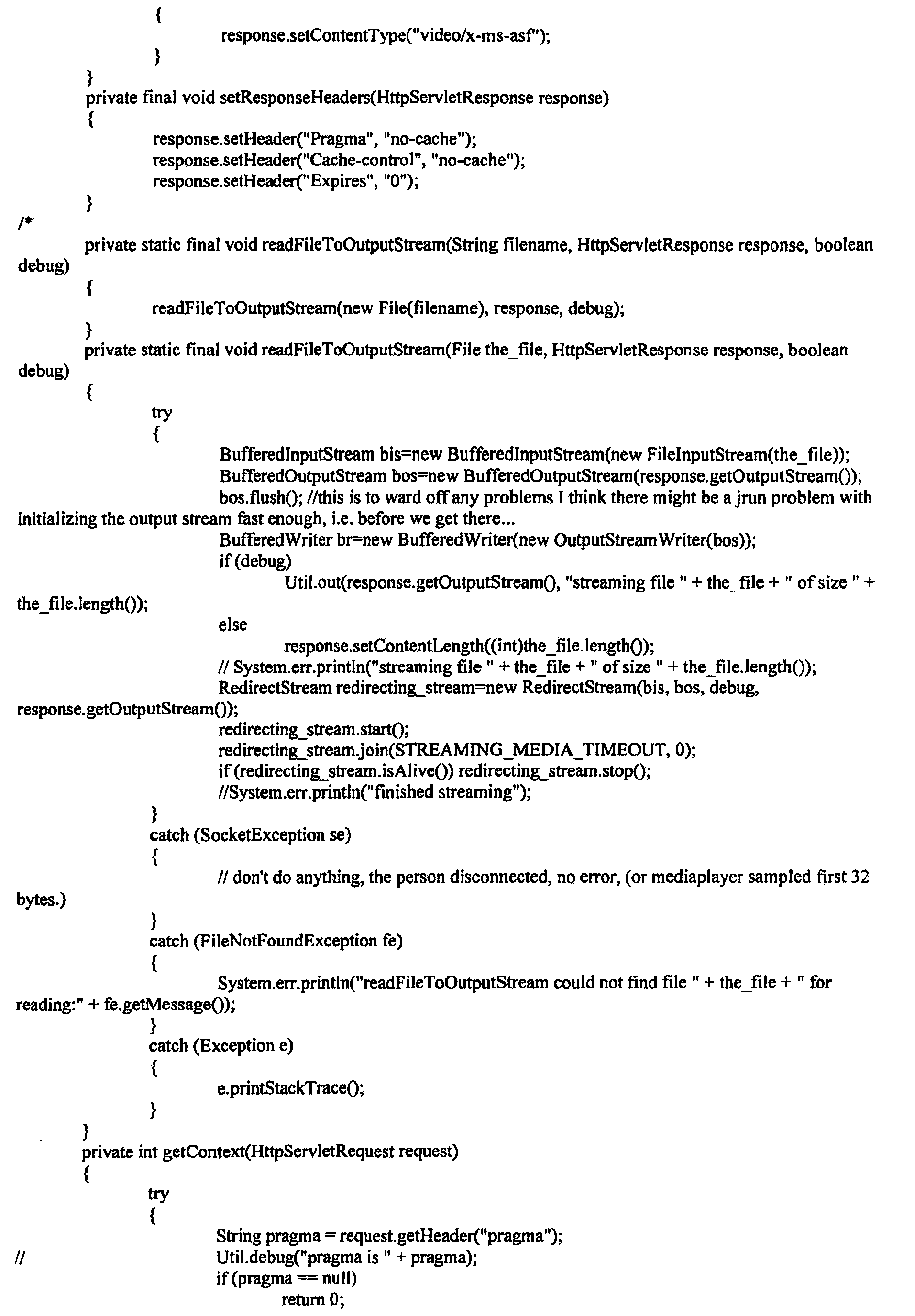

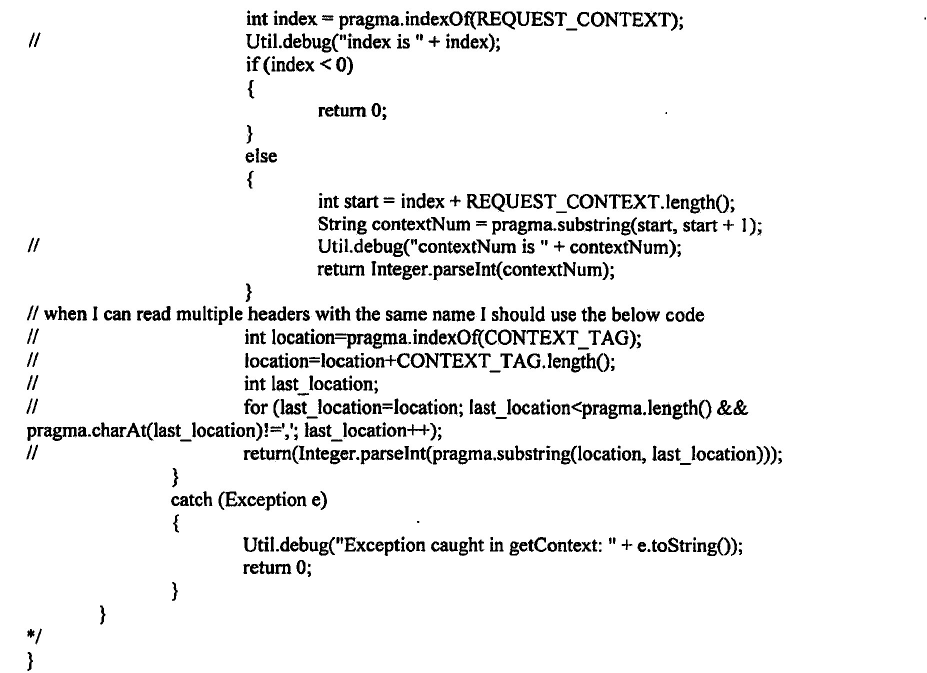

### MediaList

```
 package com.launch.PlaylistGenerator;
 import java.util.Vector;
 public class MediaList
 {
 private Vector media = new Vector(0,1);
 public void add(short mediaType, int mediaID, String filepath)
 {
 media.addElement(new Media(mediaID, mediaType, filepath));
 }
 public boolean inType(short mediaType)
 {
 Media test;
 for (int i = 0; i < media.size(); i++)
 {
       test = (Media) media.elementAt(i);
        if (test.mediaType == mediaType)
               return true;
 }
 return false;
 }
 public int getID(short mediaType)
 {
 for (int i = 0; i < media.size(); i++)
 {
       Media aMedia = (Media) media.elementAt(i);
       if (aMedia.mediaType == mediaType)
               return aMedia.mediaID;
 }
 return 0;
 }
 public String getFilepath(short mediaType)
 {
 for (int i = 0; i < media.size(); i++)
 {
       Media aMedia = (Media) media.elementAt(i);
       if (aMedia.mediaType == mediaType)
               return aMedia.filepath;
 }
 return null;
 }
 public int size()
 {
 return media.size();
 }
 public Media typeAt(int index)
 {
 return (Media) media.elementAt(index);
 }
 public String toString()
 {
 String result ="";
 if (med ia == null)
        return "(none)";
 for (int i = 0; i < media.size(); i++)
 {
        result = resutt.concat(media.elementAt(i).toString() + ",");
 }
 return "(" + result + ")";
 }
 }
```

### PickCount

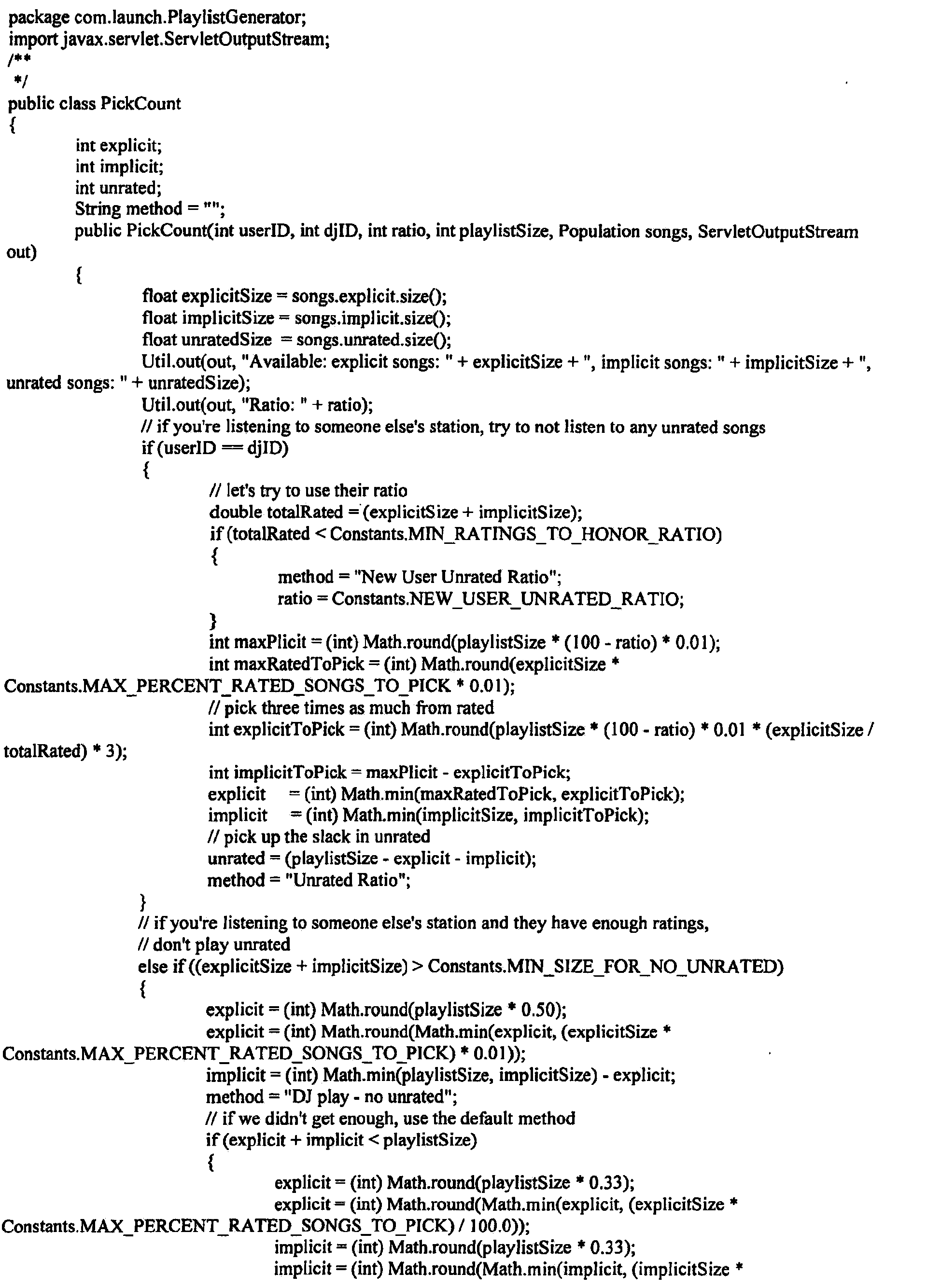

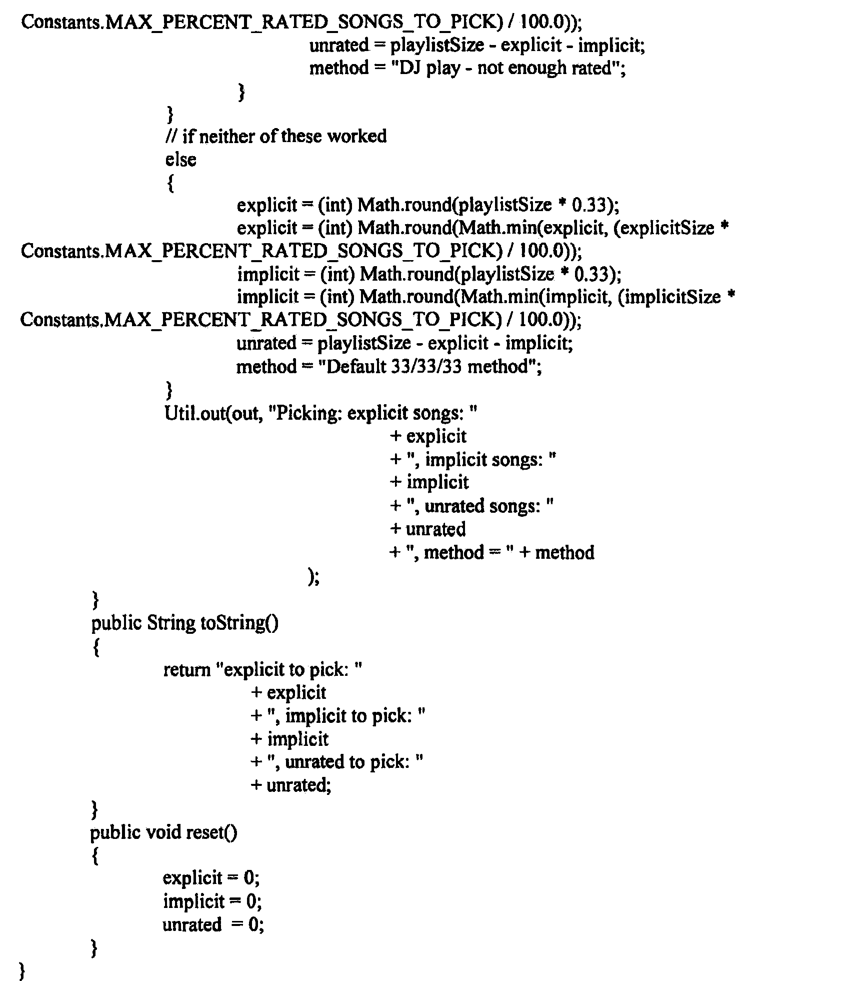

### PickList

```
 package com.launch.PlaylistGenerator;
 import java.util.Vector;
 public class PickList extends Vector
 {
 public PickList(PickCount counts)
 {
 // make a list of all the song types that we need to pick
 for (int i = 0; i < counts.explicit; i++)
      addElement(Song.EXPLICIT);
 for (int i = 0; i < counts.implicit; i++)
      addElement(Song.IMPLICIT);
 for (int i = 0; i < counts.unrated; i++)
      addElement(Song.UNRATED);
 }
 public void addElement(short value)
 {
 addElement(new Short(value));
 }
 public void reAdd (short type, Vector songGroup, Population songs)
 {
 // try to pick from the same bucket again
 if (songGroup.size() > 0)
      addElement(type);
 // otherwise, try the other ones
 else if (songs.explicit.size() > 0)
      addElement(Song.EXPLICIT);
 else if (songs.implicit.size() > 0)
      addElement(Song.IMPLICIT);
 else if (songs.unrated.size() > 0)
      addElement(Song.UNRATED);
 }
 public short getRandom()
 {
 if (size() < 0)
      return 0;
 int lucky = (int) Util.random(size() - 1);
 // figure out what group to pick from
 short type = ((Short) elementAt(lucky)).shortValue();
 removeElementAt(lucky);
 return type;
 }
 }
```

### PickStatus

```
 package com.launch.PlaylistGenerator;
 public class PickStatus
 {
 public final static int NOT_PICKED = 0;
 public final static int REJECTED = 2;
 public final static int PICKED = 1;
 int status;
 int order = -1;
 short percentile;
 public String toString()
 {
 return toDisplayString(Util.DISPLAY_TEXT);
 }
 public String toDisplayString(int displayType)
 { String redStart = "";
 String redStart = "";
 String greenStart = "";
 String fontEnd = "";
 if (displayType == Util.DISPLAY_HTML)
 {
      redStart = "<FONT COLOR=red><B>";
      greenStart = "<FONT COLOR=green><B>";
      fontEnd = "</B></FONT>";
 }
 switch (status) {
      case NOT_PICKED:
              return "N ";
      case PICKED:
              return greenStart + " P " + fontEnd;
      case REJECTED:
              return redStart + R" + fontEnd;
      default:
             return " ";
 }
 }
 }
```

### PlayDataHash

```
 package com.launch. PlaylistGenerator;
 import java.util.Enumeration;
 public class PlayDataHash extends IntHash
 {
 public String toString()
 {
 String myString = "";
 for (Enumeration e = keys(); e.hasMoreElements();) {
      // debug.write("interation " + i++);
      int stationID = ((Integer) e.nextEtement()).intValue();
      int rank = get(stationID);
      myString = myString.concat(
                             "stationID: " +
                             stationID +
                             "=" +
                             rank +
                             "\n");
 }
 return myString;
 }
 }
```

### PlayDates

```
 package com.launch.PlaylistGenerator;
 import java.util.Hashtable;
 import java.util.Date;
 import java.util.Enumeration;
 import java.text.SimpleDateFormat;
 import java.io.InputStreamReader;
 import java.text.ParsePosition;
 import java.io.IOException;
 import java.util.Calendar;
 public class PlayDates
 {
 private static final String dateFormat = "yyyy-MM-dd HH:mm:ss";
 private Hashtable hash;
 int userID;
 double secondsInDay = Util.MILLISECONDS_IN_SECOND *
                              Util.SECONDS_IN_MINUTE *
                              Util.MINUTES_IN_HOUR *
                              Util.HOURS_IN_DAY;
 // for date parsing
 private static StringBuffer year = new StringBuffer(" 1234");
 private static StringBuffer month = new StringBuffer("12");
 private static StringBuffer day = new StringBuffer("12");
 private static StringBuffer hour = new StringBuffer("12");
 private static StringBuffer minutes = new StringBuffer("12");
 public Date dbDate = new Date();
 private boolean loaded = false;
 public PlayDates()
 {
 hash = new Hashtable();
 }
 public void put(int songID, Date lastPlayed)
 {
 // the common case is that they will have NOT played this song before,
 // so create the Integer object in anticipation that we will use it for
 // the put as well.
 Integer i = new Integer(songID);
 Date before = get(i);
 // save only the most recent play of a song
 if (before == null || before.getTime() < lastPlayed.getTime())
 {
      hash.put(i, lastPlayed);
 }
 }
 public Date get(int songID)
 {
 return (Date) hash.get(new Integer(songID));
 }
 public Date get(Integer songID)
 {
 return (Date) hash.get(songID);
 }
 public Enumeration keys()
 {
 return hash.keys();
 }
 public void remove(Integer songID)
 {
 hash.remove(songID);
 }
 public int size()
 {
 return hash.size();
 }
 public String toString()
 {
 String result = "";
 for (Enumeration e = hash.keys(); e.hasMoreElements();) {
      Integer songID = (Integer) e.nextElement();
      Date playedAt = get(songID);
      result = result.concat("{" + songID + " = " + playedAt + "} ");
 }
 return result;
 }
 public String toDBstring()
 {
 Date startDate = new Date();
 StringBuffer buffer = new StringBuffer(100000);
 Calendar cal = Calendar.getInstance();
 Integer songID;
 Date playedAt;
 for (Enumeration e = hash.keys(); e.hasMoreElements();) {
      songID = (Integer) e.nextElement();
      playedAt = get(songID);
 // System.out.println(playedAt);
      cal.setTime(playedAt);
      buffer.append(cal.get(Calendar.YEAR) + "-"
                             + leadingZero(cal.get(Calendar.MONTH) + 1) + "-"
                             + leadingZero(cal.get(Calendar.DAY_OF_MONTH)) + " "
                             + leadingZero(cal.get(Calendar.HOUR_OF_DAY)) + ":"
                             + leadingZero(cal.get(Calendar.MINUTE)) + ":00=" +
 songID +",");
 // result = result.concat(formatter.format(playedAt) + "=" + songID + ",");
 }
 Util.printElapsedTime("toDBString", startDate);
 return buffer.toString();
 }
 public static final String leadingZero (int value)
 {
 if (value < 10)
      return "0" + value;
 return value + "";
 }
 public float getScore(Integer songID)
 {
 Date lastPlayed = get(songID);
 if (lastPlayed = null)
      return 0;
 double secondsSincePlayed = new Date().getTime() - lastPlayed.getTime();
 double daysSincePlayed = secondsSincePlayed / secondsInDay;
 double logValue = Math.log(daysSincePlayed + 0.01);
 return (float) Math.min(100, (22.0 * logValue));
 }
 public void save(DBConnection conn)
 {
 // Date dateStarted = new Date();
 if (! loaded)
      return;
 try
 {
      conn.executeUpdate("exec sp_lcSavePlayHistoryText_isux " + userID + ","' +
 toDBString() + ""', false);
 }
 catch (DBException e)
 {
      System.err.println("DBException in PlayDates:save: "+e.toString());
 }
 // Util.printElapsedTime("save", dateStarted);
 }
 public void markRecentlyPlayed(SongInfoCache cache, Population songs)
 {
 double now = dbDate.getTime();
 double lastThreeHours = Util.MILLISECONDS_IN_SECOND *
                                     Util.SECONDS_IN_MINUTE *
                                     Util.MINUTES_IN_HOUR *
                                     3;
 Integer songID;
 Date playedAt;
 SongInfo info;
 int artistID, albumID;
 for (Enumeration e = hash.keys(); e.hasMoreElements() ;)
 {
       songID = (Integer) e.nextElement();
       playedAt = get(songID);
       if (now - playedAt.getTime() < lastThreeHours)
       {
              // mark songs played in the last three hours
              // so as to comply with the RIAA rules
              // and make sure we don't pick too many later
              info = (SongInfo) cache.get(songID, SongInfoCache.TYPE_SONG);
              if (info != null)
              {
                      artistID = info.getArtistID();
                      albumID = info.getAlbumID();
                      // "various artists" albums don't count
                      if (!ArtistInfo.isVariousArtists(artistID))
                      {
                             songs.artistCounts.increment(artistID);
                      }
                      songs.albumCounts.increment(albumID);
              }
       }
 }
 }
 public void oldLoad(DBConnection conn, int userID)
 {
 this.userID = userID;
 try
 {
       String sql = "exec sp_lcoGetLastPlayed_xsxx " + userID;
       DBResultSet rs = conn.executeSQL(sql);
       loaded = true;
       Date lastDate;
       int songID;
      while (!rs.getBOF() && !rs.getEOF())
       {
              songID = rs.getInt("songID");
              lastDate = rs.getTimestamp("lastPlayed");
              put(songID, lastDate);
              rs.next();
       }
 }
 catch (DBException e)
 { System.err.println("DBException in PlayDates.oldLoad: " + e.toString());
 }
 }
 public void load(DBConnection conn, int userID)
 {
 Date startDate = new Date();
 // be careful of the SQL Server TEXTSIZE parameter which is by default 64KB
 this.userID = userID;
 double aDay = Util.MILLISECONDS_IN_SECOND *
                             Util.SECONDS_IN_MINUTE *
                             Util.MINUTES_IN_HOUR *
                             Util.HOURS_IN_DAY;
 double aMonth = aDay * Util.DAYS_IN_MONTH;
 try
 {
      String sql = "exec sp_lcGetSongHistoryText_xsxx " + userID;
      DBResultSet rs = conn.executeSQL(sql);
      Util.printElapsedTime("LP: ran getsonghistorytext", startDate);
      if (!rs.getBOF() && !rs.getEOF())
      {
              loaded = true;
              char[] stuff = new char[100000];
              InputStreamReader reader = new
 InputStreamReader(rs.getAsciiStream("played"));
              Util.printElapsedTime("LP: created reader", startDate);
              dbDate = rs.getTimestamp("dbDate");
              long dbDateTime = dbDate.getTime();
              reader.read(stuff();
              Util.printElapsedTime("LP: read into stuff", startDate);
              Calendar cal = Calendar.getInstance();
              int lastStart = 0;
              int songID = 0;
 // SimpleDateFormat formatter1 = new
 SimpleDateFormat(PlayDates.dateFormat);
 // ParsePosition pos = new ParsePosition(0);
              Date datePlayed = null;
              String parseme = new String();
              long length = stuff.length;
             for (int i = 0; i < length; i++)
              {
                     switch (stuff[i])
                     {
                     case "=":
 // parseme = new String(stuff, lastStart, i - lastStart);
 // pos.setIndex(0);
 // datePlayed = formatter1.parse(parseme, pos);
                            datePlayed = parseDate(stuff, lastStart, cal);
 // System.out.println("date is " + datePlayed);
 // if (datePlayed == null)
 // {
 // pos.setIndex(0);
 // datePlayed = formatter2.parse(parseme, pos);
 // }
                             lastStart = i+1;
                             break;
                     case',':
                             parseme = new String(stuff, lastStart, i - lastStart);
                             try
                             {
                                    songID = Integer.parseInt(parseme);
                             }
                             catch (NumberFormatException e) { }
                            // save 'em
                             // also don't save them if they're > 30 days old
                             if (songID > 0 && datePlayed != null && ((dbDateTime -
 datePlayed.getTime()) < aMonth))
                             {
                                    put(songID, datePlayed);
                             }
                             songID = 0; // reset
                             datePlayed = null; // reset
                             lastStart = i+1;
                             break;
                     case 0:
                            // we're at the end of the string
 // Util.printElapsedTime("LP: found null at char " + i,
 startDate);
                            return;
                     }
             }
      }
 }
 catch (DBException oops)
 {
      Util.debug("DBException in PlayDates.load: " + oops.getMessage());
 }
 catch (IOException oops)
 {
      Util.debug("IOException in PlayDates.load: " + oops.getMessage());
 }
 }
 /**
 * Why? Because SimpleDateFormat is *way* too slow.
 */
 private final Date parseDate(char[] chars, int start, Calendar cal)
 {
 // 1999-10-13 17:19:00
 // 0123456789012345678
 /*
 String year, month, day, hour, minutes;
 year = new String(chars, start, 4);
 month = new String(chars, start + 5, 2);
 day = new String(chars, start + 8, 2);
 hour = new String(chars, start + 11, 2);
 minutes = new String(chars, start + 14,2);
 */
 year.setCharAt(0, chars[start + 0]);
 year.setCharAt(1, chars[start + 1]);
 year.setCharAt(2, chars[start + 2]);
 year.setCharAt(3, chars[start + 3]);
 month.setCharAt(0, chars[start + 5]);
 month.setCharAt(1, chars[start + 6]);
 day.setCharAt(0, chars[start + 8]);
 day.setCharAt(1, chars[start + 9]);
 hour.setCharAt(0, chars[start + 11]);
 hour.setCharAt(1, chars[start + 12]);
 minutes.setCharAt(0, chars[start + 14]);
 minutes.setCharAt(1, chars[start + 15]);
 int yearInt = 0, monthInt = 0, dayInt = 0, hourInt = 0, minutesInt = 0;
 // try
 // {
      yearInt = parseInt(year);
      monthInt = parseInt(month);
      dayInt = parseInt(day);
      hourInt = parseInt(hour);
      minutesInt = parseInt(minutes);
 // }
 // catch (NumberFormatException e) { return null;}
 // cal.clear();
 cal.set(yearInt, monthInt - 1, dayInt, hourInt, minutesInt, 0);
 return cal.getTime();
 }
 private static final int parseInt(StringBuffer s)
 {
 int result = 0;
 int last = s.length() - 1;
 for (int i = last; i >= 0; i--)
 {
      result += char2int(s.charAt(i)) * Math.pow(10, last - i);
 }
 return result;
 }
 private final static int char2int(char ch)
 {
 switch (ch)
 {
      case '1':
             return 1;
      case '2':
             return 2;
      case '3':
             return 3;
      case '4':
             return 4;
      case '5':
             return 5;
       case '6':
               return 6;
       case '7':
               return 7;
       case '8':
               return 8;
       case '9':
               return 9;
       default:
               return 0;
 }
 }
 }
```

### Playlist

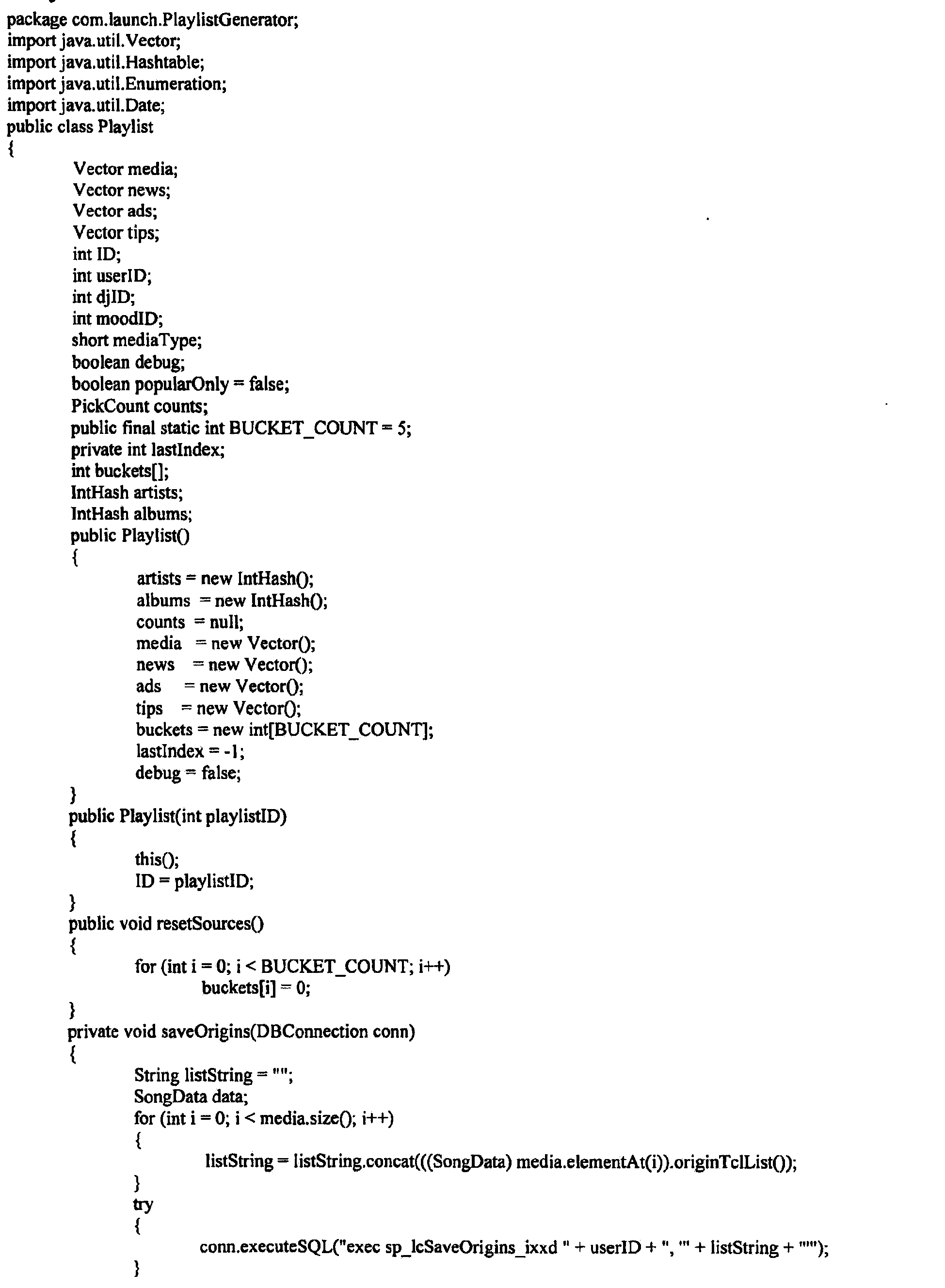

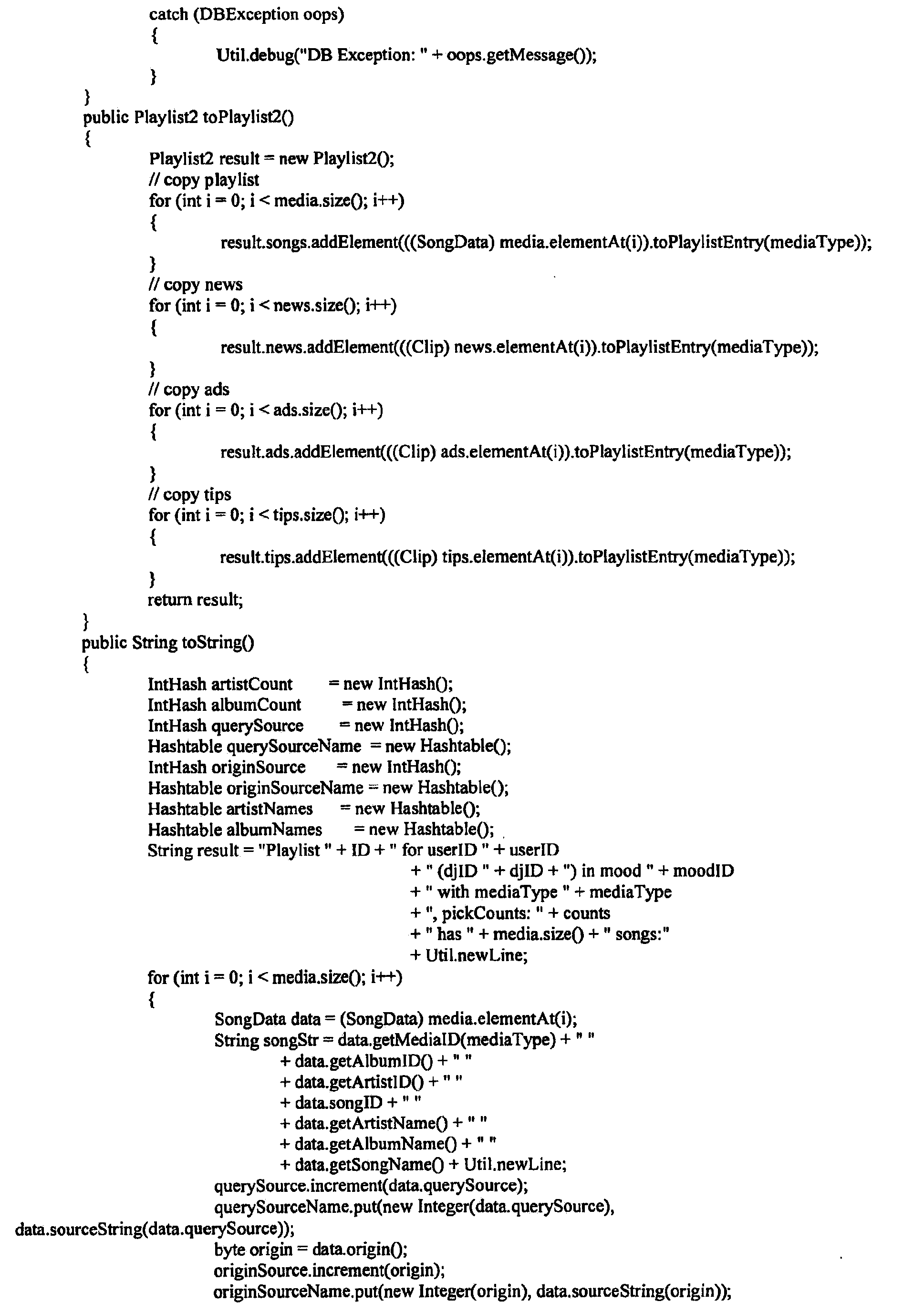

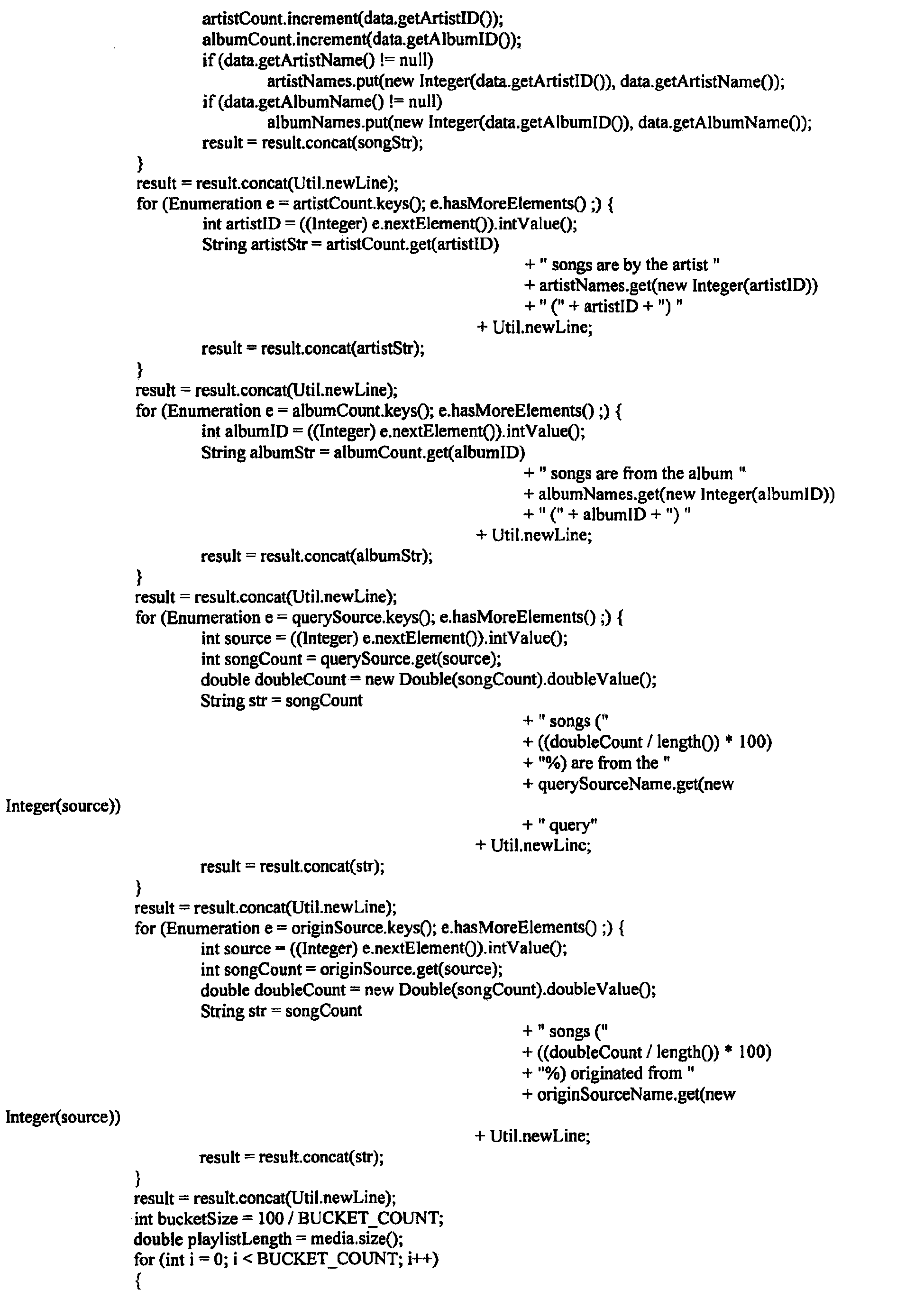

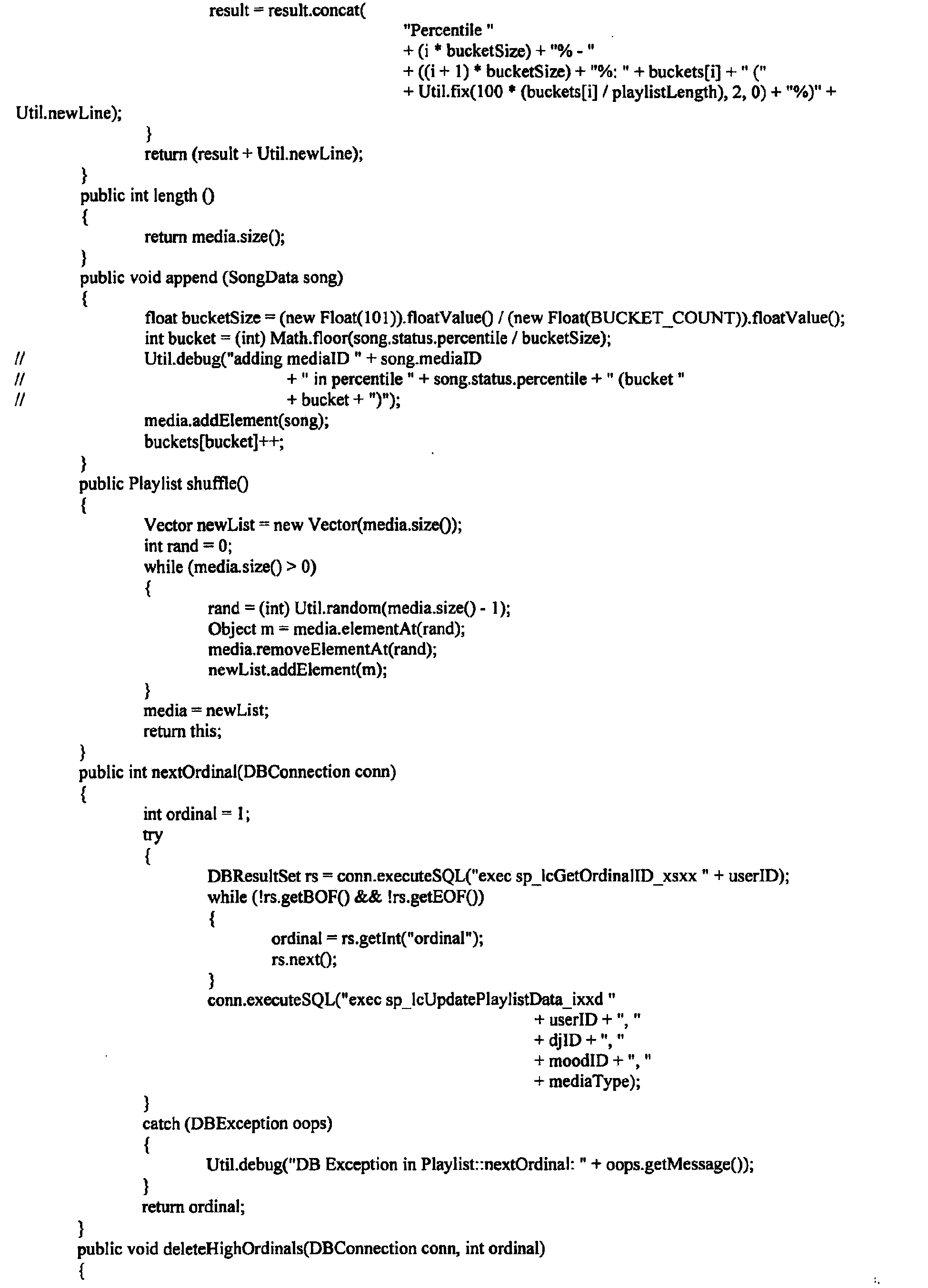

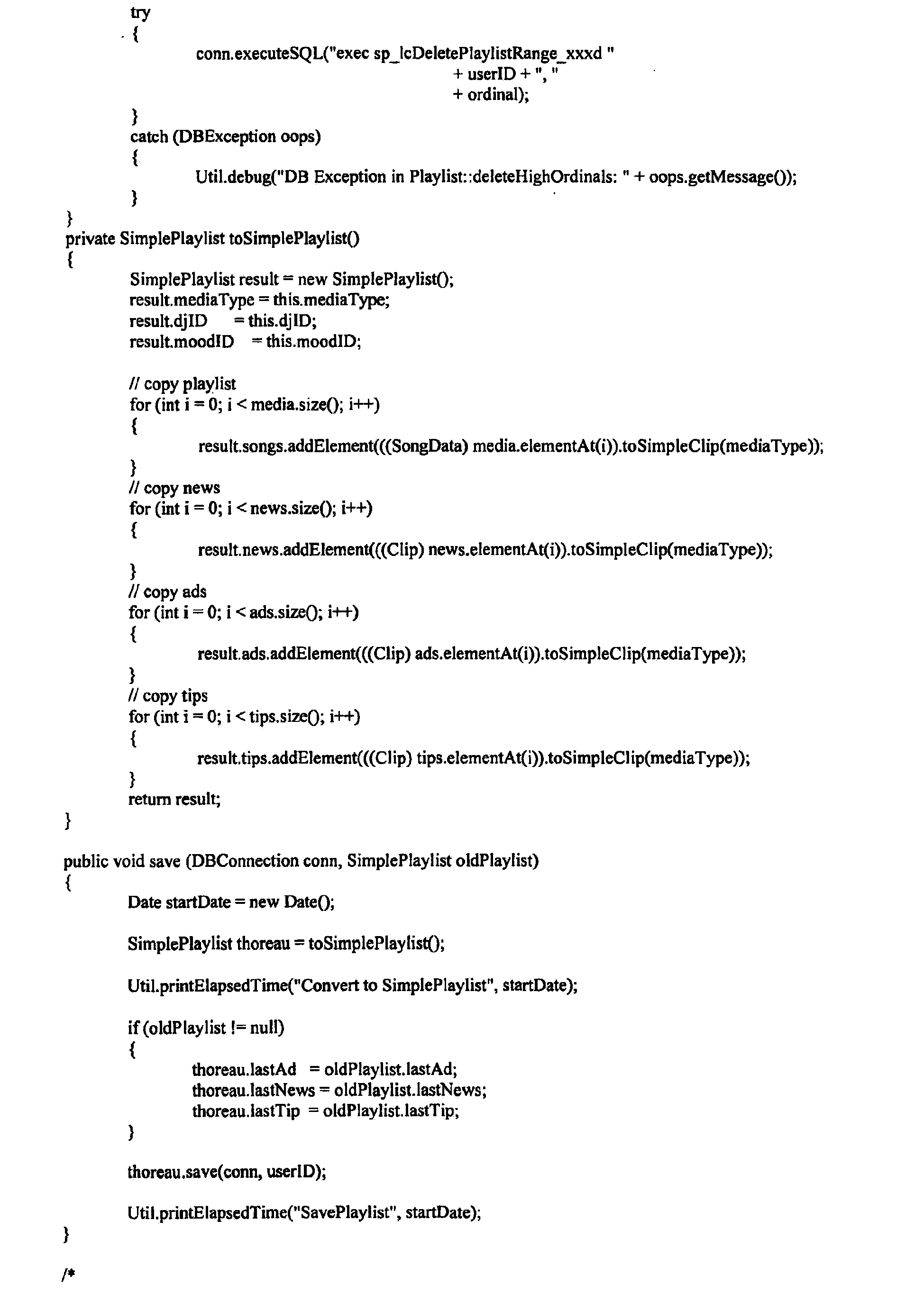

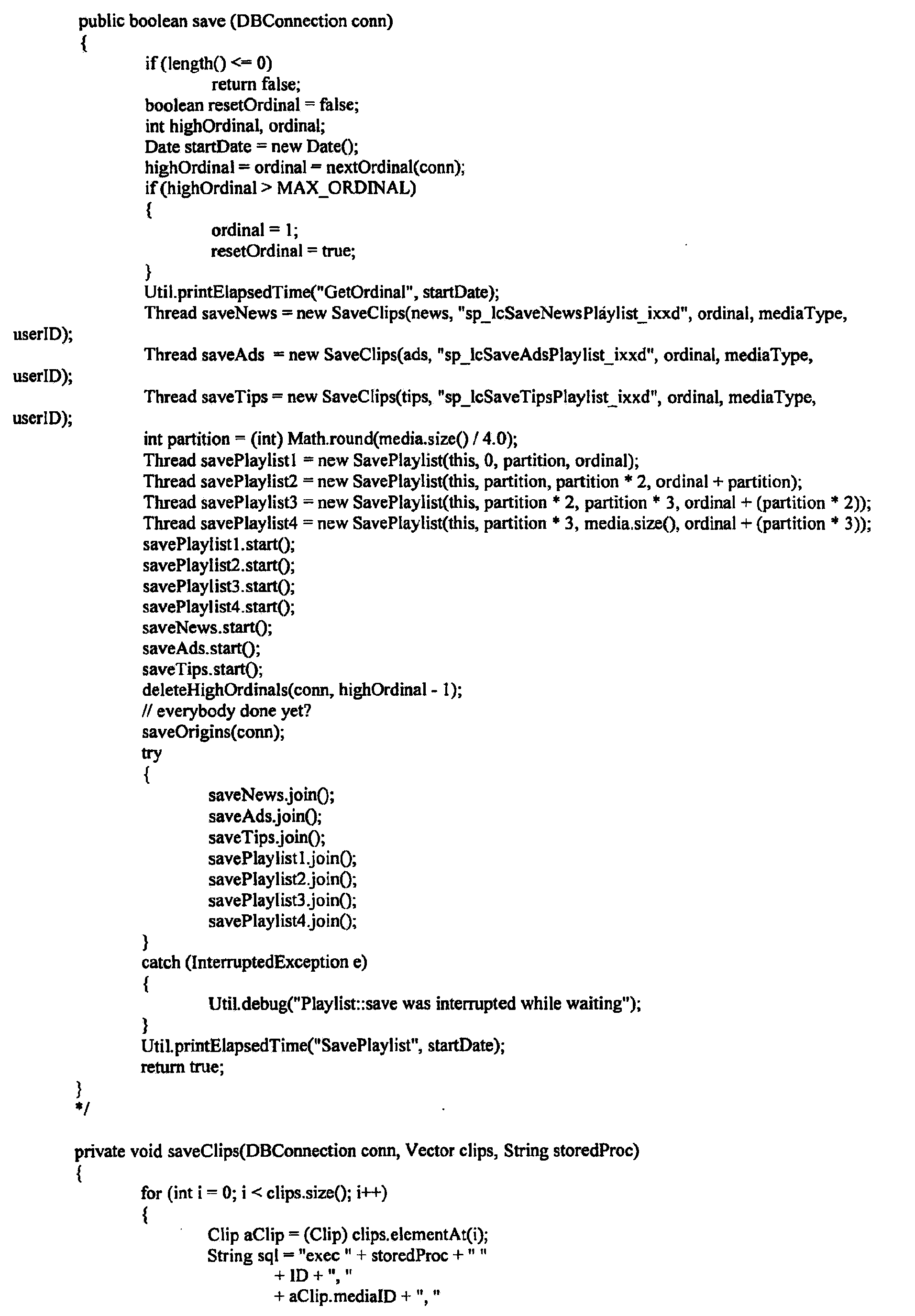

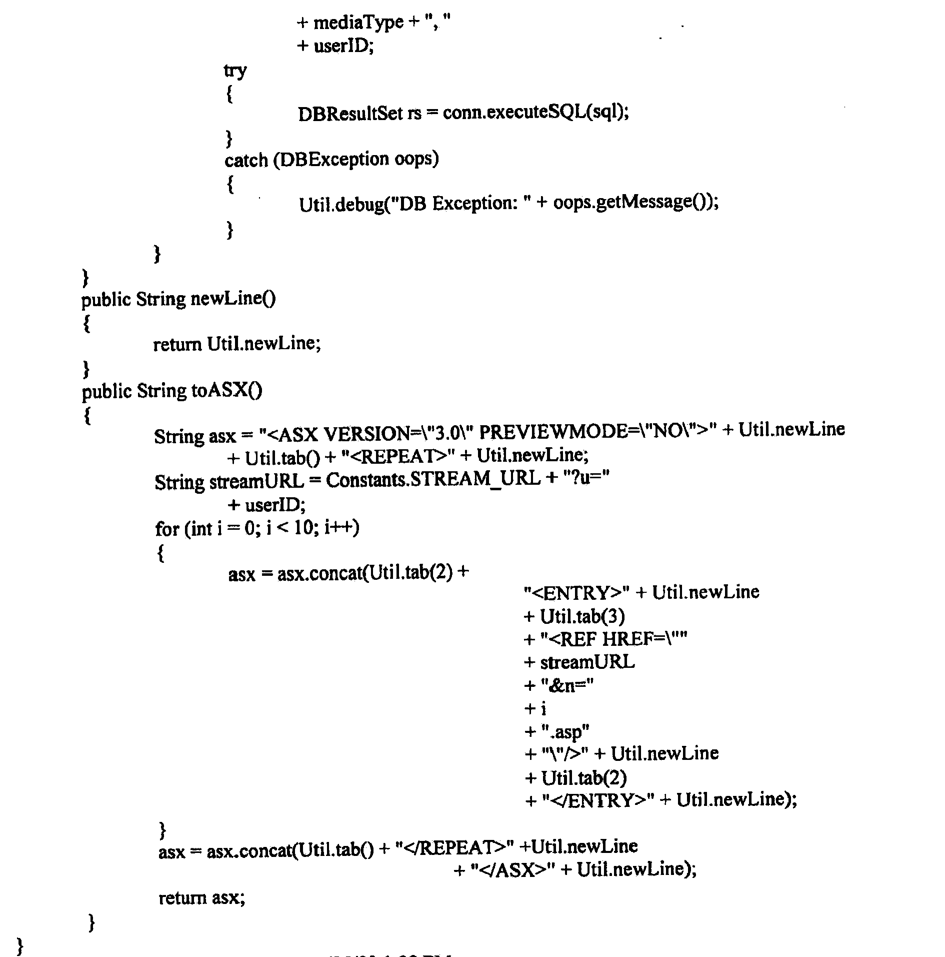

### Playlist2

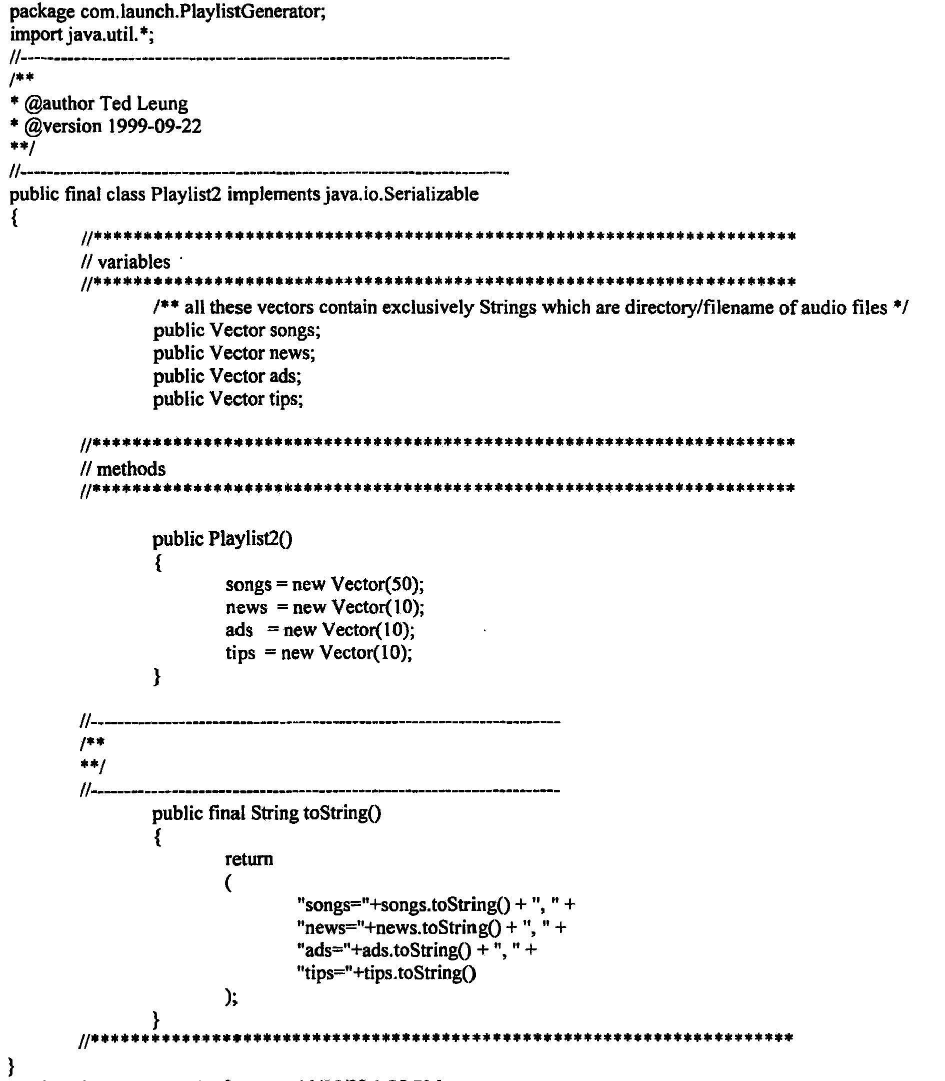

### PlaylistCreatorTest

```
 package com.launch.PlaylistGenerator;
 public class PlaylistCreatorTest
 {
 public static void main(String[] args)
 {
 Util.debug("using database server " + Constants.DB_SERVER);
 SongInfoCache songCache = new SongInfoCache(null);
 songCache.ratingsCache = new RatingsCache();
 // PlaylistParameters params = new PlaylistParameters(3771, null, 0, 13302);
 PlaylistParameters params = new PlaylistParameters(6474126, null, 0, 6474126);
 PlaylistGenerator gen = new PlaylistGenerator(params, songCache, null);
 Playlist playlist = gen.create(true, null);
 gen.toMatrix(null, Util.DISPLAY_TEXT);
 System.exit(0);
 }
 }
```

### PlaylistEntry

```
 package com.launch.PlaylistGenerator;
 import java.io.*;
 public class PlaylistEntry implements Serializable
 {
 public String title, filepath, songTitle, albumTitle, artistTitle;
 public int mediaID, songID, albumID, artistID;
 public short implicit;
 public byte origin;
 }
```

### PlaylistGenerator

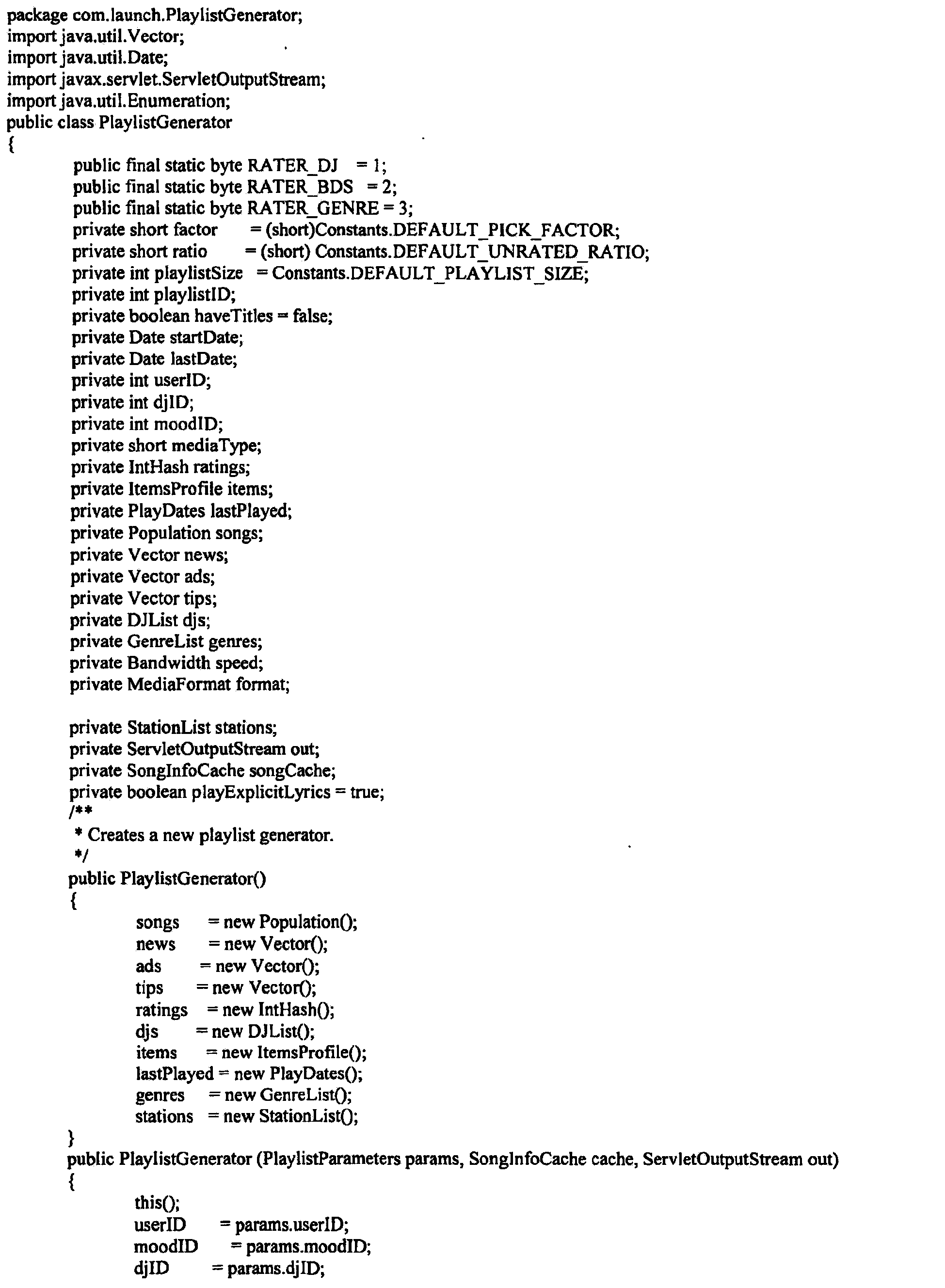

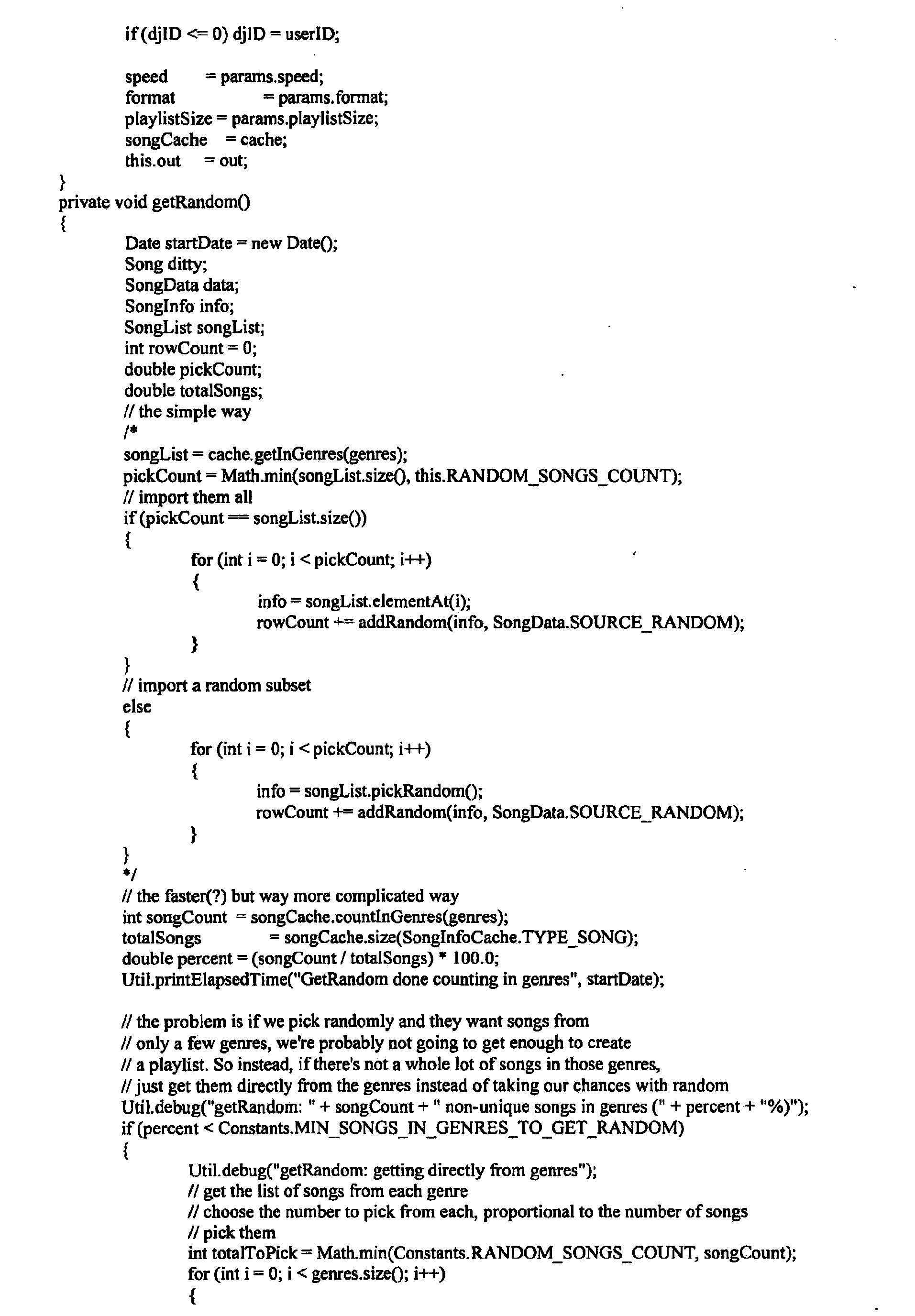

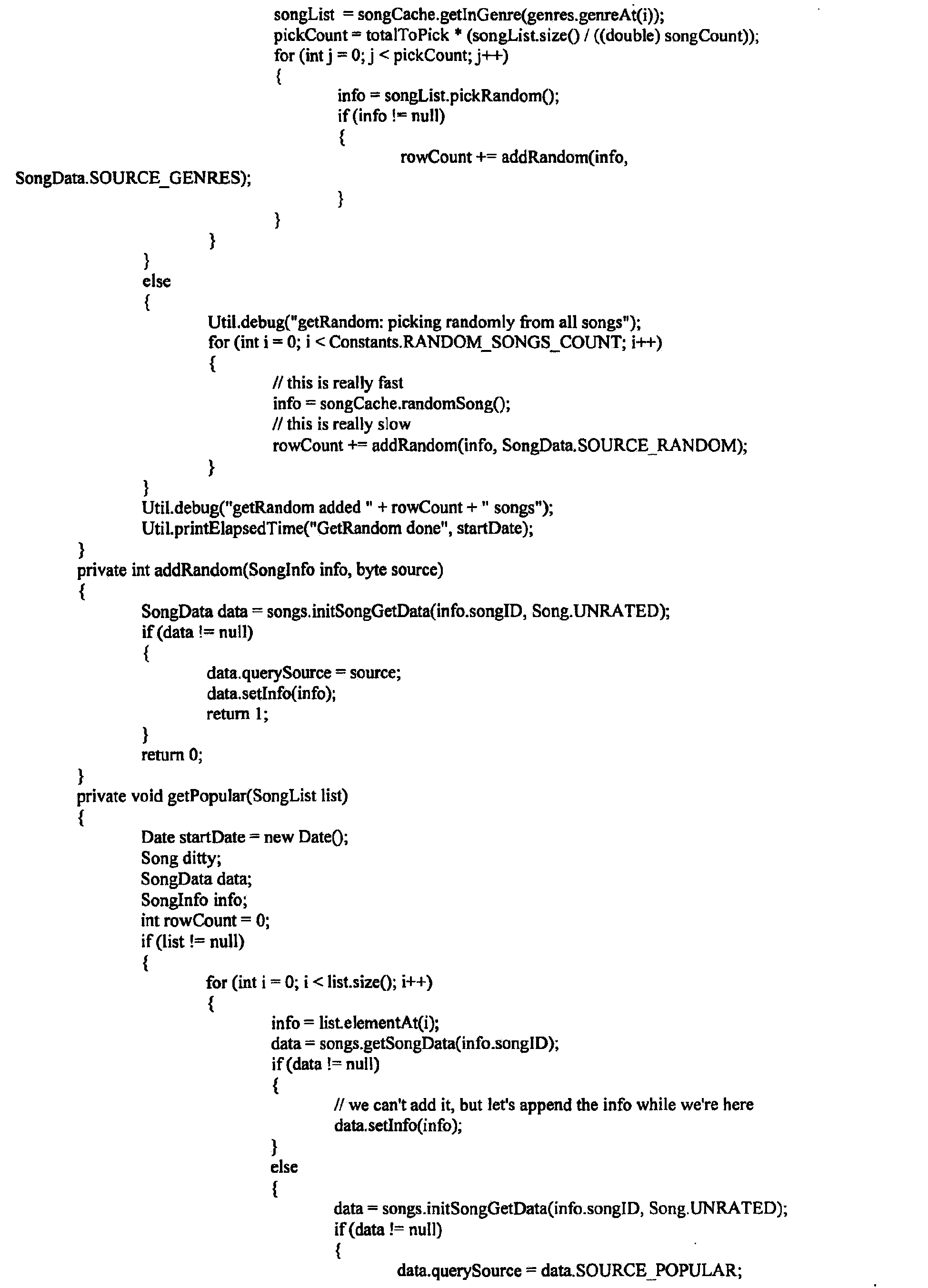

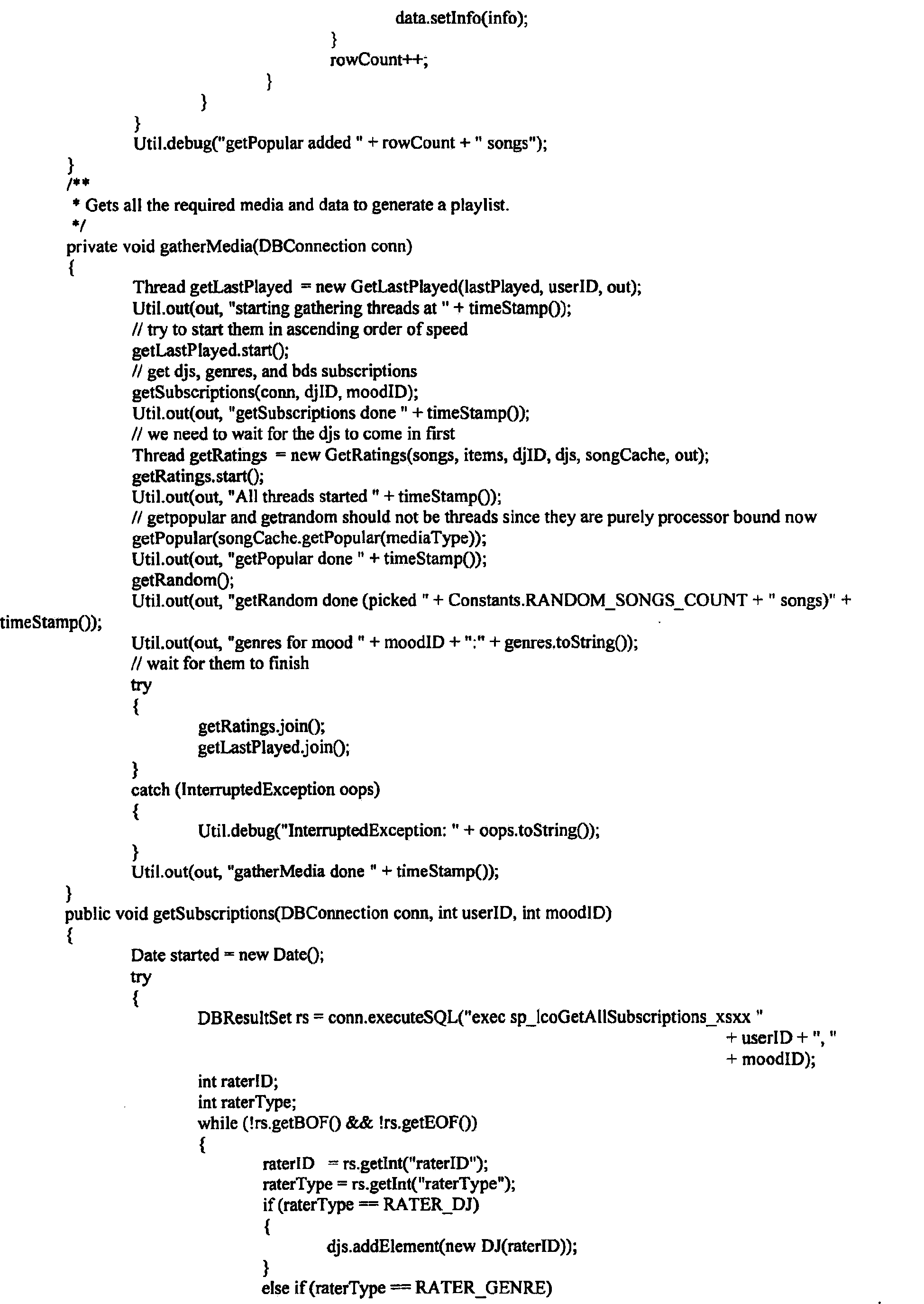

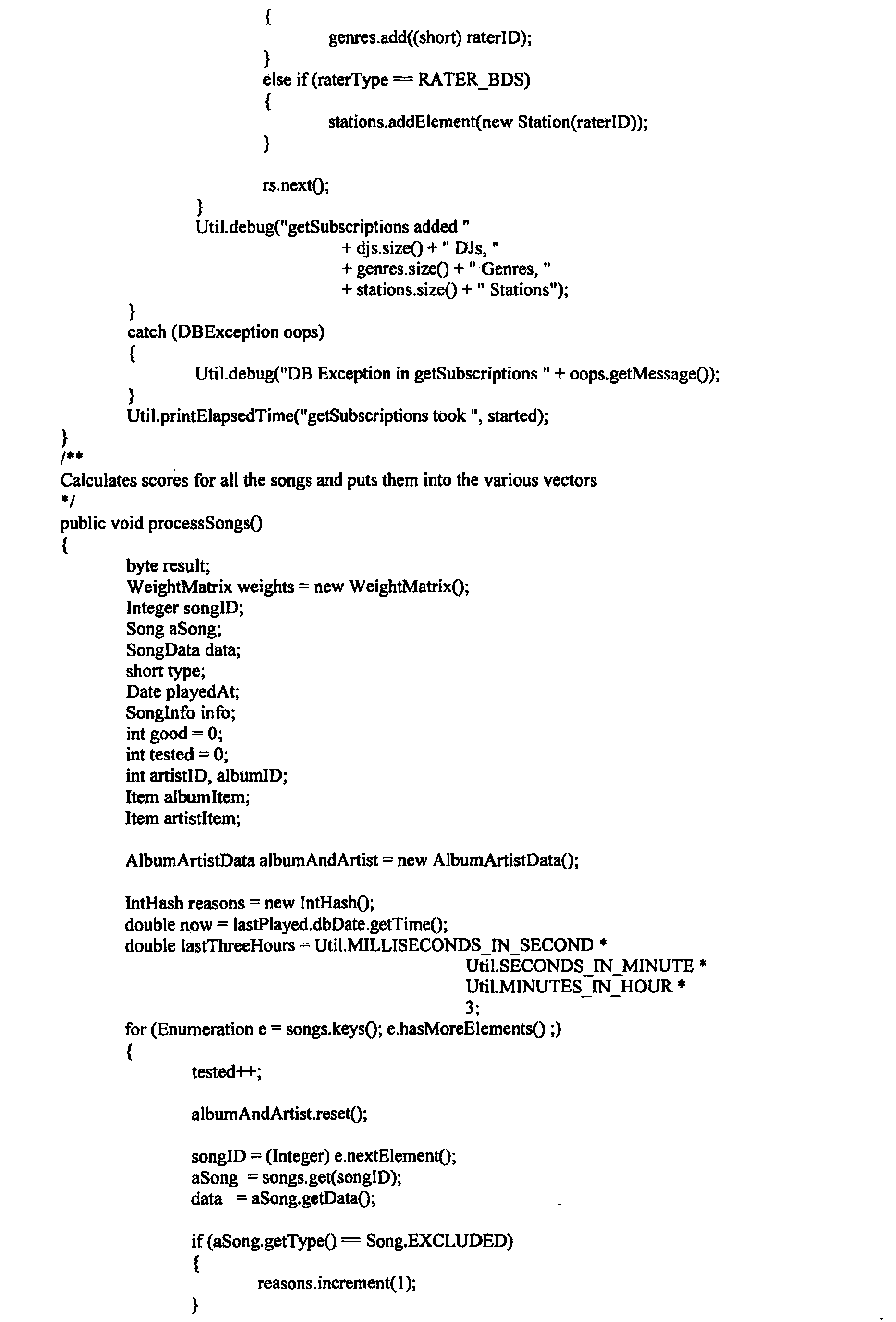

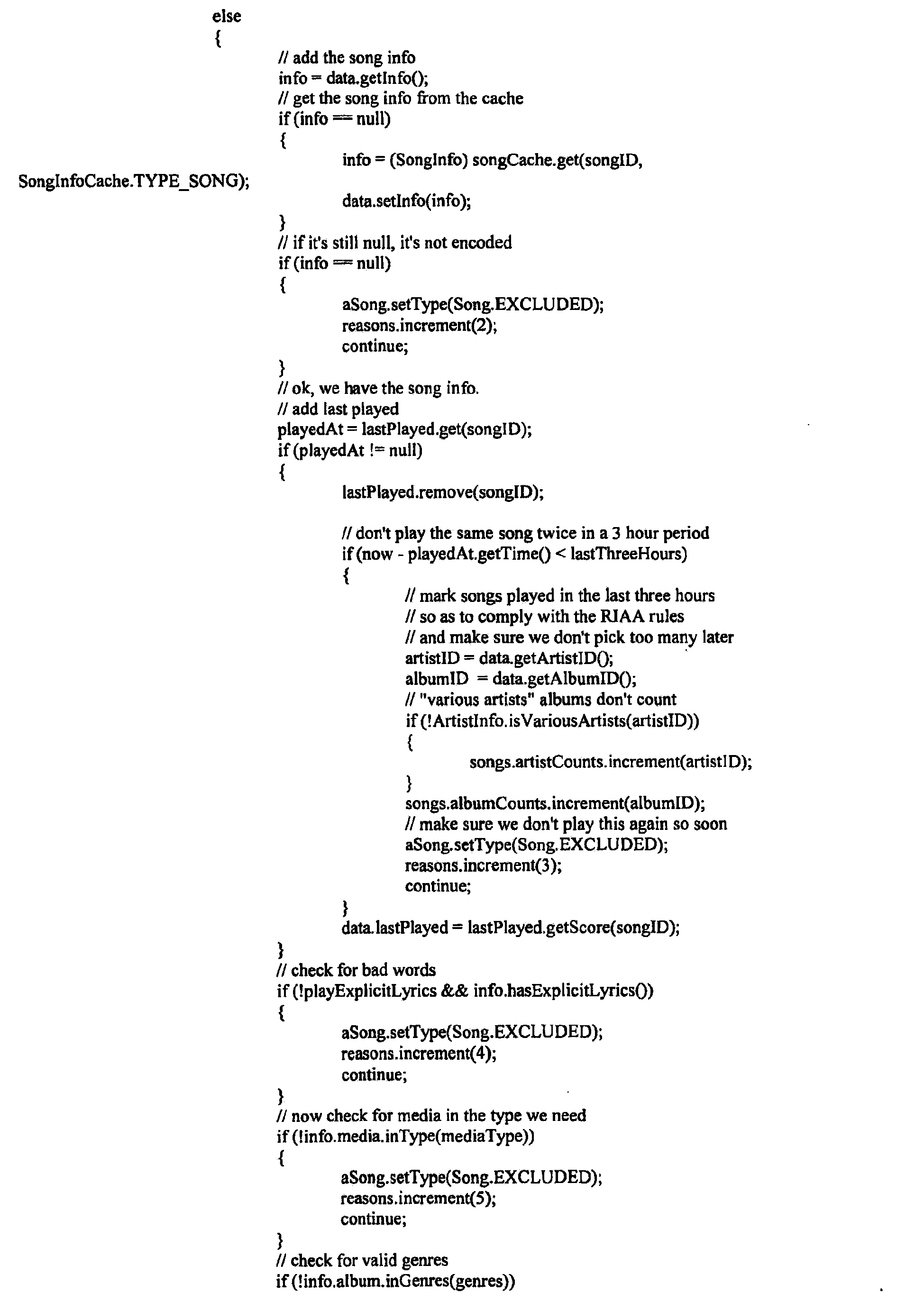

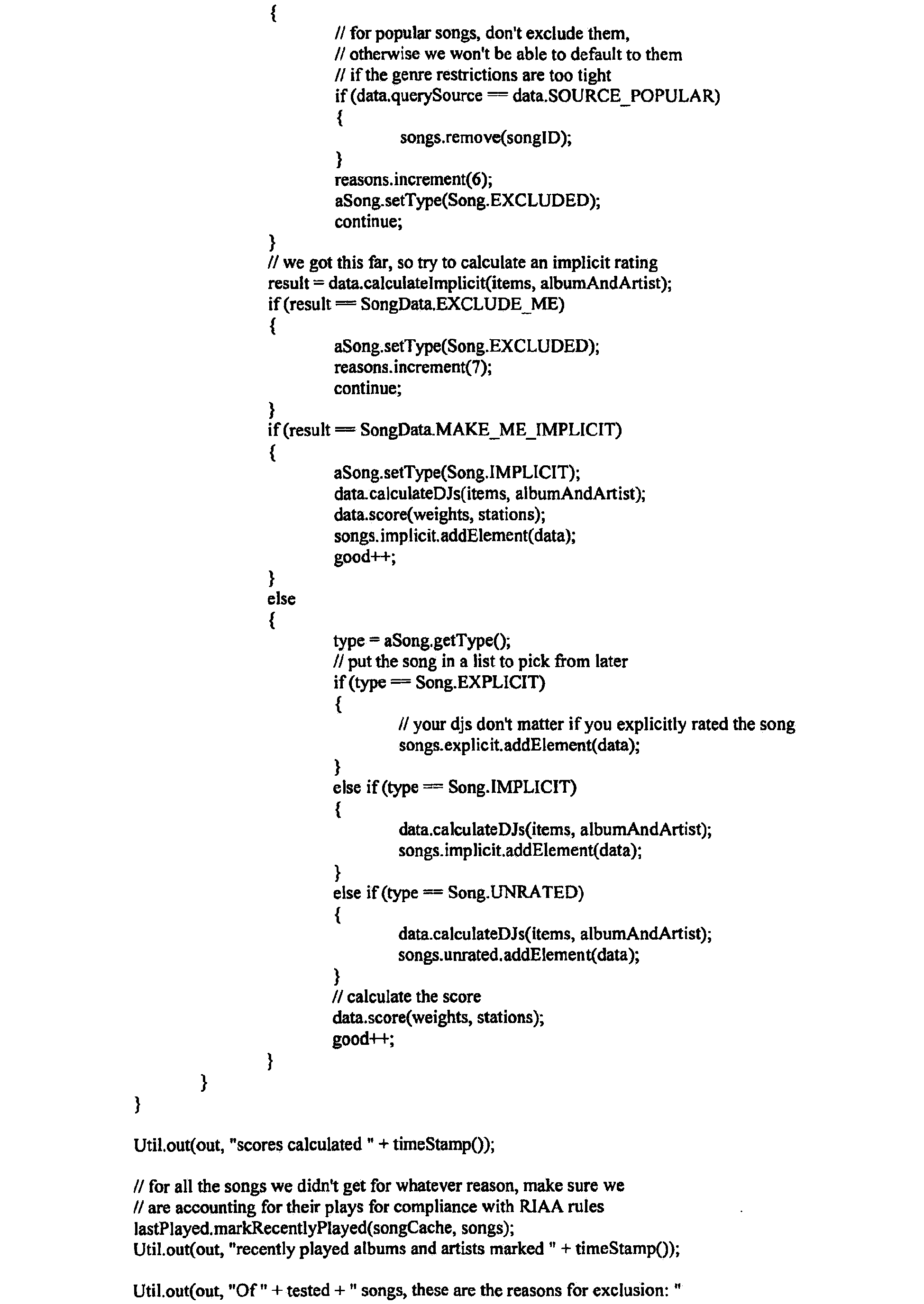

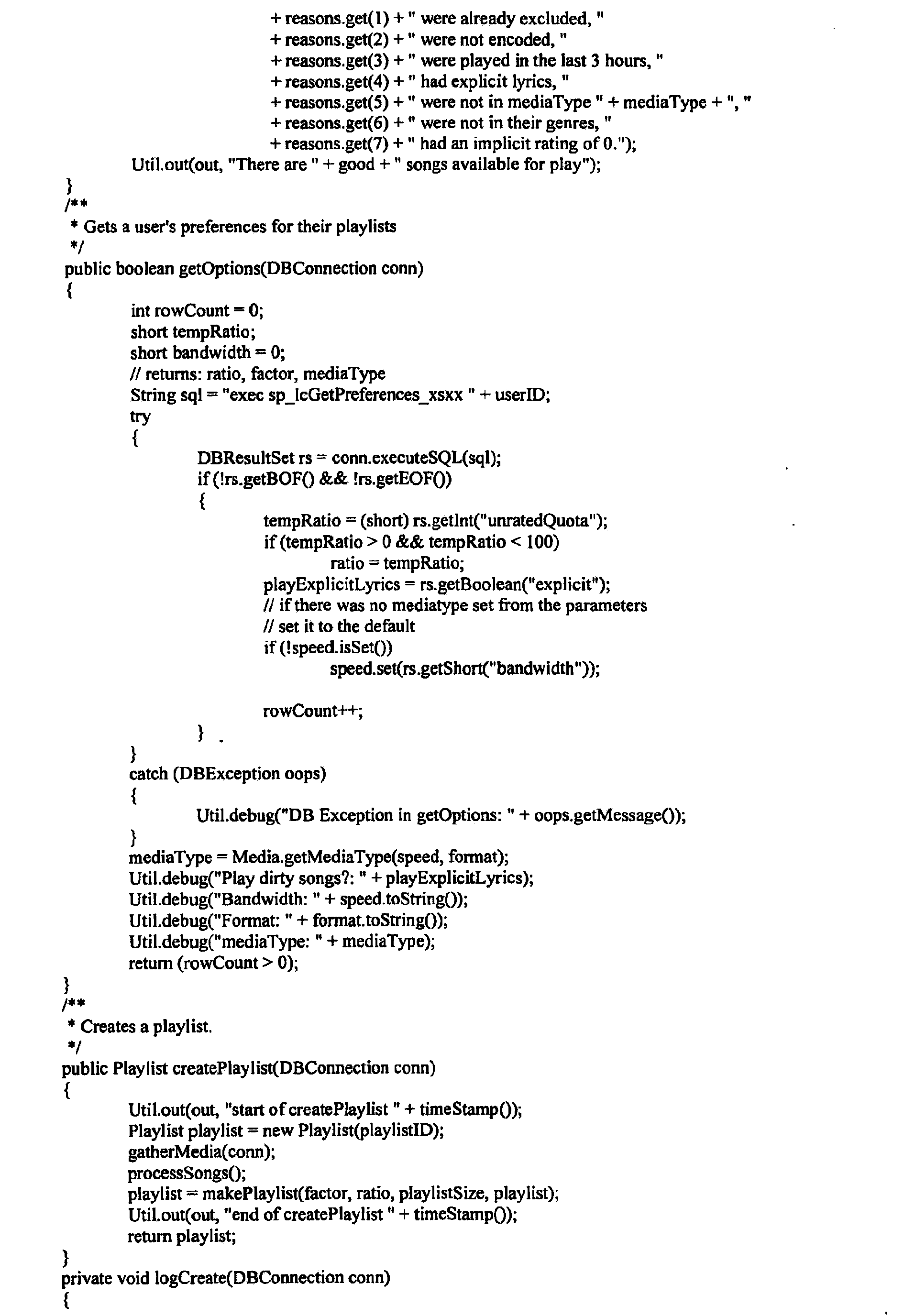

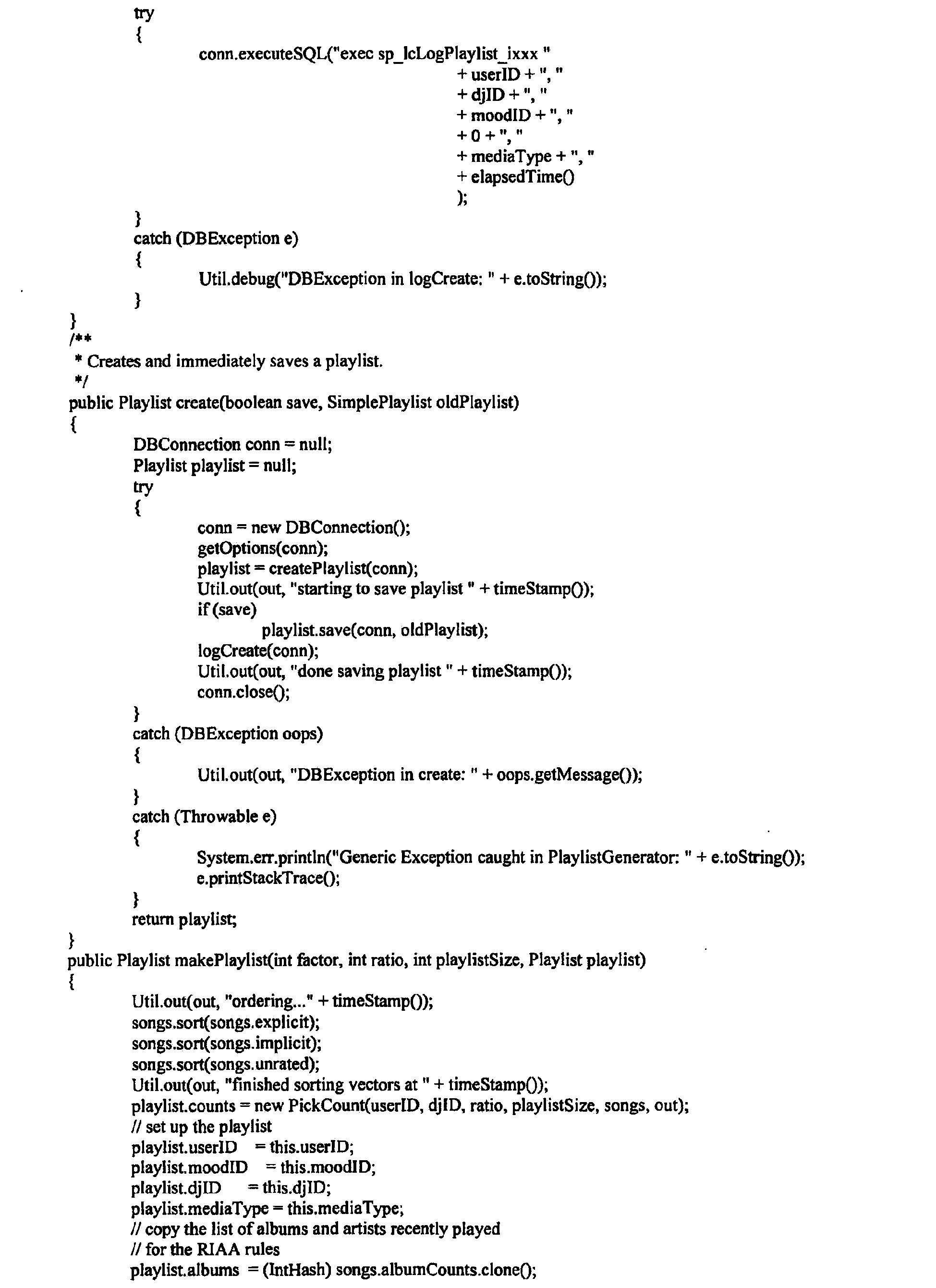

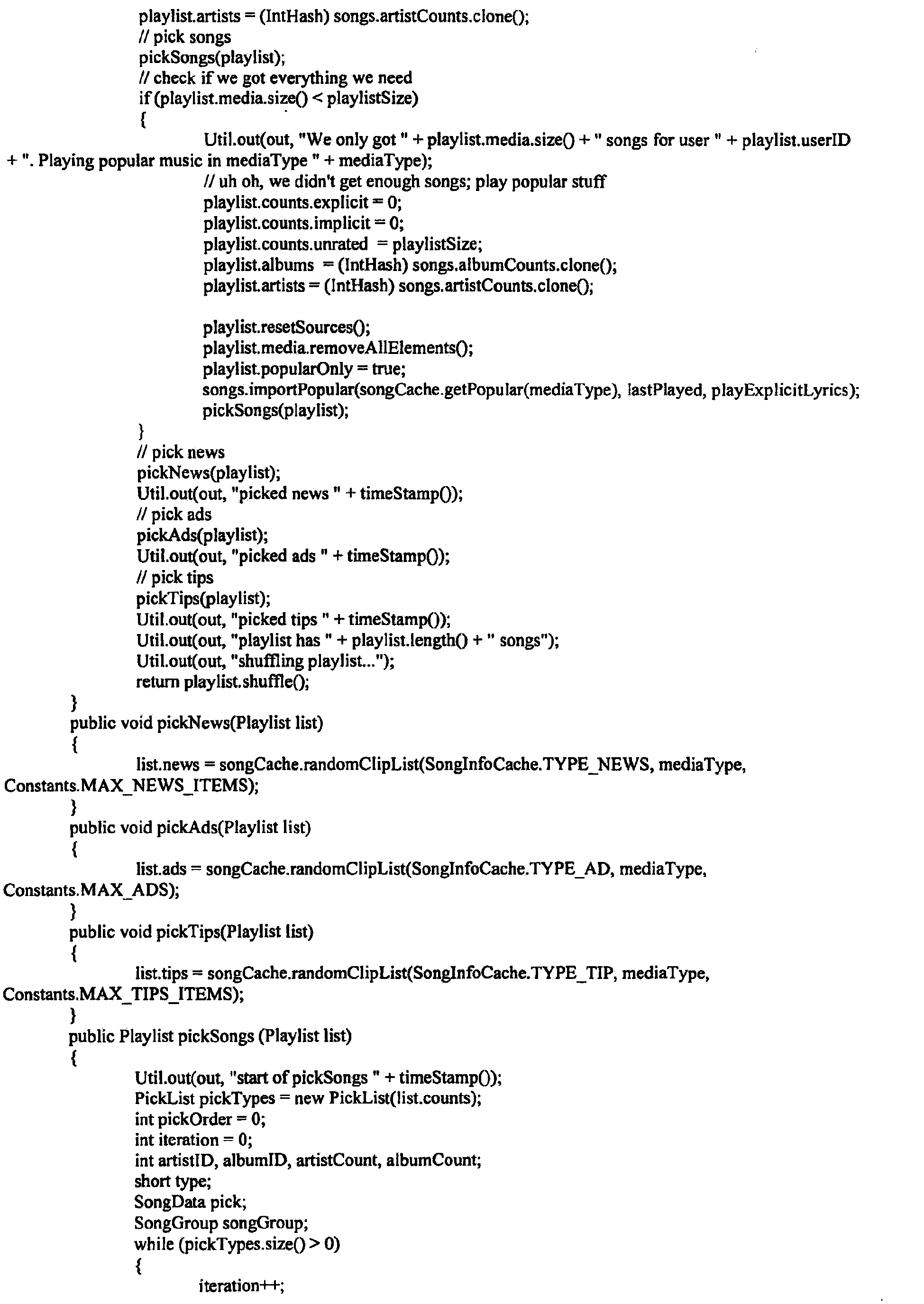

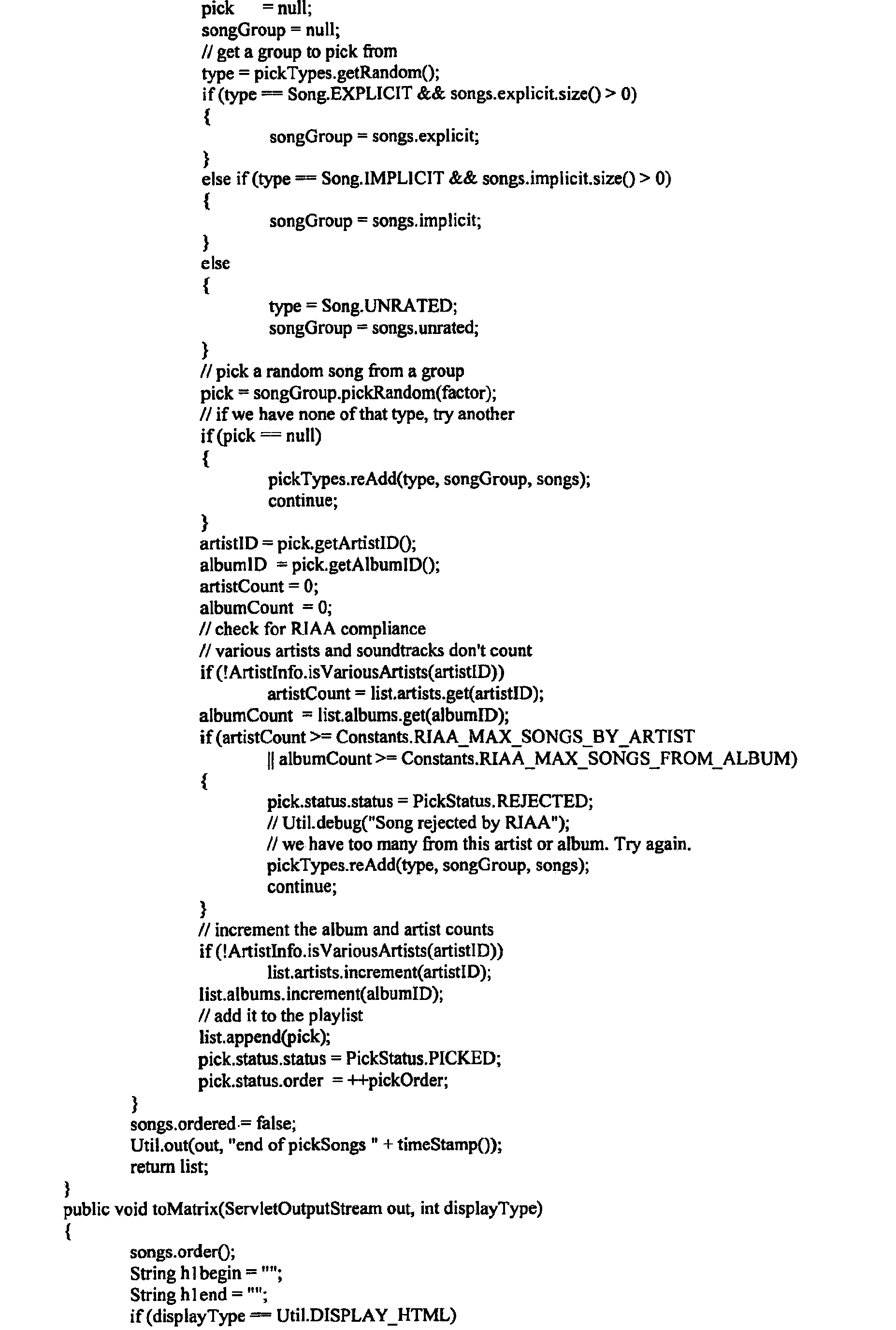

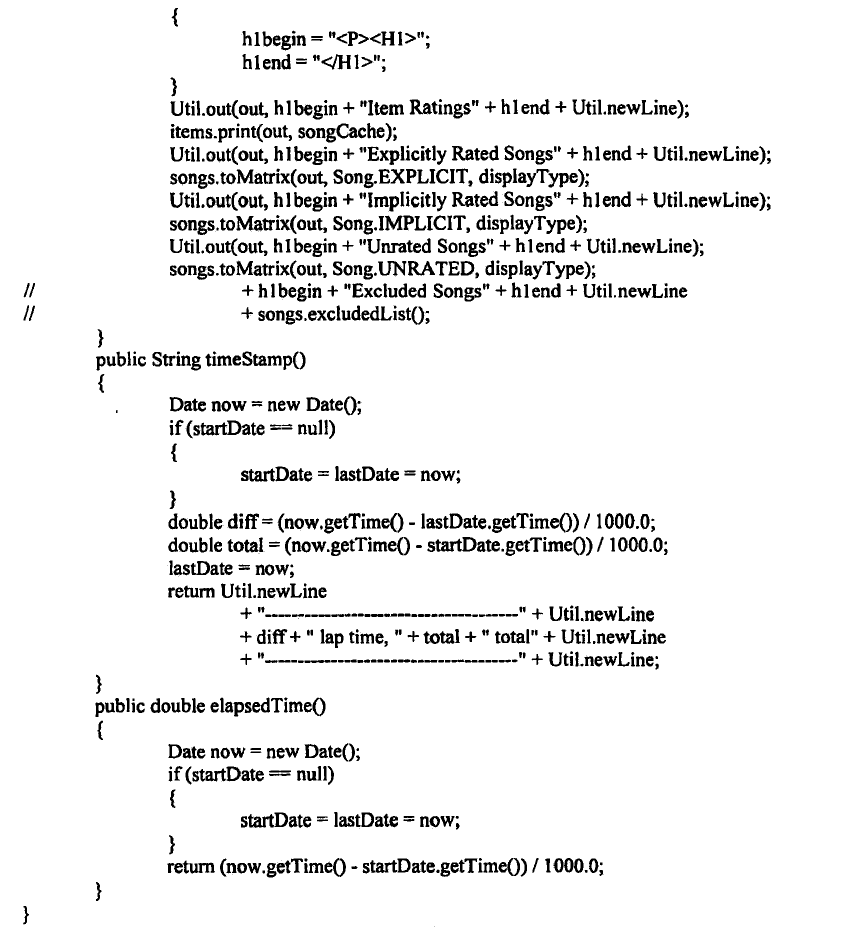

### PlaylistGeneratorServlet

```
 package com.launch.PlaylistGenerator;
 import java.io.*;
 import javax.servlet.http.HttpServlet;
 import javax.servlet.http.HttpServletRequest;
 import javax.servlet.http.HttpServletResponse;
 import javax.servlet.ServletConfig;
 import javax.servlet.ServletException;
 import javax.servlet.ServletOutputStream;
 import java.util.*;
 /**
 *---------------------------------------------------------
 *
 * PlaylistGeneratorServlet.java 6/30/99
 * Servlet that creates LAUNCHcast playlists
 * Copyright (c) 1999 Launch, Inc.
 * @author Jeff Boulter
 * -------------------------------------------------------------
 */
 public class PlaylistGeneratorServlet extends HttpServlet {
 SongInfoCache songCache;
 Thread cacheUpdater;
 public void generatePlaylist(HttpServletRequest request,
 HttpServletResponse response) throws 10Exception
 {
 // get stream for output
 ServletOutputStream out = response.getOutputStream();
 GeneratorParameters prop = new GeneratorParameters(request);
 if (prop.debug())
      response.setContentType("text/plain");
 else
      response.setContentType("video/x-ms-asf");
 PlaylistParameters params = new PlaylistParameters(prop);
 PlaylistStatus status = new PlaylistStatus(prop.userID());
 status.init(out);
 if (prop.debug())
      out.print(status.toStringQ);
 boolean generate = true;
 // no need to regenerate right now, use an old playlist
 if (prop.forceRefresh())
 {
      if (prop.debug()) out.printIn("generating because forceRefresh is on");
 }
 else if (status.isStale())
 {
      if (prop.debug()) out.println("generating because the playlist is stale");
 }
 else if (prop.speed().isSet() && (prop.speed().get() != status.speed.get()))
 {
      if (prop.debug()) out.println("generating because the mediaTypes are different");
 }
 else if (prop.format().isSet() && (prop.format().get() != status.format.get()))
 {
      if (prop.debug()) out.println("generating because the media formats are different");
 }
 else if (prop.moodID() != status.moodID)
 {
       if (prop.debug()) out.println("generating because the moods are different");
 }
 else if (prop.djID() != status.djID)
 {
       if (prop.debug()) out.println("generating because the djs are different");
 }
 else
       generate = false;
 if (!generate) // we can use an old playlist
 {
       // reset the ad, news, and tip dates
       if (status.playlist != null)
       {
               status.resetDates();
       }
       Playlist playlist = new Playlist();
       playlist.userID = status.userID;
       out.print(playlist.toASX());
 }
 else // we have to generate the playlist
 {
       ServletOutputStream outStream = null;
       if (prop.debug())
       {
              outStream = out;
              out.println("regenerating playlist with parameters: " + params.toString() +
 "<PRE>");
              out.flush();
       }
       PlaylistGenerator gen = new PlaylistGenerator(params, songCache, outStream);
       Playlist playlist = gen.create(!prop.dontsave(), null);
       if (prop.debug())
       {
              out.println("</PRE>");
              if (prop.debugFormat() = Util.DISPLAY_TEXT)
                      out.println("<PRE>");
              out.println(playlist.toString()
                                     + "<P>");
              if (prop.matrix()) + "<P>");
              {
 // out.println("<FONT SIZE=-1>");
                      gen.toMatrix(out, prop.debugFormat());
 // out.println("</FONT>");
              }
              if (prop.debugFormat() == Util.DISPLAY_TEXT)
                      out.println("</PRE>");
              out.println("<XMP>" + playlist.toASX() + "</XMP>");
       }
       else
               out.print(playlist.toASX());
 }
 out.close();
 }
 public void refreshPlaylist(HttpServletRequest request,
 HttpServletResponse response) throws IOException
 {
 // get stream for output
 ServletOutputStream out = response.getOutputStream();
 response.setContentType("text/plain");
 // this is the stuff coming in on the query string
 GeneratorParameters prop = new GeneratorParameters(request);
 PlaylistParameters params = new PlaylistParameters(prop);
 // this is what's in their current playlist
 PlaylistStatus status = new PlaylistStatus(prop.userID());
 status.init(out);
 if (prop.debug())
       out.print(status.toString());
 if (status.isStale())
 {
       ServletOutputStream outStream = null;
       params = new PlaylistParameters(status);
       if (prop.debug())
       {
               outStream = out;
               out.println("refreshing playlist with parameters: " + params.toString());
               out.flush();
       }
       PlaylistGenerator gen = new PlaylistGenerator(params, songCache, outStream);
       Playlist playlist = gen.create(!prop.dontsave(), status.playlist);
 }
 else
 {
       out.println("No need to refresh playlist now");
 }
 out.close();
 }
 public void doGet (
 HttpServletRequest request,
 HttpServletResponse response
 ) throws ServletException, IOException {
 try
 {
       //Util.debug("PlaylistGeneratorServlet recieved a Get");
       // prevent caching
       response.setHeader("Pragma", "no-cache");
       response.setHeader("Cache-control", "no-cache");
       response.setHeader("Expires", "0");
      // figure out what we need to do
      String actionStr = request.getParameter("action");
      if (actionStr == null)
              actionStr = new String("generate");
      if (actionStr.equals("refresh"))
       {
              refreshPlaylist(request, response);
      }
      else if (actionStr.equals("cachestatus"))
      {
              ServletOutputStream out = response.getOutputStream();
              response.setContentType("text/plain");
              songCache.ratingsCache.status(out, request.getParameter("detail") != null);
              out.close();
      }
      else //default action
      {
              generatePlaylist(request, response);
      }
 }
 catch (Throwable e)
 {
      System.err.println(new Date().toString() + " Caught an exception in doGet: " +
 e.toString());
      e.printStackTrace();
 }
 }
 public void doPost(HttpServletRequest req, HttpServletResponse resp) throws ServletException,
 IOException
 {
 Util.debug("PlaylistGeneratorServlet recieved a Post");
 try
 {
      String user_agent=req.getHeader("USER_AGENT");
      if (user_agent.equals(com.launch.misc.constants.PLAYLIST_SERVER))
      {
              // need to generate play list and return it
              GeneratorParameters prop = new GeneratorParameters(req);
              PlaylistParameters params = new PlaylistParameters(prop);
              PlaylistGenerator gen = new PlaylistGenerator(params, songCache, null);
              Playlist playlist = gen.create(true, null);
              Playlist2 playlist2 = playlist.toPlaylist2();
              ObjectOutputStream oos=new ObjectOutputStream(resp.getOutputStream());
              oos.writeObject(playlist2);
             oos.flush();
              oos.close();
      }
      else if (user_agent.equals(com.launch.misc.constants.RATING_WIDGET))
      {
             // need to update cache with new info
              int data_size=req.getContentLength();
              byte b[]=new byte[data_size];
             req.getInputStream()read(b,0,data_size);
             Vector v=(Vector)(new ObjectInputStream(new
 ByteArrayInputStream(b))).readObject();
             Util.debug("received a list of changed ratings " + v);
             // need to tell cache of these changes
              Enumeration e=v.elements();
              while (e.hasMoreElements())
              {
 songCache.ratingsCache.putIntoCache((CachedRating)e.nextEtement());
              }
      }
      else
      {
              System.err.println("PlaylistGeneratorServlet received a post from an unknown
 person : " + user_agent);
      }
 }
 catch (Throwable t)
 {
      t.printStackTrace();
 }
 }
 /**
 * Initialization method -
 *
 */
 public void init (ServletConfig config) throws ServletException
 {
 super.init(config);
 songCache = new SongInfoCache(null);
 // start the updater thread
 cacheUpdater = new SongInfoCacheUpdater(this);
 cacheUpdater.setPriority(Thread.MIN_PRIORITY);
 cacheUpdater.start();
 songCache.ratingsCache = new RatingsCache();
 }
 /**
 * Destroy method -
 * get rid of the api
 * servlets "should have" a destroy method for garbage collection
 */
 public void destroy()
 {
 cacheUpdater.stop();
 cacheUpdater = null;
 songCache = null;
 }
 }
```

### PlaylistMaker

```
package com.launch.PlaylistGenerator;
 import javax.servlet.ServletOutputStream;
 /**
 * this is the dumb class for ASP
 */
 public class PlaylistMaker
 {
 public PlaylistGenerator generator;
 public Playlist playlist;
 public PlaylistMaker()
 {
 generator = new PlaylistGenerator();
 }
 public void init(int userID, int djID, short mediaType, int moodID, int playlistID)
 {
 // generator.init(userID, djID, moodID);
 }
 public int make()
 {
 playlist = generator.create(false, null);
 return playlist.ID;
 }
 public int makeAndSave()
 {
 playlist = generator.create(true, null);
 return playlist.ID;
 }
 public void toMatrix(ServletOutputStream out, int displayType)
 {
 generator.toMatrix(out, displayType);
 }
 public String toASX()
 {
 return playlist.toASX();
 }
 }
```

### PlaylistParameters

```
 package com.launch.PlaylistGenerator;
 public class PlaylistParameters
 {
 int userID;
 int djID;
 int playlistSize = Constants.DEFAULT_PLAYLIST_SIZE;
 int moodID;
 Bandwidth speed = new Bandwidth();
 MediaFormat format = new MediaFormat();
 public PlaylistParameters(int userID)
 {
 this.userID = djID = userID;
 }
 public PlaylistParameters(int userID, Bandwidth speed, int moodlD)
 {
 this(userID);
 if (speed != null)
 {
        this.speed = speed;
 }
 this.moodID = moodID;
 }
 public PlaylistParameters(int userID, Bandwidth speed, int moodID, int djID)
 {
 this(userID, speed, moodID);
 if (djID > 0)
       this.djID = djID;
 }
 public PlaylistParameters(PlaylistStatus status)
 {
 this(status.userID, status.speed, status.moodID, status.djID);
 }
 public PlaylistParameters(GeneratorParameters prop)
 {
 this(prop.userID(), prop.speed(), prop.moodID(), prop.djID());
 }
 public String toString()
 { return "userID=" + userID + ", "
 return "userID=" + userID + ", "
       + "bandwidth=" + speed.toString() + ", "
       + "moodID=" + moodID + ", "
       + "djID=" + djID;
 }
 }
```

### PlaylistStatus

```
 package com.launch.PlaylistGenerator;
 import java.util.Date;
 import javax.servlet.ServletOutputStream;
 public class PlaylistStatus
 {
 int userID, newRatingsCount, moodID, djID, songsRemaining;
 short mediaType;
 Date lastPlaylist = new Date();
 MediaFormat format;
 Bandwidth speed;
 Date dbDate = new Date();
 public SimplePlaylist playlist;
 public PlaylistStatus(int userID)
 {
 format = new MediaFormat(MediaFormat.WINDOWSMEDIA);
 this.userID = userID;
 }
 public String toString()
 { return "Playlist status for userID " + userID + ":" + Util.newLine
 return "Playlist status for userID " + userID + ":" + Util.newLine
        + " newRatingsCount: " + newRatingsCount + Util.newLine
       + " moodID: " + moodID + Util.newLine
        + " djID: " + djID + Util.newLine
       + " songsRemaining: " + songsRemaining + Util.newLine
        + " mediaType: " + mediaType + Util.newLine;
 }
 public void init(ServletOutputStream out)
 {
 try
 {
      DBConnection conn = new DBConnection();
      DBResultSet rs = conn.executeSQL("exec sp_lcGetPlaylistInfoForUser_xsxx " +
 userID);
      while (!rs.getBOF() && !rs.getEOF())
      {
             newRatingsCount = rs.getInt("newRatingsCount");
             lastPlaylist = rs.getTimestamp("lastPlaylist");
             dbDate = rs.getTimestamp("dbDate");
             playlist = SimplePlaylist.fromBytes(rs.getBytes("playlist"));
             rs.next();
      }
      if (playlist != null)
      {
             songsRemaining = playlist.songs.size();
             moodID =playlist.moodID;
             djID = playlist.djID;
             mediaType = playlist.mediaType;
             speed = Media.typeToBandwidth(mediaType);
      }
      conn.close();
 }
 catch (DBException oops)
 {
      Util.out(out, "DBException in PlaylistStatus.init: " + oops.toString());
 }
 }
 public void resetDates()
 {
 if (playlist = null)
      return;
 Util.debug(new Date().toString() + " Playlist OK, just resetting dates for userID " + userID);
 playlist.resetDates(dbDate);
 playlist.save(userID);
 }
 public boolean isStale()
 {
 double one Week = Util.MILLlSECONDS_IN_SECOND *
                             Util.SECONDS_IN_MINUTE *
                             Util.MINUTES_IN_HOUR *
                             Util.HOURS_IN_DAY *
                             Util.DAYS_IN_WEEK;
 if (songsRemaining <= Constants.REFRESH_AT_SONGS_LEFT)
      return true;
 // if you're listening to someone else's station, your new ratings
 // won't make a difference
 if (newRatingsCount >= Constants.REFRESH_AT_NEW_RATINGS_COUNT && userID ==
 djID)
      return true;
 if (new Date().getTime() - lastPlaylist.getTime() > oneWeek)
      return true;
 return false;
 }
 /*
 public void flushPlaylist(ServletOutputStream out)
 {
 try
 {
      DBConnection conn = new DBConnection();
      DBResultSet rs = conn.executeSQL("exec sp_lcFlushPlaylist_xxud" + userID);
      conn.close();
 }
 catch (DBException oops)
 { Util.out(out, "DBException in Playliststatus::flushPlaylist: " + oops.tostring());
      Util.out(out, "DBException in PlaylistStatus::flushPlaylist: " + oops.toString());
 }
 }
 public void deletePlaylist(ServletOutputStream out)
 {
 try
 {
      DBConnection conn = new DBConnection();
      DBResultSet rs = conn.executeSQL("exec sp_lcDeletePlaylist_xxud " + userID);
      conn.close();
 }
 catch (DBException oops)
 {
      Util.out(out, "DBException in PlaylistStatus::deletePlaylist: "+ oops.toString());
 }
 }
 public void resetClipSchedule()
 {
 try
 {
      DBConnection conn = new DBConnection();
      DBResultSet rs = comm.executeSQL("exec sp_lcResetClipschedule_xxux " + userID);
      conn.close();
 }
 catch (DBException oops)
 {
      Util.debug("DBException in PlaylistStatus::resetDates: " + oops.toString());
 }
 }
 */
 }
```

### PopularSongs

```
 package com.launch.PlaylistGenerator;
 import java.util.Vector;
 import java.util.Hashtable;
 import java.util.Enumeration;
 public class PopularSongs
 {
 private Hashtable byMedia;
 public SongList get(short mediaType)
 {
 return (SongList) byMedia.get(new Short(mediaType));
 }
 public PopularSongs(Hashtable songs, Hashtable mediaTypes)
 {
 byMedia = new Hashtable(1);
 // make a list of all songs and sort them
 SongList all = new SongList(songs);
 all.sort();
 // create each of the song lists
 for (Enumeration e = mediaTypes.keys(); e.hasMoreElements();)
 {
       Short mediaType = new Short(((Integer) e.nextElement()).shortValue());
       byMedia.put(mediaType, new SongList();
 }
 SongInfo info;
 Media track;
 SongList list;
 // put each into a separate list for each mediaType
 for (int i = 0; i < all.size(); i++)
 {
       info = all.elementAt(i);
      for (int j = 0; j < info.media.size(); j++)
       {
              track = info.media.typeAt(j);
              list = ((SongList) byMedia.get(new Short(track:mediaType)));
              list.addElement(info);
      }
 }
 // truncate each list to the top 1000 most popular songs
 for (Enumeration e = mediaTypes.keys(); e.hasMoreElements();)
 {
       Short mediaType = new Short(((Integer) e.nextElement()).shortValue());
       list = (SongList) byMedia.get(mediaType);
       list.setSize(1000);
 }
 }
 }
```

### Population

```
 package com.launch.PlaylistGenerator;
 import java.util.Enumeration;
 import java.util.Date;
 import java.text.SimpleDateFormat;
 import java.util. Vector;
 import java.util.Hashtable;
 import javax.sorvlet.ServletOutputStream;
 import java.text.DateFormat;
 public class Population
 {
 /*
 private int readers = 0;
 private int writers Waiting = 0;
 private boolean writing = false;
 */
 private boolean haveTitles = false;
 public boolean ordered = false;
 public SongGroup explicit;
 public SongGroup implicit;
 public SongGroup unrated;
 private Hashtable hash;
 public IntHash artistCounts;
 public IntHash albumCounts;
 public Population()
 {
 explicit = new SongGroup();
 implicit = new SongGroup();
 unrated = new SongGroup();
 artistCounts = new IntHash();
 albumCounts = new IntHash();
 hash = new Hashtable();
 }
 /*
 public synchronized void addReader()
 {
 ++readers;
 }
 public synchronized void removeReader()
 {
 --readers;
 if (readers == 0)
 {
      notifyAll();
 }
 }
 public synchronized void requestWrite()
 {
 ++writers Waiting;
 }
 public synchronized void finishWrite()
 {
 --writersWaiting;
 if (writersWaiting = 0)
 {
       notifyAll();
 }
 }
 */
 // returns this song if it's valid for adding data, null otherwise
 public synchronized Song initSong(int songID, short type)
 {
 if (type <= 0)
       return null;
 boolean result = true;
 /*
 request Write();
 while (readers > 0)
 {
       try { wait(); }
       catch (InterruptedException e) {}
 }
 writing = true;
 */
 Song song = get(songID);
 if (song == null)
 {
       song = new Song(songID, type);
       put(songID, song);
       // if it's excluded, it's not valid for modifying
       if (type = Song.EXCLUDED)
              result = false;
 }
 else
 {
       result = song.setType(type);
 }
 if (result)
       return song;
 // writing = false;
 // finishWrite();
 return null;
 }
 public synchronized SongData initSongGetData(int songID, short type)
 {
 Song aSong = initSong(songID, type);
 if (aSong == null)
       return null;
 return aSong.getData();
 }
 public synchronized SongData getSongData(int songID)
 {
 return getSongData(new Integer(songID));
 }
 public synchronized SongData getSongData(Integer songID)
 {
 Song s = get(songID);
 if (s == null)
      return null;
 return s.getData();
 }
 public synchronized SongData getSongData(int songID, short type)
 {
 SongData result = null;
 /*
 synchronized (this)
 {
      while (writersWaiting > 0)
      {
              try { wait(); }
              catch (InterruptedException e) { }
      }
      addReader();
 }
 */
 Song song = get(songID);
 // there's no song for that ID; Did you call initSong?
 if (song != null && type >= song.getType())
      result = song.getData();
 // removeReader();
 return result;
 }
 public synchronized Song get(int songID)
 {
 return get(new Integer(songID));
 }
 public synchronized Song get(Integer songID)
 {
 return (Song) hash.get(songID);
 }
 public synchronized Song remove(int songID)
 {
 return remove(new Integer(songID));
 }
 public synchronized Song remove(Integer songID)
 {
 return (Song) hash.remove(songID);
 }
 private synchronized Song put(int songID, Song song)
 {
 return (Song) hash.put(new Integer(songID), song);
 }
 private int available()
 {
 int i = 0;
 for (Enumeration e = hash.keys(); e.hasMoreElements() ;) {
      Song song = get((Integer) e.nextElement());
      if (song.type != Song.EXCLUDED)
      {
              i++;
      }
 }
 return i;
 }
 public Enumeration keys()
 {
 return hash.keys();
 }
 public void order()
 {
 createVectors();
 sortVectors();
 }
 public int excludedCount()
 {
 int result = 0;
 for (Enumeration e = hash.keys(); e.hasMoreEtements() ;) {
      Song song= get(((Integer) e.nextElement()).intValue());
      if (song.type = Song.EXCLUDED)
      {
             result++;
 }
 }
 return result,
 }
 public boolean isEligible(int songID, int artistID, int albumID)
 {
 Song song = get(songID);
 if (song != null && song.type = Song.EXCLUDED)
      return false;
 if ((artistCounts.get(artistID) < Constants.RIAA_MAX_SONGS_BY_ARTIST)
      && (albumCounts.get(albumID) < Constants.RIAA_MAX_SONGS_FROM_ALBUM))
      return true;
 return false;
 }
 public void createVectors()
 {
 explicit.removeAllElements();
 implicit.removeAllElements();
 unrated.removeAllElements();
 for (Enumeration e = hash.keys(); e.hasMoreElements();) {
 // Util.debug("interation " + i);
       Song mySong = get((Integer) e.nextElement());
      if (mySong != null)
      {
              SongData data = mySong.getData();
              if (mySong.type == Song.EXPLICIT)
                     explicit.addElement(data);
              else if (mySong.type == Song.IMPLICIT)
                     implicit.addElement(data);
              else if (mySong.type!= Song.EXCLUDED)
                     unrated.addElement(data);
      }
 }
 }
 public void importPopular(SongList abunch, PlayDates lastPlayed, boolean playBadWords)
 {
 SongInfo info;
 SongData data;
 Song ditty;
 int added = 0;
 unrated.setSize(0);
 long now = new Date().getTime();
 long lastThreeHours = Util.MILLSECONDS_IN_SECONO *
                                     Util.SECONDS_IN_MINUTE *
                                     Util.MINUTES_IN_HOUR *
                                     3;
 long playedTime = 0;
 Date playedAt;
 for (int i = 0; i < abunch.size(); i++)
 {
      info = abunch.elementAt(i);
      playedAt = lastPlayed.get(info.songID);
      // don't play songs twice within 3 hours
      if (playedAt == null || (now - playedAt.getTime()) > lastThreeHours)
      {
              if(playBadWords || !info.hasExplicitLyrics())
              {
                     data = initSongGetData(info.songID, Song.UNRATED);
                     if (data != null)
                      {
                             data.setInfo(info);
                             unrated.addElement(data);
                             added++;
                      }
              }
       }
 }
 Util.debug("import popular added " + added + " songs");
 }
 public void sortVectors()
 {
 sort(explicit, 0, explicit.size() - 1);
 sort(implicit, 0, implicit.size() - 1);
 sort(unrated, 0, unrated.size() - 1);
 // Util.debug("after sorting, ratedVector is: " + ratedVector.toString());
 // Util.debug("after sorting, unratedVector is: " + unratedVector.toString());
 ordered = true;
 }
 public void sort(Vector a)
 {
 sort(a, 0, a.size() - 1);
 }
 private void sort(Vector a, int from, int to)
 {
 // quicksort
 // If there is nothing to sort, return
 if ((a = null) || (a.size() < 2)) return;
 int i = from, j = to;
 SongData center = (SongData) a.elementAt((from + to) /2);
 do {
      while((i < to) && (center.score < ((SongData) a.elementAt(i)).score)) i++;
      while((j > from) && (center.score > ((SongData) a.elementAt(j)).score))j--;
       if (i < j) {
              SongData temp = (SongData) a.elementAt(i);
              a.setElementAt(a.elementAt(j), i);
              a.setElementAt(temp, j); // swap elements
       }
       if (i <= j) { i++; j-; }
 } while(i <= j);
 if (from < j) sort(a, from, j); // recursively sort the rest
 if (i < to) sort(a, i, to);
 }
 public String toString()
 {
 String result ="";
 for (Enumeration e = hash.keys(); e.hasMoreElements() ;) {
       int songID = ((Integer) e.nextElement()).intValue();
       Song song = get(songID);
       result = result.concat("songID " + songID
                                              + " = " + song.toString()
                                              + Util.newLine);
 }
 return result;
 }
 public String sourceCount()
 {
 IntHash counts = new IntHash();
 String explicitList = "";
 for (Enumeration e = hash.keys(); e.hasMoreElements() ;) {
       Song song = get(((Integer) e.nextElement()).intValue());
       if (song.getType() = Song.EXPLICIT)
       {
              explicitList = explicitList.concat(song.songID + ", ");
       }
       counts.increment(song.type);
 }
 return "counts: EXPLICIT = " + counts.get(Song.EXPLICIT)
              + " (" + explicitList + ") "
              + " IMPLICIT = " + counts.get(Song.IMPLICIT)
              + EXCLUDED = " + counts.get(Song.EXCLUDED);
 }
 public void toMatrix(ServletOutputStream out, int songType, int displayType)
 {
 String delim = "";
 String prefix = "";
 String suffix = "";
 String rowPrefix = "";
 String rowSuffix = "";
 String bold = "";
 String unbold = "";
 if (displayType == Util.DISPLAY_HTML)
 {
      delim = "</TD><TD>";
      prefix = "<TABLE CELLPADDING=1 CELLSPACING=0>";
      suffix ="</TABLE>";
      rowPrefix = "<TR><TD>";
      rowSuffix = "</TD></TR>";
      bold = "<B><FONT SIZE=\"-1\">";
      unbold = "</FONT></B>";
 }
 else
 {
        delim = "\t";
 }
 Util.out(out, prefix);
 String header = Util.newLine + rowPrefix + bold
                              + Util.join(unbold + delim + bold, SongData.namesArray())
                              + unbold + rowSuffix;
 Vector v = null;
 if (songType = Song.EXPLICIT)
        v = explicit;
 else if (songType == Song.IMPLICIT)
        v = implicit;
 else
       v = unrated;
 if (v != null)
 {
       for (int i = 0; i < v.size(); i++) {
               SongData data = (SongData) v.elementAt(i);
               if (i % 40 == 0)
                       Util.out(out, header);
               Util.out(out, data.toDisplaystring(displayType, (i + 1)));
       }
 }
 Util.out(out, suffix);
 }
 }
```

### Rating

```
 package com.launch.PlaylistGenerator;
 public class Rating
 {
 protected short rating;
 protected boolean set = false;
 public Rating()
 {
 }
 /**
 * create one with a default
 */
 public Rating(short defaultRating)
 {
 rating = defaultRating;
 }
 public boolean isSet()
 {
 return set;
 }
 public void set(short newRating)
 {
 rating = newRating;
 set = true;
 }
 public short get()
 {
 return rating;
 }
 public String toString()
 {
 if (!set)
       return rating + "(Not Set)";
 else
       return "" + rating;
 }
 }
```

### RatingsCache

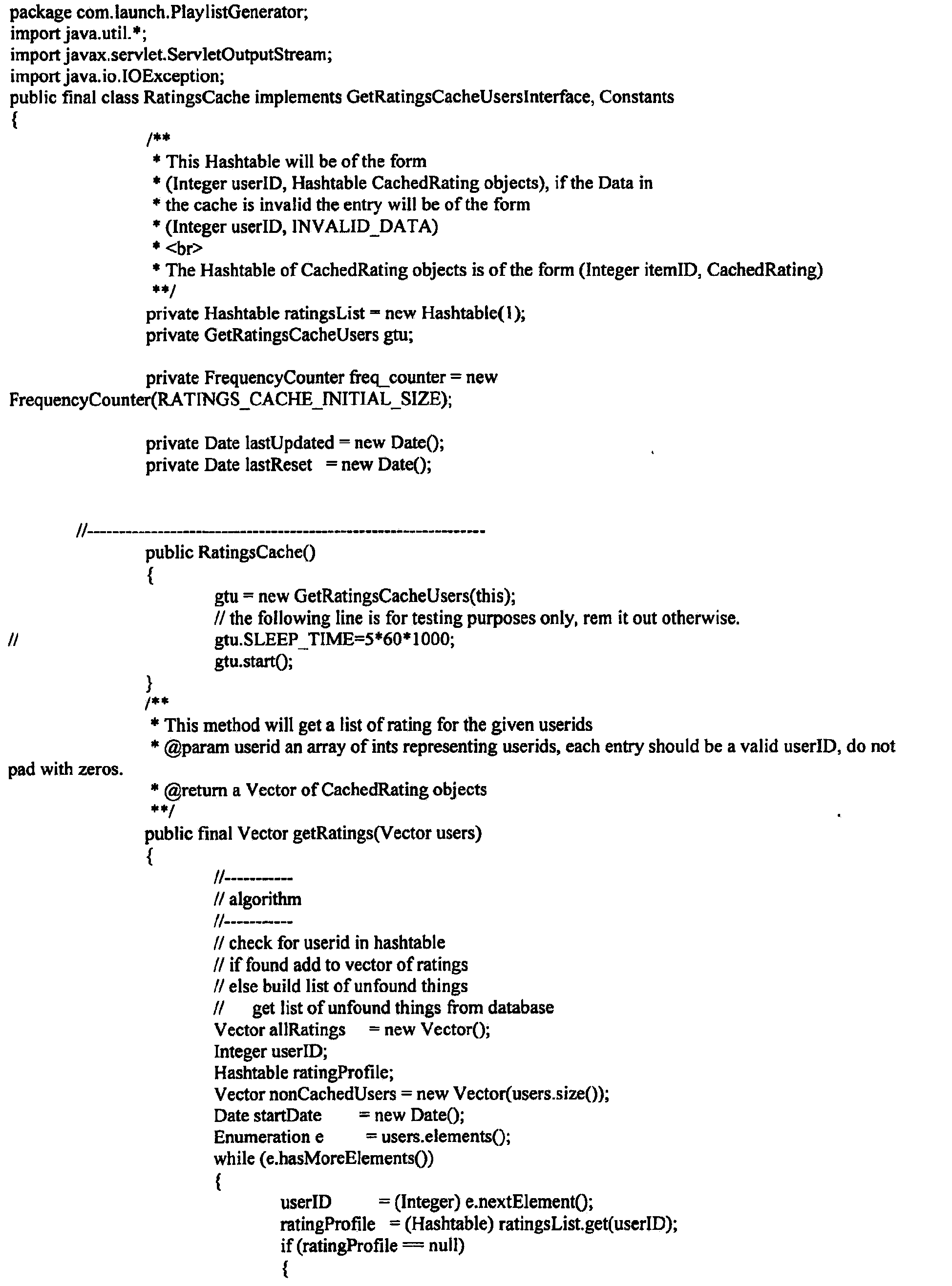

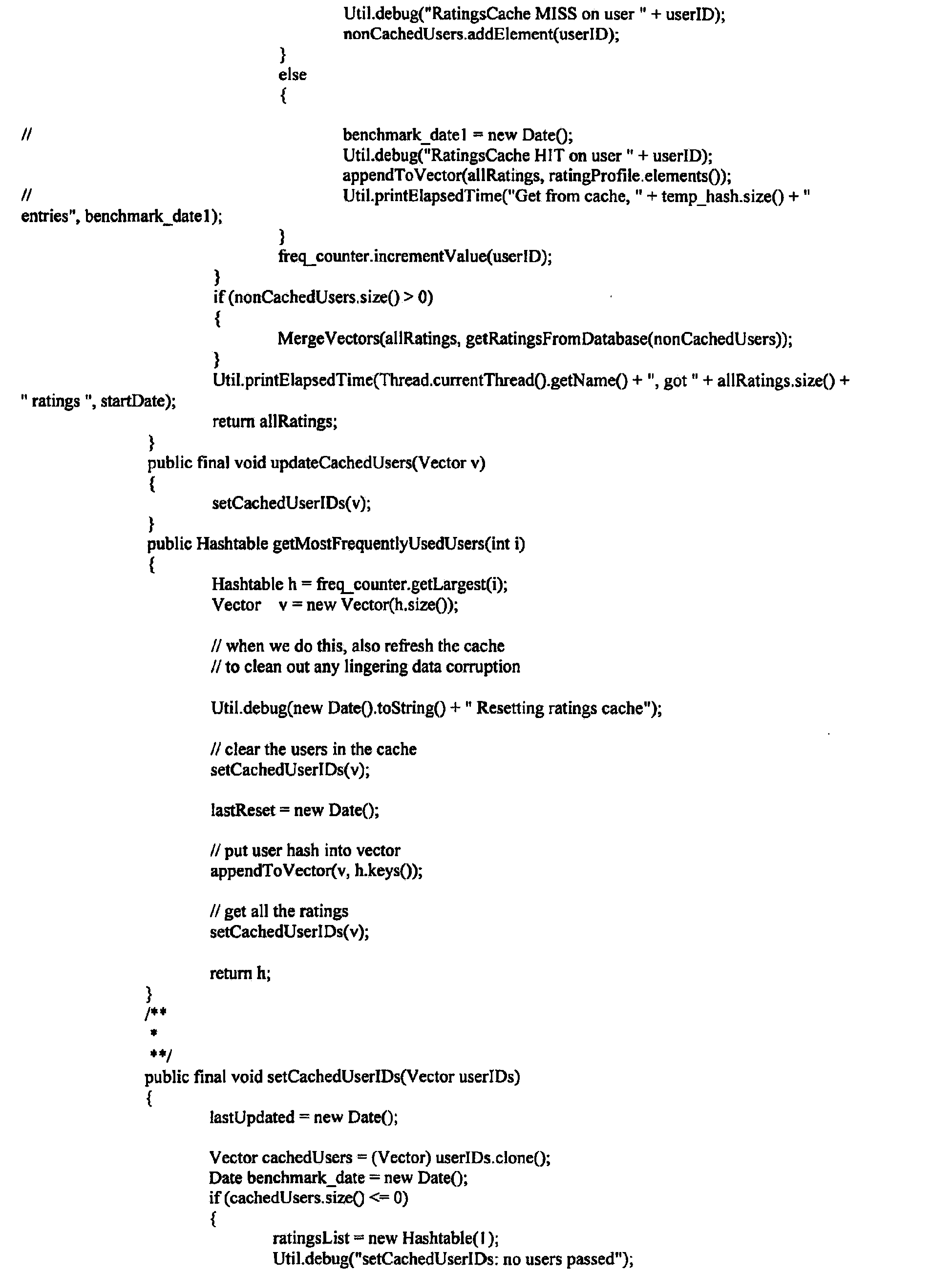

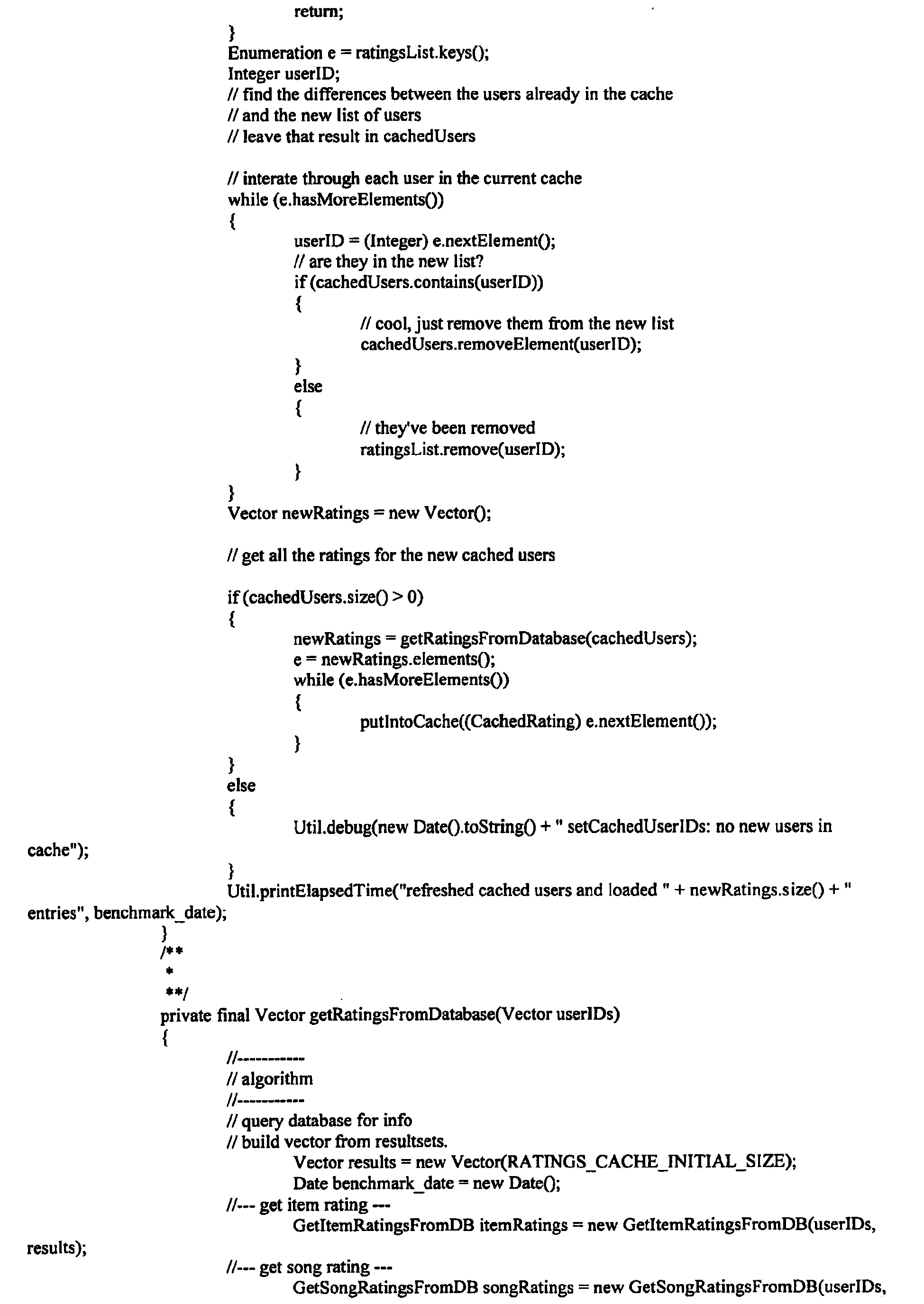

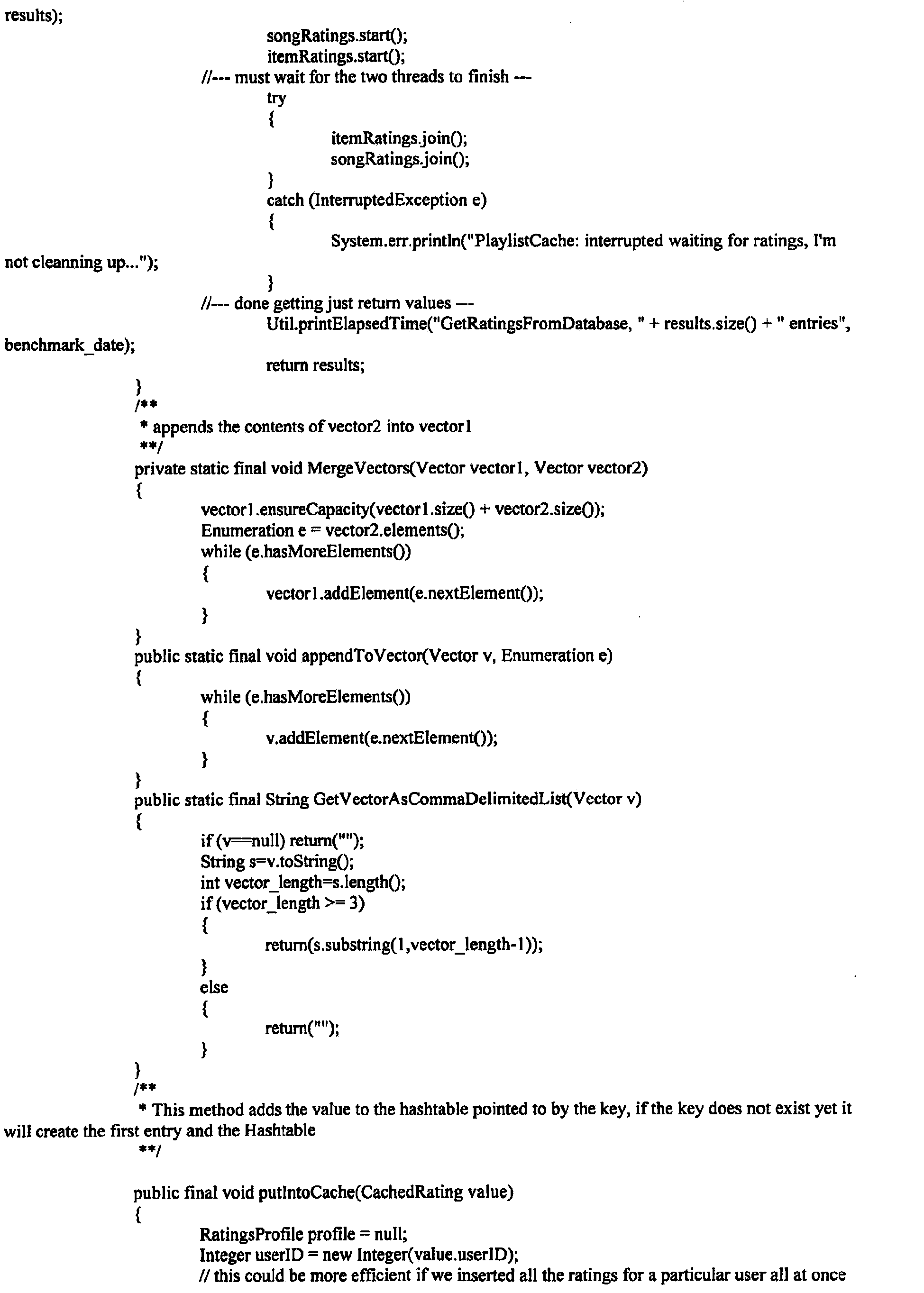

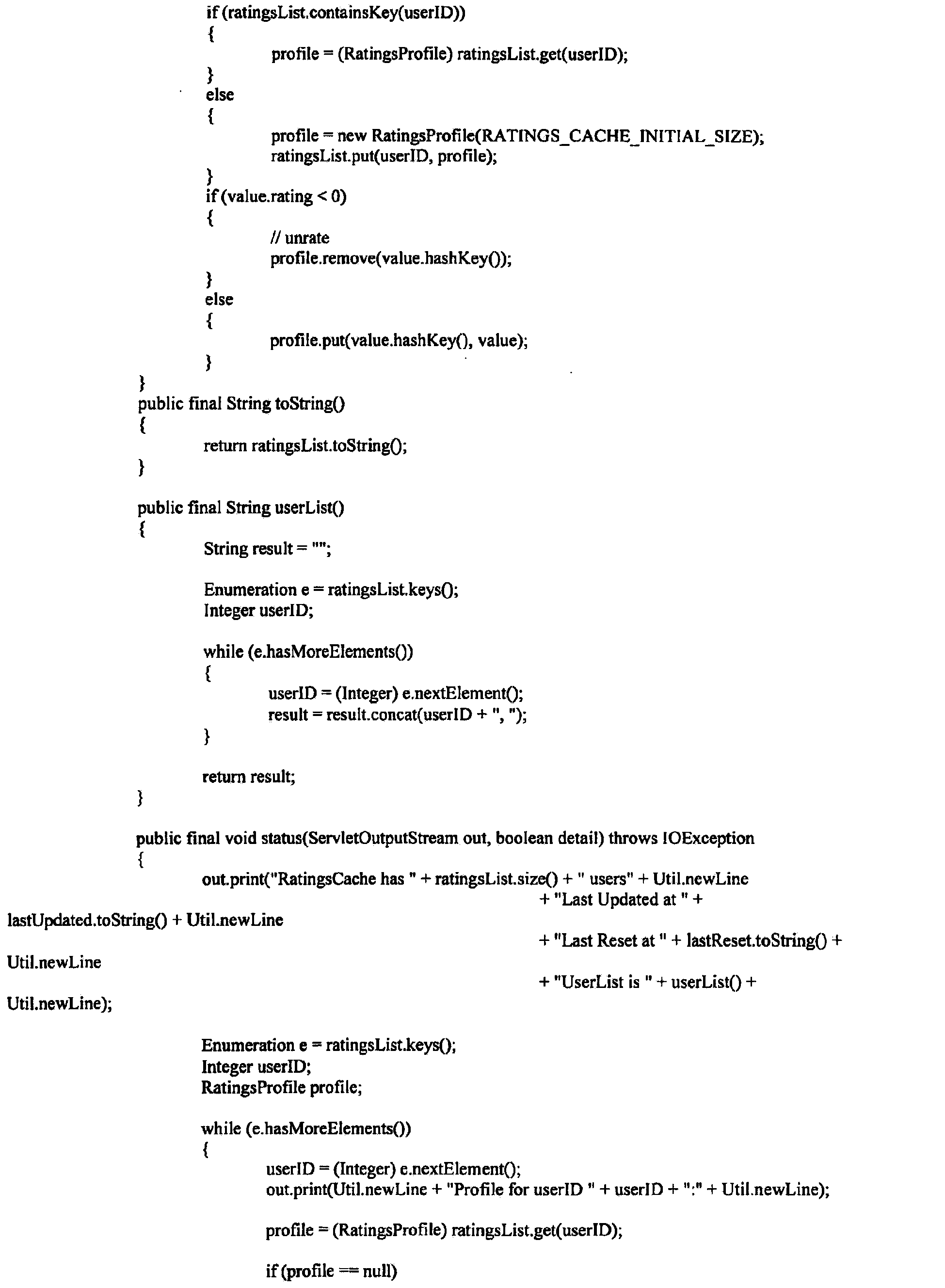

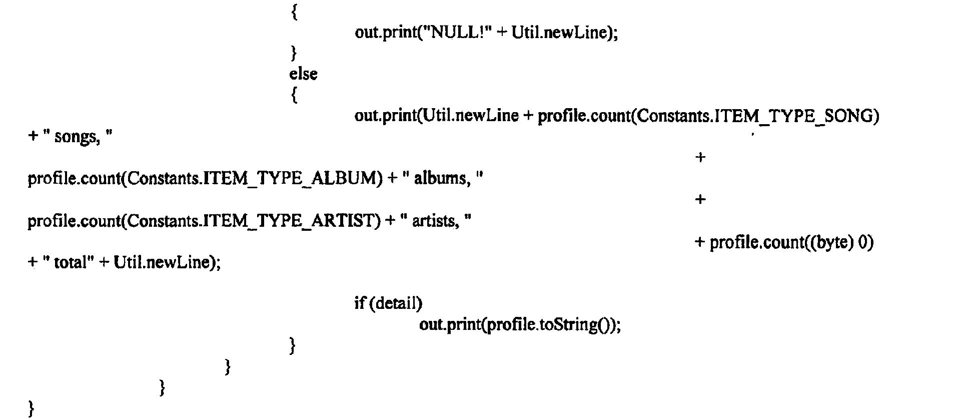

### RatingsProfile

```
 package com.launch.PlaylistGenerator;
 import java.util.Hashtable;
 import java.util.Enumeration;
 public class RatingsProfile extends Hashtable
 {
 public RatingsProfile(int capacity)
 {
 super(capacity);
 }
 public int count(byte type)
 {
 int count = 0;
 if (type <= 0)
       return size();
 else
 {
       Enumeration e = keys();
       String key;
       CachedRating rating;
       while (e.hasMoreElements())
        {
               key = (String) e.nextElement();
               rating = get(key);
               if (rating.type = type)
                      count++;
       }
 }
 return count;
 }
 public CachedRating get(String key)
 {
 return (CachedRating) super.get(key);
 }
 public String toString()
 {
 String result = "";
 Enumeration e = keys();
 while (e.hasMoreElements())
 {
       result = result.concat((get((String) e.nextElement())).toString());
 }
 return result;
 }
 }
```

### RatingWidgetServlet

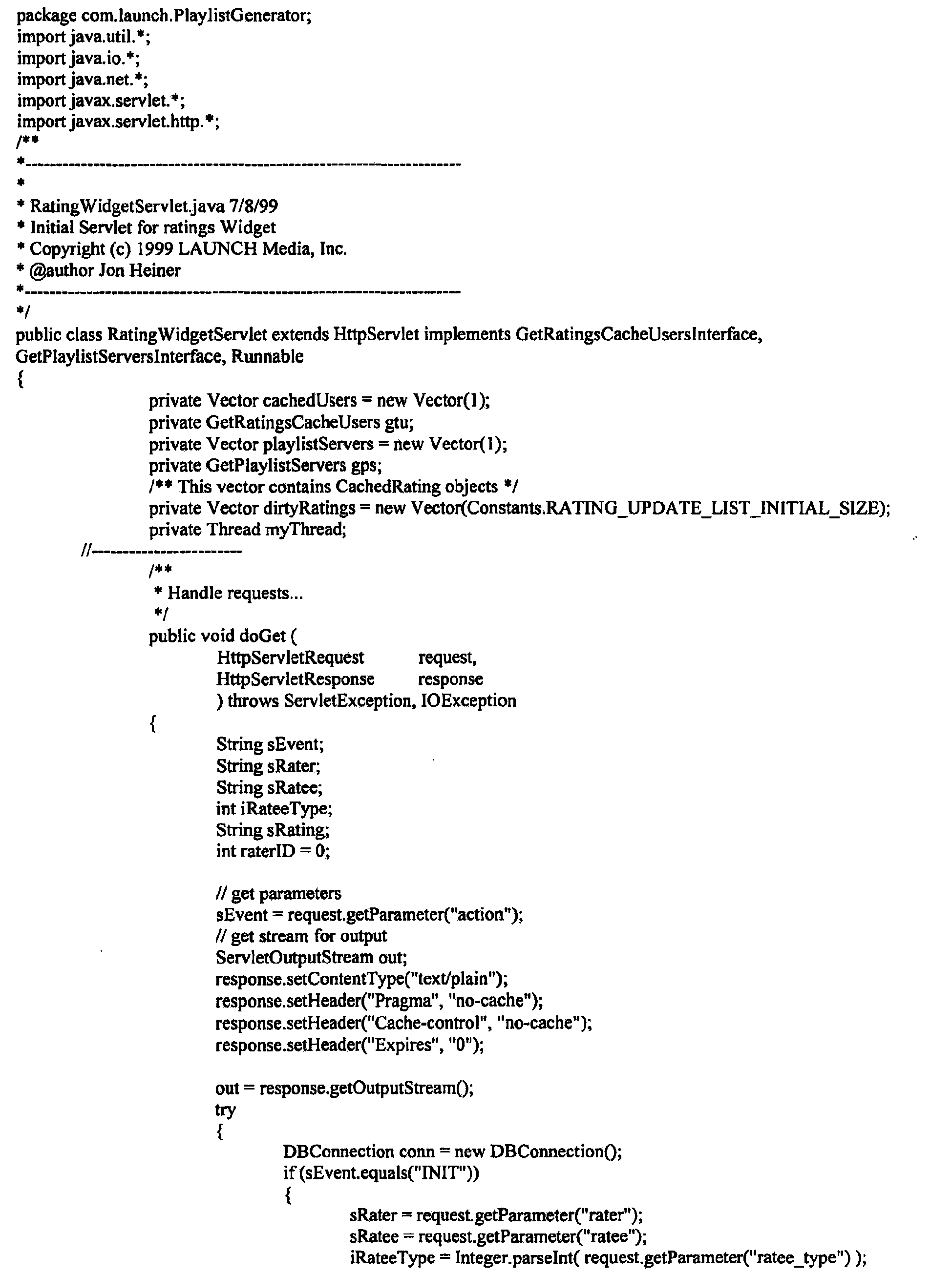

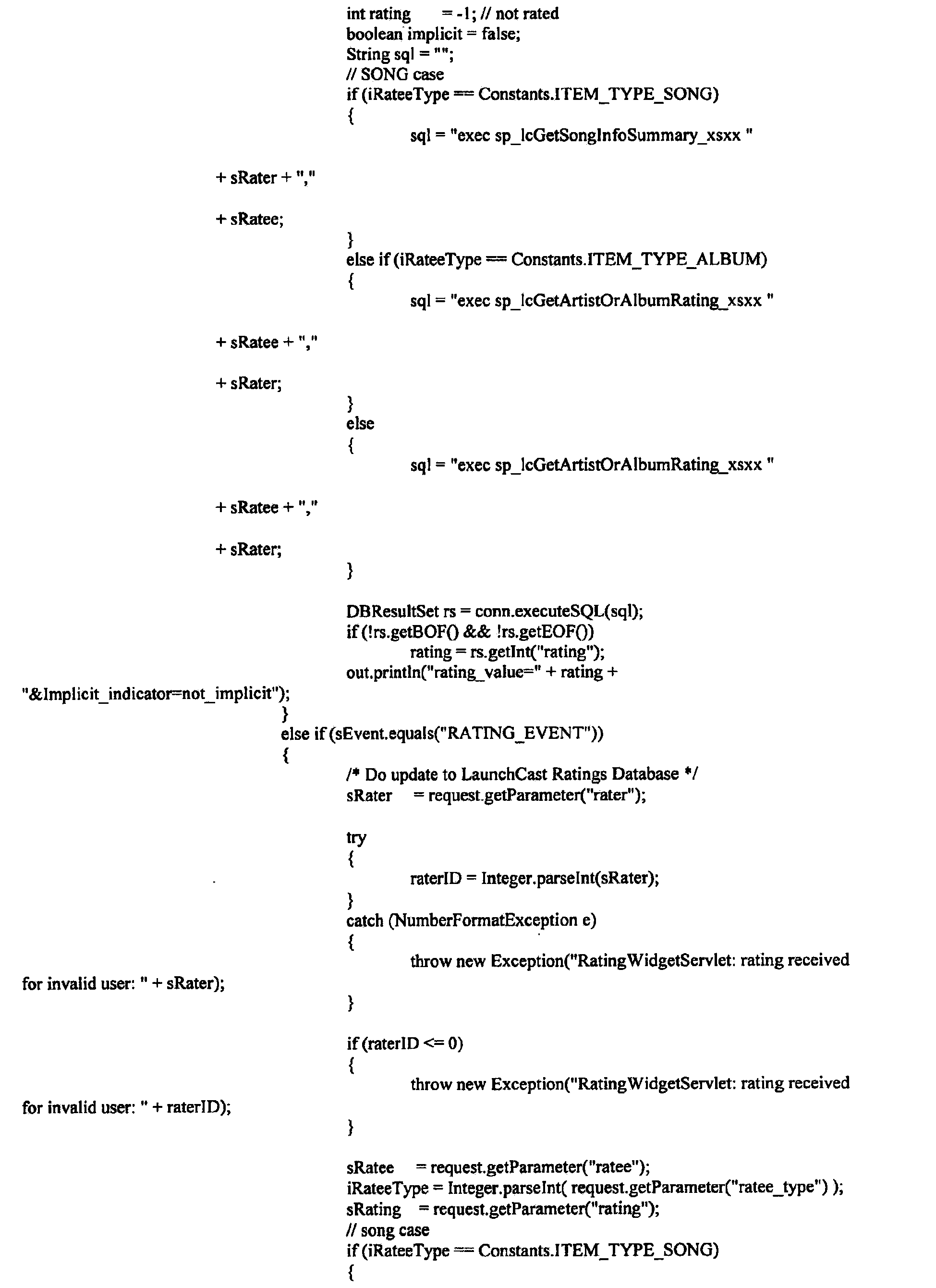

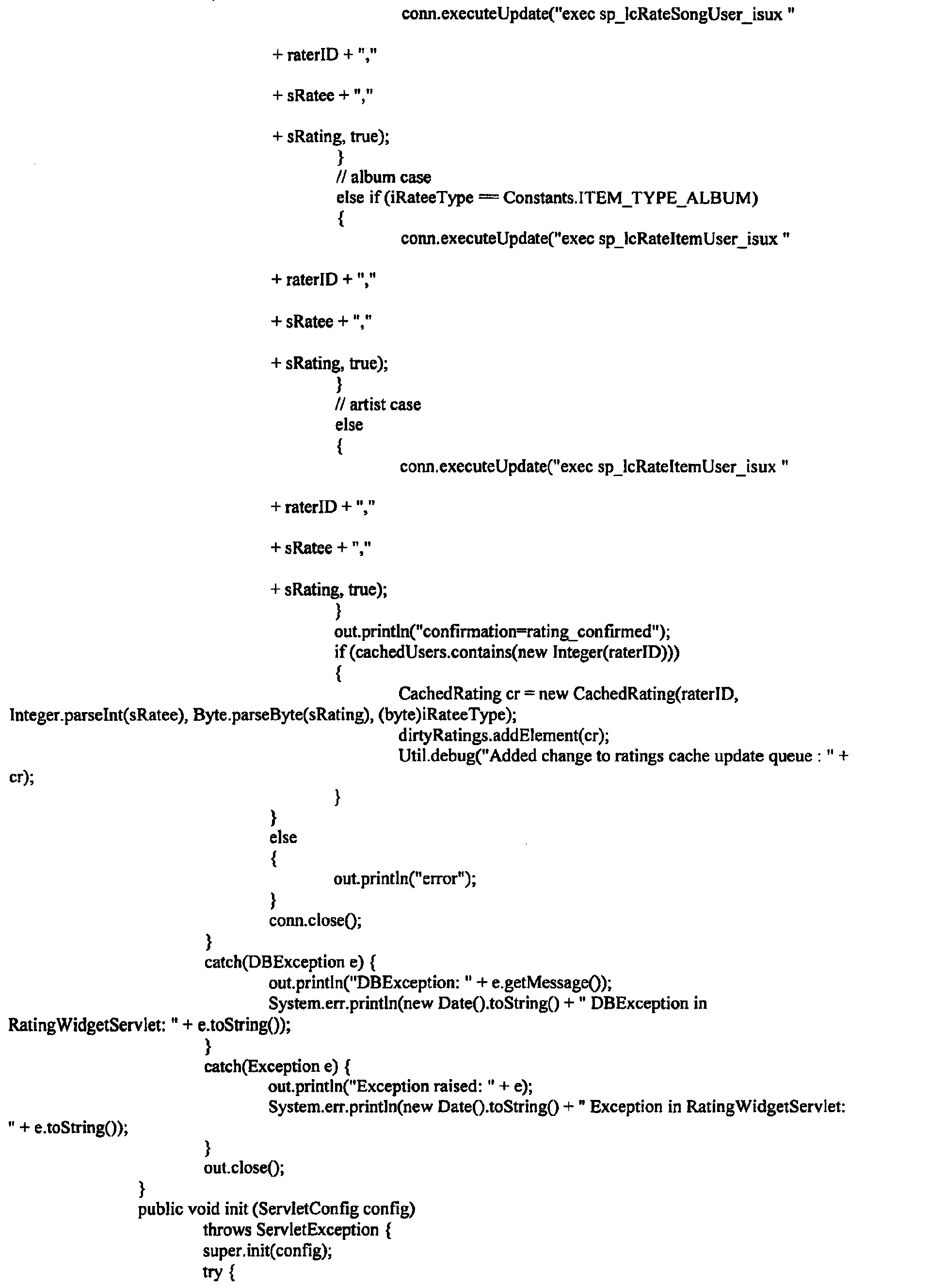

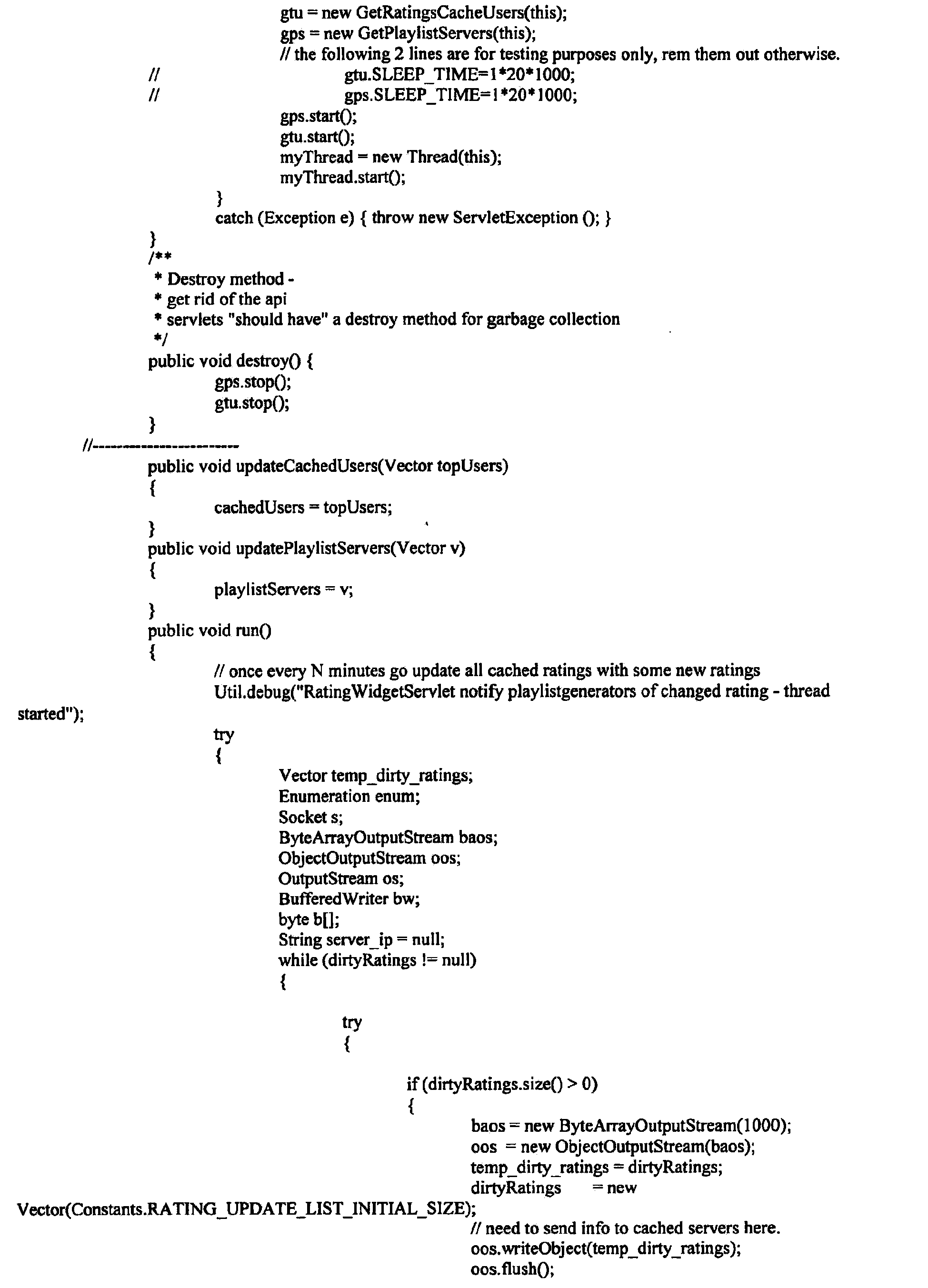

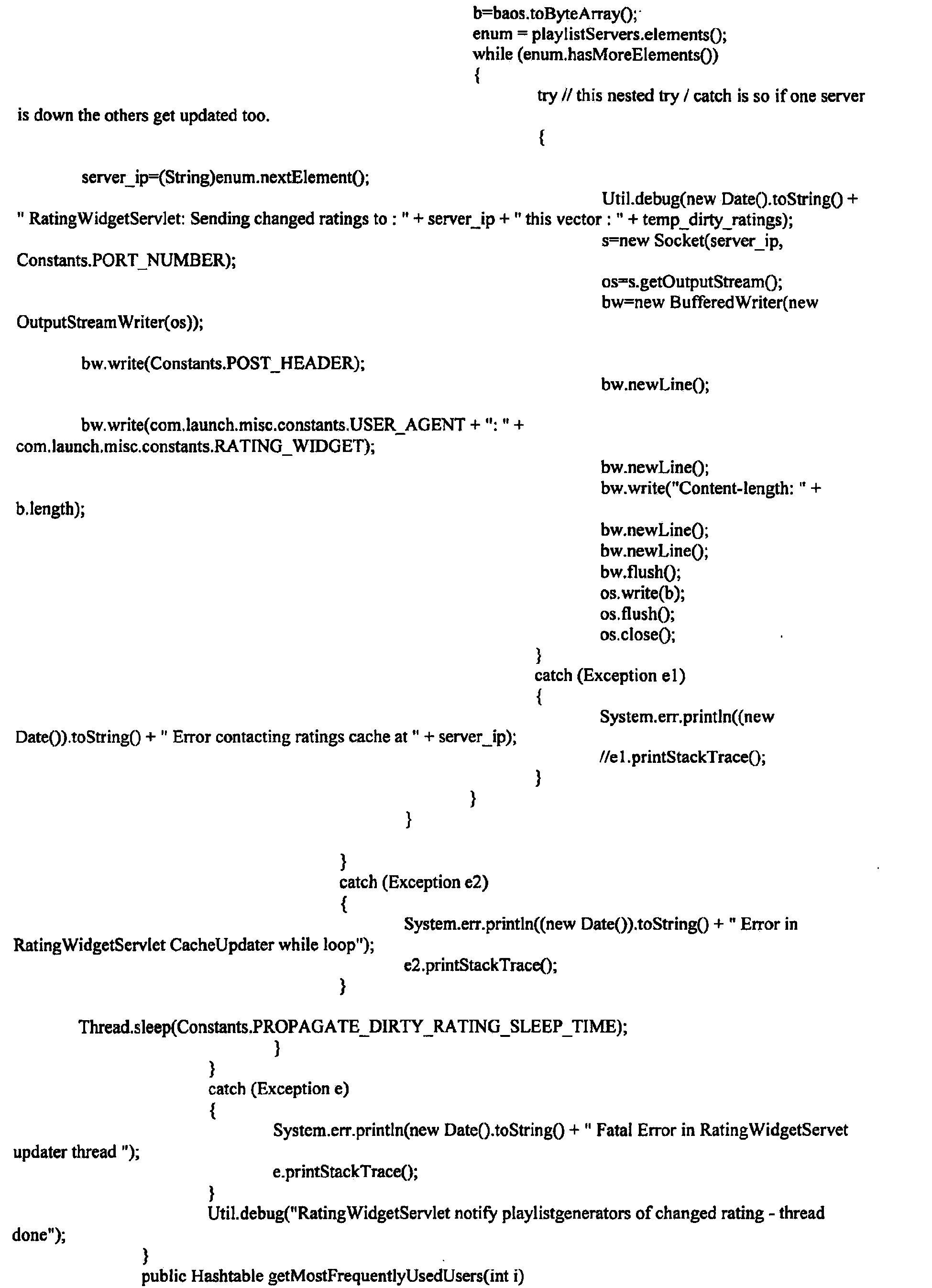

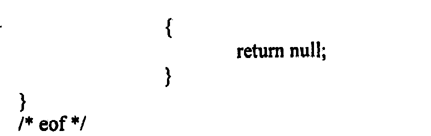

### RecList

```
 package com.launch.PlaylistGenerator;
 import java.util.Vector;
 /**
 * Launch Media, Inc Copyright 1999
 *
 * Recommendation List - class which encapsulates
 * recommendations coming from the net perceptions engine
 *
 * RECOMMENDED USAGE
 * to access values within a RecList object:
 *
 *
 * void someFunction(RecList aRec) {
 *
 * if (aRec.setToFirstRec()) {
 * do {
 * System.out.println(aRec.getIdentifier() + " : " + aRec.getPredictedRating());
 * } while aRec.increment();
 * }
 *}
 *
 *
 *
 * The "prediction result" object in net perceptions is NOT
 * persistent so is unusable outside of a carefully controlled
 * environment
 *
 * Further, developers within LAUNCH should not be exposed
 * to Net Perceptions data structures (as they are ugly)
 *
 * file: launchNetP.java
 * @author Jon Heiner
 * @since 7-30-99
 */
 public class RecList {
 private final static int kGrowVectorBy = 4;
 private Vector theRecs;
 private int theNumRecs = 0;
 private int theIndex = 1;
 /* Rec -- inner class
 * encapsulates the ID and predicted
 * value for the item in the list;
 * the inner values are made public
 * for convenience; they are exposed
 * to this class, but are not intented
 * to be used outside of this implementation
 */
 public class Rec {
 public int theID;
 public float theValue;
 /* Rec - creation method
 * the variables should be immutable
 */
 public Rec(int iID, float fValue) {
       theValue = fvalue;
       theID = iID;
 }
 }
 /** RecList - creation method
 * creates an empty rec list, which we will then add
 * Recs to; if you try to pull values from this it will
 * indicate that this is not possible
 */
 public RecList() {
 theRecs = new Vector(0, kGrowVectorBy); // create an empty vector
 }
 /** RecList - creation method w/ args
 * creates a rec list with one element; use the add
 * method to add more values to it
 */
 public RecList(int iID, float fValue) {
 theRecs = new Vector(0, kGrowVectorBy); // create an empty vector
 this.add(iID, fValue);
 }
 /** compact
 * called once the RecList has been created and
 * all items are added
 */
 public void compact() {
 theRecs.trimToSize();
 }
 /** setToFirstRec
 * called to set us to the first rec
 * if this returns false, then there are
 * no recommendations in the list.
 */
 public boolean setToFirstRec() {
 theIndex = 0;
 if (theNumRecs > 0) return true;
 return false;
 }
 /** increment
 * moves the internal pointer to the next item
 * returns false if there are no more Rees in
 * the list.
 */
 public boolean increment() {
 theIndex++;
 if (theIndex < theNumRecs) return true;
 return false;
 }
 /** getidentifier
 * returns the item ID for the current item
 * in the Rec List
 */
 public int getIdentifier() {
 return (int) ((Rec) theRecs.elementAt(theIndex)).theID;
 }
 /** getPredictedRating
 * returns the percentage value which is the
 * predicted value
 */
 public float getPredictedRating() {
 return (float) ((Rec) theRecs.elementAt(theIndex)).thevalue;
 }
 /** add
 * adds a new value to the Rec list
 * returns false if the values entered
 * are invalid; (e.g.: iId < 0)
 */
 public void add(int iID, float fValue) {
 theNumRecs++;
 theRecs.addElement(new Rec(iID, fValue));
 }
 /** length
 * returns the number of elements in the Rec list
 */
 public int length() {
 return theNumRecs;
 }
 /** createStubRecList
 * used to return "good" bogus values rather
 * than values generated from Net Perceptions
 * useful for testing and stubbing
 */
 public static RecList createStubRecList() {
 RecList aRecList = new RecList(74082, (float) 0.5);
 aRecList.add(116377, (float) 0.6);
 aRecList.add(123312, (float) 0.7);
 aRecList.add(899, (float) 0.8);
 aRecList.add(58075, (float) 0.9);
 return aRecList;
 }
 /** test
 * test class
 */
 public static class Test {
 /*
 public static void main(String [] args) {
        System.out.println("debug 0");
        RecList aRec = createStubRecList();
        System.out.println("debug 1");
        if (aRec.setToFirstRec()) {
        System.out.println("debug 2");
               do {
        System.out.println("debug 3");
               System.out.println(aRec.getIdentifier() + " : " + aRec.getPredictedRating());
        System.out.println("debug 4");
               } while (aRee.increment());
        }
 }
 */
 }
 }
```

### SaveClips

```
 package com.launch.PlaylistGenerator;
 import java.util.Vector;
 import java.util.Date;
 public class SaveClips extends Thread
 {
 Vector clips;
 String storedProc;
 int ordinal;
 short mediaType;
 int userID;
 public SaveClips(Vector clips, String storedProc, int ordinal, short mediaType, int userID)
 {
 this.clips = clips;
 this.storedProc = storedProc;
 this.mediaType = mediaType;
 this.userID = userID;
 this.ordinal = ordinal;
 }
 public void run()
 {
 Date startDate = new Date();
 Thread.currentThread().setName("Saveclips for " + storedProc);
 int rowCount = 0;
 if (clips.size() <= 0)
       return;
 try
 {
       DBConnection conn = new DBConnection();
       String sql = "";
       Clip aClip;
       for (int i = 0; i < clips.size(); i++)
       {
              aClip = (Clip) clips.elementAt(i);
              sql = sql.concat(" exec " + storedProc + " "
                      + ordinal + ", "
                      + aClip.media.getID(mediaType) + ", "
                      + mediaType + ", "
                      + userID);
              ordinal++;
              rowCount++;
       }
       conn.executeSQL(sql);
       conn.close();
 }
 catch (DBException oops)
 { Util.debug("DB Exception: " + oops.getmessage());
       Util.debug("DB Exception: " + oops.getMessage());
 }
 Util.debug(Thread.currentThread().getName() + " saved " + rowCount + " clips");
 Util.printElapsedTime(Thread.currentThread().getName(), startDate);
 }
 }
```

### SavePlaylist

```
 package com.launch.PlaylistGenerator;
 import java.util.Date;
 public class SavePlaylist extends Thread
 {
 Playlist list;
 int ordinal, to, from;
 public SavePlaylist(Playlist list, int from, int to, int ordinal)
 {
 this.list = list;
 this.ordinal = ordinal;
 this.to = to;
 this.from = from;
 }
 public void run()
 {
 Date startDate = new Date();
 Thread.currentThread().setName("SavePlaylist (" + from + "-" + to + ")");
 int rowCount = 0;
 try
 {
       DBConnection conn = new DBConnection();
       String sql = "";
       SongData data;
       short origin;
       for (int i = from; i < to; i++)
       {
              data = (SongData) list.media.elementAt(i);
              if (list.popularOnly)
                      origin = (short) SongData.SOURCE_FORCED_POPULAR;
              else
                      origin = (short) data.origin();
              if (data.querySource = SongData.SOURCE_RATED)
                      origin = (short) data.rating.getSource();
              //
              sql = sql.concat(" exec sp_lcSaveMediaPlaylist_ixxd "
                      + ordinal + ", "
                      + data.getMediaID(list.mediaType) + ", "
                      + list.mediaType + ", "
                      + list.userID + ", "
                      + data.implicit + ", "
                      + origin);
              ordinal++;
              rowCount++;
       }
       conn.executeSQL(sql);
       conn.close();
 }
 catch (DBException oops)
 {
      Util.debug("DB Exception: " + oops.getMessage());
 }
 Util.debug(Thread.currentThread().getName() + " saved " + rowCount + " songs");
 Util.printElapsedTime(Thread.currentThread().getName(), startDate);
 }
 }
```

### SimpleClip

```
 package com.launch.PlaylistGenerator;
 import java.io.Serializable;
 public class SimpleClip implements Serializable
 {
 int mediaID;
 int ID;
 byte origin;
 public String toString()
 {
 return "clipID=" + ID + ", mediaID=" + mediaID + ", origin=" + origin;
 }
 /**
 * Contructor for ads, news, tips
 */
 public SimpleClip(int ID, int mediaID)
 {
 this.mediaID = mediaID;
 this.ID = ID;
 }
 /**
 * Constructor for songs
 */
 public SimpleClip(int ID, int mediaID, byte origin)
 {
 this(ID, mediaID);
 this.origin = origin;
 }
 }
```

### SimpleClipList

```
 package com.launch.PlaylistGenerator;
 import java.util.Vector;
 public class SimpleClipList extends Vector
 {
 public SimpleClipList(int size)
 {
 super(size);
 }
 public SimpleClip pop()
 {
 if (size() > 0)
 {
       SimpleClip clip = (SimpleClip) elementAt(0);
       removeElementAt(0);
       return clip;
 }
 return null;
 }
 }
```

### SimplePlaylist

```
 package com.launch.PlaylistGenerator;
 import java.util.Vector;
 import java.io.Serializable;
 import java.io.ByteArrayOutputStream;
 import java.io.ObjectOutputStream;
 import java.io.ObjectInputStream;
 import java.io.ByteArrayInputStream;
 import java.util.Date;
 public class SimplePlaylist implements Serializable
 {
 SimpleClipList news = new SimpleClipList(10);
 SimpleClipList ads = new SimpleClipList(10);
 SimpleClipList tips = new SimpleClipList(10);
 SimpleClipList songs = new SimpleClipList(50);
 Date lastAd;
 Date lastNews;
 Date lastTip;
 short mediaType;
 int moodID;
 int djID;
 public String toString()
 {
 return "ads=" + ads.toString() + ", " +
        "news=" + news.toString() + ", "+
        "songs=" + songs.toString() + ", " +
        "tips=" + tips.toString();
 }
 public void resetDates(Date newDate)
 {
 lastAd = lastNews = lastTip = newDate;
 }
 public void save(int userID)
 {
 try
 {
       DBConnection conn = new DBConnection();
       save(conn, userID);
 }
 catch (DBException e)
 {
       System.err.println(new Date().toString() + " DBException in SimplePlaylist:save: " +
 e.toString());
       e.printStackTrace();
 }
 }
 public void save(DBConnection conn, int userID)
 {
 try
 {
      String sql = "exec sp_lcSavePlaylist_ixxd " + userID + ", ?";
       DBPreparedStatement statement = conn.prepareStatement(sql);
       byte[] b = toByteArray();
       statement.setBytes(1, toByteArray());
       statement.executeUpdate();
 }
 catch (DBException e)
       System.err.println(new Date().toString() + " DBException in SimplePlaylist:save:" +
 e.toString());
 }
 }
 public static SimplePlaylist fromBytes(byte[] b)
 {
 if (b = null ∥ b.length <= 0)
       return null;
 try
 {
       ByteArrayInputStream bais = new ByteArrayInputStream(b);
       if (bais = null)
               return null;
       ObjectInputStream ois = new ObjectInputStream(bais);
       if (ois = null)
               return null;
       return (SimplePlaylist) ois.readObject();
 }
 catch (Throwable e)
 {
       System.err.println("Exception in SimplePlaylist:fromBytes:" + e.toString());
 }
 return null;
 }
 public static SimplePlaylist load(DBConnection conn, int userID)
 {
 String sql = "exec sp_lcGetPlaylist_xsxx " + userID;
 try
 {
       DBResultSet rs = conn.executeSQL(sql);
       return SimplePlaylist.fromBytes(rs.getBytes("playlist"));
 }
 catch (Throwable e)
 {
       System.err.println("Exception in SimplePlaylist:load:" + e.toString());
 }
 return null;
 }
 private byte[] toByteArray()
 {
 try
 {
 ByteArrayOutputStream baos = new ByteArrayOutputStream();
 ObjectOutputStream oos = new ObjectOutputStream(baos);
 oos.writeObject(this);
 return baos.toByteArray();
 }
 catch (Throwable t)
 { System.err.println("toByteArray died: " + t.toString());
 t.printStackTrace();
 return null;
 }
 }
 }
```

### Song

```
 package com.launch.PlaylistGenerator;
 public class Song
 {
 public final static short EXCLUDED = 4;
 public final static short EXPLICIT = 3;
 public final static short IMPLICIT = 2;
 public final static short UNRATED = 1;
 public final static short ANY = 0;
 public int songID;
 public short type = ANY;
 private SongData data = null;
 public Song(int songID, short type)
 {
 this.songID = songID;
 setType(type);
 }
 public String toString()
 {
 return "Song " + songID
         + ", type="
         + typeString()
         + ", data = "
         + ((data == null) ? "null" : data.toString());
 }
 public String typeString()
 {
 switch (type)
 {
       case ANY:
              return "ANY";
       case EXPLICIT:
              return "EXPLICIT";
       case IMPLICIT:
              return "IMPLICIT";
       case UNRATED:
              return "UNRATED";
       case EXCLUDED:
              return "EXCLUDED";
       default:
              return "UNKNOWN";
 }
 }
 // this should wait for setType
 public SongData getData()
 {
 return data;
 }
 // this should wait for setType
 public short getType()
 {
 return type;
 }
 // returns whether or not this is suitable for setting SongData
 public boolean setType(short newType)
 {
 short oldType = type;
 if (newType = type)
       return true;
 else if (newType < type)
       return false;
 else
       type = newType;
 // add or delete song data
 if (newType == EXCLUDED)
 {
 // if (oldType != 0)
 // Util.debug(Thread.currentThread().getName() + ": deleting data for song " +
 songID + ", oldType was " + oldType);
       data = null;
 }
 else if (oldType = ANY && (newType = EXPLICIT || newType == IMPLICIT newType ==
 UNRATED))
 {
       data = new SongData(songID);
 }
 return true;
 }
 }
```

### SongData

```
 package com.launch.PlaylistGenerator;
 public class SongData
 {
 int songID;
 byte querySource;
 public AverageRating djsAverage;
 double score,
 netp,
 implicit,
 confidence,
 lastPlayed,
 bds,
 ratingF,
 djsF,
 netpF,
 commRatingF,
 lastPlayedF,
 bdsF;
 private SongInfo info;
 private Rating djs = new Rating((short) Constants.DEFAULT_DJS SCORE);
 private byte djSource = SOURCE_DJS;
 public SongRating rating;
 PickStatus status;
 public final static byte SOURCE_RATED = 1;
 public final static byte SOURCE_IMPLICIT_ALBUM = 2;
 public final static byte SOURCE_IMPLICIT_ARTIST = 3;
 public final static byte SOURCE_IMPLICIT_SONG = 4;
 public final static byte SOURCE_DJS = 5;
 public final static byte SOURCE_DJS_SONG = 5;
 public final static byte SOURCE_BDS = 6;
 public final static byte SOURCE_POPULAR = 7;
 public final static byte SOURCE_RANDOM = 8;
 public final static byte SOURCE_NETP = 9;
 public final static byte SOURCE_ALL = 10;
 public final static byte SOURCE_RECENTLY_PLAYED = 11;
 public final static byte SOURCE_FORCED_POPULAR = 12;
 public final static byte SOURCE_GENRES = 13;
 public final static byte SOURCE_DJS_ALBUM = 14;
 public final static byte SOURCE_DJS_ARTIST = 15;
 public final static byte DO_NOTHING = 0;
 public final static byte MAKE_ME_IMPLICIT = 1;
 public final static byte EXCLUDE_ME = 2;
 public SongData(int songID)
 {
 lastPlayed = Constants.DEFAULT_LASTPLAYED_SCORE;
 djsAverage =new AverageRating((short) Constants.DEFAULT_DJS_SCORE);
 status = new PickStatus();
 netp = Constants.DEFAULT_NETP_SCORE;
 this.songID = songID;
 rating = new SongRating();
 }
 public boolean equals(SongData otherData)
 {
 return (songID == otherData.songID);
 }
 public byte origin()
 {
 double maxValue = 0;
 byte maxSource = SOURCE_RANDOM;
 byte ratingSource = 0;
 if (rating.isSetQ)
 ratingSource = rating.getSource();
 if (info.commRating > maxValue && info.commRating > Constants. POPULAR THRESHOLD
 && ratingSource != 1)
 {
        maxValue = info.commRating;
        maxSource = SOURCE_POPULAR;
 }
 if(djs.isSet() && djs.get() >= maxValue && djs.get() > 0 && ratingSource != 1)
 {
        maxValue = djs.get();
        maxSource = djSource;
 }
 /*
 if (netP > maxValue)
 {
        maxValue = netP;
        maxSource = SOURCE NETP;
 }
 */
 if (bds > 0 && bds >= maxValue && ratingSource != 1)
 {
        maxValue = bds;
        maxSource = SOURCE_BDS;
 }
 // according to the weight matrix, if there's an explicit rating,
 //that's the only source
 // but let's lie to people because they don't like it when we say
 // we played lowly-rated songs for them
 // even though that's what we say we will play anyway
 if (rating.isSet()}
 {
        short value = rating.get();
        if (value > Constants.MIN_RATING_FOR_RATED_SOURCE && value >= maxValue)
        {
               maxValue = value;
               maxSource = ratingSource;
        }
 }
 // lies, lies, lies.
 if (maxValue < Constants.MIN_RATING_FOR_RATED_SOURCE)
 {
        maxSource = SOURCE_RANDOM;
 }
 return maxSource;
 }
 public void calculateDJs(ltemsProfile items, AlbumArtistData albumAndArtist)
 {
 // put in the default
 djs.set(djsAverage.get());
 djSource = SOURCE_DJS_SONG;
 if (djsAverage.count() <= 0)
 {
        djSource = SOURCE_RANDOM;
        Item albumItem = albumAndArtist.getAlbum(items, this);
        Item artistltem = albumAndArtist.getArtist(items, this);
       // don't calculate implicit ratings based on various artists
       if (artistItem != null && ArtistInfo.isVariousArtists(artistItem.itemID))
        {
               artistItem = null;
       }
        if (albumItem != null && albumItem.djsAverage.count() > 0)
        {
               djs.set(albumItem.djsAverage.get());
               djSource = SOURCE_DJS_ALBUM;
        }
       else if (artistItem != null && artistItem.djsAverage.count() > 0)
        {
               djs.set(artistItem.djsAverage.get());
               djSource = SOURCE_DJS_ARTIST;
        }
 }
 }
 public byte calculateImplicit(ItemsProfile items, AlbumArtistData albumAndArtist)
 {
 if (!rating.isSet())
 {
       Item albumItem == albumAndArtist.getAlbum(items, this);
       Item artistItem = albumAndArtist.getArtist(items, this);
       // don't calculate implicit ratings based on various artists
       if(artistltem != null && ArtistInfo.isVariousArtists(artistItem.itemID))
        {
               artistltem = null;
       }
       if (albumItem != null && albumItem.userRating.isSet())
        {
               short albumRating = atbumItem.userRating.get();
               if (albumRating == 0)
                      return EXCLUDE_ME;
               else
               {
                      rating.set(albumRating,
 SongRating.RATrNG_SOURCE_FROM_ALBUM);
                      return MAKE_ME_IMPLlCIT;
               }
       }
       else if (artistItem != null && artistItem.userRating.isSet())
       {
               short artistRating = artistItem.userRating.get();
               if (artistRating == 0)
                      return EXCLUDE_ME;
               else
               {
                      rating.set(artistRating,
 SongRating.RATING_SOURCE_FROM_ARTIST);
                      return MAKE_ME_IMPLICIT;
               }
       }
       else if (artistItem != null && artistItem.songAverage.count() > 0)
       {
               rating.set((short) artistItem.songAverageScore(info.album.artist),
 SongRating.RATING_SOURCE_AVERAGE_SONG_RATING_BY_ARTIST);
               return MAKE_ME_IMPLlCIT;
       }
 }
 return DO_NOTHING;
 }
 public void setBDS(short score)
 {
 bds = score;
 }
 public double getBDS()
 {
 return bds;
 }
 public void score(WeightMatrix w, StationList stations)
 {
 // score bds
 bds = info.bdsScore(stations);
 byte s = rating.getSource();
 /*
 // we're not using confidence right now. Take it out for speed
 confidence = 0;
 if (ratingSource != SongRating.RATING_SOURCE_EXPLICIT)
 {
        if (djs != DEFAULT_DJS_SCORE)
               confidence += 10;
        if (netp > 0)
               confidence += 10;
        if (info.commRating > 0)
               confidence += 10;
 }
 */
 // implicit rating is based on ratings data
 ratingF = (rating.get() * w.matrix[s][WeightMatrix.RATING ]);
 djsF = (djs.get() * w.matrix[s][WeightMatrix.DJS ]);
 netpF = (netp * w.matrix[s][WeightMatrix.NETP ]);
 commRatingF = (info.commRating * w.matrix[s][WeightMatrix.COMM_RATING]);
 lastPlayedF = (lastPlayed * w.matrix[s][WeightMatrix.LAST_PLAYED]);
 bdsF = (bds * w.matrix[s][WeightMatrix.BDS ]);
 implicit = ratingF + djsF + netpF + commRatingF;
 // score is based on other factors
 score = implicit + lastPlayedF + bdsF;
 // confidence += w.matrix[s][WeightMatrix.CONFIDENCE];
 }
 public void setInfo(SongInfo stuff)
 {
 info = stuff;
 }
 public SongInfo getInfo()
 {
 return info;
 }
 public boolean isInfoSet()
 {
 return (info != null);
 }
 public int getArtistID()
 {
 return info.album.artist.ID;
 }
 public int getAlbumID()
 {
 return info.album.ID;
 }
 public String getArtistName()
 {
 return info.album.artist.title;
 }
 public String getAlbumName()
 {
 return info.album.title;
 }
 public int getMediaID(short mediaType)
 {
 return info.media,getID(mediaType);
 }
 public String getSongName()
 {
 return info.title;
 }
 public String sourceString(byte source)
 {
 switch (source) {
 case SOURCE_RECENTLY_PLAYED:
       return "recent";
 case SOURCE_RATED:
       return "rated";
 case SOURCE_IMPLICIT_ALBUM:
       return "album";
 case SOURCE_IMPLICIT_ARTIST:
       return "artist";
 case SOURCE_IMPLICIT SONG:
       return "s avg";
 case SOURCE_DJS:
       return "djs";
 case SOURCE_DJS_ALBUM:
       return "djAtb";
 case SOURCE_DJS_ARTIST:
       return "djArt";
 case SOURCE_BDS:
       return "bds";
 case SOURCE_POPULAR:
       return "pop";
 case SOURCE_RANDOM:
       return "random";
 case SOURCE_NETP:
       return "netp";
 case SOURCE_GENRES:
       return "genres";
 case SOURCE_ALL:
       return "all";
 default:
       return "?";
 }
 }
 public static String originText(byte origin, String singularDJ, String posessiveDJ)
 {
 switch (origin)
 {
       case SOURCE_RATED:
              return (singularDJ + "rated this song");
       case SOURCE_IMPLICIT_ALBUM:
              return (singularDJ + "rated this album");
       case SOURCE_IMPLICIT_ARTIST:
              return (singularDJ + " rated this artist");
       case SOURCE_IMPLICIT_SONG:
              return (singularDJ + " rated other songs by this artist");
       case SOURCE_DJS:
              return (posessiveDJ + " DJs rated this song");
       case SOURCE_DJS_ALBUM:
              return (posessiveDJ + " DJs rated this album");
      case SOURCE_DJS_ARTIST:
              return (posessiveDJ + " DJs rated this artist");
      case SOURCE_BDS:
              return (posessiveDJ + " radio stations play this song");
      case SOURCE_POPULAR:
               return "This song is popular on LAUNCHcast stations";
        case SOURCE_RANDOM:
               return "This song is a random pick";
        case SOURCE_NETP:
               return "Song recommendations";
        case SOURCE_FORCED_POPULAR:
               return "Popular - choose more genres for your music.";
 }
 return "";
 }
 public String toString()
 {
 return "songID:" + songID + ", "
               + "score:" + score + ", "
               + "implicit:" + implicit + ", "
          + "confidence: " + confidence + ", "
               + "lastPlayed:" + lastPlayed + ", "
               + "rating:" + rating + ", "
               + "ratingSource:" + rating.getSource() + ", "
               + "bds:" + bds + ","
               + "djs:" + djs.get() + ","
               + "source:" + sourceString(querySource) + Util.newLine;
 }
 public PlaylistEntry toPlaylistEntry(short mediaType)
 {
 PlaylistEntry result = new PlaylistEntry();
 result.albumID = getAlbumID();
 result.artistID = getArtistID();
 result.albumTitle = info.album.title;
 result.artistTitle = info.album.artist.title;
 result.filepath = info.media.getFilepath(mediaType);
 result.mediaID = getMediaID(mediaType);
 result.songID = songID;
 result.songTitle = info.title;
 result.title = info.title;
 return result;
 }
 public SimpleClip toSimpleClip(short mediaType)
 {
 return new SimpleClip(songID, getMediaID(mediaType), origin());
 }
 public String toDisplaystring(int displayType, int count)
 {
 String delim = "";
 String prefix ="";
 String suffix = "";
 String bgcolor = "";
 if (displayType == Util.DISPLAY_HTML)
 {
       if (count % 2 = 0)
               bgcolor = "#CCCCFF";
       else
               bgcolor = "white";
       delim = "</FONT></TD><TD BGCOLOR=" + bgcolor + "><FONT SIZE=\"-2\">' ;
       prefix = "<TR><TD BGCOLOR=" + bgcolor + "><FONT SIZE=\"-2\">";
       suffix = "</FONT></TD></TR>";
 }
 else {
       delim = "\t";
 }
 return (prefix + count
       + delim + songID
       + delim + sourceString(querySource)
       + delim + sourceString(origin())
       + delim + status.toDisplayString(displayType)
       + delim + status.order
       + delim + Util.fix(score, 2, 0)
       + delim + Math.round(lastPlayed) + "/" + Math.round(lastPlayedF)
       + delim + Math.round(bds) + "/" + Math.round(bdsF)
       + delim + Math.round(implicit)
       + delim + Util.fix(rating.get(), 0, 2) + "/" + Util.fix(ratingF, 0, 2) + " (" +
 rating.getSource() + ")"
       + delim + Math.round(djs.get()) + "/" + Math.round(djsF)
       + delim + Math.round(netp) + "/" + Math.round(netpF)
       + delim + Math.round(info.commRating) + "/" + Math.round(commRatingF)
       + delim + getAlbumID()
       + delim + getArtistID()
       + delim + getArtistName()
       + delim + getSongName()
       + delim + getAlbumName()
       + delim + info.album.genresString()
       + suffix
 );
 }
 public String originTclList()
 {
 return "{" + songID + " " + origin() + " " + Math.round(implicit) + "} ";
 }
 public static String[] namesArray()
 {
 String[] names = { "#",
                                "songID",
                                "query",
                                "origin",
                                "status",
                                "ord".
                                "score",
                                "lastP.",
                                "bds",
                                "impl.",
                                "rating(t)",
                                "djs"
                                "netP.",
                                "comm",
                                "albumID",
                                "artisID",
                                "artist",
                                "title",
                                "album",
 };
 return names;
 }
 }
```

### SongGroup

```
 package com.launch.PlaylistGenerator;
 import java.util.Vector;
 public class SongGroup extends Vector
 {
 public SongData pickRandom(int factor)
 {
 int leftlnList = size();
 if (leftlnList <= 0)
        return null;
 double rand = Util.random(leftInList - 1) + 0.00001;
 int pickIndex = (int) Math.round((Math.pow(rand, factor) / Math.pow(leftInList -1, factor))
 * (leftInList - 1));
 SongData pick = (SongData) elementAt(pickIndex);
 double pickDouble = pickIndex;
 pick.status.percentile = (short) Math.round((pickDouble / size()) * 100);
 removeElementAt(pickIndex);
 return pick;
 }
 }
```

### SongInfo

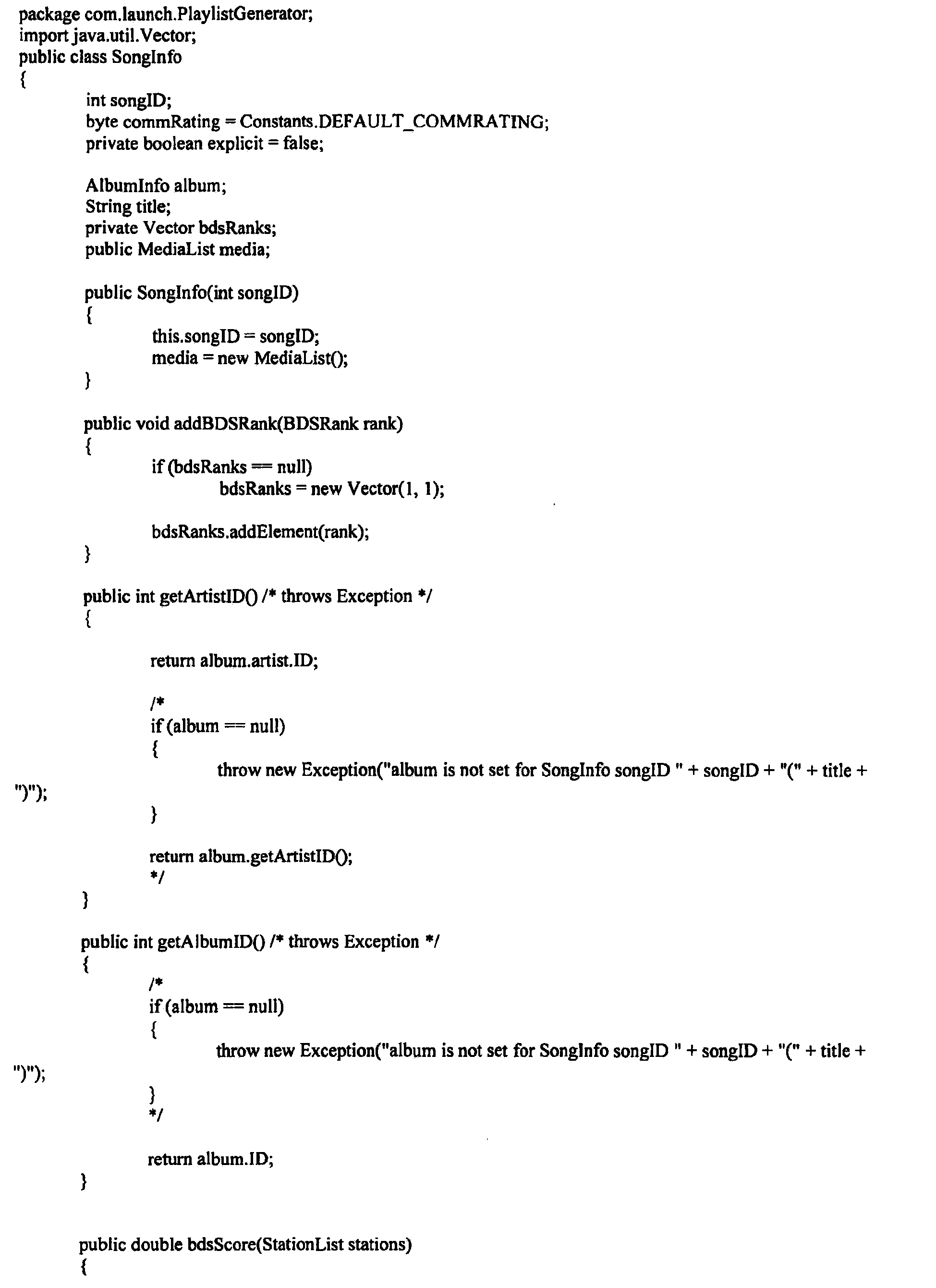

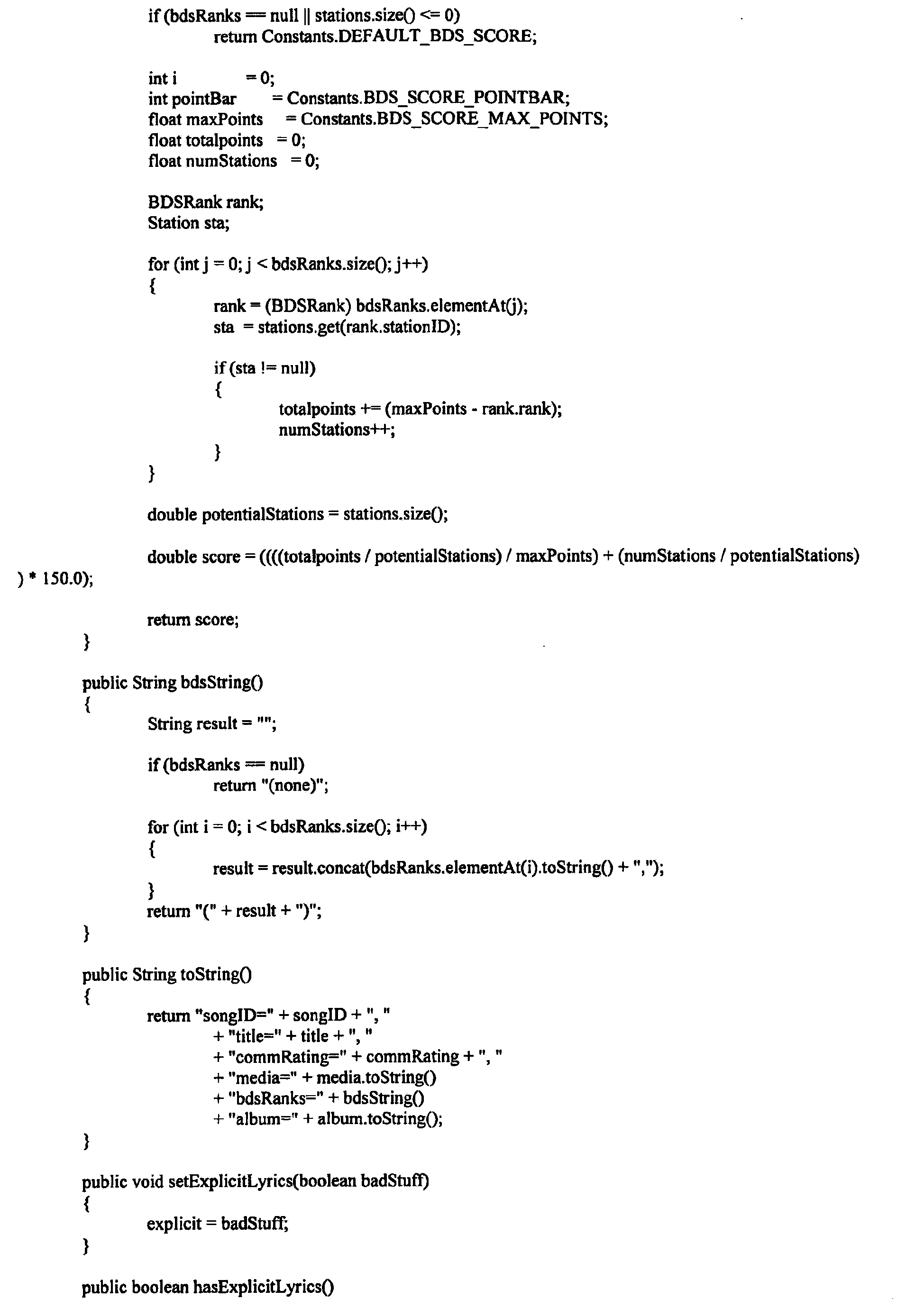

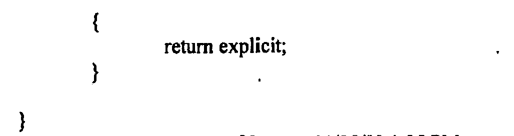

### SongInfoCache

```
 package com.launch.PlaylistGenerator;
 import java.util.Hashtable;
 import java.util.Enumeration;
 import javax.serviet.ServietOutputStream;
 import java.util.Date;
 import java.util.Vector;
 public class SongInfoCache
 {
 private Hashtable songs;
 private Hashtable albums;
 private Hashtable artists;
 private SongInfo songList[];
 private Hashtable ads;
 private Hashtable news;
 private Hashtable tips;
 private Clip adList[];
 private Clip newsList[];
 private Clip tipList[];
 private IntHash mediaTypes;
 public PopularSongs popular;
 public RatingsCache ratingsCache;
 private GenreIndex genres;
 public final static byte TYPE_SONG = 1;
 public final static byte TYPE_ALBUM = 2;
 public final static byte TYPE_ARTIST = 3;
 public final static byte TYPE_AD = 4;
 public final static byte TYPE_NEWS = 5;
 public final static byte TYPE_TIP = 6;
 private ServletOutputStream out;
 public Date lastUpdate;
 public SongInfoCache(ServletOutputStream out)
 {
 // use memory most efficiently with load factor 1
 songs = new Hashtable(50000);
 albums = new Hashtable(3000);
 artists = new Hashtable(1500);
 ads = new Hashtable();
 news = new Hashtable();
 tips = new Hashtable();
 mediaTypes = new IntHash();
 genres =new GenreIndex(100, 1);
 populate();
 lastUpdate = new Date();
 }
 public SongList getPopular(short mediaType)
 {
 return popular.get(mediaType);
 }
 public SongList getInGenres(GenreList myGenres)
 {
 return genres.getInGenreList(myGenres);
 }
 public SongList getInGenre(int genreID)
 {
 return genres.getInGenre(genreID);
 }
 public int countInGenres(GenreList myGenres)
 {
 return genres.countInGenreList(myGenres);
 }
 private void populate()
 {
 try
 {
       DBConnection conn = new DBConnection();
       DBResultSet rs = conn.executeSQL("exec sp_lcoGetSongDataCache-xsxx");
       int songID, mediaType, rank, stationID, rowCount;
       short genreID;
       String tilePath;
       SongInfo aSong;
       ArtistInfo anArtist;
       AlbumInfo anAlbum;
       rowCount = 0;
       while (!rs.getBOF() && !rs.getEOF())
       {
              songID = rs.getInt("songID");
              mediaType) rs.getInt("mediaType");
              aSong = (SongInfo) init(songID, SongInfoCache.TYPE_SONG);
              filePath = rs.getString("server") + rs.getString("directory") + "\\" +
 rs.getString("filePath");
              aSong.media.add((short) mediaType, rs.getInt("mediaID"), filePath);
              aSong.title = rs.getString("song");
              anArtist = (ArtistInfo) init(rs.getInt("artistID"),
 SongInfoCache.TYPE_ARTIST);
              anArtist.title = rs.getString("artist");
              anArtist.songs.put(new Integer(songID), aSong);
              anAlbum = (AlbumInfo) init(rs.getInt("albumID"),
 SongInfoCache.TYPE_ALBUM);
              anAlbum.title = rs.getString("album");
              aSong.setExplicitLyrics(rs.getInt("explicit") == 1);
              // add year and date added
              anAlbum.artist = anArtist;
              aSong.album = anAlbum;
              mediaTypes.increment(mediaType);
              rowCount++;
              rs.next();
       }
       Util.debug("SongInfoCache:populate loaded " + rowCount + " media");
       rs = conn.executeSQL("exec sp_IcoGetCommRatingCache_xsxx");
       rowCount = 0;
       while (!rs.getBOF() && !rs.getEOF())
       {
              songID = rs.getInt("songID");
              aSong = (SongInfo) get(songID, SongInfoCache.TYPE_SONG);
              if (aSong != null)
               {
                      aSong.commRating = (byte) rs.getInt("commRating");
                      rowCount++;
              }
              rs.next();
       }
       Util.debug("SonginfoCache:populate loaded " + rowCount + " commRatings");
       rs = conn.executeSQL("exec sp_lcoGetGenreCache_xsxx");
       while (!rs.getBOF() && !rs.getEOF())
       {
              genreID = (short) rs.getInt("genreID");
              songID = rs.getInt("songID");
              aSong = (SongInfo) get(songID, SongInfoCache.TYPE_SONG);
              if (aSong != null && aSong.album != null)
              {
                      aSong.album.addGenre(genreID);
                      genres.add(genreID, aSong);
                      rowCount++;
               }
               rs.next();
        }
       Util.debug("SongInfoCache:populate loaded " + rowCount + " genre mappings");
       rowCount = 0;
       rs = conn.executeSQL("exec sp_lcoGetBDSCache_xsxx");
       while (!rs.getBOF() && !rs.getEOF())
        {
               songID = rs.getInt("songID");
               aSong = (SongInfo) get(songID, TYPE_SONG);
               if (aSong != null)
               {
                      rank = rs.getInt("rank");
                      stationID = rs.getInt("stationID");
                      rowCount++;
                      aSong.addBDSRank(new BDSRank((short) stationID, (byte) rank));
               }
               rs.next();
       }
       Util.debug("SongInfoCache:populate loaded " + rowCount + " bds Ranks");
       // import ads
       rowCount = 0;
       rs = conn.executeSQL("exec sp_lcoGetAdCache_xsxx");
       Clip ad;
       int clipID;
       while (!rs.getBOF() && !rs.getEOF())
        {
               clipID = rs.getInt("clipID");
 // filePath = rs.getString("server") + rs.getString("directory") + "/" +
 rs.getString("filePath");
               ad = (Clip) init(clipID, TYPE_AD);
 // ad.name = rs.getString("clipName");
               ad.media.add((short) rs.getInt("mediaType"), rs.getInt("mediaID"), null);
               rowCount++;
               rs.next();
       }
       Util.debug("SongInfoCache:populate loaded " + rowCount + " ad media");
       // import news
       rs = conn.executeSQL("exec sp_lcoGetNewsCache_xsxx");
       rowCount = 0;
       Clip newsbit;
       while (!rs.getBOF() && !rs.getEOF())
       {
               clipID = rs.getInt("clipID");
               filePath = rs.getString("server") + rs.getString("directory") + "\\" +
 rs.getString("filePath");
               newsbit = (Clip) init(clipID, TYPE_NEWS);
               newsbit.name = rs.getString("clipName");
               newsbit.media.add((short) rs.getInt("mediaType"), rs.getInt("mediaID"),
 filePath);
               rowCount++;
               rs.next();
       }
       Util.debug("SongInfoCache:populate loaded " + rowCount + " news media");
       // import tips
       rs = conn.executeSQL("exec sp_lcoGetTipCache_xsxx");
       rowCount = 0;
       Clip tip;
       while (!rs.getBOF() && !rs.getEOF())
       {
               clipID = rs.getInt("clipID");
               filePath = rs.getString("server") + rs.getString("directory") + "\\" +
 rs.getString("filePath");
               tip = (Clip) init(clipID, TYPE_TIP);
               tip.name = rs.getString("clipName");
               tip.media.add((short) rs.getInt("mediaType"), rs.getInt("mediaID"), filePath);
               rowCount++;
               rs.next();
       }
       Util.debug("SongInfoCache:populate loaded " + rowCount + " tip media");
       conn.close();
 }
 catch (DBException oops)
 {
       System.out.printIn("DBException in cache populate: " + oops.getMessage());
 }
 // populate the songs array
 songList = new SongInfo[songs.size()];
 int i = 0;
 for (Enumeration e = songs.keys(); e.hasMoreElements() ;) {
       songList[i] = (SongInfo) songs.get((Integer) e.nextElement());
       i++;
 }
 // populate the ads array
 adList = new Clip[ads.size()];
 i=0;
 for (Enumeration e = ads.keys(); e.hasMoreElements() ;) {
       adList[i] = (Clip) ads.get((Integer) e.nextElement());
       i++;
 }
 // populate the news array
 newsList = new Clip[news.size()];
 i=0;
 for (Enumeration e = news.keys(); e.hasMoreElements() ;) {
       newsList[i] = (Clip) news.get((Integer) e.nextElement());
       i++;
 }
 // populate the tips array
 tipList = new Clip(tips.size()];
 i = 0;
 for (Enumeration e = tips.keys(); e.hasMoreElements() ;) {
       tipList[i] = (Clip) tips.get((Integer) e.nextElement());
       i++;
 }
 // make popular lists
 popular = new PopularSongs(songs, mediaTypes);
 Util.debug("SongInfoCache:populate done");
 }
 private Hashtable getHash(byte type)
 {
 if (type == TYPE_SONG)
       return songs;
 else if (type == TYPE_ALBUM)
       return albums;
 else if (type == TYPE_ARTIST)
       return artists;
 else if (type == TYPE_AD)
       return ads;
 else if (type == TYPE_NEWS)
       return news;
 else if (type == TYPE_TIP)
        return tips;
 return null;
 }
 public Object init(int ID, byte type)
 {
 if (getHash(type).containsKey(new Integer(ID)))
 {
        return get(ID, type);
 }
 else {
        return put(ID, type);
 }
 }
 public Object get(Integer ID, byte type)
 {
 return (getHash(type)).get(ID);
 }
 public Object get(int ID, byte type)
 {
 return get(new Integer(ID), type);
 }
 private Object makeNew(int ID, byte type)
 {
 if (type = TYPE_SONG)
        return new SongInfo(ID);
 else if (type = TYPE_ALBUM)
        return new AlbumInfo(ID);
 else if (type = TYPE_ARTIST)
        return new ArtistInfo(ID);
 else if (type == TYPE_AD)
        return new Clip(ID, Clip.TYPE_AD);
 else if (type = TYPE_NEWS)
        return new Clip(ID, Clip.TYPE_NEWS);
 else if (type = TYPE_TIP)
        return new Clip(ID, Clip.TYPE_TIP);
 return null;
 }
 private Object put(int ID, byte type)
 {
 Hashtable hash = getHash(type);
 Object thing = makeNew(ID, type);
 hash.put(new Integer(ID), thing);
 return thing;
 }
 public SongInfo randomSong()
 {
 long index = Util.random(songList.length - 1);
 if (index > songList.length - 1)
        return null;
 return songList[(int) index];
 }
 public Enumeration keys(byte type)
 {
 if (type = TYPE_SONG)
        return songs.keys();
 else if (type = TYPE_ALBUM)
        return albums.keys();
 else if (type = TYPE_ARTIST)
        return artists.keys();
 else if (type == TYPE_AD)
        return ads.keys();
 else if (type == TYPE_NEWS)
       return news.keys();
 else if (type = TYPE_TIP)
       return tips.keys();
 return null;
 }
 public int size(byte type)
 {
 Hashtable hash = getHash(type);
 if (hash != null)
       return hash.size();
 return 0;
 }
 private Clip[] getClipList(byte type)
 {
 if (type == TYPE_AD)
       return adList;
 else if (type = TYPE_NEWS)
       return newsList;
 else if (type = TYPE_TIP)
       return tipList;
 return null;
 }
 public Clip randomClip(byte type)
 {
 Clip[] clips = getClipList(type);
 if (clips == null || clips.length <= 0)
       return null;
 return clips[(int) Util.random(clips.length - 1)];
 }
 public Vector randomClipList(byte type, short mediaType, int max)
 {
 Vector list = new Vector();
 Clip bip;
 // stop if we have enough or we've iterated too many times
 for (int i = 0; i < (max * 10) && list.size() < max; i++)
 {
       int iterations = max;
       boolean cool = false;
       boolean done = false;
       do
       {
              bip = randomClip(type);
              iterations--;
              // maybe we didn't get one
              if (bip = null)
               {
                      done = true;
              }
              else
               {
                      // we got one that fits!
                      cool = (bip.media.inType(mediaType) && !list.contains(bip));
                      // we've got to stop sometime
                      done = (cool || iterations < 0);
              }
       }
       while (!done);
       // if it was cool, go ahead
       if (cool)
              list.addElement(bip);
 }
 return list;
 }
 }
```

### SongInfoCacheUpdater

```
 package com.launch.PlaylistGenerator;
 import javax.servlet.http.HttpServlet;
 import java.util.Date;
 public class SongInfoCacheUpdater extends Thread
 {
 PlaylistGeneratorServlet servlet;
 public SongInfoCacheUpdater(PlaylistGeneratorServlet servlet)
 {
 this.servlet = servlet;
 }
 public void run()
 {
 Thread.currentThread().setName("SongInfoCacheUpdater");
 // update every day
 long timeToSleep = Util.MILLISECONDS_IN_SECOND *
                                Util.SECONDS_IN_MINUTE *
                                Util.MINUTES_IN_HOUR *
                                Util.HOURS_IN_DAY;
 while (true)
 {
       try { Thread.sleep(timeTosleep); } catch (InterruptedException e) {};
       try
        {
               Util.debug("updating song cache at " + new Date());
               Util.debug("last update was at " + servlet.songCache.lastUpdate);
               // make a new cache
               SongInfoCache cache = new SongInfoCache(null);
               // make sure to copy over the ratingsCache too!!!
               cache.ratingsCache = servlet.songCache.ratingsCache;
               // install the new cache
               servlet.songCache = cache;
               Util.debug("finished updating song cache at " + new Date());
               Util.debug("last update is now at " + servlet.songCache.lastUpdate);
       }
       catch (Throwable e)
       {
               System.err.println("SongInfoCacheUpdater caught an exception: " +
 e.toString());
               e.printStackTrace();
       }
 }
 }
 }
```

### SongList

```
 package com.launch.PlaylistGenerator;
 import java.util.Vector;
 import java.util.Hashtable;
 import java.util.Enumeration;
 public class SongList implements Cloneable
 {
 private Vector list = new Vector();
 private Hashtable unique = new Hashtable();
 private boolean ordered = false;
 public SongList()
 {
 }
 /**
 * Creates a SongList from a Hashtable of songs
 */
 public SongList(Hashtable songs)
 {
 SongInfo info = null;
 Integer songID;
 for (Enumeration e = songs.keys(); e.hasMoreElements();)
 {
        songID = (Integer) e.nextElement();
        info = (SongInfo) songs.get(songID);
        addElement(info);
 }
 }
 public SongList(Hashtable songs, short mediaType)
 {
 Integer songID;
 SongInfo info = null;
 for (Enumeration e = songs.keys(); e.hasMoreElements();)
 {
       songID = (Integer) e.nextElement();
       info = (SongInfo) songs.get(songID);
       if (info.media.inType(mediaType))
        {
               addElement(info);
        }
 }
 }
 public void addElement(SongInfo info)
 {
 Integer ID = new Integer(info.songID);
 // check unique constraint
 if (unique.get(ID) = null)
 {
       list.addElement(info);
       unique.put(ID, info);
 }
 }
 public void addElements(SongList list)
 {
 if (list == null)
       return;
 for (int i = 0; i < list.size(); i++)
 {
       addElement(list.elementAt(i));
 }
 }
 public void sort()
 {
 sort(this, 0, list.size() - 1);
 ordered = true;
 }
 public int size()
 {
 return list.size();
 }
 public SongInfo elementAt(int index)
 {
 return (SongInfo) list.elementAt(index);
 }
 public void setSize(int newSize)
 {
 list.setSize(newSize);
 }
 private void sort(SongList a, int from, int to)
 {
 // quicksort
 // If there is nothing to sort, return
 if ((a == null) || (a.size() < 2)) return;
 int i = from, j = to;
 SongInfo center = a.elementAt((from + to) / 2);
 do {
      while((i < to) && (center.commRating < a.elementAt(i).commRating)) i++;
      while((j > from) && (center.commRating > a.elementAt(j).commRating))j--;
      if (i < j) {
              SongInfo temp = a.elementAt(i);
             a.setElementAt(a.elementAt(j), i);
             a.setElementAt(temp, j); // swap elements
      }
      if (i <= j) {i++; j--;}
 } while(i <= j);
 if (from < j) sort(a, from, j); // recursively sort the rest
 if (i < to) sort(a, i, to);
 }
 public void setElementAt(SongInfo info, int index)
 {
 list.setElementAt(info, index);
 }
 public SongInfo pickRandom()
 {
 if (size() <=0)
      return null;
 int lucky = (int) Util.random(size() - 1);
 if (lucky < 0)
      return null;
 SongInfo info = elementAt(lucky);
 list.removeElementAt(lucky);
 return info;
 }
 public Object clone()
 {
 SongList result = new SongList();
 result.ordered = this.ordered;
 result.unique = (Hashtable) unique.clone();
 result.list = (Vector) list.clone();
 return result;
 }
  }
```

### SongRating

```
 package com.launch.PlaylistGenerator;
 public class SongRating
 {
 public final static byte RATING_SOURCE_NONE = 0;
 public final static byte RATING_SOURCE_EXPLlCIT = 1;
 public final static byte RATING_SOURCE_FROM_ALBUM = 2;
 public final static byte RATING_SOURCE_FROM_ARTIST = 3;
 public final static byte RATING_SOURCE_AVERAGE_SONG_RATING_BY_ARTIST = 4;
 private short rating = (short) Constants.DEFAULT_RATING;
 private boolean set = false;
 private byte type;
 public boolean isSet()
 {
 return set;
 }
 public short set(short newRating, byte newType)
 {
 rating = newRating;
 type = newType;
 set = true;
 return rating;
 }
 public short get()
 {
 return rating;
 }
 public byte getSource()
 {
 return type;
 }
 }
```

### Station

```
package com.launch.PlaylistGenerator;
 public class Station
 {
 int ID;
 public Station(int stationID)
 {
 ID = stationID;
 }
 }
```

### StationList

```
 package com.launch.PlaylistGenerator;
 import java.util.Vector;
 public class StationList
 {
 private Vector slist;
 public StationList()
 {
 slist = new Vector();
 }
 public Station stationAt(int i)
 {
 return (Station) slist.elementAt(i);
 }
 public void addElement(Station s)
 {
 slist.addElement(s);
 }
 public int size()
 {
 return slist.size();
 }
 public String inList()
 {
 Integer list[] = new Integer[size()];
 int last = 0;
 for (int i = 0; i < slist.size(); i++)
 {
        list[i] = new Integer(stationAt(i).ID);
 }
 return Util.join(", ", list);
 }
 public Station get(int stationID)
 {
 for (int i = 0; i < slist.size(); i++)
 {
        if (stationAt(i).ID == stationID)
        {
               return stationAt(i);
        }
 }
 return null;
 }
 }
```

### Util

```
 package com.launch.PlaylistGenerator;
 import java.io.OutputStream;
 import java.util.Date;
 import javax.servlet.ServletOutputStream;
 import java.io.IOException;
 public class Util
 {
 public static final int MILLISECONDS_IN_SECOND = 1000;
 public static final int SECONDS_IN_MINUTE = 60;
 public static final int MINUTES_IN_HOUR = 60;
 public static final int HOURS_IN_DAY = 24;
 public static final int DAYS_IN_WEEK = 7;
 public static final int DAYS_IN_MONTH = 30;
 public static final int DISPLAY_TEXT = 0;
 public static final int DISPLAY_HTML = 1;
 public static final String newLine = "\r\n";
 public static final short average(double count, double sum)
 {
 if (count == 0)
       return 0;
 return (short) Math.round(sum / count);
 }
 public static final long random(int ceiling)
 {
 return Math.round(Math.random() * ceiling);
 }
 public static final String join (String delim, Object values[])
 {
 String result ="";
 int i = 0;
 for (; i < values.length; i++)
       result = result.concat(values[i].toString() + delim);
 if (i > 0)
       result = result.substring(0, (result.length() - delim.length());
 return result;
 }
 public static final String fix(double number, int precision, int zeroFill)
 {
 double power = Math.pow(10, precision);
 double fixed = Math.round(number * power) / power;
 String mantissa = new Long(Math.round(fixed)).toString();
 String result = mantissa;
 for (int i = mantissa.length(); i < zeroFill; i++)
       result = new String("0" + result);
 return result;
 }
 public static final void out(ServletOutputStream stream, String whatever)
 {
 try
 {
       if (stream = null)
              System.out.println(whatever);
       else
              stream.println(whatever);
 }
 catch (IOException e)
 {
 }
 }
 public static final void debug(String info)
 {
   System.out.println(info);
 }
 public final static String tab(int times)
 {
 { String result = "";
  for (int i = 0; i < times; i++)
   {
          result = result.concat(" ");
  }
  return result;
 }
 public static final void markQueryFinished(String threadName, Date startDate)
 {
  Util.debug(newLine + threadName + " started getting data after"
                   + ((new Date().getTime() - startDate.getTime()) / 1000.0)
                   + " seconds" + newLine);
 }
 public static final void printElapsedTime(String threadName, Date startDate)
 {
  Util.debug(newLine + new Date().toString() + " " + threadName + " took "
                   + ((new Date().getTime() - startDate.getTime()) / 1000.0)
                   + " seconds" + newLine);
 }
 public static final String tab()
 {
  return tab(1);
 }
 }
```

### WeightMatrix

```
 package com.launch.PlaylistGenerator;
 public class WeightMatrix
 {
 public final static byte RATING = 0;
 public final static byte DJS = 1;
 public final static byte NETP = 2;
 public final static byte COMM_RATING = 3;
 public final static byte LAST_PLAYED = 4;
 public final static byte BDS = 5;
 public final static byte CONFIDENCE = 6;
 // rating, djs, netp, commRating, lastPlayed, bds, conf
 public double matrix[][] = {
                              {0.00, 0.33, 0.00, 0.10, 0.25, 0.20, 0.0}, // no rating
                              {0.70, 0.00, 0.00, 0.00, 0.30, 0.00, 100.0}, // explicit rating
                              {0.45, 0.05, 0.00, 0.05, 0.20, 0.20, 50.0}, // album rating only
                              {0.40, 0.10, 0.00, 0.05, 0.20, 0.20, 30.0}, // artist only
                              {0.35, 0.15, 0.00, 0.05, 0.20, 0.20, 20.0} // cross-propagated
 song ratings
                              };
 }
```

The following numbered paragraphs (NP) disclose additional examples which may be useful in understanding the invention:
NP1. A method for broadcasting data streams through a computer network to a user's computer, the steps comprising:
   providing a database of data streams;
   selecting a data stream according to a selection method;
   transmitting one of said data streams to the user's computer;
   receiving feedback expressing a preference from the user regarding said transmitted data stream ;
      and
   updating said selection method to better reflect said preference of the user; whereby data streams transmitted to the user are biased according to said preference.
NP2. The method for broadcasting data streams through a computer network to a user's computer of NP1, further comprising :
   said selection method including generating a list of data streams to transmit to the user's computer;
   transmitting one of said listed data streams to the user's computer; and updating said list of data streams to better reflect said preference of the user; whereby data streams transmitted to the user are biased according to said preference.
NP3. The method for broadcasting data streams through a computer network of NP1, the steps further comprising:
   receiving feedback expressing preferences from sources other than the user.
NP4. The method for broadcasting data streams through a computer network of NP3, wherein the step of receiving preferences from sources other than the user further comprises:
   receiving feedback expressing preferences from the group consisting of other users, commercial radio stations, and lists of popular songs.
NP5. The method for broadcasting data streams through a computer network of NP1, further comprising:
   informing the user generally regarding said database and said data streams; querying the user as to data stream preference prior to generating an initial transmission list of data streams; whereby
   said initial list reflects general preferences of the user.
NP6. The method for broadcasting data streams through a computer network of NP1, wherein said data streams are selected from the group consisting of songs and videos.
NP7. The method for broadcasting data streams through a computer network of NP1, wherein said transmitted data stream is removed from said transmission list.
NP8. The method for broadcasting data streams through a computer network of NP7, wherein said data stream removed from said transmission list is listed on a transmitted data stream list.
NP9. The method for broadcasting data streams through a computer network of NP1, wherein said step of transmitting one of said data streams further comprises transmitting said one of said data streams in conformance with applicable copyright law.
NP10. The method for broadcasting data streams through a computer network of NP9, wherein said conformance with applicable copyright law applies to all transmitted datastreams.
NP11. A data stream system for providing preferred data streams to a user, comprising:
   a connection to a computer network, said computer network connected to a computer of the user;
   a database of data streams, said database available to said computer network;
   a data stream controller, said data stream controller transmitting data streams to said user's computer according to a selection program ;
   a user interface, said user interface coupled to said user's computer and receiving said data streams for the user and providing a feedback mechanism for the user so that the user may indicate a preference regarding data streams transmitted by said data stream controller;
   said selection program receiving indications from the user, said selection program modifying its selection of data streams for transmission to said user's computer according to said user preference;
      whereby
   data streams selected by said selection program are biased according to said user preference.
NP12. The data stream system for providing preferred data streams to a user of NP11, wherein said computer network comprises the Internet.
NP13. The data stream system for providing preferred data streams to a user of NP11, wherein said database is a song database and the data streams are songs.
NP14. The data stream system for providing preferred data streams to a user of NP11, wherein said database is a music video database and the data streams are music videos.
NP15. The data stream system for providing preferred data streams to a user of NP11, wherein said user interface comprises an electronic media player.
NP16. The data stream system for providing preferred data streams to a user of NP15, wherein said electronic media player is selected from the group consisting of RealPlayer, Apple QuickTime, and Windows Media Player.
NP17. The data stream system for providing preferred data streams to a user of NP11, wherein said selection program creates a list of data streams for transmission to the user.
NP18. The data stream system for providing preferred data streams to a user of NP17, wherein said selection program modifies said list of data streams for transmission to the user according to said user preference.
NP19. The data stream system for providing preferred data streams to a user as set forth in NP11, further comprising:
   said data stream controller transmitting said data streams in compliance with applicable copyright law.
NP20. The data stream system for providing preferred data streams to a user as set forth in NP19, further comprising :
   said data stream controller transmitting all data streams in compliance with applicable copyright law.
NP21. A user interface for an Internet datastream transmission system, comprising:
   a media player, said playing data streams;
   a rating tool, said rating tool indicating a rating for a data stream currently played by said media player ; and
   a data stream information display, said data stream information display displaying information for said data stream currently played by said media player ; whereby
   a user can indicate a preference regarding said data stream currently played by said media player.
NP22. A user interface for an Internet datastream transmission system as set forth in NP21, further comprising:
   a playlist generator, said playlist generator generating playlists of data streams for said media player, said playlist generator selecting data streams according to preferences indicated by said user.
NP23. A user interface for an Internet datastream transmission system as set forth in NP22, further comprising:
   said data streams selected by said playlist generator being in compliance with applicable copyright law.

## Claims

1. A method for broadcasting data streams through a computer network to a user's computer, the steps comprising:
providing a database of data streams;
selecting a data stream according to a selection method;
transmitting one of said data streams to the user's computer;
receiving feedback expressing a preference from the user regarding said transmitted data stream; and
updating said selection to better reflect said preference of the user;
whereby data streams transmitted to the user are biased according to said preference.

2. The method for broadcasting data streams through a computer network to a user's computer of claim 1, further comprising:
said selection method including generating a list of data streams to transmit to the user's computer;
transmitting one of said listed data streams to the user's computer; and
updating said list of data streams to better reflect said preference of the user;
whereby data streams transmitted to the user are biased according to said preference.

3. The method of claim 2, wherein said selection method includes generating said list of data streams to transmit to the user's computer as data stream content of a personalized computer network broadcast.

4. The method of claim 3, wherein said personalized computer network broadcast is a personalized internet data stream station for the user or a personalized internet radio station for the user.

5. The method of any one of claims 2 to 4, in which said step of selecting comprises selecting one or more further data streams for said list randomly from said database of data streams.

6. The method of any one of the preceding claims, in which the data streams comprise media content.

7. The method for broadcasting data streams through a computer network of any one of the preceding claims, the steps further comprising: receiving feedback expressing preferences from sources other than the user.

8. The method for broadcasting data streams through a computer network of claim 7, wherein the step of receiving preferences from sources other than the user further comprises: receiving feedback expressing preferences from the group consisting of other users, commercial radio stations, and lists of popular songs.

9. The method for broadcasting data streams through a computer network of any one of the preceding claims, further comprising:
informing the user generally regarding said database and said data streams;
querying the user as to data stream preference prior to generating an initial transmission list of data streams;
whereby said initial list reflects general preferences of the user.

10. The method for broadcasting data streams through a computer network of any one of the preceding claims, wherein said data streams are selected from the group consisting of songs, videos and advertisements.

11. The method for broadcasting data streams through a computer network of any one of the preceding claims, wherein said transmitted data stream is removed from said transmission list.

12. The method for broadcasting data streams through a computer network of claim 11, wherein said data stream removed from said transmission list is listed on a transmitted data stream list.

13. A data stream system for providing preferred data streams to a user, comprising:
a connection to a computer network, said computer network connected to a computer of the user;
a database of data streams, said database available to said computer network;
a data stream controller, said data stream controller transmitting data streams to said user's computer according to a selection program; and
an input for receiving, from said user, an indication of a user preference regarding data streams transmitted by said data stream controller;
said selection program modifying its selection of data streams for transmission to said user's computer according to said user preference;
whereby data streams selected by said selection program are biased according to said user preference.

14. The system of claim 13, said system being arrange to provide to said user's computer a user interface, said user interface arranged to receive said data streams for the user, said user interface providing a feedback mechanism for the user so that the user may indicate said user preference regarding data streams transmitted by said data stream controller.

15. The system of claim 13 or 14, wherein said system is arranged to carry out a method according to any one of claims 1 to 12.
